(19) Europäisches Patentamt
European Patent Office
Office européen des brevets

(11) **EP 1 178 434 A2**

(12) **EUROPEAN PATENT APPLICATION**

(43) Date of publication:
06.02.2002 Bulletin 2002/06

(51) Int Cl.7: **G06T 7/00**

(21) Application number: 01120399.9

(22) Date of filing: 07.04.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 12.04.1999 JP 13902199
20.01.2000 JP 2000014170

(62) Document number(s) of the earlier application(s) in accordance with Art. 76 EPC:
**00302988.1 / 1 045 341**

(71) Applicant: **FUJITSU LIMITED**
**Kawasaki-shi, Kanagawa 211-8588 (JP)**

(72) Inventors:
• **Kawakami, Susumu**
Nakahara, Kawasakishi,
Kanagawa 211-8588 (JP)
• **Matsuoka, Masahiro**
Nakahara, Kawasakishi,
Kanagawa 211-8588 (JP)
• **Okamoto, Hiroaki**
Nakahara, Kawasakishi,
Kanagawa 211-8588 (JP)
• **Hosogi, Shinya**
Nakahara, Kawasakishi,
Kanagawa 211-8588 (JP)

(74) Representative: **Fenlon, Christine Lesley et al**
**Haseltine Lake & Co., Imperial House, 15-19 Kingsway**
**London WC2B 6UD (GB)**

Remarks:
This application was filed on 27 - 08 - 2001 as a divisional application to the application mentioned under INID code 62.

(54) **Image measurement method, image measurement apparatus and image measurement program storage medium**

(57) An image measurement apparatus comprises an operating unit for determining an azimuth of a measuring plane and/or a physical quantity indexing a distance between the measuring plane and one observation point of predetermined two observation points in an optical axis direction v coupling said two observation points, using a compound ratio $\{P_{axis} P_R P_L P_C\}$, which is determined by four positions $P_{axis}$, $P_R$, $P_L$ $P_C$, or an operation equivalent to said compound ratio, where $P_R$ and $P_L$ denote measuring positions through observation of said two observation points on an arbitrary measuring point appearing on an image obtained through viewing a predetermined measurement space from said two observation points inside the measurement space, respectively, $P_{axis}$ denotes a position of an infinite-point on a straight line extending in a direction identical to the optical axis direction v, including the measuring point, and $P_C$ denotes a position of an intersection point with said straight line on an observation plane extending in parallel to a measuring plane including the measuring point, including one observation point of said two observation points.

Fig. 50

**Description**

BACKGROUND OF THE INVENTION

Field of the Invention

The present invention relates to an image measurement method of measuring positions and azimuths of a point and a surface, which appear on an image, in space, an image measurement apparatus for implementing the measurement method, and an image measurement program storage medium storing an image measurement program for implementing the image measurement.

Description of the Related Art

In order to move a mobile robot, a motorcar, an airplane, etc. to meet surroundings, there is a need to measure surroundings on a three-dimensional basis from a dynamic picture image on a camera and the like. Now, let us consider as to how a person performs a three-dimensional measurement through a visual sensation (exactly to say, a movement vision) in the event that a person lands an airplane and a person walks.

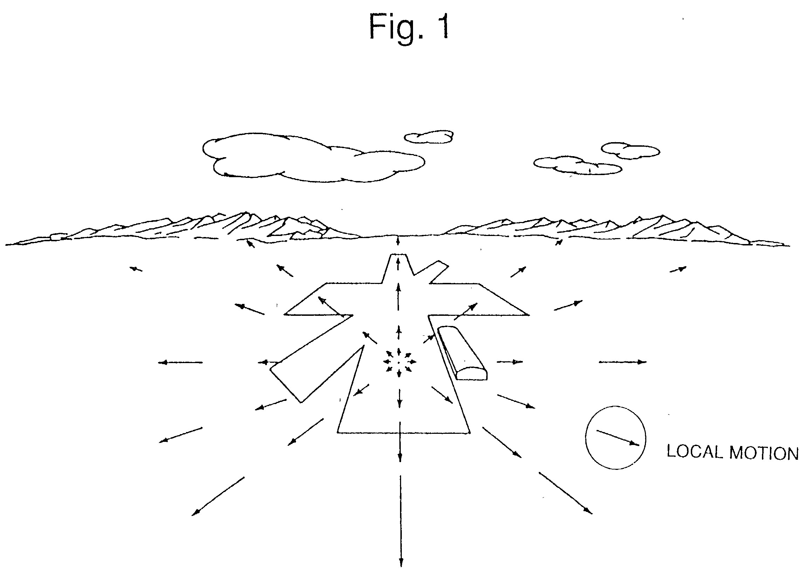

Fig. 1 shows an optical flow pattern which is reflected in the retinas of a pilot. The pilot exactly lands an airplane in accordance with this pattern through perceiving a slope (three-dimensional azimuth) of a runway and information as to such a matter that "continuous traveling of the airplane brings about an arrival at the runway after what second". That is, the pilot measures a three-dimensional azimuth of a plane (the runway) and a "time up to crossing the plane" to land the airplane.

Next, let us consider a case where we walk a passage. When a person walks in a direction that the person runs against a wall of the passage, the optical flow pattern as mentioned above is reflected in the retinas of the person. A time up to going across the wall, that is, a time up to running against the wall, is measured from the pattern, and the person moves in a direction to avoid the wall in accordance with a three-dimensional azimuth, which is simultaneously measured with the time up to running against the wall. On the other hand, in the event that the person walks in parallel to the wall, it is measured that the person does not run against to the wall always, in other words, the person runs against the wall after the infinite time elapses, and thus the person continues to walk in that direction. In this manner, the person can exactly avoid the wall and walk even if it is a curved passage. Also in the event that a person walks in an office, in a similar fashion, the person can avoid an "object constituted of a plane", such as a white board, a desk, a locker. Further, in the event that a person drives a motor car, the person performs driving on a high way, putting a car into the garage, and the like through performing the similar "three-dimensional measurement on a plane".

In this manner, our visual sensation makes it possible to perform an exact movement through a measurement of three-dimensional geometric information (a three-dimensional azimuth on a plane, and a time up to crossing the plane) of an object constituting of a plane (there are a lot of such objects). Also with respect to a curved object, it is possible to spatially recognize the curved object through a measurement of three-dimensional geometric information of a "group of planes contacting to the curved object".

If such "three-dimensional geometric information on a plane" can be measured from an image, it is possible to move a mobile robot, a motorcar, an airplane, etc. so as to meet surroundings or so as to avoid the obstacles.

With respect to the respective velocity elements of the optical flow pattern shown in Fig. 1, that is, a motion (a local motion) on a local area, there is reported a technology of measuring those elements from a dynamic picture image (Japanese Patent Laid Open Gazettes Hei. 05-165956, Hei. 06-165957, Hei. 06-044364, and Hei. 09-081369; "A method of performing a two-dimensional correlation and a convolution along the $\rho$ coordinates on the Hough plane on a one-dimensional basis by Kawakami, S. and Okamoto, H., SINNGAKUGIHOU, vol. IE96-19, pp. 31-38, 1996; and "A cell model for the detection of local image motion on the magnocellular pathway of the visual cortex, Kawakami, S. and Okamoto, H., Vision Research, vol. 36, pp. 117-147, 1996).

However, there is no report as to a method of measuring "three-dimensional geometric information on a plane (a three-dimensional azimuth on a plane, a time up to crossing the plane, and a shortest distance to the plane)" through unifying the optical flow pattern.

Further, there is reported a technology of measuring three-dimensional geometric information (a three-dimensional azimuth on those elements, the shortest distance on those elements, etc.) as to a straight line and a column in a space from a dynamic picture image (Japanese Patent Publications Hei. 03-52106, Hei. 06-14356, Hei. 06-14335, and Hei. 06-10603, and Japanese Patent Laid Open Gazette Hei. 02-816037; "A measurement of three-dimensional azimuth and distance of a line segment by a spherical mapping by Inamoto, Y., et al., a society for the study of COMPUTER VISION, vol. 45-2, pp. 1-8, 1986; Implementation of monocular stereoscopic vision with bird-mimicry" by Science Asahi, June, pp. 28-33, 1987; "Measurement in three dimensions by motion stereo and spherical mapping by Morita, T., et al., CVPR, pp. 422-428, 1989; "Motion stereo vision system by Inamoto, Y., Proceeding of 91 ISART, pp.

**EP 1 178 434 A2**

239-246, 1991; and Section 4.2.2.1, "Report of Sho. 60 Utility Nuclear Electric Power Generation Institution Robot Development Contract Research (Advanced Robot Technology Research Association)").

However, there is no report as to a method of measuring three-dimensional geometric information on a plane.

SUMMARY OF THE INVENTION

In view of the foregoing, it is an object of the present invention to provide a technology of measuring three-dimensional geometric information on a plane and position information on a point from an image such as the optical flow pattern. Incidentally, as will be described later, a measuring of the three-dimensional geometric information includes a measurement of the shortest distance to a plane.

To achieve the above-mentioned objects, the present invention provides, of image measurement methods, a first image measurement method of determining an azimuth of a measuring plane and/or a physical quantity indexing a distance between the measuring plane and one observation point of predetermined two observation points in an optical axis direction v coupling said two observation points, using a compound ratio $\{p_{axis}\,p_R p_L p_c\}$, which is determined by four positions $p_{axis}$, $p_R$, $p_L$, $p_c$, or an operation equivalent to said compound ratio, where $p_R$ and $p_L$ denote measuring positions through observation of said two observation points on an arbitrary measuring point appearing on an image obtained through viewing a predetermined measurement space from said two observation points inside the measurement space, respectively, $p_{axis}$ denotes a position of an infinite-point on a straight line extending in a direction identical to the optical axis direction v, including the measuring point, and $p_c$ denotes a position of an intersection point with said straight line on an observation plane extending in parallel to a measuring plane including the measuring point, including one observation point of said two observation points.

In the first image measurement method, said compound ratio $\{p_{axis}p_R p_L p_c\}$ or the operation equivalent to said compound ratio include an operation using the measuring position $p_R$ through observation on said measuring point from one observation point of said two observation points, and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points.

In the first image measurement method as mentioned above, it is acceptable that as said physical quantity indexing a distance between the measuring plane and one observation point of said two observation points in the optical axis direction, a normalized distance $_nd_c$, which is expressed by the following equation, is adopted,

$$_nd_c = d_c/\Delta x_{LR}$$

where $d_c$ denotes a distance between the measuring plane and one observation point of said two observation points in the optical axis direction, and $\Delta x_{LR}$ denotes a distance between said two observation points,

and said normalized distance $_nd_c$ is determined in accordance with the following equation

$$_nd_c = \{p_{axis}p_R p_L p_c\}$$

or an equation equivalent to the above equation.

In the first image measurement method as mentioned above, it is acceptable that an azimuth of a measuring plane including a plurality of measuring points associated with a plurality of polar lines intersecting at a cross point and/or a physical quantity indexing a distance between the measuring plane and one observation point of said two observation points in the optical axis direction are determined in such a manner that a process of determining a polar line associated with the position $p_c$ of the intersection point on the observation plane through a polar transformation for the position $p_c$ is executed as to a plurality of measuring points existing in the measurement space, and cross points of polar lines, which are formed when a plurality of polar lines determined through an execution of said process are drawn on a polar line drawing space, are determined.

In the first image measurement method as mentioned above, it is acceptable that the measuring point appearing on the image has information as to intensity, and an azimuth of a measuring plane including a plurality of measuring points associated with a plurality of polar lines joining a voting for a maximal point and/or a physical quantity indexing a distance between the measuring plane and one observation point of said two observation points in the optical axis direction are determined in such a manner that a process of determining a polar line associated with the measuring point through a polar transformation for the position $p_c$ of the intersection point on the observation plane , and of voting a value associated with intensity of a measuring point associated with the polar line for each point on a locus of the polar line, which is formed when the polar line thus determined is drawn on a polar line drawing space, is

3

executed as to a plurality of measuring points existing in the measurement space, and a maximal point wherein a value by a voting through an execution of said process offers a maximal value.

In the first image measurement method as mentioned above, it is acceptable that the measuring point appearing on the image has information as to intensity, and an azimuth of a measuring plane including a plurality of measuring points associated with a plurality of polar lines joining a voting for a maximal point and/or a physical quantity indexing a distance between the measuring plane and one observation point of said two observation points in the optical axis direction are determined in such a manner that a process of determining a polar line associated with the measuring point through a polar transformation for the position $p_c$ of the intersection point on the observation plane, and determining a response intensity associated with a binocular parallax $\sigma$, which is a positional difference between the two measuring positions $p_R$ and $p_L$ through observation on said measuring point from said two observation points, and of voting the response intensity associated with the binocular parallax $\sigma$ of a measuring point associated with the polar line for each point on a locus of the polar line, which is formed when the polar line thus determined is drawn on a polar line drawing space, is executed as to a plurality of measuring points existing in the measurement space, and a maximal point wherein a value by a voting through an execution of said process offers a maximal value is determined.

In the first image measurement method as mentioned above, it is acceptable that the position $p_c$ of the intersection point on the observation plane is determined using said compound ratio $\{p_{axis}p_Rp_Lp_c\}$ or the operation equivalent to said compound ratio, upon determination of a physical quantity indexing a distance between the measuring plane and one observation point of said two observation points in the optical axis direction, the two measuring positions $p_R$ and $p_L$ of the measuring point through observation from said two observation points or the measuring position $p_R$ through observation on said measuring point from one observation point of said two observation points and a binocular parallax $\sigma$, which is a positional difference between the two measuring positions $p_R$ and $p_L$ through observation on said measuring point from said two observation points, instead of the two measuring positions $p_R$ and $p_L$ , and the position $p_{axis}$ of said infinite-point of the measuring point.

In the first image measurement method as mentioned above, it is acceptable that the image measurement method comprises:

a first step of setting up the physical quantity indexing a distance between the measuring plane and one observation point of said two observation points in the optical axis direction in form of a parameter;

a second step of determining the position $p_c$ of the intersection point on the observation plane, using said compound ratio $\{p_{axis}p_Rp_Lp_c\}$ or the operation equivalent to said compound ratio, in accordance with the physical quantity indexing a distance between the measuring plane and one observation point of said two observation points in the optical axis direction set up in the first step, the two measuring positions $p_R$ and $p_L$ of the measuring point through observation on said measuring point from said two observation points or the measuring position $p_R$ through observation on said measuring point from one observation point of said two observation points and a binocular parallax $\sigma$, which is a positional difference between the two measuring positions $p_R$ and $p_L$ through observation on said measuring point from said two observation points, instead of the two measuring positions $p_R$ and $p_L$, and the position $p_{axis}$ of said infinite-point of the measuring point; and

a third step of determining a polar line associated with the measuring point through a polar transformation of the position $p_c$ of the intersection point on the observation plane,

wherein said second step and said third step are repeated by a plurality of number of times on a plurality of measuring points in said measurement space, while a value of said parameter is altered in said first step, and thereafter, effected is a fourth step of determining an azimuth of a measuring plane including a plurality of measuring points associated with a plurality of polar lines intersecting at a cross point and/or a physical quantity indexing said physical quantity indexing a distance between the measuring plane and one observation point of said two observation points in the optical axis direction in such a manner that cross points of polar lines, which are formed when a plurality of polar lines determined through a repetition of said first to third steps by a plurality of number of times are drawn on a polar line drawing space, are determined.

In this case, it is preferable that the measuring point appearing on the image has information as to intensity,

said third step is a step of determining the polar line, and of voting a value associated with intensity of a measuring point associated with the polar line for each point on a locus of the polar line, which is formed when the polar line thus determined is drawn on a polar line drawing space, and

said fourth step is a step of determining an azimuth of a measuring plane including a plurality of measuring points associated with a plurality of polar lines joining a voting for a maximal point and/or said physical quantity indexing a distance between the measuring plane and one observation point of said two observation points in the optical axis direction in such a manner that a maximal point wherein a value by a voting through a repetition of execution of said first to third steps by a plurality of number of times offers a maximal value, instead of determining of the cross point, is determined.

It is also preferable that the measuring point appearing on the image has information as to intensity,

said image measurement method further comprises a fifth step of setting up a binocular parallax σ, which is a positional difference between the two measuring positions $p_R$ and $p_L$ through observation on said measuring point from said two observation points, in the form of a second parameter,
said second step is a step of determining the position $p_c$ of the intersection point on the observation plane using the physical quantity indexing a distance between the measuring plane and one observation point of said two observation points in the optical axis direction , which is set up in said first step, the measuring position $p_R$ through observation on said measuring point from one observation point of said two observation points, the binocular parallax σ, which is set up in said fifth step, and the position $p_{axis}$ of said infinite-point of the measuring point,
said third step is a step of determining a polar line associated with the measuring point, and determining a response intensity associated with the binocular parallax σ on the measuring point, and of voting the response intensity associated with the binocular parallax σ of a measuring point associated with the polar line for each point on a locus of the polar line, which is formed when the polar line thus determined is drawn on a polar line drawing space,
said second step and the third step are repeated by a plurality of number of times on a plurality of measuring points in said measurement space, while values of said parameters are altered in said first step and said fifth step, and
said fourth step is a step of determining an azimuth of a measuring plane including a plurality of measuring points associated with a plurality of polar lines joining a voting for a maximal point and/or said physical quantity indexing a distance between the measuring plane and one observation point of said two observation points in the optical axis direction in such a manner that a maximal point wherein a value by a voting through a repetition of said first, fifth, second and third steps by a plurality of number of times offers a maximal value is determined, instead of determination of said cross point.

It is also preferable that said third step is a step of determining a polar line drawn on a sphere in form of a large circle through a polar transformation of the position $p_c$.
It is also preferable that said third step is a step of determining a polar line drawn in form of a large circle on a sphere through a polar transformation of the position $p_c$ , and projected into an inside of a circle on a plane.
It is also preferable that said third step is a step of determining a polar line drawn on a plane in form of a straight line through a polar transformation of the position $p_c$.
In the first image measurement method as mentioned above, it is acceptable that the image measurement method comprises:

a first step of setting up the position $p_{axis}$ of said infinite-point of the measuring point through setting up the optical axis direction v in form of a first parameter;
a second step of setting up the physical quantity indexing a distance between the measuring plane and one observation point of said two observation points in the optical axis direction in form of a second parameter;
a third step of determining the position $p_c$ of the intersection point on the observation plane, using said compound ratio $\{p_{axis}p_Rp_Lp_c\}$ or the operation equivalent to said compound ratio, in accordance with the position $p_{axis}$ set up in said first step, the physical quantity indexing a distance between the measuring plane and one observation point of said two observation points in the optical axis direction set up in the second step, and the two measuring positions $p_R$ and $p_L$ of the measuring point through observation on said measuring point from said two observation points or the measuring position $p_R$ through observation on said measuring point from one observation point of said two observation points and a binocular parallax σ, which is a positional difference between the two measuring positions $p_R$ and $p_L$ through observation on said measuring point from said two observation points, instead of the two measuring positions $p_R$ and $p_L$ through observation on said measuring point from said two observation points; and
a fourth step of determining a polar line associated with the measuring point through a polar transformation of the position $p_c$ of the intersection point on the observation plane,
wherein said third step and said fourth step of said first step to said fourth step are repeated by a plurality of number of times on a plurality of measuring points in said measurement space, while values of said first parameter and said second parameter are altered in said first step and said second step, and thereafter,
effected is a fifth step of determining a true optical axis direction , and of determining an azimuth of a measuring plane including a plurality of measuring points associated with a plurality of polar lines intersecting at a cross point determined on a polar line drawing space associated with the true optical axis direction , and/or said physical quantity indexing a distance between the measuring plane and one observation point of said two observation points in the optical axis direction in such a manner that cross points of polar lines, which are formed when a plurality of polar lines determined through a repetition of said first to fourth steps are drawn on an associated polar line drawing space of a plurality of polar line drawing spaces according to said first parameter, are determined on each polar line drawing space, and a polar line drawing space associated with the true optical axis direction relative to said observation point on said measuring point is selected in accordance with information as to a number of polar lines intersecting at the cross points.

In this case, it is preferable that the measuring point appearing on the image has information as to intensity,

said fourth step is a step of determining the polar line, and of voting a value associated with intensity of a measuring point associated with the polar line for each point on a locus of the polar line, which is formed when the polar line thus determined is drawn on the polar line drawing space,
said fifth step is a step of determining the true optical axis direction , and of determining an azimuth of a measuring plane including a plurality of measuring points associated with a plurality of polar lines joining a voting for a maximal point determined on a polar line drawing space associated with the true optical axis direction , and/or said physical quantity indexing a distance between the measuring plane and one observation point of said two observation points in the optical axis direction in such a manner that a maximal point wherein a value by a voting through a repetition of execution of said first to fourth steps offers a maximal value, instead of determining of the cross point, is determined on each polar line drawing space, and a polar line drawing space associated with the true optical axis direction is selected in accordance with information as to a maximal value at the maximal point.

It is also preferable that the measuring point appearing on the image has information as to intensity,

said image measurement method further comprises a sixth step of setting up a binocular parallax $\sigma$, which is a positional difference between the two measuring positions $p_R$ and $p_L$ through observation on said measuring point from said two observation points, in the form of a third parameter,
said third step is a step of determining the position $p_c$ of the intersection point on the observation plane using the position $p_{axis}$ , which is set up in said first step, the physical quantity indexing a distance between the measuring plane and one observation point of said two observation points in the optical axis direction , which is set up in said second step, the measuring position $p_R$ through observation on said measuring point from one observation point of said two observation points, and the binocular parallax $\sigma$, which is set up in said sixth step,
said fourth step is a step of determining a polar line associated with the measuring point, and determining a response intensity associated with the binocular parallax $\sigma$ on the measuring point, and of voting the response intensity associated with the binocular parallax $\sigma$ of a measuring point associated with the polar line for each point on a locus of the polar line, which is formed when the polar line thus determined is drawn on a polar line drawing space,
said third step and the fourth step are repeated by a plurality of number of times on a plurality of measuring points in said measurement space, while values of said parameters are altered in said second step and said sixth step, and said fifth step is a step of determining the true optical axis direction, and of determining an azimuth of a measuring plane including a plurality of measuring points associated with a plurality of polar lines joining a voting for a maximal point determined on a polar line drawing space associated with the true optical axis direction , and/or said physical quantity indexing a distance between the measuring plane and one observation point of said two observation points in the optical axis direction in such a manner that a maximal point wherein a value by a voting through a repetition of execution of the first, second, sixth, third and fourth steps by a plurality of number of times offers a maximal value, instead of determining of the cross point, is determined on each polar line drawing space, and a polar line drawing space associated with the true optical axis direction is selected in accordance with information as to a maximal value at the maximal point.

To achieve the above-mentioned objects, the present invention provides, of image measurement methods, a second image measurement method of determining an azimuth $n_s$ of a measuring plane and/or a physical quantity indexing a shortest distance between the measuring plane and one observation point of predetermined two observation points, using a compound ratio $\{p_{axis} \, p_R p_L p_c\}$, which is determined by four positions $p_{axis}$, $p_R$, $p_L$, $p_c$ of a measuring point, or an operation equivalent to said compound ratio, and an inner product $(n_s \cdot v)$ of the azimuth $n_s$ of the measuring plane and an optical axis direction v, where $p_R$ and $p_L$ denote measuring positions through observation of said two observation points on an arbitrary measuring point appearing on an image obtained through viewing a predetermined measurement space from predetermined two observation points inside the measurement space, respectively, v denotes the optical axis direction coupling said two observation points, $p_{axis}$ denotes a position of an infinite-point on a straight line extending in a direction identical to the optical axis direction v, including the measuring point, $p_c$ denotes a position of an intersection point with said straight line on an observation plane extending in parallel to a measuring plane including the measuring point, including one observation point of said two observation points, and $n_s$ denotes the

azimuth of the measuring plane.

In the second image measurement method as mentioned above, wherein said compound ratio $\{p_{axis}p_Rp_Lp_c\}$ or the operation equivalent to said compound ratio include an operation using the measuring position $p_R$ through observation on said measuring point from one observation point of said two observation points, and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points.

In the second image measurement method as mentioned above, it is preferable that as said physical quantity indexing the shortest distance, a normalization shortest distance $_nd_s$, which is expressed by the following equation, is adopted,

$$_nd_s = d_s/ \triangle x_{LR}$$

and said normalization shortest distance $_nd_s$ is determined in accordance with the following equation,

$$_nd_s = {_nd_c} \, (n_s \cdot v)$$

using a normalized distance $_nd_c$, which is expressed by the following equation, and the inner product $(n_s \cdot v)$

$$_nd_c = d_c/\triangle x_{LR}$$

where $d_s$ denotes a shortest distance between the measuring plane and one observation point of said two observation points, $d_c$ denotes a distance between the measuring plane and one observation point of said two observation points in an optical axis direction, and $\triangle x_{LR}$ denotes a distance between said two observation points.

In the second image measurement method as mentioned above, it is acceptable that the image measurement method comprises:

a first step of setting up the physical quantity indexing the shortest distance in form of a first parameter;
a second step of setting up the inner product $(n_s \cdot v)$ in form of a second parameter;
a third step of determining the position $p_c$ of the intersection point on the observation plane, using said compound ratio $\{p_{axis}p_Rp_Lp_c\}$ or the operation equivalent to said compound ratio, in accordance with the physical quantity indexing the shortest distance set up in the first step, the inner product $(n_s \cdot v)$ set up in the second step, the two measuring positions $p_R$ and $p_L$ of the measuring point through observation on said measuring point from said two observation points or the measuring position $p_R$ through observation on said measuring point from one observation point of said two observation points and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points, and the position $p_{axis}$ of said infinite-point of the measuring point;
a fourth step of determining a polar line associated with the position $p_c$ of the intersection point on the observation plane through a polar transformation of the position $p_c$, and
a fifth step of determining a point on the polar line, said point being given with an angle r with respect to the optical axis direction v,

$$r = \cos^{-1} (n_s \cdot v)$$

wherein said third step to said fifth step, of said first step to said fifth step, are repeated by a plurality of number of times on a plurality of measuring points in said measurement space, while values of said first parameter and said second parameter are altered in said first step and said second step, so that a curved line, which couples a plurality of points determined through an execution of said fifth step as to one measuring point by a plurality of number of times wherein a value of said first parameter is identical and a value of said second parameter is varied, is determined on the plurality of measuring points for each value of said first parameter, and thereafter, effected is a sixth step of determining an azimuth $n_s$ of a measuring plane including a plurality of measuring points associated with a plurality of curved lines intersecting at a cross point and/or a physical quantity indexing a shortest distance between the measuring plane and one observation point of said two observation points in such a manner that cross points of curved lines, which are formed when a plurality of curved lines determined through a repetition of said first to fifth steps by a plurality of number of times are drawn on a curved line drawing space, are determined.

In this case, it is preferable that the measuring point appearing on the image has information as to intensity,

said fifth step is a step of determining said point, and of voting a value associated with intensity of a measuring point associated with said point for a point associated with said point in said curved line drawing space,
said sixth step is a step of determining an azimuth $n_s$ of a measuring plane including a plurality of measuring points associated with a plurality of curved lines joining a voting for a maximal point and/or a physical quantity indexing a shortest distance between the measuring plane and one observation point of predetermined two observation points in such a manner that a maximal point wherein a value by a voting through a repetition of execution of said first to fifth steps by a plurality of number of times offers a maximal value, instead of determining of the cross point, is determined.

It is also preferable that the measuring point appearing on the image has information as to intensity,

said image measurement method further comprises a seventh step of setting up a binocular parallax $\sigma$, which is a positional difference between the two measuring positions $p_R$ and $p_L$ through observation on said measuring point from said two observation points, in the form of a third parameter,
said third step is a step of determining the position $p_c$ of the intersection point on the observation plane using the physical quantity indexing the shortest distance set up in the first step, the inner product $(n_s \cdot v)$ set up in the second step, the measuring position $p_R$ through observation on said measuring point from one observation point of said two observation points, the binocular parallax $\sigma$, which is set up in said seventh step, and the position $p_{axis}$ of said infinite-point of the measuring point,
said fifth step is a step of determining said point on a polar line associated with the measuring point, and determining a response intensity associated with the binocular parallax $\sigma$ on the measuring point, and of voting the response intensity associated with the binocular parallax $\sigma$ of a measuring point associated with said point on the polar line for a point associated with said point on the polar line in said curved line drawing space,
said third step to said fifth step are repeated by a plurality of number of times on a plurality of measuring points in said measurement space, while values of the parameters are altered in said first step, said second step and said seventh step, and
said sixth step is a step of determining an azimuth $n_s$ of a measuring plane including a plurality of measuring points associated with a plurality of curved lines joining a voting for a maximal point and/or a physical quantity indexing a shortest distance between the measuring plane and one observation point of said two observation points in such a manner that a maximal point wherein a value by a voting through a repetition of said first, second, seventh and third to fifth steps by a plurality of number of times offers a maximal value is determined, instead of determination of said cross point.

It is also preferable that said fifth step is a step of determining a curved line drawn on a sphere in form of a curved line coupling a plurality of lines involved in one measuring point, which is determined through repetition of said fifth step.
It is also preferable that said fifth step is a step of determining a curved line drawn on a sphere in form of a curved line coupling a plurality of lines involved in one measuring point, which is determined through repetition of said fifth step, said curved line being projected into an inside of a circle on a plane.
In the second image measurement method as mentioned above, it is acceptable that the image measurement method comprises:

a first step of setting up the position $p_{axis}$ of said infinite-point of the measuring point through setting up the optical axis direction $v$ in form of a first parameter;
a second step of setting up the physical quantity indexing the shortest distance in form of a second parameter;
a third step of setting up the inner product $(n_s \cdot v)$ in form of a third parameter;
a fourth step of determining the position $p_c$ of the intersection point on the observation plane, using said compound ratio $\{p_{axis}p_Rp_Lp_c\}$ or the operation equivalent to said compound ratio, in accordance with the position $p_{axis}$ of said infinite-point of the measuring point, which is set up in said first step, the physical quantity indexing the shortest distance, which is set up in the second step, the inner product $(n_s \cdot v)$ set up in the third step, and the two measuring positions $p_R$ and $p_L$ of the measuring point through observation on said measuring point from said two observation points or the measuring position $p_R$ through observation on said measuring point from one observation point of said two observation points and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points; a fifth step of determining a polar line associated with the position $p_c$ of the intersection point on the observation plane through a polar transformation of the position $p_c$ ; and

a sixth step of determining a point on the polar line, said point being given with an angle r with respect to the optical axis direction v,

$$r = \cos^{-1} (n_s \cdot v)$$

wherein said fourth step to said sixth step, of said first step to said sixth step, are repeated by a plurality of number of times on a plurality of measuring points in said measurement space, while values of said first parameter to said third parameter are altered in said first step to said third step, so that a curved line, which couples a plurality of points determined through an execution of said sixth step as to one measuring point by a plurality of number of times wherein a value of said first parameter is identical and a value of said second parameter is identical, and a value of said third parameter is varied, is determined on the plurality of measuring points for each combination of a respective value of said first parameter and a respective value of said second parameter, and thereafter, effected is a seventh step of determining a true optical axis direction , and of determining an azimuth $n_s$ of a measuring plane including a plurality of measuring points associated with a plurality of curved lines intersecting at a cross point determined on a curved line drawing space associated with the true optical axis direction, and/or a physical quantity indexing a shortest distance between the measuring plane and one observation point of predetermined two observation points in such a manner that cross points of curved lines, which are formed when a plurality of curved lines determined through a repetition of said first to sixth steps are drawn on an associated curved line drawing space of a plurality of curved line drawing spaces according to said first parameter, are determined on each curved line drawing space, and a curved line drawing space associated with the true optical axis direction relative to said observation point on said measuring point is selected in accordance with information as to a number of curved lines intersecting at the cross points.

In this case, it is preferable that the measuring point appearing on the image has information as to intensity,

said sixth step is a step of determining said point, and of voting a value associated with intensity of a measuring point associated with said point for points in the curved line drawing space wherein a curved line including said point is drawn,

said seventh step is a step of determining the true optical axis direction, and of determining an azimuth $n_s$ of a measuring plane including a plurality of measuring points associated with a plurality of curved lines joining a voting for a maximal point determined on a curved line drawing space associated with the true optical axis direction, and/or a physical quantity indexing a shortest distance between the measuring plane and one observation point of predetermined two observation points in such a manner that a maximal point wherein a value by a voting through a repetition of execution of said first to sixth steps offers a maximal value, instead of determining of the cross point, is determined on each curved line drawing space, and a curved line drawing space associated with the true optical axis direction is selected in accordance with information as to a maximal value at the maximal point.

It is also preferable that the measuring point appearing on the image has information as to intensity,

said image measurement method further comprises a eighth step of setting up a binocular parallax σ, which is a positional difference between the two measuring positions $p_R$ and $p_L$ through observation on said measuring point from said two observation points, in the form of a fourth parameter, said fourth step is a step of determining the position $p_c$ of the intersection point on the observation plane using the position $p_{axis}$ of said infinite-point of the measuring point, which is set up in said first step, the physical quantity indexing the shortest distance, which is set up in the second step, the inner product $(n_s \cdot v)$ set up in the third step, the measuring position $p_R$ through observation on said measuring point from one observation point of said two observation points, and a binocular parallax σ, which is set up in said eighth step, said sixth step is a step of determining said point associated with the measuring point, and determining a response intensity associated with the binocular parallax σ on the measuring point, and of voting the response intensity associated with the binocular parallax σ of a measuring point associated with said point on the polar line for points in the curved line drawing space, said fourth to sixth steps are repeated by a plurality of number of times on a plurality of measuring points in said measurement space; while values of said parameters are altered in said first, second, third and eighth steps, and

said seventh step is a step of determining the true optical axis direction, and of determining an azimuth $n_s$ of a measuring plane including a plurality of measuring points associated with a plurality of curved lines joining a voting for a maximal point determined on a curved line drawing space associated with the true optical axis direction , and/ or a physical quantity indexing a shortest distance between the measuring plane and one observation point of predetermined two observation points in such a manner that a maximal point wherein a value by a voting through a repetition of execution of the first, second, third, eighth steps, and the fourth to sixth steps by a plurality of number of times offers a maximal value, instead of determining of the cross point, is determined on each curved line drawing space, and a curved line drawing space associated with the true optical axis direction is selected in accordance with information as to a maximal value at the maximal point.

To achieve the above-mentioned objects, the present invention provides, of image measurement methods, a third image measurement method of determining an azimuth of a measuring plane and/or a physical quantity indexing a shortest distance between the measuring plane and one observation point of predetermined two observation points, using a simple ratio($p_{axis}p_R p_L$), which is determined by three positions $p_{axis}$, $p_R$, $p_L$ of a measuring point, or an operation equivalent to said simple ratio, where $p_R$ and $p_L$ denote measuring positions through observation of said two observation points on an arbitrary measuring point appearing on an image obtained through viewing a predetermined measurement space from a predetermined observation point inside the measurement space, respectively, v denotes an optical axis direction coupling said two observation points, and $p_{axis}$ denotes a position of an infinite-point on a straight line extending in a direction identical to the optical axis direction v, including the measuring point.

In the third image measurement method, said simple ratio ($p_{axis} p_R p_L$) or the operation equivalent to said simple ratio include an operation using the measuring position $p_R$ through observation on said measuring point from one observation point of said two observation points, and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points.

In the third image measurement method as mentioned above, it is acceptable that as the positions $p_{axis}$, $p_R$, $p_L$ of the measuring point, positions projected on a sphere are adopted, and as said physical quantity indexing the shortest distance, a normalization shortest distance $_n d_s$ , which is expressed by the following equation, is adopted,

$$_n d_s = d_s / \Delta x_{LR}$$

where $d_s$ denotes a shortest distance between the measuring plane and one observation point of said two observation points, and $\Delta x_{LR}$ denotes a distance between said two observation points,
wherein said image measurement method comprises:

a first step of setting up the normalization shortest distance $_n d_s$ in form of a parameter;
a second step of determining a radius R defined by the following equation or the equivalent equation;

$$R = \cos^{-1} (_n d_s / (p_{axis} p_R p_L))$$

using the normalization shortest distance $_n d_s$ set up in the first step and the simple ratio ($p_{axis}p_R p_L$) or the operation equivalent to said simple ratio; and
a third step of determining a small circle of a radius R taking as a center a measuring position through observation on said measuring point from one observation point of said two observation points,
wherein said second step and said third step are repeated by a plurality of number of times on a plurality of measuring points in said measurement space, while the parameter is altered in said first step, and thereafter, effected is a fourth step of determining an azimuth $n_{s0}$ of a measuring plane including a plurality of measuring points associated with a plurality of small circles intersecting at a cross point and/or a normalization shortest distance $_n d_{s0}$ on the measuring plane in such a manner that cross points of small circles, which are formed when a plurality of small circles determined through a repetition of said first to third steps by a plurality of number of times are drawn on a small circle drawing space, are determined.

In this case, it is preferable that the measuring point appearing on the image has information as to intensity,

said third step is a step of determining said small circle, and of voting a value associated with intensity of a measuring point associated with said small circle for each point on a locus of the small circle, which is formed when the small circle thus determined is drawn on a small circle drawing space,

said fourth step is a step of determining an azimuth $n_{s0}$ of a measuring plane including a plurality of measuring points associated with a plurality of small circles joining a voting for a maximal point and/or a normalization shortest distance $_nd_{s0}$ on the measuring plane in such a manner that a maximal point wherein a value by a voting through a repetition of execution of said first to third steps by a plurality of number of times offers a maximal value, instead of determining of the cross point, is determined.

It is also preferable that the measuring point appearing on the image has information as to intensity,

said image measurement method further comprises a fifth step of setting up a binocular parallax σ, which is a positional difference between the two measuring positions $p_R$ and $p_L$ through observation on said measuring point from said two observation points, in form of a second parameter,

said second step is a step of determining the radius R using the normalization shortest distance $_nd_s$ set up in the first step, the position $p_{axis}$ of said infinite-point of the measuring point, the measuring position $p_R$ through observation on said measuring point from one observation point of said two observation points, and the binocular parallax σ, which is set up in said fifth step,

said third step is a step of determining said small circle associated with the measuring point, and determining a response intensity associated with the binocular parallax σ on the measuring point, and of voting the response intensity associated with the binocular parallax σ of a measuring point associated with said small circle for each point on a locus of the small circle, which is formed when the small circle thus determined is drawn on a small circle drawing space,

said second step and said third step are repeated by a plurality of number of times on a plurality of measuring points in said measurement space, while values of the parameters are altered in said first step and said fifth step, and

said fourth step is a step of determining an azimuth $n_{sR}$ of a measuring plane including a plurality of measuring points associated with a plurality of small circles joining a voting for a maximal point and/or a normalization shortest distance $_nd_{sR}$ on the measuring plane in such a manner that a maximal point wherein a value by a voting through a repetition of said first, fifth, second and third steps by a plurality of number of times offers a maximal value is determined, instead of determination of said cross point.

It is also preferable that said third step is a step of determining a small circle of a radius R on the sphere, and also determining a small circle in which said small circle of a radius R on the sphere is projected into an inside of a circle on a plane.

In the third image measurement method as mentioned above, it is acceptable that as the positions $p_{axis}$, $p_R$, $p_L$ of the measuring point, positions projected on a sphere are adopted, and as said physical quantity indexing the shortest distance, a normalization shortest distance $_nd_s$, which is expressed by the following equation, is adopted,

$$_nd_s = d_s / \Delta x_{LR}$$

where $d_s$ denotes a shortest distance between the measuring plane and one observation point of said two observation points , and $\Delta x_{LR}$ denotes a distance between said two observation points,

 wherein said image measurement method comprises:

a first step of setting up the position $p_{axis}$ of said infinite-point of the measuring point through setting up the optical axis direction v in form of a first parameter;

a second step of setting up the normalization shortest distance $_nd_s$ in form of a second parameter;

a third step of determining a radius R defined by the following equation or the equivalent equation;

$$R = \cos^{-1} (_nd_s / (p_{axis}p_Rp_L))$$

using the position $p_{axis}$ of said infinite-point of the measuring point, which is set up in the first step, the normalization shortest distance $_nd_s$ set up in the second step and the simple ratio $(p_{axis}p_Rp_L)$ or the operation equivalent to said simple ratio, and

a fourth step of determining a small circle of a radius R taking as a center a measuring position through observation on said measuring point from one observation point of said two observation points ,

wherein said third step and said fourth step are repeated by a plurality of number of times on a plurality of measuring points in said measurement space, while values of the first and second parameters are altered in said first step and said second step, and thereafter,

effected is a fifth step of determining a true optical axis direction, and of determining an azimuth $n_{s0}$ of a measuring plane including a plurality of measuring points associated with a plurality of small circles intersecting at a cross point determined on a small circle drawing space associated with the true optical axis direction, and/or a a normalization shortest distance $_nd_{s0}$ on the measuring plane in such a manner that cross points of small circles, which are formed when a plurality of small circles determined through a repetition of said first to fourth steps are drawn on an associated small circle drawing space of a plurality of small circle drawing spaces according to said first parameter, are determined on each small circle drawing space, and a small circle drawing space associated with the true optical axis direction relative to said observation point on said measuring point is selected in accordance with information as to a number of small circles intersecting at the cross points.

In this case, it is preferable that the measuring point appearing on the image has information as to intensity,

said fourth step is a step of determining said small circle, and of voting a value associated with intensity of a measuring point associated with said small circle for each point on a locus of the small circle, which is formed when the small circle thus determined is drawn on a small circle drawing space,

said fifth step is a step of determining a true optical axis direction, and of determining an azimuth $n_{s0}$ of a measuring plane including a plurality of measuring points associated with a plurality of small circles joining a voting for a maximal point determined on a small circle drawing space associated with the true optical axis direction, and/or a normalization shortest distance $_nd_{s0}$ on the measuring plane in such a manner that a maximal point wherein a value by a voting through a repetition of execution of said first to fourth steps by a plurality of number of times offers a maximal value, instead of determining of the cross point, is determined on each small circle drawing space, and a small circle drawing space associated with the true optical axis direction is selected in accordance with information as to the maximal value on the maximal point.

it is also preferable that the measuring point appearing on the image has information as to intensity,

said image measurement method further comprises a sixth step of setting up a binocular parallax σ, which is a positional difference between the two measuring positions $p_R$ and $p_L$ through observation on said measuring point from said two observation points, in form of a third parameter,

said third step is a step of determining the radius R using the position $p_{axis}$ of said infinite-point of the measuring point, which is set up in said first step, the normalization shortest distance $_nd_s$ set up in the second step, the measuring position $p_R$ through observation on said measuring point from one observation point of said two observation points, and the binocular parallax σ, which is set up in said sixth step,

said fourth step is a step of determining said small circle associated with the measuring point, and determining a response intensity associated with the binocular parallax σ on the measuring point, and of voting the response intensity associated with the binocular parallax σ of a measuring point associated with said small circle for each point on a locus of the small circle, which is formed when the small circle thus determined is drawn on a small circle drawing space associated with the small circle,

said third step and said fourth step are repeated by a plurality of number of times on a plurality of measuring points in said measurement space, while values of the parameters are altered in said first step, said second step and said sixth step, and

said fifth step is a step of determining a true optical axis direction , and of determining an azimuth $n_{s0}$ of a measuring plane including a plurality of measuring points associated with a plurality of small circles joining a voting for a maximal point determined on a small circle drawing space associated with the true optical axis direction, and/or a normalization shortest distance $_nd_{s0}$ on the measuring plane in such a manner that a maximal point wherein a value by a voting through a repetition of execution of said first, second, sixth, third and fourth steps by a plurality of number of times offers a maximal value, instead of determining of the cross point, is determined on each small circle drawing space, and a small circle drawing space associated with the true optical axis direction is selected in accordance with information as to the maximal value on the maximal point.

To achieve the above-mentioned objects, the present invention provides, of image measurement methods, a fourth image measurement method of determining a physical quantity indexing a distance between an arbitrary measuring point appearing on an image obtained through viewing a predetermined measurement space from a predetermined observation point inside the measurement space and one observation point of predetermined two observation points, using a simple ratio ($p_{axis}$ $p_R$ $p_L$), which is determined by three positions $p_{axis}$, $p_R$, $p_L$ of the measuring point, or an operation equivalent to said simple ratio, where $p_R$ and $p_L$ denote measuring positions through observation of said two observation points on the measuring point, respectively, and $p_{axis}$ denotes a position of an infinite-point on a straight line extending in a direction identical to an optical axis direction v coupling said two observation points, including the measuring point.

In the fourth image measurement method as mentioned above said simple ratio ($p_{axis}p_Rp_L$) or the operation equivalent to said simple ratio include an operation using the measuring position $p_R$ through observation on said measuring point from one observation point of said two observation points, and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points.

In the fourth image measurement method as mentioned above, it is acceptable that as said physical quantity indexing the distance, a normalized distance $_nd_0$, which is expressed by the following equation, is adopted,

$$_nd_0 = d_0/\Delta\, x_{LR}$$

where $d_0$ denotes a distance between the measuring point and one observation point of said two observation points, and $\triangle\, x_{LR}$ denotes a distance between said two observation points, and said normalized distance $_nd_0$ is determined in accordance with the following equation

$$_nd_0 = (p_{axis}p_Rp_L)$$

or an equation equivalent to the above equation.

An image measuring method of the present invention may be defined by alternative expressions as set forth below.

(1) An image measurement method of determining a three-dimensional azimuth $n_s$ of a plane and/or a normalized time $_nt_c$ up to crossing the plane, using a compound ratio $\{p_{inf}p_0p_1p_c\}$, which is determined by four positions $p_{inf}$, $p_0$, $p_1$, $p_c$, where $p_0$ and $p_1$ denote measuring positions at mutually different two measuring times, that is, the present time and the subsequent time, on an arbitrary measuring point appearing on an image, respectively, $p_{inf}$ denotes a position of the measuring point after an infinite time elapses, and $p_c$ denotes a position of the measuring point at a "time in which a plane including the measuring point crosses a camera center". Here, the normalized time $_nt_c$, which is expressed by the following equation, is a time wherein time $t_c$ is normalized by a time difference $\Delta\, t$ ,

$$_nt_c = t_c/\Delta\, t \tag{a}$$

where $t_c$ denotes a time up to crossing the plane, and $\Delta\, t$ denotes a time between said two measuring times, that is, the present time and the subsequent time.

(2) An image measurement method according to paragraph (1), wherein the normalized time $_nt_c$ up to crossing the plane is determined in accordance with the following equation

$$_nt_c = \{p_{inf}p_0p_1p_c\} \tag{b}$$

(2-1) An image measurement method according to paragraph (1), wherein with respect to a plurality of measuring points on an image, the position $p_c$ of the measuring point at a "time in which a plane including the measuring points crosses a camera center" is subjected to a polar transformation (or a duality transformation) to determine a three-dimensional azimuth $n_s$ of a plane in form of a cross point of the polar line thus obtained.

(2-2) An image measurement method according to paragraph (1), wherein the normalized time $_nt_c$ and the "positions $p_0$, $p_1$, $p_{inf}$ at three times are determined, and the position $p_c$ of is computed using the formula (b). This method is referred to as a compound ratio transformation, since the compound ratio $\{p_{inf}p_0p_1p_c\}$ is used.

(3) An image measurement method according to paragraph (1), wherein with respect to a plurality of measuring points on an image, the position $p_c$ of the measuring point at a "time in which a plane including the measuring points crosses a camera center" is determined through the polar transformation of the paragraph (2-1) to determine a three-dimensional azimuth $n_s$ of a plane in form of a cross point of the polar line subjected to the polar transformation as to those points.

(4) An image measurement method according to paragraph (3), wherein the following steps are executed to determine a three-dimensional azimuth $n_{s0}$ of a plane and/or a normalized time $_n t_{c0}$ up to crossing the plane.

Step 1: A normalized time parameter $_n t_c$ is arbitrarily set up, and the compound transformation in the paragraph (2-2) for the position $p_c$ is executed as to a plurality of measuring points to compute the position $p_c$.

Step 2: The positions are subjected to the polar transformation to draw the respective corresponding polar lines. The intensity of the polar line implies "brightness of the position $p_0$ on the image" , and the intensity is added in a place wherein a plurality of polar lines are intersected one another.

Step 3: Steps 1 and 2 are executed while the normalized time parameter $_n t_c$ is altered to determine a parameter value $_n t_{c0}$ in which a plurality of polar lines drawn in the step 2 intersect at one point. As the parameter value, the "normalized time $_n t_{c0}$ up to crossing the plane" is obtained. Further, as the coordinates of the cross point, the azimuth $n_{s0}$ of the plane is obtained.

(5) An image measurement method according to paragraph (4), wherein the polar line in the step 2 is drawn on a sphere in form of a large circle.

(5-1) An image measurement method according to paragraph (5), wherein the large circle in paragraph (5) is drawn through projection into the inner part of a circle on a plane.

(6) An image measurement method according to paragraph (4), wherein the polar line in the step 2 is drawn on a plane in form of a straight line.

(7) An image measurement method according to paragraphs (3) or (4), wherein a three-dimensional azimuth $n_s$ of a plane and/or a normalized time $_n t_c$ up to crossing the plane are determined in accordance with the following steps, without determining a moving direction v (that is, the position $P_{inf}$ after an infinite time elapses).

Step 1: Arbitrarily set up a moving direction parameter v.

Step 2: Define a direction of the moving direction parameter v as the "position $P_{inf}$ after an infinite time elapses".

Step 3: Execute paragraphs (3) or (4).

Step 4: Steps 1 to 3 are executed while the moving direction parameter v is altered to determine a parameter value $v_0$ in which a plurality of polar lines drawn in the step 3 intersect at one point. This parameter value thus determined is a true moving direction $v_0$ . As the coordinates of the cross point, the azimuth $n_s$ of the plane and/ or the normalized time $_n t_c$ up to crossing the plane is obtained.

(8) An image measurement method of determining a three-dimensional azimuth $n_s$ of a plane and/or a normalization shortest distance $_n d_s$ up to the plane, using formula (b) and formula (c), where $p_0$ and $p_1$ denote measuring positions at mutually different two measuring times, that is, the present time and the subsequent time, on an arbitrary measuring point appearing on an image, respectively, $p_{inf}$ denotes a position of the measuring point after an infinite time elapses, and $p_c$ denotes a position of the measuring point at a "time in which a plane including the measuring point crosses a camera center". Here, the normalization shortest distance $_n d_s$, which is expressed by formula (d), is a distance wherein a distance $d_s$ is normalized by a distance $\Delta x$,

$$_n d_s = {_n t_c} (n_s \cdot v) \qquad (c)$$

$$_n d_s = d_s / \Delta x \qquad (d)$$

where $d_s$ denotes a shortest distance up to the plane, and $\Delta x$ denotes a moving distance of a camera (or the plane) between the present time and the subsequent time. In formula (c), v denotes a moving direction of the camera or the plane.

(9) An image measurement method according to paragraph (8), wherein the following steps are executed to determine a three-dimensional azimuth $n_{s0}$ of a plane and/or a normalization shortest distance $_n d_{s0}$ up to crossing the plane.

Step 1: A normalization shortest distance parameter $_n d_s$ is arbitrarily set up.

Step 2: An angle r between the moving direction v and the three-dimensional azimuth $n_s$ is arbitrarily set up, that is, the inner product $(n_s \cdot v)$ is arbitrarily set up in form of cos (r), and the normalized time parameter $_n t_c$ is computed in form of $_n d_s$ / cos (r) using formula (c).

Step 3: The compound transformation in the paragraph (2-2) for the position $p_c$ is executed as to a plurality of measuring points to compute the position $p_c$.

Step 4: Determine a point offering an angle r with respect to the moving direction on a polar line in which the positions are subjected to the polar transformation.

Step 5: Compute the points in step 4, while the angle r is altered, to draw a curve consisting of the points given in form of a group. The intensity of the curve implies "brightness of the position $p_0$ on the image", and the intensity is added in a place wherein a plurality of curves are intersected one another.

Step 6: Steps 1 to 5 are executed while the normalization shortest distance parameter $_nd_s$ is altered to determine a parameter value $_nd_{s0}$ in which a plurality of curves drawn in the step 5 intersect at one point. As the parameter value, the "normalization shortest distance $_nd_{s0}$ up to the plane" is obtained. Further, as the coordinates of the cross point, the azimuth $n_{s0}$ of the plane is obtained.

(10) An image measurement method according to paragraph (8), wherein the following steps are executed to determine a three-dimensional azimuth $n_{s0}$ of a plane and/or a normalization shortest distance $_nd_{s0}$ up to crossing the plane.

Step 1: A normalization shortest distance parameter $_nd_s$ is arbitrarily set up to compute parameter R as to the respective points on an image in accordance with formula (e) using a "simple ratio ($p_{inf}$ $p_0$ $p_1$), which is determined by three positions $p_{inf}$, $p_0$, $p_1$ of a measuring point".

$$R = \cos^{-1}\left(_nd_s/\left(p_{inf}p_0p_1\right)\right) \tag{e}$$

Step 2: Draw a small circle R taking the "position $p_0$ at the present time" as the center. The intensity of the small circle implies "brightness of the position $p_0$ on the image", and the intensity is added in a place wherein a plurality of small circles are intersected one another.

Step 3: Steps 1 and 2 are executed while the normalization shortest distance parameter $_nd_s$ is altered to determine a parameter value $_nd_{s0}$ in which a plurality of small circles drawn in the step 2 intersect at one point. As the parameter value, the "normalization shortest distance $_nd_{s0}$ up to the plane" is obtained. Further, as the coordinates of the cross point, the azimuth $n_{s0}$ of the plane is obtained.

(11) An image measurement method according to paragraphs (9) and (10), wherein the curve in step 5 in paragraph (9) and the small circle in step 2 in paragraph (10) are drawn on a sphere.

(11-1) An image measurement method according to paragraph (11), wherein the curve or small circle in paragraph (11) is drawn through projection into the inner part of a circle on a plane.

(12) An image measurement method according to paragraph (9) and (10), wherein the curve in the step 5 and the small circle in step 2 in paragraph (10) are drawn on a plane through projection onto a plane.

(13) An image measurement method according to paragraphs (8), (9) or (10), wherein a three-dimensional azimuth $n_s$ of a plane and/or a normalization shortest distance $_nd_s$ up to crossing the plane are determined in accordance with the following steps, without determining a moving direction v (that is, the position $P_{inf}$ after an infinite time elapses).

Step 1: Arbitrarily set up a moving direction parameter v.

Step 2: Define a direction of the moving direction parameter v as the "position $P_{inf}$ after an infinite time elapses".

Step 3: Execute paragraphs (8), (9) or (10).

Step 4: Steps 1 to 3 are executed while the moving direction parameter v is altered to determine a parameter value $v_0$ in which curves (or small circles) drawn in the step 3 intersect at one point. This parameter value thus determined is a true moving direction $v_0$. As the coordinates of the cross point, the azimuth $n_s$ of the plane and/or the normalization shortest distance $_nd_s$ up to the plane is obtained.

(14) An image measurement method of determining a normalized distance $_nd_0$ between a camera center and a position of a point in a space in accordance with formula (f), using a simple ratio ($p_{inf}p_0$ $p_1$), which is determined by three positions $p_{inf}$, $p_0$, $p_1$ of a measuring point, where $p_0$ and $p_1$ denote measuring positions at mutually different two measuring times, that is, the present time and the subsequent time, on an arbitrary measuring point appearing on an image, respectively, and $p_{inf}$ denotes a position of the measuring point after an infinite time elapses. Here, the normalized distance $_nd_0$, which is expressed by formula (g), is a distance wherein a distance $d_0$ is normalized by a distance $\Delta x$,

$$_nd_0 = \left(p_{inf}p_0p_1\right) \tag{f}$$

$$_nd_0 = d_0/\Delta x \tag{g}$$

where $d_0$ denotes a distance up to the point, and $\Delta x$ denotes a moving distance of a camera (or the plane) between the present time and the subsequent time.

(15) An image measurement method according to step 1 of paragraph (10), wherein a parameter R is computed in accordance with the following formula (h) using a "normalized point distance $_nd_0$ ".

$$R = \cos^{-1} ({}_n d_s / {}_n d_0) \qquad\qquad (h)$$

(16) An image measurement method according to paragraphs (1) to (15), wherein the position at the subsequent time is replaced by a "positional difference (motion parallax) between the position at the present time and the position at the subsequent time".

(17) An image measurement method according to paragraphs (1) to (7), of determining a three-dimensional azimuth $n_s$ of a plane and/or a normalized distance ${}_n d_c$ up to crossing the plane in accordance with a stereo image, wherein the position $p_0$ at the present time, the position $p_1$ at the subsequent time, the position $p_{inf}$ after an infinite time elapses, the moving direction v, and the normalized time ${}_n t_c$ up to crossing the plane are replaced by a position $p_R$ on an image of a right camera, a position $p_L$ on an image of a left camera, a position $p_{axis}$ on an optical axis coupling the right camera to the left camera, an optical axis direction a $_{xis}$, and the "normalized distance ${}_n d_c$ up to crossing the plane in the optical axis direction", respectively. Here, the normalized distance ${}_n d_c$ is a distance wherein the distance $d_c$ up to crossing the plane in the optical axis direction is normalized by a distance $\Delta x_{LR}$ between the right camera and the left camera. It is acceptable that the right camera and the left camera are exchanged one another.

(18) An image measurement method according to paragraphs (8) to (13) and (15), of determining a three-dimensional azimuth $n_s$ of a plane and/or a normalization shortest distance ${}_n d_s$ up to the plane in accordance with a stereo image, wherein the position $p_0$ at the present time, the position $p_1$ at the subsequent time, the position $p_{inf}$ after an infinite time elapses, the moving direction v, and the normalization shortest distance ${}_n d_s$ up to the plane are replaced by a position $p_R$ on an image of a right camera, a position $p_L$ on an image of a left camera, a position $p_{axis}$ on an optical axis coupling the right camera to the left camera, an optical axis direction a $_{xis}$, and the "normalization shortest distance ${}_n d_{s, stero}$ up to the plane on the stereo image", respectively. Here, the normalization shortest distance ${}_n d_{s, stero}$ is a distance wherein the shortest distance $d_s$ up to the plane is normalized by a distance $\Delta x_{LR}$ between the right camera and the left camera. It is acceptable that the right camera and the left camera are exchanged one another.

(19) An image measurement method according to paragraph (14), of determining the "normalized distance ${}_n d_0$ up to the position of a point in a space" in accordance with a stereo image, wherein the position $p_0$ at the present time, the position $p_1$ at the subsequent time, and the position $p_{inf}$ after an infinite time elapses are replaced by a position $p_R$ on an image of a right camera, a position $p_L$ on an image of a left camera, and a "position $p_{axis}$ on an optical axis coupling the right camera to the left camera", respectively. Here, the normalized distance ${}_n d_0$ is a distance wherein the distance $d_0$ up to the point is normalized by a distance $\Delta x_{LR}$ between the right camera and the left camera. It is acceptable that the right camera and the left camera are exchanged one another.

(20) An image measurement method according to paragraphs (17) to (19), wherein the position $p_L$ on the image of the left camera is replaced by a "positional difference (binocular parallax) between the position on the image of the right camera and the position on the image of the left camera".

(21) An image measurement method according to paragraphs (1) to (20), wherein an image obtained through a planar camera is adopted as an input image.

(22) An image measurement method according to paragraphs (1) to (20), wherein an image obtained through a spherical camera is adopted as an input image.

(23) An image measurement method according to paragraph (10), wherein the "positional difference (motion parallax) between the position at the present time and the position at the subsequent time" is determined from an image on the planar camera, and the motion parallax thus determined is projected onto a sphere.

(24) An image measurement method according to paragraph (13), wherein the "positional difference (binocular parallax) between the position on the image of the right camera and the position on the image of the left camera" is determined from an image on the planar camera, and the binocular parallax thus determined is projected onto a sphere.

(25) A method of controlling a moving machine such as a robot, a hobby machine, a motor car and an airplane on the basis of the "three-dimensional azimuth $n_s$ of a plane" and/or the "normalized time ${}_n t_c$ up to crossing the plane" measured in accordance with an image measurement method related to paragraph (3) of paragraphs (21), (22) and (23).

(26) A method of "depth-separating a plurality of objects and surrounds, which are overlapped in sight on an image", on the basis of the "three-dimensional azimuth $n_s$ of a plane" and/or the "normalization shortest distance ${}_n d_s$ up to the plane" (or the "normalized time ${}_n t_c$ up to crossing the plane") measured in accordance with an image measurement method related to paragraph (8) (paragraph (3)) of paragraphs (21), (22) and (23).

(27) A method of "depth-separating a plurality of objects and surrounds, which are overlapped in sight on an image", on the basis of the "three-dimensional azimuth $n_s$ of a plane" and/or the "normalization shortest distance ${}_n d_s$ up

to the plane" (or the "normalized distance $_nd_c$ up to crossing the plane in the optical axis direction") measured in accordance with an image measurement method related to paragraph (18) or paragraph (17) of paragraphs (21), (22) and (23).

(I) Forward Direction Method

(I-1) Normalized time

An image measurement method according to paragraph (4) of paragraph (16), wherein a response intensity obtained by a method (or an apparatus) of detecting a motion parallax is voted.

(I-2) Normalized time + v unknown

An image measurement method according to paragraphs (7) and (4) of paragraph (16), wherein a response intensity obtained by a method (or an apparatus) of detecting a motion parallax is voted.

(I-3) Normalization Shortest Distance

An image measurement method according to paragraph (10) of paragraph (16), wherein a response intensity obtained by a method (or an apparatus) of detecting a motion parallax is voted.

(I-4) Normalization Shortest Distance + v unknown

An image measurement method according to paragraphs (13) and (10) of paragraph (16), wherein a response intensity obtained by a method (or an apparatus) of detecting a motion parallax is voted.

(I-5) Stereo + Normalized distance

An image measurement method according to paragraphs (17) and (4) of paragraph (20), wherein a response intensity obtained by a method (or an apparatus) of detecting a binocular parallax is voted.

(I-6) Stereo + Normalized distance + $a_{xis}$ unknown

An image measurement method according to paragraphs (17), (7) and (4) of paragraph (20), wherein a response intensity obtained by a method (or an apparatus) of detecting a binocular parallax is voted.

(I-7) Stereo + Normalization Shortest Distance

An image measurement method according to paragraphs (18) and (10) of paragraph (20), wherein a response intensity obtained by a method (or an apparatus) of detecting a binocular parallax is voted.

(I-8) Stereo + Normalization Shortest Distance + axis unknown

An image measurement method according to paragraphs (18), (13) and (10) of paragraph (20), wherein a response intensity obtained by a method (or an apparatus) of detecting a binocular parallax is voted.

(I-9) Normalization Shortest Distance

An image measurement method according to paragraph (9) of paragraph (16), wherein a response intensity obtained by a method (or an apparatus) of detecting a motion parallax is voted.

(I-10) Normalization Shortest Distance + v unknown

An image measurement method according to paragraphs (13) and (9) of paragraph (16), wherein a response intensity obtained by a method (or an apparatus) of detecting a motion parallax is voted.

(I-11) Stereo + Normalization Shortest Distance

An image measurement method according to paragraphs (18) and (9) of paragraph (20), wherein a response intensity obtained by a method (or an apparatus) of detecting a binocular parallax is voted.

(I-12) Stereo + Normalization Shortest Distance + $a_{xis}$ unknown

An image measurement method according to paragraphs (18), (13) and (9) of paragraph (20), wherein a response intensity obtained by a method (or an apparatus) of detecting a binocular parallax is voted.

(II) Reverse Direction Method

(II-1) Normalized time

Step 1: Consider number i of an arbitrary pixel $_ip_0$ on an image at the present time.
Step 2: Consider number j of an arbitrary element $(n_{sj}, _nt_{cj})$ on a three-degree-of-freedom arrangement (two degree of freedom on an azimuth vector $n_s$ of a plane, and one degree of freedom on a normalized time $_nt_c$).
Step 3: Compute a "motion parallax $_{ij}\tau$ on a pixel $_ip_0$" associated with the numbers i and j.
Step 4: Compute from an input image a response intensity on the motion parallax $_{ij}\tau$ in accordance with a method (or an apparatus) of detecting a motion parallax.
Step 5: Vote the response intensity for the element $(n_{sj}, _nt_{cj})$ on the three-degree-of-freedom arrangement.
Step 6: Repeat the above steps 1-5 on pixels i and elements j of a predetermined range.
Detect an element, which offers a maximal response, of the three-degree-of-freedom arrangement thus voted, so that an "azimuth of a plane and a normalized time" can be detected from the address $(n_{s0}, _nt_{c0})$.

(II-2) Normalized time + v unknown

An image measurement method according to paragraph (II-1), wherein a three-dimensional azimuth $n_s$ of a plane and/or a normalized time $_nt_c$ up to crossing the plane are determined in accordance with the following steps, without determining a moving direction v (that is, the position $P_{inf}$ after an infinite time elapses).
Step 1: Arbitrarily set up a moving direction parameter v.
Step 2: Execute paragraph (II-1).
Step 3: Steps 1 and 2 are executed while the moving direction parameter v is altered.
Determine a parameter value $v_0$, which offers a maximum response, of the three-degree-of-freedom arrangement thus voted, so that a true moving direction $v_0$ can be detected in form of the parameter value. Further, it is possible to detect an "azimuth of a plane and a normalized time" from the address $(n_{s0}, _nt_{c0})$. which offers a maximal response, of the three-degree-of-freedom arrangement (step 2).

(II-3) Normalization Shortest Distance

Step 1: Consider number i of an arbitrary pixel $_ip_0$ on an image at the present time.
Step 2: Consider number j of an arbitrary element $(n_{sj}, _nd_{sj})$ on a three-degree-of-freedom arrangement (two degree of freedom on an azimuth vector $n_s$ of a plane, and one degree of freedom on a normalization shortest distance $_nd_s$).
Step 3: Compute a "motion parallax $_{ij}\tau$ on a pixel $_ip_0$" associated with the numbers i and j.
Step 4: Compute from an input image a response intensity on the motion parallax $_{ij}\tau$ in accordance with a method (or an apparatus) of detecting a motion parallax.
Step 5: Vote the response intensity for the element $(n_{sj}, _nd_{sj})$ on the three-degree-of-freedom arrangement.
Step 6: Repeat the above steps 1-5 on pixels i and elements j of a predetermined range.
Detect an element, which offers a maximal response, of the three-degree-of-freedom arrangement thus voted, so that an "azimuth of a plane and a normalized time" can be detected from the address $(n_{s0}, _nd_{s0})$.

(II-4) Normalization Shortest Distance + v unknown

An image measurement method according to paragraph (II-3), wherein a three-dimensional azimuth $n_s$ of a plane and/or a normalization shortest distance $_nd_s$ are determined in accordance with the following steps, without determining a moving direction v (that is, the position $P_{inf}$ after an infinite time elapses).
Step 1: Arbitrarily set up a moving direction parameter v.

Step 2: Execute paragraph (II-3).

Step 3: Steps 1 and 2 are executed while the moving direction parameter v is altered.

Determine a parameter value $v_0$, which offers a maximum response, of the three-degree-of-freedom arrangement thus voted, so that a true moving direction $v_0$ can be detected in form of the parameter value. Further, it is possible to detect an "azimuth of a plane and a normalization shortest distance" from the address ($n_{s0}$, $_nd_{s0}$), which offers a maximal response, of the three-degree-of-freedom arrangement (step 2).

(II-5) Stereo + Normalized distance

Step 1: Consider number i of an arbitrary pixel $_ip_R$ on an image of the right camera.

Step 2: Consider number j of an arbitrary element ($n_{sj}$, $_nd_{cj}$) on a three-degree-of-freedom arrangement (two degree of freedom on an azimuth vector $n_s$ of a plane, and one degree of freedom on a normalized distance $_nd_c$).

Step 3: Compute a "binocular parallax $_{ij}\sigma$ on a pixel $_ip_R$" associated with the numbers i and j.

Step 4: Compute from an input image a response intensity on the binocular parallax $_{ij}\sigma$ in accordance with a method (or an apparatus) of detecting a binocular parallax.

Step 5: Vote the response intensity for the element ($n_{sj}$, $_nd_{cj}$) on the three-degree-of-freedom arrangement.

Step 6: Repeat the above steps 1-5 on pixels i and elements j of a predetermined range.

Detect an element, which offers a maximal response, of the three-degree-of-freedom arrangement thus voted, so that an "azimuth of a plane and a normalized distance" can be detected from the address ($n_{s0}$, $_nd_{c0}$).

(II-6) Stereo + Normalized distance + $a_{xis}$ unknown

An image measurement method according to paragraph (II-5), wherein a three-dimensional azimuth $n_s$ of a plane and/or a normalized distance $_nd_c$ are determined in accordance with the following steps, without determining an optical axis direction $a_{xis}$ (that is, the position $P_{axis}$ on an optical axis coupling the right camera to the left camera).

Step 1: Arbitrarily set up an optical axis direction parameter $a_{xis}$.

Step 2: Execute paragraph (II-5).

Step 3: Steps 1 and 2 are executed while the parameter $a_{xis}$ is altered.

Determine a parameter value $a_{xis0}$, which offers a maximum response, of the three-degree-of-freedom arrangement thus voted, so that a true optical-axis direction $a_{xis0}$ can be detected in form of the parameter value. Further, it is possible to detect an "azimuth of a plane and a normalized distance" from the address ($n_{s0}$, $_nd_{c0}$), which offers a maximal response, of the three-degree-of-freedom arrangement (step 2).

(II-7) Stereo + Normalization Shortest Distance

Step 1: Consider number i of an arbitrary pixel $_ip_R$ on an image of the right camera.

Step 2: Consider number j of an arbitrary element ($n_{ij}$, $_nd_{sj}$) on a three-degree-of-freedom arrangement (two degree of freedom on an azimuth vector $n_s$ of a plane, and one degree of freedom on a normalized distance $_nd_s$).

Step 3: Compute a "binocular parallax $_{ij}\sigma$ on a pixel $_ip_R$" associated with the numbers i and j.

Step 4: Compute from an input image a response intensity on the binocular parallax $_{ij}\sigma$ in accordance with a method (or an apparatus) of detecting a binocular parallax.

Step 5: Vote the response intensity for the element ($n_{sj}$, $_nd_{sj}$) on the three-degree-of-freedom arrangement.

Step 6: Repeat the above steps 1-5 on pixels i and elements j of a predetermined range.

Detect an element, which offers a maximal response, of the three-degree-of-freedom arrangement thus voted, so that an "azimuth of a plane and a normalized distance" can be detected from the address ($n_{s0}$, $_nd_{s0}$).

(II-8) Stereo + Normalization Shortest Distance + $a_{xis}$ unknown

An image measurement method according to paragraph (II-7), wherein a three-dimensional azimuth $n_s$ of a plane and/or a normalization shortest distance $_nd_s$ are determined in accordance with the following steps, without determining an optical axis direction $a_{xis}$ (that is, the position $P_{axis}$ on an optical axis coupling the right camera to the left camera).

Step 1: Arbitrarily set up an optical axis direction parameter $a_{xis}$.

Step 2: Execute paragraph (II-7).

Step 3: Steps 1 and 2 are executed while the parameter $a_{xis}$ is altered.

Determine a parameter value $a_{xis0}$, which offers a maximum response, of the three-degree-of-freedom arrangement thus voted, so that a true optical axis direction $a_{xis0}$ can be detected in form of the parameter value. Further, it is possible to detect an "azimuth of a plane and a normalized distance" from the address ($n_{s0}$, $_nd_{s0}$), which offers a

maximal response, of the three-degree-of-freedom arrangement (step 2).

(III) Composite Algorithm

(III-1) Normalized time

Step 1: Consider number i of an arbitrary pixel $_ip_0$ on an image at the present time.

Step 2: Consider number k of an arbitrary motion parallax $_k\tau$.

Step 3: Determine an "element group { ($n_{sj}$, $_nt_{cj}$) }" on a three-degree-of-freedom arrangement (two degree of freedom on an azimuth vector $n_s$ of a plane, and one degree of freedom on a normalized time $_nt_c$ ) " associated with the numbers i and k.

Step 4: Compute from an input image a response intensity on the motion parallax $_k\tau$ in accordance with a method (or an apparatus) of detecting a motion parallax.

Step 5: Vote the response intensity for the element group { ($n_{sj}$, $_nt_{cj}$) }.

Step 6: Repeat the above steps 1-5 on i and k of a predetermined range.

Detect an element, which offers a maximal response, of the three-degree-of-freedom arrangement thus voted, so that an "azimuth of a plane and a normalized time" can be detected from the address ($n_{s0}$, $_nt_{c0}$).

(III-2) Normalized time + v unknown

An image measurement method according to paragraph (III-1), wherein a three-dimensional azimuth $n_s$ of a plane and/or a normalized time $_nt_c$ up to crossing the plane are determined in accordance with the following steps, without determining a moving direction v (that is, the position $P_{inf}$ after an infinite time elapses).

Step 1: Arbitrarily set up a moving direction parameter v.

Step 2: Execute paragraph (III-1).

Step 3: Steps 1 and 2 are executed while the moving direction parameter v is altered.

Determine a parameter value $v_0$, which offers a maximum response, of the three-degree-of-freedom arrangement thus voted, so that a true moving direction $v_0$ can be detected in form of the parameter value. Further, it is possible to detect an "azimuth of a plane and a normalized time" from the address ($n_{s0}$, $_nt_{c0}$), which offers a maximal response, of the three-degree-of-freedom arrangement (step 2).

(III-3) Normalization Shortest Distance

Step 1: Consider number i of an arbitrary pixel $_ip_0$ on an image at the present time.

Step 2: Consider number k of an arbitrary motion parallax $_k\tau$.

Step 3: Determine an "element group { ($n_{sj}$, $_nd_{sj}$) }" on a three-degree-of-freedom arrangement (two degree of freedom on an azimuth vector $n_s$ of a plane, and one degree of freedom on a normalization shortest distance $_nd_s$ ) " associated with the numbers i and k.

Step 4: Compute from an input image a response intensity on the motion parallax $_k\tau$ in accordance with a method (or an apparatus) of detecting a motion parallax.

Step 5: Vote the response intensity for the element group { ($n_{sj}$, $_nd_{sj}$) }.

Step 6: Repeat the above steps 1-5 on i and k of a predetermined range.

Detect an element, which offers a maximal response, of the three-degree-of-freedom arrangement thus voted, so that an "azimuth of a plane and a normalization shortest distance" can be detected from the address ($n_{s0}$, $_nd_{s0}$) .

(III-4) Normalization Shortest Distance + v unknown

An image measurement method according to paragraph (III-3), wherein a three-dimensional azimuth $n_s$ of a plane and/or a normalization shortest distance $_nd_s$ are determined in accordance with the following steps, without determining a moving direction v (that is, the position $P_{inf}$ after an infinite time elapses).

Step 1: Arbitrarily set up a moving direction parameter v.

Step 2: Execute paragraph (III-3).

Step 3: Steps 1 and 2 are executed while the moving direction parameter v is altered.

Determine a parameter value $v_0$ , which offers a maximum response, of the three-degree-of-freedom arrangement thus voted, so that a true moving direction $v_0$ can be detected in form of the parameter value. Further, it is possible to detect an "azimuth of a plane and a normalization shortest distance" from the address ($n_{s0}$, $_nd_{s0}$), which offers a maximal response, of the three-degree-of-freedom arrangement (step 2).

(III-5) Stereo + Normalized distance

Step 1: Consider number i of an arbitrary pixel $_iP_R$ on an image of the right camera.

Step 2: Consider number k of an arbitrary binocular parallax $_k\sigma$.

Step 3: Determine an "element group { ($n_{sj}$, $_nd_{cj}$)} on a three-degree-of-freedom arrangement (two degree of freedom on an azimuth vector $n_s$ of a plane, and one degree of freedom on a normalized distance $_nd_c$) " associated with-the numbers i and k.

Step 4: Compute from an input image a response intensity on the binocular parallax $_k\sigma$ in accordance with a method (or an apparatus) of detecting a binocular parallax.

Step 5: Vote the response intensity for the element group { ($n_{sj}$, $_nd_{cj}$) }.

Step 6: Repeat the above steps 1-5 on i and k of a predetermined range.

Detect an element, which offers a maximal response, of the three-degree-of-freedom arrangement thus voted, so that an "azimuth of a plane and a normalized distance" can be detected from the address ($n_{s0}$, $_nd_{c0}$).

(III-6) Stereo + Normalized distance + $a_{xis}$ unknown

An image measurement method according to paragraph (III-5), wherein a three-dimensional azimuth $n_s$ of a plane and/or a normalized distance $_nd_c$ are determined in accordance with the following steps, without determining an optical axis direction $a_{xis}$ (that is, the position $P_{axis}$ on an optical axis coupling the right camera to the left camera).

Step 1: Arbitrarily set up an optical axis direction parameter $a_{xis}$.

Step 2: Execute paragraph (III-5).

Step 3: Steps 1 and 2 are executed while the parameter $a_{xis}$ is altered.

Determine a parameter value $a_{xis0}$, which offers a maximum response, of the three-degree-of-freedom arrangement thus voted, so that a true optical axis direction $a_{xis0}$ can be detected in form of the parameter value. Further, it is possible to detect an "azimuth of a plane and a normalized distance" from the address ($n_{s0}$, $_nd_{c0}$) , which offers a maximal response, of the threedegree-of-freedom arrangement (step 2).

(III-7) Stereo + Normalization Shortest Distance

Step 1: Consider number i of an arbitrary pixel $_iP_k$ on an image of the right camera.

Step 2: Consider number k of an arbitrary binocular parallax $_k\sigma$.

Step 3: Determine an "element group {($n_{sj}$, $_nd_{sj}$)} on a three-degree-of-freedom arrangement (two degree of freedom on an azimuth vector $n_s$ of a plane, and one degree of freedom on a normalization shortest distance $_nd_s$) "associated with the numbers i and k.

Step 4: Compute from an input image a response intensity on the binocular parallax $_k\sigma$ in accordance with a method (or an apparatus) of detecting a binocular parallax.

Step 5: Vote the response intensity for the element group { ($n_{sj}$, $_nd_{sj}$) }.

Step 6: Repeat the above steps 1-5 on i and k of a predetermined range.

Detect an element, which offers a maximal response, of the three-degree-of-freedom arrangement thus voted, so that an "azimuth of a plane and a normalization shortest distance" can be detected from the address ($n_{s0}$, $_nd_{s0}$) .

(III-8) Stereo + Normalization Shortest Distance + $a_{xis}$ unknown

An image measurement method according to paragraph (III-7), wherein a three-dimensional azimuth $n_s$ of a plane and/or a normalized distance $_nd_s$ are determined in accordance with the following steps, without determining an optical axis direction $a_{xis}$ (that is, the position $P_{axis}$ on an optical axis coupling the right camera to the left camera).

Step 1: Arbitrarily set up an optical axis direction parameter $a_{xis}$.

Step 2: Execute paragraph (III-7).

Step 3: Steps 1 and 2 are executed while the parameter $a_{xis}$ is altered.

Determine a parameter value $a_{xis0}$, which offers a maximum response, of the three-degree-of-freedom arrangement thus voted, so that a true optical axis direction $a_{xis0}$ can be detected in form of the parameter value. Further, it is possible to detect an "azimuth of a plane and a normalized distance" from the address ($n_{s0}$, $_nd_{s0}$) , which offers a maximal response, of the three-degree-of-freedom arrangement (step 2).

(IV) Generalization

(IV-1) Normalized time

A method of voting a response intensity obtained by a method (or an apparatus) of detecting a motion parallax for a three-degree-of-freedom arrangement (two degree of freedom on an azimuth vector $n_s$ of a plane, and one degree of freedom on a normalized time $_nt_c$ ). Detect an element, which offers a maximal response, of the three-degree-of-freedom arrangement thus voted, so that an "azimuth of a plane and a normalized time" can be detected from the address $(n_{s0}, {}_nt_{c0})$.

Incidentally, in the present invention in its entirety, it is acceptable that "voting a response intensity obtained by a method (or an apparatus) of detecting a parallax" is replaced by "voting a quantity related to luminance of an input image". Further, it is acceptable that "a method (or an apparatus) of detecting a parallax" is replaced by "a method (or an apparatus) of detecting a velocity on an image".

(IV-2) Normalized time + v unknown

Step 1: Arbitrarily set up a moving direction parameter v.
Step 2: Execute paragraph (IV-1).
Step 3: Steps 1 and 2 are executed while the moving direction parameter v is altered.
Determine a parameter value $v_0$, which offers a maximum response, of the three-degree-of-freedom arrangement thus voted, so that a true moving direction $v_0$ can be detected in form of the parameter value. Further, it is possible to detect an "azimuth of a plane and a normalized time" from the address $(n_{s0}, {}_nt_{c0})$, which offers a maximal response, of the three-degree-of-freedom arrangement (step 2).

(IV-3) Normalization Shortest Distance

A method of voting a response intensity obtained by a method (or an apparatus) of detecting a motion parallax for a three-degree-of-freedom arrangement (two degree of freedom on an azimuth vector $n_s$ of a plane, and one degree of freedom on a normalization shortest distance $_nd_s$ ). Detect an element, which offers a maximal response, of the three-degree-of-freedom arrangement thus voted, so that an "azimuth of a plane and a normalization shortest distance" can be detected from the address $(n_{s0}, {}_nd_{s0})$.

(IV-4) Normalization Shortest Distance + v unknown

Step 1: Arbitrarily set up a moving direction parameter v.
Step 2: Execute paragraph (IV-3).
Step 3: Steps 1 and 2 are executed while the moving direction parameter v is altered.
Determine a parameter value $v_0$ , which offers a maximum response, of the three-degree-of-freedom arrangement thus voted, so that a true moving direction $v_0$ can be detected in form of the parameter value. Further, it is possible to detect an "azimuth of a plane and a normalization shortest distance" from the address $(n_{s0}, {}_nd_{s0})$ , which offers a maximal response, of the three-degree-of-freedom arrangement (step 2).

(IV-5) Stereo + Normalized distance

A method of voting a response intensity obtained by a method (or an apparatus) of detecting a binocular parallax for a three-degree-of-freedom arrangement (two degree of freedom on an azimuth vector $n_s$ of a plane, and one degree of freedom on a normalized distance $_nd_c$). Detect an element, which offers a maximal response, of the three-degree-of-freedom arrangement thus voted, so that an "azimuth of a plane and a normalized distance" can be detected from the address $(n_{s0}, {}_nd_{c0})$.

(IV-6) Stereo + Normalized distance + $a_{xis}$ unknown

Step 1: Arbitrarily set up an optical axis direction parameter $a_{xis}$.
Step 2: Execute paragraph (IV-5).
Step 3: Steps 1 and 2 are executed while the parameter $a_{xis}$ is altered.
Determine a parameter value $a_{xis0}$, which offers a maximum response, of the three-degree-of-freedom arrangement thus voted, so that a true optical axis direction $a_{xis0}$ can be detected in form of the parameter value. Further, it is possible to detect an "azimuth of a plane and a normalized distance" from the address $(n_{s0}, {}_nd_{c0})$, which offers a maximal response, of the three-degree-of-freedom arrangement (step 2).

(IV-7) Stereo + Normalization Shortest Distance

A method of voting a response intensity obtained by a method (or an apparatus) of detecting a binocular parallax for a three-degree-of-freedom arrangement (two degree of freedom on an azimuth vector $n_s$ of a plane, and one degree of freedom on a normalization shortest distance $_nd_s$ ). Detect an element, which offers a maximal response, of the three-degree-of-freedom arrangement thus voted, so that an "azimuth of a plane and a normalization shortest distance" can be detected from the address $(n_{s0},\ _nd_{s0})$ .

(IV-8) Stereo + Normalization Shortest Distance + axis unknown

Step 1: Arbitrarily set up an optical axis direction parameter $a_{xis}$ .
Step 2: Execute paragraph (IV-7).
Step 3: Steps 1 and 2 are executed while the parameter $a_{xis}$ is altered.
Determine a parameter value $a_{xis0}$ , which offers a maximum response, of the three-degree-of-freedom arrangement thus voted, so that a true optical axis direction $a_{xis0}$ can be detected in form of the parameter value. Further, it is possible to detect an "azimuth of a plane and a normalized distance" from the address $(n_{s0},\ _nd_{s0})$, which offers a maximal response, of the three-degree-of-freedom arrangement (step 2).
To achieve the above-mentioned objects, the present invention provides, of image measurement apparatuses, a first image measurement apparatus comprising an operating unit for determining an azimuth of a measuring plane and/or a physical quantity indexing a distance between the measuring plane and one observation point of predetermined two observation points in an optical axis direction v coupling said two observation points, using a compound ratio $\{p_{axis}p_Rp_Lp_c\}$ , which is determined by four positions $p_{axis}$, $p_R$, $p_L$, $p_c$ , or an operation equivalent to said compound ratio, where $p_R$ and $p_L$ denote measuring positions through observation of said two observation points on an arbitrary measuring point appearing on an image obtained through viewing a predetermined measurement space from said two observation points inside the measurement space, respectively, $p_{axis}$ denotes a position of an infinite-point on a straight line extending in a direction identical to the optical axis direction v, including the measuring point, and $p_c$ denotes a position of an intersection point with said straight line on an observation plane extending in parallel to a measuring plane including the measuring point, including one observation point of said two observation points.
In the first image measurement apparatus as mentioned above, said compound ratio $\{p_{axis}p_Rp_Lp_c\}$ or the operation equivalent to said compound ratio, which are executed in said operating unit, include an operation using the measuring position $p_R$ through observation on said measuring point from one observation point of said two observation points, and a binocular parallax σ, which is a positional difference between the two measuring positions $p_R$ and $p_L$ through observation on said measuring point from said two observation points, instead of the two measuring positions $p_R$ and $p_L$ through observation on said measuring point from said two observation points.
In the first image measurement apparatus as mentioned above, it is acceptable that in said operating unit, as said physical quantity indexing a distance between the measuring plane and one observation point of said two observation points in the optical axis direction, a normalized distance $_nd_c$ , which is expressed by the following equation, is adopted,

$$_nd_c = d_c/\Delta x_{LR}$$

where $d_c$ denotes a distance between the measuring plane and one observation point of said two observation points in the optical axis direction, and $\Delta x_{LR}$ denotes a distance between said two observation points,
and said normalized distance $_nd_c$ is determined in accordance with the following equation

$$_nd_c = \{p_{axis}p_Rp_Lp_c\}$$

or an equation equivalent to the above equation.
In the first image measurement apparatus as mentioned above, it is acceptable that said operating unit comprises:

a parameter altering unit for altering a value of a parameter in which the physical quantity indexing a distance between the measuring plane and one observation point of said two observation points in the optical axis direction is set up in form of a parameter;

a compound ratio transformation unit for determining the position $p_c$ of the intersection point on the observation plane, using said compound ratio $\{p_{axis}p_R p_L \ p_c\}$ or the operation equivalent to said compound ratio, in accordance with the physical quantity indexing a distance between the measuring plane and one observation point of said two observation points in the optical axis direction set up in said parameter altering unit, the two measuring positions $p_R$ and $p_L$ of the measuring point through observation on said measuring point from said two observation points or the measuring position $p_R$ through observation on said measuring point from one observation point of said two observation points and a binocular parallax $\sigma$, which is a positional difference between the two measuring positions $p_R$ and $p_L$ through observation on said measuring point from said two observation points, instead of the two measuring positions $p_R$ and $p_L$ , and the position $p_{axis}$ of said infinite-point of the measuring point; and

a polar transformation unit for determining a polar line associated with the measuring point through a polar transformation of the position $p_c$ of the intersection point on the observation plane,

wherein said compound ratio transformation unit and said polar transformation unit repeatedly perform operations by a plurality of number of times on a plurality of measuring points in said measurement space, while a value of said parameter is altered in said parameter altering unit, and

said operating unit further comprises a detection unit for determining an azimuth of a measuring plane including a plurality of measuring points associated with a plurality of polar lines intersecting at a cross point and/or a physical quantity indexing said physical quantity indexing a distance between the measuring plane and one observation point of said two observation points in the optical axis direction in such a manner that cross points of polar lines, which are formed when a plurality of polar lines determined through a repetition of execution of operations of said parameter altering unit, said compound ratio transformation unit and said polar transformation unit by a plurality of number of times are drawn on a polar line drawing space, are determined.

In this case, it is preferable that the measuring point appearing on the image has information as to intensity,

said polar transformation unit determines the polar line, and votes a value associated with intensity of a measuring point associated with the polar line for each point on a locus of the polar line, which is formed when the polar line thus determined is drawn on a polar line drawing space, and

said detection unit determines an azimuth of a measuring plane including a plurality of measuring points associated with a plurality of polar lines joining a voting for a maximal point and/or said physical quantity indexing a distance between the measuring plane and one observation point of said two observation points in the optical axis direction in such a manner that a maximal point wherein a value by a voting through a repetition of execution of operations of said parameter altering unit, said compound ratio transformation unit and said polar transformation unit by a plurality of number of times offers a maximal value, instead of determining of the cross point, is determined.

It is also preferable that the measuring point appearing on the image has information as to intensity,

said operating unit further comprises a second parameter altering unit for altering a value of a second parameter in which a binocular parallax $\sigma$, which is a positional difference between the two measuring positions $p_R$ and $p_L$ through observation on said measuring point from said two observation points, is set up in form of the second parameter,

said compound ratio transformation unit determines the position $p_c$ of the intersection point on the observation plane using the physical quantity indexing a distance between the measuring plane and one observation point of said two observation points in the optical axis direction, which is set up in said parameter altering unit, the measuring position $p_R$ through observation on said measuring point from one observation point of said two observation points, the binocular parallax $\sigma$, which is set up in said fifth step, and the position $p_{axis}$ of said infinite-point of the measuring point,

said polar transformation unit determines a polar line associated with the measuring point, and determines a response intensity associated with the binocular parallax $\sigma$ on the measuring point, and votes the response intensity associated with the binocular parallax $\sigma$ of a measuring point associated with the polar line for each point on a locus of the polar line, which is formed when the polar line thus determined is drawn on a polar line drawing space, said compound ratio transformation unit and said polar transformation unit repeatedly perform operations by a plurality of number of times on a plurality of measuring points in said measurement space, while values of said parameters are altered in said parameter altering unit and said second parameter altering unit, and

said detection unit determines an azimuth of a measuring plane including a plurality of measuring points associated with a plurality of polar lines joining a voting for a maximal point and/or said physical quantity indexing a distance between the measuring plane and one observation point of said two observation points in the optical axis direction in such a manner that a maximal point wherein a value by a voting through a repetition of execution of operations of said first parameter altering unit, said second parameter altering unit, said compound ratio transformation unit and said polar transformation unit by a plurality of number of times offers a maximal value is determined, instead of determination of said cross point.

In the first image measurement apparatus as mentioned above, it is preferable that the image measurement apparatus comprises:

a first parameter altering unit for altering a value of a first parameter in which the position $p_{axis}$ of said infinite-point of the measuring point through setting up the optical axis direction v is altered in form of the first parameter;
a second parameter altering unit for altering a value of a second parameter in which the physical quantity indexing a distance between the measuring plane and one observation point of said two observation points in the optical axis direction is set up in form of the second parameter;
a compound ratio transformation unit for determining the position $p_c$ of the intersection point on the observation plane, using said compound ratio $\{p_{axis}p_Rp_L \; p_c\}$ or the operation equivalent to said compound ratio, in accordance with the position $p_{axis}$ set up in said first parameter altering unit, the physical quantity indexing a distance between the measuring plane and one observation point of said two observation points in the optical axis direction set up in the second step, and the two measuring positions $p_R$ and $p_L$ of the measuring point through observation on said measuring point from said two observation points or the measuring position $p_R$ through observation on said measuring point from one observation point of said two observation points and a binocular parallax σ, which is a positional difference between the two measuring positions $p_R$ and $p_L$ through observation on said measuring point from said two observation points, instead of the two measuring positions $p_R$ and $p_L$ through observation on said measuring point from said two observation points; and
a polar transformation unit for determining a polar line associated with the measuring point through a polar transformation of the position $p_c$ of the intersection point on the observation plane,

wherein said compound ratio transformation unit and said polar transformation unit repeatedly perform operations by a plurality of number of times on a plurality of measuring points in said measurement space, while values of said first parameter and said second parameter are altered in said first parameter altering unit and said second parameter altering unit, and
said operating unit further comprises a detection unit for determining a true optical axis direction , and of determining an azimuth of a measuring plane including a plurality of measuring points associated with a plurality of polar lines intersecting at a cross point determined on a polar line drawing space associated with the true optical axis direction, and/or said physical quantity indexing a distance between the measuring plane and one observation point of said two observation points in the optical axis direction in such a manner that cross points of polar lines, which are formed when a plurality of polar lines determined through a repetition of execution of operations of said first parameter altering unit, said second parameter altering unit, said compound ratio transformation unit and said polar transformation unit are drawn on an associated polar line drawing space of a plurality of polar line drawing spaces according to said first parameter, are determined on each polar line drawing space, and a polar line drawing space associated with the true optical axis direction relative to said observation point on said measuring point is selected in accordance with information as to a number of polar lines intersecting at the cross points.

In this case, it is preferable that wherein the measuring point appearing on the image has information as to intensity,

said polar transformation unit determines the polar line, and votes a value associated with intensity of a measuring point associated with the polar line for each point on a locus of the polar line, which is formed when the polar line thus determined is drawn on the polar line drawing space,
said detection unit determines the true optical axis direction, and determines an azimuth of a measuring plane including a plurality of measuring points associated with a plurality of polar lines joining a voting for a maximal point determined on a polar line drawing space associated with the true optical axis direction , and/or said physical quantity indexing a distance between the measuring plane and one observation point of said two observation points in the optical axis direction in such a manner that a maximal point wherein a value by a voting through a repetition of execution of execution of operations of said first parameter altering unit, said second parameter altering unit, said compound ratio transformation unit and said polar transformation unit offers a maximal value, instead of determining of the cross point, is determined on each polar line drawing space, and a polar line drawing space associated with the true optical axis direction is selected in accordance with information as to a maximal value at the maximal point.

It is also preferable that the measuring point appearing on the image has information as to intensity,

said operating unit further comprises a third parameter unit for setting up a binocular parallax σ, which is a positional difference between the two measuring positions $p_R$ and $p_L$ through observation on said measuring point from said two observation points, in the form of a third parameter,

said compound ratio transformation unit determines the position $p_c$ of the intersection point on the observation plane using the position $p_{axis}$, which is set up in said first parameter altering unit, the physical quantity indexing a distance between the measuring plane and one observation point of said two observation points in the optical axis direction, which is set up in said second parameter altering unit, the measuring position $p_R$ through observation on said measuring point from one observation point of said two observation points, and the binocular parallax σ, which is set up in said third parameter altering unit,

said polar transformation unit determines a polar line associated with the measuring point, and determines a response intensity associated with the binocular parallax σ on the measuring point, and of voting the response intensity associated with the binocular parallax σ of a measuring point associated with the polar line for each point on a locus of the polar line, which is formed when the polar line thus determined is drawn on a polar line drawing space,

said compound ratio transformation unit and said polar transformation unit perform operations by a plurality of number of times on a plurality of measuring points in said measurement space, while values of said parameters are altered in said first, second and third parameter units, and

said detection unit determines the true optical axis direction, and determines an azimuth of a measuring plane including a plurality of measuring points associated with a plurality of polar lines joining a voting for a maximal point determined on a polar line drawing space associated with the true optical axis direction , and/or said physical quantity indexing a distance between the measuring plane and one observation point of said two observation points in the optical axis direction in such a manner that a maximal point wherein a value by a voting through a repetition of execution of operations of said first parameter altering unit, said second parameter altering unit, said third parameter altering unit, said compound ratio transformation unit and said polar transformation unit by a plurality of number of times offers a maximal value, instead of determining of the cross point, is determined on each polar line drawing space, and a polar line drawing space associated with the true optical axis direction is selected in accordance with information as to a maximal value at the maximal point.

To achieve the above-mentioned objects, the present invention provides, of image measurement apparatuses, a second image measurement apparatus comprising an operating unit for determining an azimuth $n_s$ of a measuring plane and/or a physical quantity indexing a shortest distance between the measuring plane and one observation point of predetermined two observation points, using a compound ratio $\{p_{axis}p_Rp_Lp_c\}$, which is determined by four positions $p_{axis}$, $p_R$, $p_L$, $p_c$ of a measuring point, or an operation equivalent to said compound ratio, and an inner product $(n_s \cdot v)$ of the azimuth $n_s$ of the measuring plane and an optical axis direction $v$, where $p_R$ and $p_L$ denote measuring positions through observation of said two observation points on an arbitrary measuring point appearing on an image obtained through viewing a predetermined measurement space from predetermined two observation points inside the measurement space, respectively, $v$ denotes the optical axis direction coupling said two observation points, $p_{axis}$ denotes a position of an infinite-point on a straight line extending in a direction identical to the optical axis direction $v$, including the measuring point, $p_c$ denotes a position of an intersection point with said straight line on an observation plane extending in parallel to a measuring plane including the measuring point, including one observation point of said two observation points, and $n_s$ denotes the azimuth of the measuring plane.

In the second image measurement apparatus as mentioned above, said compound ratio $\{p_{axis}p_Rp_Lp_c\}$ or the operation equivalent to said compound ratio, which are executed in said operating unit, include an operation using the measuring position $p_R$ through observation on said measuring point from one observation point of said two observation points, and a binocular parallax σ, which is a positional difference between the two measuring positions $p_R$ and $p_L$ through observation on said measuring point from said two observation points, instead of the two measuring positions $p_R$ and $p_L$ through observation on said measuring point from said two observation points.

In the second image measurement apparatus as mentioned above, it is acceptable that as said physical quantity indexing the shortest distance, a normalization shortest distance $_nd_s$, which is expressed by the following equation, is adopted,

$$_nd_s = d_s / \Delta x_{LR}$$

and said normalization shortest distance $_nd_s$ is determined in accordance with the following equation,

$$_nd_s = {}_nd_c (n_s \cdot v)$$

using a normalized distance $_nd_c$, which is expressed by the following equation, and the inner product $(n_s \cdot v)$

$$_nd_c = d_c / \Delta x_{LR}$$

where $d_s$ denotes a shortest distance between the measuring plane and one observation point of said two observation points, $d_c$ denotes a distance between the measuring plane and one observation point of said two observation points in an optical axis direction, and $\Delta x_{LR}$ denotes a distance between said two observation points.

In the second image measurement apparatus as mentioned above, it is acceptable that said operating unit comprises:

a first parameter altering unit for setting up the physical quantity indexing the shortest distance in form of a first parameter;

a second parameter altering unit for setting up the inner product $(n_s \cdot v)$ in form of a second parameter;

a compound ratio transformation unit for determining position $p_c$ of the intersection point on the observation plane, using said compound ratio $\{p_{axis}p_Rp_Lp_c\}$ or the operation equivalent to said compound ratio, in accordance with the physical quantity indexing the shortest distance set up in the first parameter altering unit, the inner product $(n_s \cdot v)$ set up in the second parameter altering unit, the two measuring positions $p_R$ and $p_L$ of the measuring point through observation on said measuring point from said two observation points or the measuring position $p_R$ through observation on said measuring point from one observation point of said two observation points and a binocular parallax σ, which is a positional difference between the two measuring positions $p_R$ and $p_L$ through observation on said measuring point from said two observation points, instead of the two measuring positions $p_R$ and $p_L$ through observation on said measuring point from said two observation points, and the position $p_{axis}$ of said infinite-point of the measuring point;

a polar transformation unit for determining a polar line associated with the position $p_c$ of the intersection point on the observation plane through a polar transformation of the position $p_c$ , and

a point operating unit for determining a point on the polar line, said point being given with an angle r with respect to the optical axis direction v,

$$r = \cos^{-1} (n_s \cdot v)$$

wherein said compound ratio transformation unit, said polar transformation unit and said point operating unit repeatedly perform operations by a plurality of number of times on a plurality of measuring points in said measurement space, while values of said first parameter and said second parameter are altered in said first parameter altering unit and said second parameter altering unit, so that a curved line, which couples a plurality of points determined through an execution of said point operating unit as to one measuring point by a plurality of number of times wherein a value of said first parameter is identical and a value of said second parameter is varied, is determined on the plurality of measuring points for each value of said first parameter, and

said operating unit further comprises a detection unit for determining an azimuth $n_s$ of a measuring plane including a plurality of measuring points associated with a plurality of curved lines intersecting at a cross point and/or a physical quantity indexing a shortest distance between the measuring plane and one observation point of said two observation points in such a manner that cross points of curved lines, which are formed when a plurality of curved lines determined through a repetition of execution of operations of said compound ratio transformation unit, said polar transformation unit and said point operating unit by a plurality of number of times are drawn on a curved line drawing space, are determined.

In this case, it is preferable that the measuring point appearing on the image has information as to intensity,

said point operating unit determines said point, and votes a value associated with intensity of a measuring point associated with said point for a point associated with said point in said curved line drawing space,

said detection unit determines an azimuth $n_s$ of a measuring plane including a plurality of measuring points associated with a plurality of curved lines joining a voting for a maximal point and/or a physical quantity indexing a shortest distance between the measuring plane and one observation point of predetermined two observation points in such a manner that a maximal point wherein a value by a voting through a repetition of execution of operations of said compound ratio transformation unit, said polar transformation unit and said point operating unit by a plurality of number of times offers a maximal value, instead of determining of the cross point, is determined.

It is also preferable that the measuring point appearing on the image has information as to intensity,

said operating unit further comprises a third parameter altering unit for altering a value of a third parameter in which a binocular parallax σ, which is a positional difference between the two measuring positions $p_R$ and $p_L$ through observation on said measuring point from said two observation points, is set up in the form of the third parameter, said compound ratio transformation unit determines the position $p_c$ of the intersection point on the observation plane using the physical quantity indexing the shortest distance set up in the first parameter altering unit, the inner product $(n_s \cdot v)$ set up in the second parameter altering unit step, the measuring position $p_R$ through observation on said measuring point from one observation point of said two observation points, the binocular parallax σ, which is set up in said third parameter altering unit, and the position $p_{axis}$ of said infinite-point of the measuring point, said point operating unit determines said point on a polar line associated with the measuring point, and determining a response intensity associated with the binocular parallax σ on the measuring point, and of voting the response intensity associated with the binocular parallax σ of a measuring point associated with said point on the polar line for a point associated with said point on the polar line in said curved line drawing space,

said compound ratio transformation unit, said polar transformation unit and said point operating unit repeatedly perform operations by a plurality of number of times on a plurality of measuring points in said measurement space, while values of the parameters are altered in said first step, second and third parameter altering unit, and

said detection unit determines an azimuth $n_s$ of a measuring plane including a plurality of measuring points associated with a plurality of curved lines joining a voting for a maximal point and/or a physical quantity indexing a shortest distance between the measuring plane and one observation point of said two observation points in such a manner that a maximal point wherein a value by a voting through a repetition of execution of operations of said first, second and third parameter altering units, said compound ratio transformation unit, said polar transformation unit and said point operating unit by a plurality of number of times offers a maximal value is determined, instead of determination of said cross point.

In the second image measurement apparatus as mentioned above, it is acceptable that said operating unit comprises:

a first parameter altering unit for altering the position $p_{axis}$ of said infinite-point of the measuring point through altering a value of a first parameter in which the optical axis direction v is set up in form of the first parameter;
a second parameter altering unit for altering a value of a second parameter in which the physical quantity indexing the shortest distance is set up in form of the second parameter;
a third parameter altering unit for altering a value of a third parameter in which the inner product $(n_s \cdot v)$ in form of the third parameter;
a compound ratio transformation unit for determining the position $p_c$ of the intersection point on the observation plane, using said compound ratio $\{p_{axis} p_R p_L \ p_c\}$ or the operation equivalent to said compound ratio, in accordance with the position $p_{axis}$ of said infinite-point of the measuring point, which is set up in said first parameter altering unit, the physical quantity indexing the shortest distance, which is set up in said second parameter altering unit, the inner product $(n_s \cdot v)$ set up in said third parameter altering unit, and the two measuring positions $p_R$ and $p_L$ of the measuring point through observation on said measuring point from said two observation points or the measuring position $p_R$ through observation on said measuring point from one observation point of said two observation points and a binocular parallax σ, which is a positional difference between the two measuring positions $p_R$ and $p_L$ through observation on said measuring point from said two observation points, instead of the two measuring positions $p_R$ and $p_L$ through observation on said measuring point from said two observation points; and
a polar transformation unit for determining a polar line associated with the position $p_c$ of the intersection point on the observation plane through a polar transformation of the position $p_c$, and
a point transformation unit for determining a point on the polar line, said point being given with an angle r with respect to the optical axis direction v,

$$r = \cos^{-1} (n_s \cdot v)$$

wherein said first, second and third parameter altering units, said compound ratio transformation unit, said polar transformation unit and said point operating unit repeatedly perform operations by a plurality of number of times on a plurality of measuring points in said measurement space, while values of said first parameter to said third parameter are altered in said first parameter altering unit, and said second parameter altering unit and said third parameter altering unit, so that a curved line, which couples a plurality of points determined through an execution of said sixth step as to one measuring point by a plurality of number of times wherein a value of said first parameter is identical and a value of said second parameter is identical, and a value of said third parameter is varied, is determined on the plurality of measuring points for each combination of a respective value of said first parameter and a respective value of said second parameter, and

said operating unit further comprises a detection unit for determining a true optical axis direction, and for determining an azimuth $n_s$ of a measuring plane including a plurality of measuring points associated with a plurality of curved lines intersecting at a cross point determined on a curved line drawing space associated with the true optical axis direction, and/or a physical quantity indexing a shortest distance between the measuring plane and one observation point of predetermined two observation points in such a manner that cross points of curved lines, which are formed when a plurality of curved lines determined through a repetition of execution of operations of said parameter altering unit, said compound ratio transformation unit and said polar transformation unit are drawn on an associated curved line drawing space of a plurality of curved line drawing spaces according to said first parameter, are determined on each curved line drawing space, and a curved line drawing space associated with the true optical axis direction relative to said observation point on said measuring point is selected in accordance with information as to a number of curved lines intersecting at the cross points.

In this case, it is preferable that the measuring point appearing on the image has information as to intensity,

said point operating unit determines said point, and of voting a value associated with intensity of a measuring point associated with said point for points in the curved line drawing space wherein a curved line including said point is drawn,
said detection unit determines the true optical axis direction, and determines an azimuth $n_s$ of a measuring plane including a plurality of measuring points associated with a plurality of curved lines joining a voting for a maximal point determined on a curved line drawing space associated with the true optical axis direction, and/or a physical quantity indexing a shortest distance between the measuring plane and one observation point of predetermined two observation points in such a manner that a maximal point wherein a value by a voting through a repetition of execution of operations of said parameter altering unit, said compound ratio transformation unit and said polar transformation unit offers a maximal value, instead of determining of the cross point, is determined on each curved line drawing space, and a curved line drawing space associated with the true optical axis direction is selected in accordance with information as to a maximal value at the maximal point.

It is also preferable that the measuring point appearing on the image has information as to intensity,

said operating unit further comprises a fourth parameter altering unit for altering a value of a fourth parameter in which a binocular parallax $\sigma$, which is a positional difference between the two measuring positions $p_R$ and $p_L$ through observation on said measuring point from said two observation points, is set up in form of the fourth parameter,
said compound ratio transformation unit determines the position $p_c$ of the intersection point on the observation plane using the position $p_{axis}$ of said infinite-point of the measuring point, which is set up in said first parameter altering unit, the physical quantity indexing the shortest distance, which is set up in the second parameter altering unit, the inner product $(n_s \cdot v)$ set up in the third parameter altering unit, the measuring position $p_R$ through observation on said measuring point from one observation point of said two observation points, and a binocular parallax $\sigma$, which is set up in said fourth parameter altering unit,
said point operating unit determines said point associated with the measuring point, and determines a response intensity associated with the binocular parallax $\sigma$ on the measuring point, and votes the response intensity associated with the binocular parallax $\sigma$ of a measuring point associated with said point on the polar line for points in the curved line drawing space,
said compound ratio transformation unit, said polar transformation unit and point operating unit repeatedly perform operations by a plurality of number of times on a plurality of measuring points in said measurement space, while values of said parameters are altered in said first, second, third and fourth parameter altering units, and
said detection unit determines the true optical axis direction, and determines an azimuth $n_s$ of a measuring plane including a plurality of measuring points associated with a plurality of curved lines joining a voting for a maximal point determined on a curved line drawing space associated with the true optical axis direction, and/or a physical quantity indexing a shortest distance between the measuring plane and one observation point of predetermined two observation points in such a manner that a maximal point wherein a value by a voting through a repetition of execution of operations of said first, second and third parameter altering units, said compound ratio transformation unit, said polar transformation unit and said point operating unit by a plurality of number of times offers a maximal value, instead of determining of the cross point, is determined on each curved line drawing space, and a curved line drawing space associated with the true optical axis direction is selected in accordance with information as to a maximal value at the maximal point.

To achieve the above-mentioned objects, the present invention provides, of image measurement apparatuses, a third image measurement apparatus comprising an operating unit for determining an azimuth of a measuring plane and/or a physical quantity indexing a shortest distance between the measuring plane and one observation point of predetermined two observation points, using a simple ratio$(p_{axis}p_R\ p_L)$, which is determined by three positions $p_{axis}$, $p_R$, $p_L$ of a measuring point, or an operation equivalent to said simple ratio, where $p_R$ and $p_L$ denote measuring positions through observation of said two observation points on an arbitrary measuring point appearing on an image obtained through viewing a predetermined measurement space from a predetermined observation point inside the measurement space, respectively, v denotes an optical axis direction coupling said two observation points, and $p_{axis}$ denotes a position of an infinite-point on a straight line extending in a direction identical to the optical axis direction v, including the measuring point.

In the third image measurement apparatus as mentioned above, said simple ratio $(p_{axis}p_Rp_L)$ or the operation equivalent to said simple ratio, which are executed in said operating unit, include an operation using the measuring position $p_R$ through observation on said measuring point from one observation point of said two observation points, and a binocular parallax σ, which is a positional difference between the two measuring positions $p_R$ and $p_L$ through observation on said measuring point from said two observation points, instead of the two measuring positions $p_R$ and $p_L$ through observation on said measuring point from said two observation points.

In the third image measurement apparatus as mentioned above, it is acceptable that in said operating unit, as the positions $p_{axis}$, $p_R$, $p_L$ of the measuring point, positions projected on a sphere are adopted, and as said physical quantity indexing the shortest distance, a normalization shortest distance $_nd_s$, which is expressed by the following equation, is adopted,

$$_nd_s = d_s/\triangle x_{LR}$$

where $d_s$ denotes a shortest distance between the measuring plane and one observation point of said two observation points, and $\triangle x_{LR}$ denotes a distance between said two observation points,

wherein said operating unit comprises:

a parameter altering unit for altering a parameter in which the normalization shortest distance $_nd_s$ is set up in form of the parameter;

a parameter operating unit for determining a radius R defined by the following equation or the equivalent equation;

$$R = \cos^{-1} (_nd_s/ (p_{axis}p_Rp_L))$$

using the normalization shortest distance $_nd_s$ set up in said parameter altering unit and the simple ratio $(p_{axis}p_R$ $p_L$ ) or the operation equivalent to said simple ratio; and

a small circle operating unit for determining a small circle of a radius R taking as a center a measuring position through observation on said measuring point from one observation point of said two observation points,

wherein said parameter operating unit and said small circle operating unit repeatedly perform operations by a plurality of number of times on a plurality of measuring points in said measurement space, while the parameter is altered in said parameter altering unit, and

said operating unit further comprises a detection unit for determining an azimuth $n_{s0}$ of a measuring plane including a plurality of measuring points associated with a plurality of small circles intersecting at a cross point and/or a normalization shortest distance $_nd_{s0}$ on the measuring plane in such a manner that cross points of small circles, which are formed when a plurality of small circles determined through a repetition of said parameter altering unit, said parameter operating unit and said small circle operating unit by a plurality of number of times are drawn on a small circle drawing space, are determined.

In this case, it is preferable that the measuring point appearing on the image has information as to intensity,

said small circle operating unit determines said small circle, and of voting a value associated with intensity of a measuring point associated with said small circle for each point on a locus of the small circle, which is formed when the small circle thus determined is drawn on a small circle drawing space,

said detection unit determines an azimuth $n_{s0}$ of a measuring plane including a plurality of measuring points associated with a plurality of small circles joining a voting for a maximal point and/or a normalization shortest distance $_nd_{s0}$ on the measuring plane in such a manner that a maximal point wherein a value by a voting through a repetition of execution of operations of said parameter operating unit and said small circle operating unit by a plurality of number of times offers a maximal value, instead of determining of the cross point, is determined.

It is also preferable that the measuring point appearing on the image has information as to intensity,

said operating unit further comprises a fifth step of setting up a binocular parallax $\sigma$, which is a positional difference between the two measuring positions $p_R$ and $p_L$ through observation on said measuring point from said two observation points, in form of a second parameter,

said parameter operating unit determines the radius R using the normalization shortest distance $_nd_s$ set up in said parameter altering unit, the position $p_{axis}$ of said infinite-point of the measuring point, the measuring position $p_R$ through observation on said measuring point from one observation point of said two observation points, and the binocular parallax $\sigma$, which is set up in said second parameter altering unit,

said small circle operating unit determines said small circle associated with the measuring point, and determines a response intensity associated with the binocular parallax $\sigma$ on the measuring point, and votes the response intensity associated with the binocular parallax $\sigma$ of a measuring point associated with said small circle for each point on a locus of the small circle, which is formed when the small circle thus determined is drawn on a small circle drawing space,

said parameter altering unit, said parameter operating unit, said small circle operating unit, said second parameter altering unit repeatedly perform operations by a plurality of number of times on a plurality of measuring points in said measurement space, while values of the parameters are altered in said parameter altering unit and said second parameter altering unit, and

said detection unit determines an azimuth $n_{sR}$ of a measuring plane including a plurality of measuring points associated with a plurality of small circles joining a voting for a maximal point and/or a normalization shortest distance $_nd_{sR}$ on the measuring plane in such a manner that a maximal point wherein a value by a voting through a repetition of execution of operations of said parameter altering unit, said second parameter altering unit, said parameter operating unit and said small circle operating unit by a plurality of number of times offers a maximal value is determined, instead of determination of said cross point.

In the third image measurement apparatus as mentioned above, it is acceptable that in said operating unit, as the positions $p_{axis}$, $p_R$, $p_L$ of the measuring point, positions projected on a sphere are adopted, and as said physical quantity indexing the shortest distance, a normalization shortest distance $_nd_s$, which is expressed by the following equation, is adopted,

$$_nd_s = d_s / \Delta x_{LR}$$

where $d_s$ denotes a shortest distance between the measuring plane and one observation point of said two observation points , and $\Delta x_{LR}$ denotes a distance between said two observation points,

wherein said operating unit comprises:

a first parameter altering unit for altering the position $p_{axis}$ of said infinite-point of the measuring point through altering a value of a first parameter in which the optical axis direction $v$ is set up in form of the first parameter;

a second parameter altering unit for altering a value of a second parameter in which the normalization shortest distance $_nd_s$ is set up in form of the second parameter;

a parameter operating unit for determining a radius R defined by the following equation or the equivalent equation;

$$R = \cos^{-1} (_nd_s / (p_{axis} p_R p_L))$$

using the position $p_{axis}$ of said infinite-point of the measuring point, which is set up in said parameter altering unit, the normalization shortest distance $_nd_s$ set up in said second parameter altering unit and the simple ratio $(p_{axis} p_R p_L)$ or the operation equivalent to said simple ratio; and

a small circle operating unit for determining a small circle of a radius R taking as a center a measuring position through observation on said measuring point from one observation point of said two observation points ,

wherein said parameter operating unit and said small circle operating unit repeatedly perform operations by a plurality of number of times on a plurality of measuring points in said measurement space, while values of the first and second parameters are altered in said first parameter altering unit and said second parameter altering unit, and

said operating unit further comprises a detection unit for determining a true optical axis direction, and for determining an azimuth $n_{s0}$ of a measuring plane including a plurality of measuring points associated with a plurality of small circles intersecting at a cross point determined on a small circle drawing space associated with the true optical axis direction, and/or a a normalization shortest distance $_nd_{s0}$ on the measuring plane in such a manner that cross points of small circles, which are formed when a plurality of small circles determined through a repetition of execution of operations of said first parameter altering unit, said second parameter altering unit, said parameter operating unit and said small circle operating unit are drawn on an associated small circle drawing space of a plurality of small circle drawing spaces according to said first parameter, are determined on each small circle drawing space, and a small circle drawing space associated with the true optical axis direction relative to said observation point on said measuring point is selected in accordance with information as to a number of small circles intersecting at the cross points.

In this case, it is preferable that the measuring point appearing on the image has information as to intensity,

said small circle operating unit determines said small circle, and votes a value associated with intensity of a measuring point associated with said small circle for each point on a locus of the small circle, which is formed when the small circle thus determined is drawn on a small circle drawing space,
said detection unit determines a true optical axis direction, and determines an azimuth $n_{s0}$ of a measuring plane including a plurality of measuring points associated with a plurality of small circles joining a voting for a maximal point determined on a small circle drawing space associated with the true optical axis direction, and/or a normalization shortest distance $_nd_{s0}$ on the measuring plane in such a manner that a maximal point wherein a value by a voting through a repetition of execution of operations of said parameter operating unit and said small circle operating unit by a plurality of number of times offers a maximal value, instead of determining of the cross point, is determined on each small circle drawing space, and a small circle drawing space associated with the true optical axis direction is selected in accordance with information as to the maximal value on the maximal point.

It is also preferable that the measuring point appearing on the image has information as to intensity,

said operating unit further comprises a third parameter altering unit for altering a value of a third parameter in which a binocular parallax $\sigma$, which is a positional difference between the two measuring positions $p_R$ and $p_L$ through observation on said measuring point from said two observation points, is set up in form of the third parameter,
said parameter operating unit determines the radius R using the position $p_{axis}$ of said infinite-point of the measuring point, which is set up in said first parameter altering unit, the normalization shortest distance $_nd_s$ set up in the second parameter altering unit step, the measuring position $p_R$ through observation on said measuring point from one observation point of said two observation points, and the binocular parallax $\sigma$, which is set up in said parameter altering unit,
said small circle operating unit determines said small circle associated with the measuring point, and determines a response intensity associated with the binocular parallax $\sigma$ on the measuring point, and votes the response intensity associated with the binocular parallax $\sigma$ of a measuring point associated with said small circle for each point on a locus of the small circle, which is formed when the small circle thus determined is drawn on a small circle drawing space associated with the small circle,
said parameter operating unit and said small circle operating unit repeatedly perform operations by a plurality of number of times on a plurality of measuring points in said measurement space, while values of the parameters are altered in said first parameter operating unit, said second parameter operating unit and said third parameter operating unit, and
said detection unit determines a true optical axis direction, and determines an azimuth $n_{s0}$ of a measuring plane including a plurality of measuring points associated with a plurality of small circles joining a voting for a maximal point determined on a small circle drawing space associated with the true optical axis direction, and/or a normalization shortest distance $_nd_{s0}$ on the measuring plane in such a manner that a maximal point wherein a value by a voting through a repetition of execution of operations of said first parameter altering unit, said second parameter altering unit, said third parameter altering unit, said parameter operating unit and said small circle operating unit by a plurality of number of times offers a maximal value, instead of determining of the cross point, is determined on each small circle drawing space, and a small circle drawing space associated with the true optical axis direction is selected in accordance with information as to the maximal value on the maximal point.

To achieve the above-mentioned objects, the present invention provides, of image measurement apparatuses, a fourth image measurement apparatus comprising an operating unit for determining a physical quantity indexing a distance between an arbitrary measuring point appearing on an image obtained through viewing a predetermined measurement space from a predetermined observation point inside the measurement space and one observation point of predetermined two observation points, using a simple ratio ($p_{axis}$ $p_R$ $p_L$), which is determined by three positions $p_{axis}$, $p_R$, $p_L$ of the measuring point, or an operation equivalent to said simple ratio, where $p_R$ and $p_L$ denote measuring positions through observation of said two observation points on the measuring point, respectively, and $p_{axis}$ denotes

a position of an infinite-point on a straight line extending in a direction identical to an optical axis direction v coupling said two observation points, including the measuring point.

In the fourth image measurement apparatus as mentioned above, said simple ratio $(p_{axis}p_Rp_L)$ or the operation equivalent to said simple ratio, which are executed in said operating unit, include an operation using the measuring position $p_R$ through observation on said measuring point from one observation point of said two observation points, and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points.

In the fourth image measurement apparatus as mentioned above, it is acceptable that as said physical quantity indexing the distance, a normalized distance $_nd_0$, which is expressed by the following equation, is adopted,

$$_nd_0 = d_0 / \Delta x_{LR}$$

where $d_0$ denotes a distance between the measuring point and one observation point of said two observation points, and $\Delta x_{LR}$ denotes a distance between said two observation points, and said normalized distance $_nd_0$ is determined in accordance with the following equation

$$_nd_0 = (p_{axis}p_Rp_L)$$

or an equation equivalent to the above equation.

To achieve the above-mentioned objects, the present invention provides, of image measurement program storage media, a first image measurement program storage medium storing an image measurement program for determining an azimuth of a measuring plane and/or a physical quantity indexing a distance between the measuring plane and one observation point of predetermined two observation points in an optical axis direction v coupling said two observation points, using a compound ratio $\{p_{axis} p_Rp_Lp_c\}$, which is determined by four positions $p_{axis}$, $p_R$, $p_L$, $p_c$, or an operation equivalent to said compound ratio, where $p_R$ and $p_L$ denote measuring positions through observation of said two observation points on an arbitrary measuring point appearing on an image obtained through viewing a predetermined measurement space from said two observation points inside the measurement space, respectively, $p_{axis}$ denotes a position of an infinite-point on a straight line extending in a direction identical to the optical axis direction v, including the measuring point, and $p_c$ denotes a position of an intersection point with said straight line on an observation plane extending in parallel to a measuring plane including the measuring point, including one observation point of said two observation points.

In the first image measurement program storage medium as mentioned above, said compound ratio $\{p_{axis}p_Rp_Lp_c\}$ or the operation equivalent to said compound ratio, which are executed by said image measurement program, include an operation using the measuring position $p_R$ through observation on said measuring point from one observation point of said two observation points, and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points.

In the first image measurement program storage medium as mentioned above, it is acceptable that in said image measurement program, as the physical quantity indexing a distance between the measuring plane and one observation point of said two observation points in the optical axis direction, a normalized distance $_nd_c$, which is expressed by the following equation, is adopted,

$$_nd_c = d_c / \Delta x_{LR}$$

where $d_c$ denotes a distance between the measuring plane and one observation point of said two observation points in the optical axis direction, and $\triangle x_{LR}$ denotes a distance between said two observation points, and said normalized distance $_nd_c$ is determined in accordance with the following equation

$$_nd_c = \{p_{axis}p_Rp_Lp_c\}$$

or an equation equivalent to the above equation.

In the first image measurement program storage medium as mentioned above, it is acceptable that said image measurement program comprising:

a first step of setting up the physical quantity indexing a distance between the measuring plane and one observation point of said two observation points in the optical axis direction in form of a parameter;

a second step of determining the position $p_c$ of the intersection point on the observation plane, using said compound ratio $\{p_{axis}p_Rp_Lp_c\}$ or the operation equivalent to said compound ratio, in accordance with the physical quantity indexing a distance between the measuring plane and one observation point of said two observation points in the optical axis direction set up in the first step, the two measuring positions $p_R$ and $p_L$ of the measuring point through observation on said measuring point from said two observation points or the measuring position $p_R$ through observation on said measuring point from one observation point of said two observation points and a binocular parallax $\sigma$, which is a positional difference between the two measuring positions $p_R$ and $p_L$ through observation on said measuring point from said two observation points, instead of the two measuring positions $p_R$ and $p_L$, and the position $p_{axis}$ of said infinite-point of the measuring point; and

a third step of determining a polar line associated with the measuring point through a polar transformation of the position $p_c$ of the intersection point on the observation plane,

wherein said second step and said third step are repeated by a plurality of number of times on a plurality of measuring points in said measurement space, while a value of said parameter is altered in said first step, and thereafter, effected is a fourth step of determining an azimuth of a measuring plane including a plurality of measuring points associated with a plurality of polar lines intersecting at a cross point and/or a physical quantity indexing said physical quantity indexing a distance between the measuring plane and one observation point of said two observation points in the optical axis direction in such a manner that cross points of polar lines, which are formed when a plurality of polar lines determined through a repetition of said first to third steps by a plurality of number of times are drawn on a polar line drawing space, are determined.

In this case, it is preferable that the measuring point appearing on the image has information as to intensity,

said third step is a step of determining the polar line, and of voting a value associated with intensity of a measuring point associated with the polar line for each point on a locus of the polar line, which is formed when the polar line thus determined is drawn on a polar line drawing space, and

said fourth step is a step of determining an azimuth of a measuring plane including a plurality of measuring points associated with a plurality of polar lines joining a voting for a maximal point and/or said physical quantity indexing a distance between the measuring plane and one observation point of said two observation points in the optical axis direction in such a manner that a maximal point wherein a value by a voting through a repetition of execution of said first to third steps by a plurality of number of times offers a maximal value, instead of determining of the cross point, is determined.

It is also preferable that the measuring point appearing on the image has information as to intensity,

said image measurement program further comprises a fifth step of setting up a binocular parallax $\sigma$, which is a positional difference between the two measuring positions $p_R$ and $p_L$ through observation on said measuring point from said two observation points, in the form of a second parameter,

said second step is a step of determining the position $p_c$ of the intersection point on the observation plane using the physical quantity indexing a distance between the measuring plane and one observation point of said two observation points in the optical axis direction , which is set up in said first step, the measuring position $p_R$ through observation on said measuring point from one observation point of said two observation points, the binocular parallax $\sigma$, which is set up in said fifth step, and the position $p_{axis}$ of said infinite-point of the measuring point,

said third step is a step of determining a polar line associated with the measuring point, and determining a response intensity associated with the binocular parallax $\sigma$ on the measuring point, and of voting the response intensity associated with the binocular parallax $\sigma$ of a measuring point associated with the polar line for each point on a locus of the polar line, which is formed when the polar line thus determined is drawn on a polar line drawing space,

said second step and the third step are repeated by a plurality of number of times on a plurality of measuring points in said measurement space, while values of said parameters are altered in said first step and said fifth step, and

said fourth step is a step of determining an azimuth of a measuring plane including a plurality of measuring points associated with a plurality of polar lines joining a voting for a maximal point and/or said physical quantity indexing a distance between the measuring plane and one observation point of said two observation points in the optical axis direction in such a manner that a maximal point wherein a value by a voting through a repetition of said first, fifth, second and third steps by a plurality of number of times offers a maximal value is determined, instead of determination of said cross point.

In the first image measurement program storage medium as mentioned above, it is acceptable that said image measurement program comprises:

a first step of setting up the position $p_{axis}$ of said infinite-point of the measuring point through setting up the optical axis direction v in form of a first parameter;

a second step of setting up the physical quantity indexing a distance between the measuring plane and one observation point of said two observation points in the optical axis direction in form of a second parameter;

a third step of determining the position $p_c$ of the intersection point on the observation plane, using said compound ratio $\{p_{axis}p_Rp_Lp_c\}$ or the operation equivalent to said compound ratio, in accordance with the position $p_{axis}$ set up in said first step, the physical quantity indexing a distance between the measuring plane and one observation point of said two observation points in the optical axis direction set up in the second step, and the two measuring positions $p_R$ and $p_L$ of the measuring point through observation on said measuring point from said two observation points or the measuring position $p_R$ through observation on said measuring point from one observation point of said two observation points and a binocular parallax σ, which is a positional difference between the two measuring positions $p_R$ and $p_L$ through observation on said measuring point from said two observation points, instead of the two measuring positions $p_R$ and $p_L$ through observation on said measuring point from said two observation points; and

a fourth step of determining a polar line associated with the measuring point through a polar transformation of the position $p_c$ of the intersection point on the observation plane,

wherein said third step and said fourth step of said first step to said fourth step are repeated by a plurality of number of times on a plurality of measuring points in said measurement space, while values of said first parameter and said second parameter are altered in said first step and said second step, and thereafter,

effected is a fifth step of determining a true optical axis direction , and of determining an azimuth of a measuring plane including a plurality of measuring points associated with a plurality of polar lines intersecting at a cross point determined on a polar line drawing space associated with the true optical axis direction , and/or said physical quantity indexing a distance between the measuring plane and one observation point of said two observation points in the optical axis direction in such a manner that cross points of polar lines, which are formed when a plurality of polar lines determined through a repetition of said first to fourth steps are drawn on an associated polar line drawing space of a plurality of polar line drawing spaces according to said first parameter, are determined on each polar line drawing space, and a polar line drawing space associated with the true optical axis direction relative to said observation point on said measuring point is selected in accordance with information as to a number of polar lines intersecting at the cross points.

In this case, it is preferable that the measuring point appearing on the image has information as to intensity,

said fourth step is a step of determining the polar line, and of voting a value associated with intensity of a measuring point associated with the polar line for each point on a locus of the polar line, which is formed when the polar line thus determined is drawn on the polar line drawing space,

said fifth step is a step of determining the true optical axis direction , and of determining an azimuth of a measuring plane including a plurality of measuring points associated with a plurality of polar lines joining a voting for a maximal point determined on a polar line drawing space associated with the true optical axis direction , and/or said physical quantity indexing a distance between the measuring plane and one observation point of said two observation points in the optical axis direction in such a manner that a maximal point wherein a value by a voting through a repetition of execution of said first to fourth steps offers a maximal value,- instead of determining of the cross point, is determined on each polar line drawing space, and a polar line drawing space associated with the true optical axis direction is selected in accordance with information as to a maximal value at the maximal point.

It is also preferable that the measuring point appearing on the image has information as to intensity,

said image measurement program further comprises a sixth step of setting up a binocular parallax σ, which is a positional difference between the two measuring positions $p_R$ and $p_L$ through observation on said measuring point from said two observation points, in the form of a third parameter,

said third step is a step of determining the position $p_c$ of the intersection point on the observation plane using the position $p_{axis}$, which is set up in said first step, the physical quantity indexing a distance between the measuring plane and one observation point of said two observation points in the optical axis direction , which is set up in said second step, the measuring position $p_R$ through observation on said measuring point from one observation point of said two observation points, and the binocular parallax σ, which is set up in said sixth step,

said fourth step is a step of determining a polar line associated with the measuring point, and determining a response intensity associated with the binocular parallax σ on the measuring point, and of voting the response intensity associated with the binocular parallax σ of a measuring point associated with the polar line for each point on a locus of the polar line, which is formed when the polar line thus determined is drawn on a polar line drawing space,

said third step and the fourth step are repeated by a plurality of number of times on a plurality of measuring points in said measurement space, while values of said parameters are altered in said second step and said sixth step, and said fifth step is a step of determining the true optical axis direction, and of determining an azimuth of a measuring plane including a plurality of measuring.points associated with a plurality of polar lines joining a voting for a maximal point determined on a polar line drawing space associated with the true optical axis direction , and/or said physical quantity indexing a distance between the measuring plane and one observation point of said two observation points in the optical axis direction in such a manner that a maximal point wherein a value by a voting through a repetition of execution of the first, second, sixth, third and fourth steps by a plurality of number of times offers a maximal value, instead of determining of the cross point, is determined on each polar line drawing space, and a polar line drawing space associated with the true optical axis direction is selected in accordance with information as to a maximal value at. the maximal point.

To achieve the above-mentioned objects, the present invention provides, of image measurement program storage media, a second image measurement program storage medium storing an image measurement program for determining an azimuth $n_s$ of a measuring plane and/or a physical quantity indexing a shortest distance between the measuring plane and one observation point of predetermined two observation points, using a compound ratio $\{p_{axis}p_Rp_Lp_c\}$ , which is determined by four positions $p_{axis}$, $p_R$, $p_L$, $p_c$ of a measuring point, or an operation equivalent to said compound ratio, and an inner product $(n_s \cdot v)$ of the azimuth $n_s$ of the measuring plane and an optical axis direction v, where $p_R$ and $p_L$ denote measuring positions through observation of said two observation points on an arbitrary measuring point appearing on an image obtained through viewing a predetermined measurement space from predetermined two observation points inside the measurement space, respectively, v denotes the optical axis direction coupling said two observation points, $p_{axis}$ denotes a position of an infinite-point on a straight line extending in a direction identical to the optical axis direction v, including the measuring point, $p_c$ denotes a position of an intersection point with said straight line on an observation plane extending in parallel to a measuring plane including the measuring point, including one observation point of said two observation points, and $n_s$ denotes the azimuth of the measuring plane.

In the second image measurement program storage medium as mentioned above, said compound ratio $\{p_{axis}p_Rp_Lp_c\}$ or the operation equivalent to said compound ratio, which are executed by said image measurement program, include an operation using the measuring position $p_R$ through observation on said measuring point from one observation point of said two observation points, and a binocular parallax σ, which is a positional difference between the two measuring positions $p_R$ and $p_L$ through observation on said measuring point from said two observation points, instead of the two measuring positions $p_R$ and $p_L$ through observation on said measuring point from said two observation points.

In the second image measurement program storage medium as mentioned above, it is acceptable that in said image measurement program, as the physical quantity indexing the shortest distance, a normalization shortest distance $_nd_s$, which is expressed by the following equation, is adopted,

$$_nd_s = d_s / \triangle x_{LR}$$

and said normalization shortest distance $_nd_s$ is determined in accordance with the following equation,

$$_nd_s = {_nd_c} (n_s \cdot v)$$

using a normalized distance $_nd_c$, which is expressed by the following equation, and the inner product $(n_s \cdot v)$

$$_nd_c = d_c / \triangle x_{LR}$$

where $d_s$ denotes a shortest distance between the measuring plane and one observation point of said two observation points, $d_c$ denotes a distance between the measuring plane and one observation point of said two observation points in an optical axis direction, and $\triangle x_{LR}$ denotes a distance between said two observation points.

In the second image measurement program storage medium as mentioned above, it is acceptable that said image measurement program comprises:

a first step of setting up the physical quantity indexing the shortest distance in form of a first parameter;

a second step of setting up the inner product $(n_s \cdot v)$ in form of a second parameter;

a third step of determining the position $p_c$ of the intersection point on the observation plane, using said compound ratio $\{p_{axis} \, p_R p_L p_c\}$ or the operation equivalent to said compound ratio, in accordance with the physical quantity indexing the shortest distance set up in the first step, the inner product $(n_s \cdot v)$ set up in the second step, the two measuring positions $p_R$ and $p_L$ of the measuring point through observation on said measuring point from said two observation points or the measuring position $p_R$ through observation on said measuring point from one observation point of said two observation points and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points, and the position $p_{axis}$ of said infinite-point of the measuring point;

a fourth step of determining a polar line associated with the position $p_c$ of the intersection point on the observation plane through a polar transformation of the position $p_c$, and

a fifth step of determining a point on the polar line, said point being given with an angle r with respect to the optical axis direction v,

$$r = \cos^{-1} (n_s \cdot v)$$

wherein said third step to said fifth step, of said first step to said fifth step, are repeated by a plurality of number of times on a plurality of measuring points in said measurement space, while values of said first parameter and said second parameter are altered in said first step and said second step, so that a curved line, which couples a plurality of points determined through an execution of said fifth step as to one measuring point by a plurality of number of times wherein a value of said first parameter is identical and a value of said second parameter is varied, is determined on the plurality of measuring points for each value of said first parameter, and thereafter,

effected is a sixth step of determining an azimuth $n_s$ of a measuring plane including a plurality of measuring points associated with a plurality of curved lines intersecting at a cross point and/or a physical quantity indexing a shortest distance between the measuring plane and one observation point of said two observation points in such a manner that cross points of curved lines, which are formed when a plurality of curved lines determined through a repetition of said first to fifth steps by a plurality of number of times are drawn on a curved line drawing space, are determined.

In this case, it is preferable that the measuring point appearing on the image has information as to intensity,

said fifth step is a step of determining said point, and of voting a value associated with intensity of a measuring point associated with said point for a point associated with said point in said curved line drawing space,

said sixth step is a step of determining an azimuth $n_s$ of a measuring plane including a plurality of measuring points associated with a plurality of curved lines joining a voting for a maximal point and/or a physical quantity indexing a shortest distance between the measuring plane and one observation point of predetermined two observation points in such a manner that a maximal point wherein a value by a voting through a repetition of execution of said first to fifth steps by a plurality of number of times offers a maximal value, instead of determining of the cross point, is determined.

It is also preferable the measuring point appearing on the image has information as to intensity,

said image measurement program further comprises a seventh step of setting up a binocular parallax $\sigma$, which is a positional difference between the two measuring positions $p_R$ and $p_L$ through observation on said measuring point from said two observation points, in the form of a third parameter,

said third step is a step of determining the position $p_c$ of the intersection point on the observation plane using the physical quantity indexing the shortest distance set up in the first step, the inner product $(n_s \cdot v)$ set up in the second step, the measuring position $p_R$ through observation on said measuring point from one observation point of said two observation points, the binocular parallax $\sigma$, which is set up in said seventh step, and the position $p_{axis}$ of said infinite-point of the measuring point,

said fifth step is a step of determining said point on a polar line associated with the measuring point, and determining a response intensity associated with the binocular parallax $\sigma$ on the measuring point, and of voting the response intensity associated with the binocular parallax $\sigma$ of a measuring point associated with said point on the polar line for a point associated with said point on the polar line in said curved line drawing space,

said third step to said fifth step are repeated by a plurality of number of times on a plurality of measuring points in said measurement space, while values of the parameters are altered in said first step, said second step and said seventh step, and

said sixth step is a step of determining an azimuth $n_s$ of a measuring plane including a plurality of measuring points associated with a plurality of curved lines joining a voting for a maximal point and/or a physical quantity indexing a shortest distance between the measuring plane and one observation point of said two observation points in such a manner that a maximal point wherein a value by a voting through a repetition of said first, second, seventh and third to fifth steps by a plurality of number of times offers a maximal value is determined, instead of determination of said cross point.

In the second image measurement program storage medium as mentioned above, it is acceptable that said image measurement program comprises :

a first step of setting up the position $p_{axis}$ of said infinite-point of the measuring point through setting up the optical axis direction v in form of a first parameter;
a second step of setting up the physical quantity indexing the shortest distance in form of a second parameter;
a third step of setting up the inner product $(n_s \cdot v)$ in form of a third parameter;
a fourth step of determining the position $p_c$ of the intersection point on the observation plane, using said compound ratio $\{p_{axis}\ p_R p_L p_c\}$ or the operation equivalent to said compound ratio, in accordance with the position $p_{axis}$ of said infinite-point of the measuring point, which is set up in said first step, the physical quantity indexing the shortest distance, which is set up in the second step, the inner product $(n_s \cdot v)$ set up in the third step, and the two measuring positions $p_R$ and $p_L$ of the measuring point through observation on said measuring point from said two observation points or the measuring position $p_R$ through observation on said measuring point from one observation point of said two observation points and a binocular parallax σ, which is a positional difference between the two measuring positions $p_R$ and $p_L$ through observation on said measuring point from said two observation points, instead of the two measuring positions $p_R$ and $p_L$ through observation on said measuring point from said two observation points; and
a fifth step of determining a polar line associated with the position $p_c$ of the intersection point on the observation plane through a polar transformation of the position $p_c$, and
a sixth step of determining a point on the polar line, said point being given with an angle r with respect to the optical axis direction v,

$$r = \cos^{-1} (n_s \cdot v)$$

wherein said fourth step to said sixth step, of said first step to said sixth step, are repeated by a plurality of number of times on a plurality of measuring points in said measurement space, while values of said first parameter to said third parameter are altered in said first step to said third step, so that a curved line, which couples a plurality of points determined through an execution of said sixth step as to one measuring point by a plurality of number of times wherein a value of said first parameter is identical and a value of said second parameter is identical, and a value of said third parameter is varied, is determined on the plurality of measuring points for each combination of a respective value of said first parameter and a respective value of said second parameter, and thereafter,

effected is a seventh step of determining a true optical axis direction , and of determining an azimuth $n_s$ of a measuring plane including a plurality of measuring points associated with a plurality of curved lines intersecting at a cross point determined on a curved line drawing space associated with the true optical axis direction, and/or a physical quantity indexing a shortest distance between the measuring plane and one observation point of predetermined two observation points in such a manner that cross points of curved lines, which are formed when a plurality of curved lines determined through a repetition of said first to sixth steps are drawn on an associated curved line drawing space of a plurality of curved line drawing spaces according to said first parameter, are determined on each curved line drawing space, and a curved line drawing space associated with the true optical axis direction relative to said observation point on said measuring point is selected in accordance with information as to a number of curved lines intersecting at the cross points.

In this case, it is preferable that the measuring point appearing on the image has information as to intensity,

said sixth step is a step of determining said point, and of voting a value associated with intensity of a measuring point associated with said point for points in the curved line drawing space wherein a curved line including said point is drawn,
said seventh step is a step of determining the true optical axis direction, and of determining an azimuth $n_s$ of a measuring plane including a plurality of measuring points associated with a plurality of curved lines joining a voting for a maximal point determined on a curved line drawing space associated with the true optical axis direction, and/ or a physical quantity indexing a shortest distance between the measuring plane and one observation point of predetermined two observation points in such a manner that a maximal point wherein a value by a voting through a repetition of execution of said first to sixth steps offers a maximal value, instead of determining of the cross point, is determined on each curved line drawing space, and a curved line drawing space associated with the true optical axis direction is selected in accordance with information as to a maximal value at the maximal point.

It is also preferable that the measuring point appearing on the image has information as to intensity,

said image measurement program further comprises a eighth step of setting up a binocular parallax σ, which is a positional difference between the two measuring positions $p_R$ and $p_L$ through observation on said measuring point from said. two observation points, in the form of a fourth parameter,

said fourth step is a step of determining the position $p_c$ of the intersection point on the observation plane using the position $p_{axis}$ of said infinite-point of the measuring point, which is set up in said first step, the physical quantity indexing the shortest distance, which is set up in the second step, the inner product $(n_s \cdot v)$ set up in the third step, the measuring position $p_R$ through observation on said measuring point from one observation point of said two observation points, and a binocular parallax σ, which is set up in said eighth step,

said sixth step is a step of determining said point associated with the measuring point, and determining a response intensity associated with the binocular parallax σ on the measuring point, and of voting the response intensity associated with the binocular parallax σ of a measuring point associated with said point on the polar line for points in the curved line drawing space,

said fourth to sixth steps are repeated by a plurality of number of times on a plurality of measuring points in said measurement space, while values of said parameters are altered in said first, second, third and eighth steps, and said seventh step is a step of determining the true optical axis direction, and of determining an azimuth $n_s$ of a measuring plane including a plurality of measuring points associated with a plurality of curved lines joining a voting for a maximal point determined on a curved line drawing space associated with the true optical axis direction , and/ or a physical quantity indexing a shortest distance between the measuring plane and one observation point of predetermined two observation points in such a manner that a maximal point wherein a value by a voting through a repetition of execution of the first, second, third, eighth steps, and the fourth to sixth steps by a plurality of number of times offers a maximal value, instead of determining of the cross point, is determined on each curved line drawing space, and a curved line drawing space associated with the true optical axis direction is selected in accordance with information as to a maximal value at the maximal point.

To achieve the above-mentioned objects, the present invention provides, of image measurement program storage media, a third image measurement program storage medium storing an image measurement program for determining an azimuth of a measuring plane and/or a physical quantity indexing a shortest distance between the measuring plane and one observation point of predetermined two observation points, using a simple ratio$(p_{axis} p_R \, p_L)$, which is determined by three positions $p_{axis}$, $p_R$, $p_L$ of a measuring point, or an operation equivalent to said simple ratio, where $p_R$ and $p_L$ denote measuring positions through observation of said two observation points on an arbitrary measuring point appearing on an image obtained through viewing a predetermined measurement space from a predetermined observation point inside the measurement space, respectively, v denotes an optical axis direction coupling said two observation points, and $p_{axis}$ denotes a position of an infinite-point on a straight line extending in a direction identical to the optical axis direction v, including the measuring point.

In the third image measurement program storage medium as mentioned above, said simple ratio $(p_{axis} \, p_R p_L)$ or the operation equivalent to said simple ratio, which are executed by said image measurement program, include an operation using the measuring position $p_R$ through observation on said measuring point from one observation point of said two observation points, and a binocular parallax σ, which is a positional difference between the two measuring positions $p_R$ and $p_L$ through observation on said measuring point from said two observation points, instead of the two measuring positions $p_R$ and $p_L$ through observation on said measuring point from said two observation points.

In the third image measurement program storage medium as mentioned above, it is acceptable that in said image measurement program, as the positions $p_{axis}$, $p_R$, $p_L$ of the measuring point, positions projected on a sphere are adopted, and as said physical quantity indexing the shortest distance, a normalization shortest distance $_n d_s$ , which is expressed by the following equation, is adopted,

$$_n d_s = d_s / \Delta x_{LR}$$

where $d_s$ denotes a shortest distance between the measuring plane and one observation point of said two observation points, and $\Delta x_{LR}$ denotes a distance between said two observation points,

a first step of setting up the normalization shortest distance $_nd_s$ in form of a parameter;
a second step of determining a radius R defined by the following equation or the equivalent equation;

$$R = \cos^{-1} (_nd_s / (p_{axis}p_Rp_L))$$

using the normalization shortest distance $_nd_s$ set up in the first step and the simple ratio $(p_{axis}p_Rp_L)$ or the operation equivalent to said simple ratio, and
a third step of determining a small circle of a radius R taking as a center a measuring position through observation on said measuring point from one observation point of said two observation points,
wherein said second step and said third step are repeated by a plurality of number of times on a plurality of measuring points in said measurement space, while the parameter is altered in said first step, and thereafter, effected is a fourth step of determining an azimuth $n_{s0}$ of a measuring plane including a plurality of measuring points associated with a plurality of small circles intersecting at a cross point and/or a normalization shortest distance $_nd_{s0}$ on the measuring plane in such a manner that cross points of small circles, which are formed when a plurality of small circles determined through a repetition of said first to third steps by a plurality of number of times are drawn on a small circle drawing space, are determined.

In this case, it is preferable that the measuring point appearing on the image has information as to intensity,

said third step is a step of determining said small circle, and of voting a value associated with intensity of a measuring point associated with said small circle for each point on a locus of the small circle, which is formed when the small circle thus determined is drawn on a small circle drawing space,
said fourth step is a step of determining an azimuth $n_{s0}$ of a measuring plane including a plurality of measuring points associated with a plurality of small circles joining a voting for a maximal point and/or a normalization shortest distance $_nd_{s0}$ on the measuring plane in such a manner that a maximal point wherein a value by a voting through a repetition of execution of said first to third steps by a plurality of number of times offers a maximal value, instead of determining of the cross point, is determined.

It is also preferable that the measuring point appearing on the image has information as to intensity,

said image measurement program further comprises a fifth step of setting up a binocular parallax σ, which is a positional difference between the two measuring positions $p_R$ and $p_L$ through observation on said measuring point from said two observation points, in form of a second parameter,
said second step is a step of determining the radius R using the normalization shortest distance $_nd_s$ set up in the first step, the position $p_{axis}$ of said infinite-point of the measuring point, the measuring position $p_R$ through observation on said measuring point from one observation point of said two observation points, and the binocular parallax σ, which is set up in said fifth step,
said third step is a step of determining said small circle associated with the measuring point, and determining a response intensity associated with the binocular parallax σ on the measuring point, and of voting the response intensity associated with the binocular parallax σ of a measuring point associated with said small circle for each point on a locus of the small circle, which is formed when the small circle thus determined is drawn on a small circle drawing space,
said second step and said third step are repeated by a plurality of number of times on a plurality of measuring points in said measurement space, while values of the parameters are altered in said first step and said fifth step, and
said fourth step is a step of determining an azimuth $n_{sR}$ of a measuring plane including a plurality of measuring points associated with a plurality of small circles joining a voting for a maximal point and/or a normalization shortest distance $_nd_{sR}$ on the measuring plane in such a manner that a maximal point wherein a value by a voting through a repetition of said first, fifth, second and third steps by a plurality of number of times offers a maximal value is determined, instead of determination of said cross point.

In the third image measurement program storage medium as mentioned above, it is acceptable that in said image measurement program, as the positions $p_{axis}$, $p_R$, $p_L$ of the measuring point, positions projected on a sphere are adopted, and as said physical quantity indexing the shortest distance, a normalization shortest distance $_nd_s$, which is expressed by the following equation, is adopted,

$$_n d_s = d_s / \Delta x_{LR}$$

where $d_s$ denotes a shortest distance between the measuring plane and one observation point of said two observation points, and $\Delta x_{LR}$ denotes a distance between said two observation points,

a first step of setting up the position $p_{axis}$ of said infinite-point of the measuring point through setting up the optical axis direction v in form of a first parameter;
a second step of setting up the normalization shortest distance $_n d_s$ in form of a second parameter;
a third step of determining a radius R defined by the following equation or the equivalent equation;

$$R = \cos^{-1} \left( _n d_s / (p_{axis} p_R p_L) \right)$$

using the position $p_{axis}$ of said infinite-point of the measuring point, which is set up in the first step, the normalization shortest distance $_n d_s$ set up in the second step and the simple ratio $(p_{axis} p_R p_L)$ or the operation equivalent to said simple ratio, and
a fourth step of determining a small circle of a radius R taking as a center a measuring position through observation on said measuring point from one observation point of said two observation points ,
wherein said third step and said fourth step are repeated by a plurality of number of times on a plurality of measuring points in said measurement space, while values of the first and second parameters are altered in said first step and said second step, and thereafter,
effected is a fifth step of determining a true optical axis direction, and of determining an azimuth $n_{s0}$ of a measuring plane including a plurality of measuring points associated with a plurality of small circles intersecting at a cross point determined on a small circle drawing space associated with the true optical axis direction, and/or a a normalization shortest distance $_n d_{s0}$ on the measuring plane in such a manner that cross points of small circles, which are formed when a plurality of small circles determined through a repetition of said first to fourth steps are drawn on an associated small circle drawing space of a plurality of small circle drawing spaces according to said first parameter, are determined on each small circle drawing space, and a small circle drawing space associated with the true optical axis direction relative to said observation point on said measuring point is selected in accordance with information as to a number of small circles intersecting at the cross points.

In this case, it is preferable that the measuring point appearing on the image has information as to intensity,

said fourth step is a step of determining said small circle, and of voting a value associated with intensity of a measuring point associated with said small circle for each point on a locus of the small circle, which is formed when the small circle thus determined is drawn on a small circle drawing space,
said fifth step is a step of determining a true optical axis direction, and of determining an azimuth $n_{s0}$ of a measuring plane including a plurality of measuring points associated with a plurality of small circles joining a voting for a maximal point determined on a small circle drawing space associated with the true optical axis direction, and/or a normalization shortest distance $_n d_{s0}$ on the measuring plane in such a manner that a maximal point wherein a value by a voting through a repetition of execution of said first to fourth steps by a plurality of number of times offers a maximal value, instead of determining of the cross point, is determined on each small circle drawing space, and a small circle drawing space associated with the true optical axis direction is selected in accordance with information as to the maximal value on the maximal point.

It is also preferable that the measuring point appearing on the image has information as to intensity,

said image measurement program further comprises a sixth step of setting up a binocular parallax σ, which is a positional difference between the two measuring positions $p_R$ and $p_L$ through observation on said measuring point from said two observation points, in form of a third parameter,
said second step is a step of determining the radius R using the position $p_{axis}$ of said infinite-point of the measuring point, which is set up in said first step, the normalization shortest distance $_n d_s$ set up in the second step, the measuring position $p_R$ through observation on said measuring point from one observation point of said two observation points, and the binocular parallax σ, which is set up in said fifth step,
said fourth step is a step of determining said small circle associated with the measuring point, and determining a response intensity associated with the binocular parallax σ on the measuring point, and of voting the response intensity associated with the binocular parallax σ of a measuring point associated with said small circle for each point on a locus of the small circle, which is formed when the small circle thus determined is drawn on a small circle drawing space associated with the small circle,

said third step and said fourth step are repeated by a plurality of number of times on a plurality of measuring points in said measurement space, while values of the parameters are altered in said first step, said second step and said sixth step, and

said fifth step is a step of determining a true optical axis direction , and of determining an azimuth $n_{s0}$ of a measuring plane including a plurality of measuring points associated with a plurality of small circles joining a voting for a maximal point determined on a small circle drawing space associated with the true optical axis direction, and/or a normalization shortest distance $_nd_{s0}$ on the measuring plane in such a manner that a maximal point wherein a value by a voting through a repetition of execution of said first, second, sixth, third and fourth steps by a plurality of number of times offers a maximal value, instead of determining of the cross point, is determined on each small circle drawing space, and a small circle drawing space associated with the true optical axis direction is selected in accordance with information as to the maximal value on the maximal point.

To achieve the above-mentioned objects, the present invention provides, of image measurement program storage media, a fourth image measurement program storage medium storing an image measurement program for determining a physical quantity indexing a distance between an arbitrary measuring point appearing on an image obtained through viewing a predetermined measurement space from a predetermined observation point inside the measurement space and one observation point of predetermined two observation points, using a simple ratio ($p_{axis} p_R$ $P_L$), which is determined by three positions $p_{axis}$, $p_R$, $p_L$ of the measuring point, or an operation equivalent to said simple ratio, where $p_R$ and $p_L$ denote measuring positions through observation of said two observation points on the measuring point, respectively, and $p_{axis}$ denotes a position of an infinite-point on a straight line extending in a direction identical to an optical axis direction v coupling said two observation points, including the measuring point.

In the fourth image measurement program storage medium as mentioned above, said simple ratio ($p_{axis}p_Rp_L$ ) or the operation equivalent to said simple ratio, which are executed by said image measurement program, include an operation using the measuring position $p_R$ through observation on said measuring point from one observation point of said two observation points, and a binocular parallax σ, which is a positional difference between the two measuring positions $p_R$ and $p_L$ through observation on said measuring point from said two observation points, instead of the two measuring positions $p_R$ and $p_L$ through observation on said measuring point from said two observation points.

In the fourth image measurement program storage medium as mentioned above, it is acceptable that in said image measurement program, as the physical quantity indexing the distance, a normalized distance $_nd_0$ , which is expressed by the following equation, is adopted,

$$_nd_0 = d_0/\Delta x_{LR}$$

where $d_0$ denotes a distance between the measuring point and one observation point of said two observation points, and $\triangle x_{LR}$ denotes a distance between said two observation points, and said normalized distance $_nd_0$ is determined in accordance with the following equation

$$_nd_0 = (p_{axis}p_Rp_L)$$

or an equation equivalent to the above equation.

BRIEF DESCRIPTION OF THE DRAWINGS

Fig. 1 is an explanatory view useful for understanding an optical flow pattern.
Fig. 2 is a perspective illustration of a computer system which is adopted as one embodiment of an image measurement apparatus of the present invention.
Fig. 3 is a block diagram of the computer system shown in Fig. 2.
Fig. 4 is a view showing a state that a plane is moved.
Fig. 5 is an explanatory view useful for understanding a principle of measuring a three-dimensional azimuth of a plane.
Fig. 6 is a view showing a state that a triangle, which is projected on a sphere shown in Fig. 4, is moved.
Fig. 7 is an explanatory view useful for understanding a principle of measuring a distance up to a point.

Fig. 8 is an explanatory view useful for understanding a principle of measuring a normalized time.

Fig. 9 is an explanatory view useful for understanding a definition of the central angle.

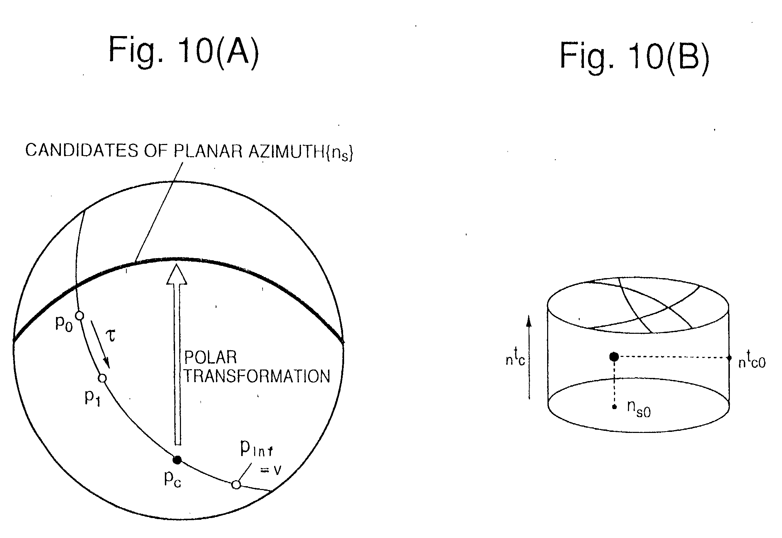

Each of Figs. 10(A) and 10(B) is an explanatory view useful for understanding a principle of measuring a normalized time by a cylindrical arrangement.

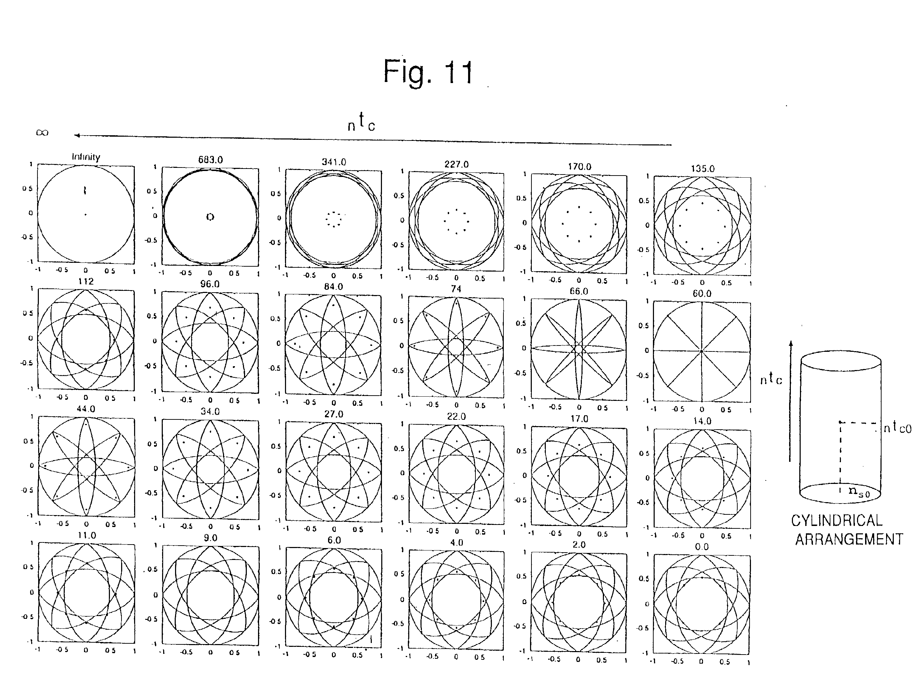

Fig. 11 is an illustration showing a result of a computer simulation as to a measurement of a normalized time.

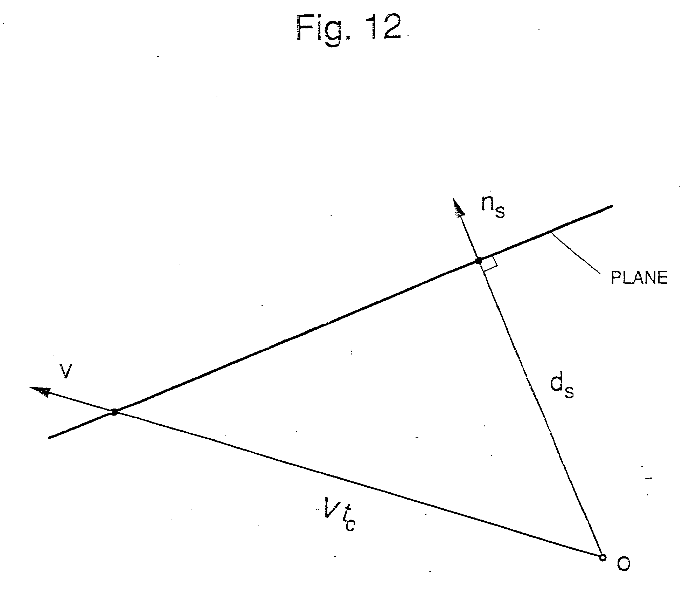

Fig. 12 is an illustration showing a relation between a time up to going across a plane and the shortest distance.

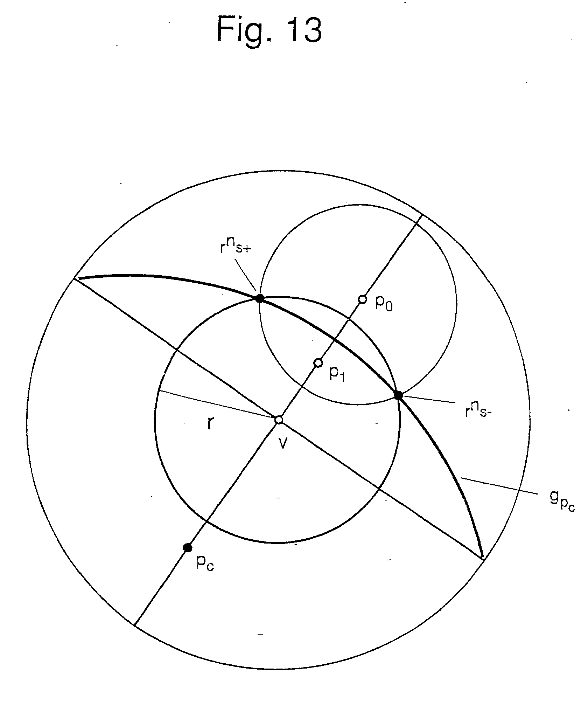

Fig. 13 is an explanatory view useful for understanding a principle of measuring the shortest distance up to a plane.

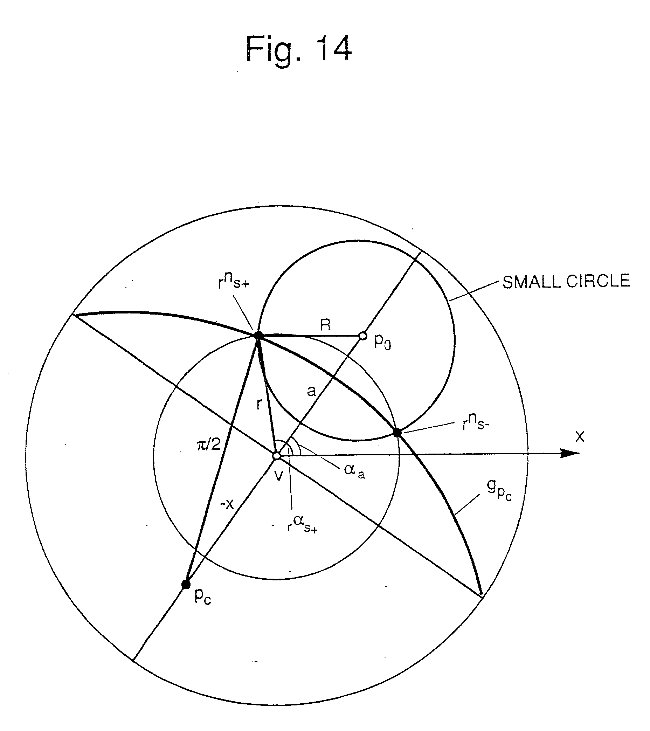

Fig. 14 is a typical illustration for a demonstration of a small circle transformation.

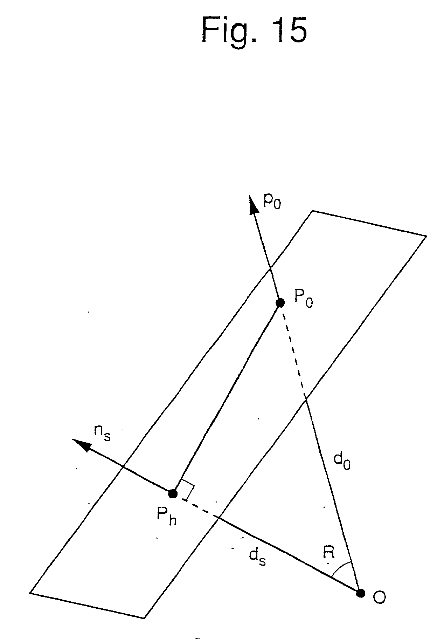

Fig. 15 is an illustration showing a relation between a distance up to a point and the shortest distance up to a plane.

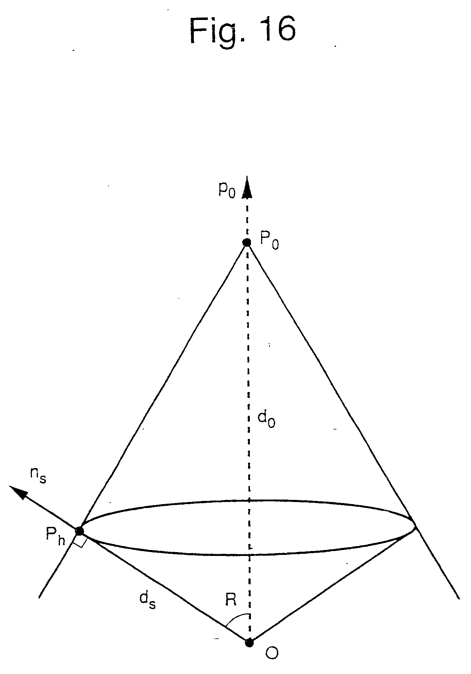

Fig. 16 is an illustration useful for understanding the geometric meaning of the small circle transformation.

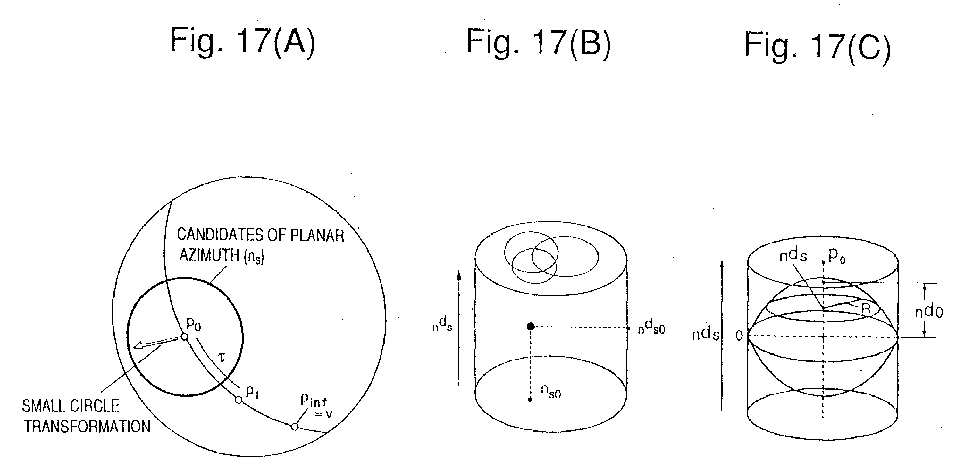

Each of Figs. 17(A), 17(B) and 17(C) is an explanatory view useful for understanding a principle of measuring a normalization shortest distance by a cylindrical arrangement.

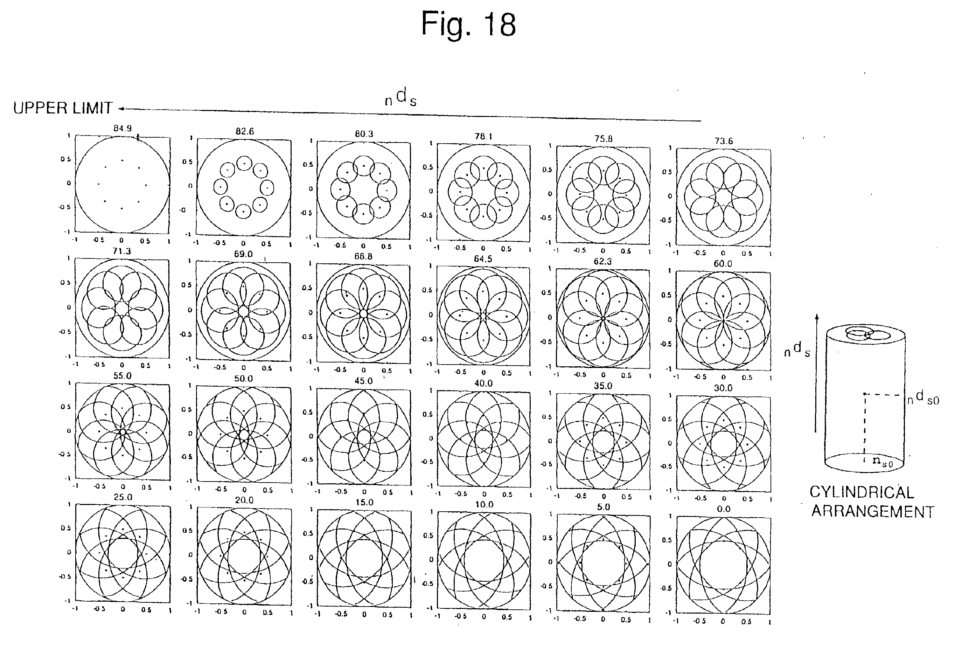

Fig. 18 is an illustration showing a result of a computer simulation as to a measurement of a normalization shortest distance.

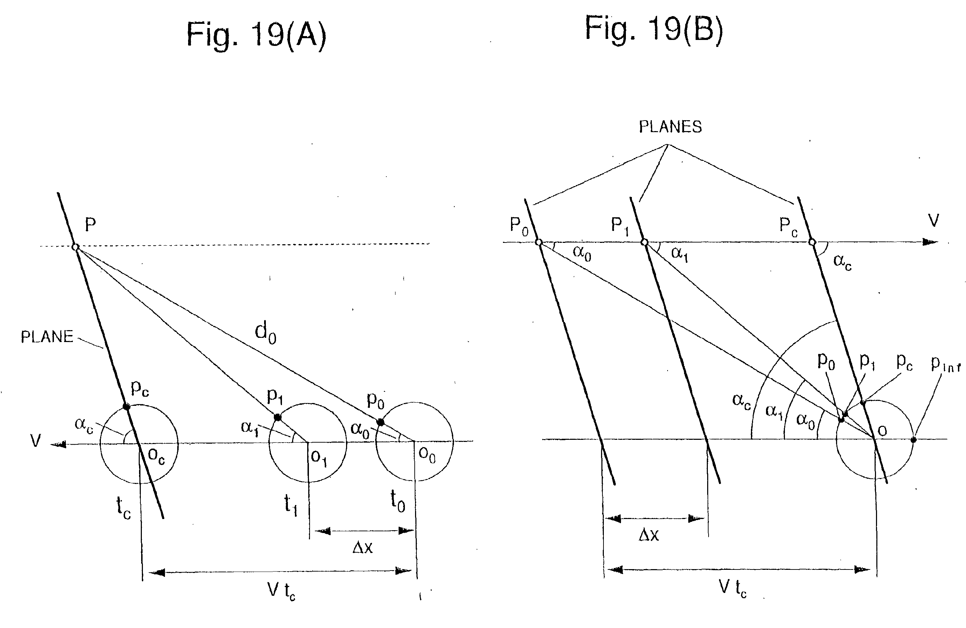

Each of Figs. 19(A) and 19(B) is an explanatory view useful for understanding equivalence between a camera movement and a plane movement.

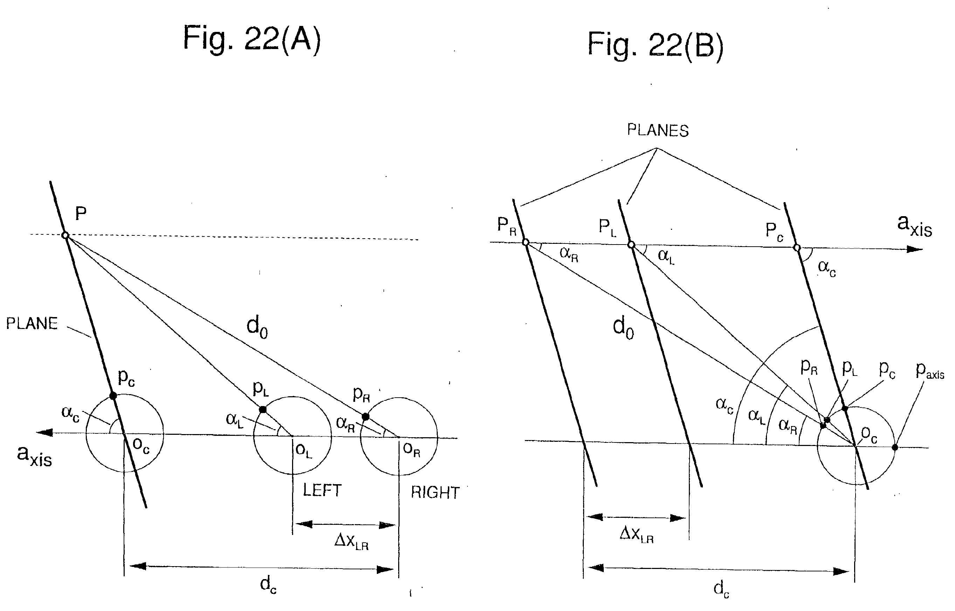

Figures 20 and 21 deleted.

Each of Figs. 22(A) and 22(B) is an explanatory view useful for understanding a principle of measuring a distance up to going across a plane in an optical axis direction.

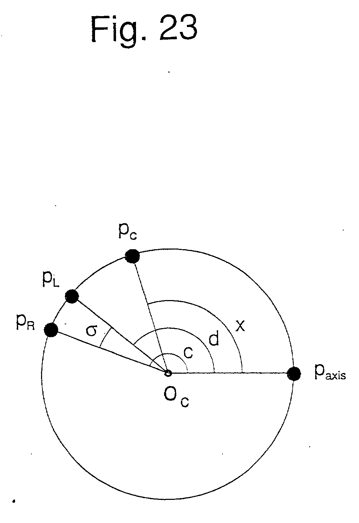

Fig. 23 is an explanatory view useful for understanding a definition of the central angle.

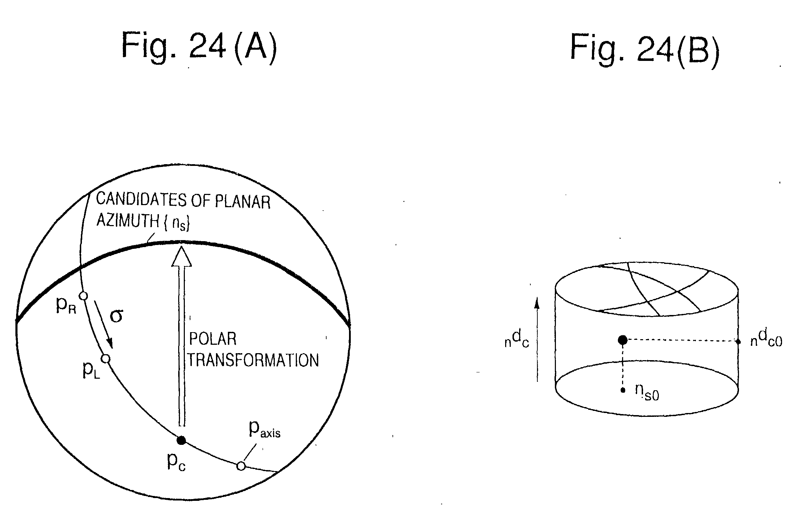

Each of Figs. 24(A) and 24(B) is an explanatory view useful for understanding a principle of measuring a "normalized distance up to going across a plane in a optical axis direction" by a cylindrical arrangement.

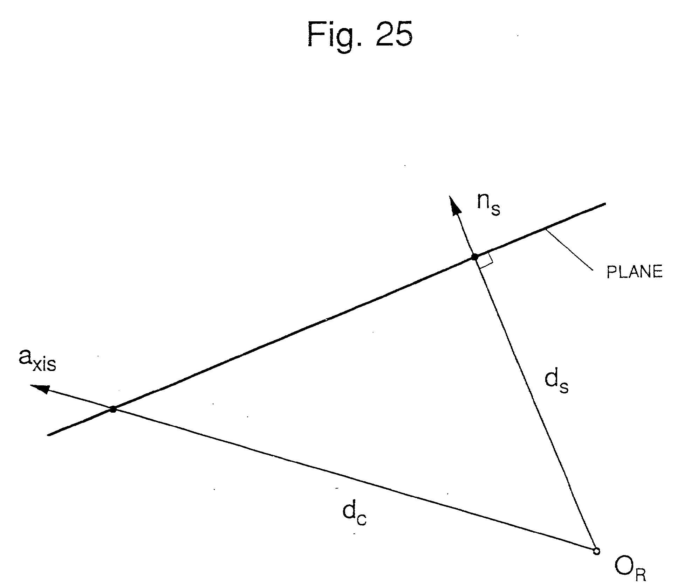

Fig. 25 is an illustration showing a relation between a "normalized distance up to going across a plane in a optical axis direction" and the "shortest distance up to a plane".

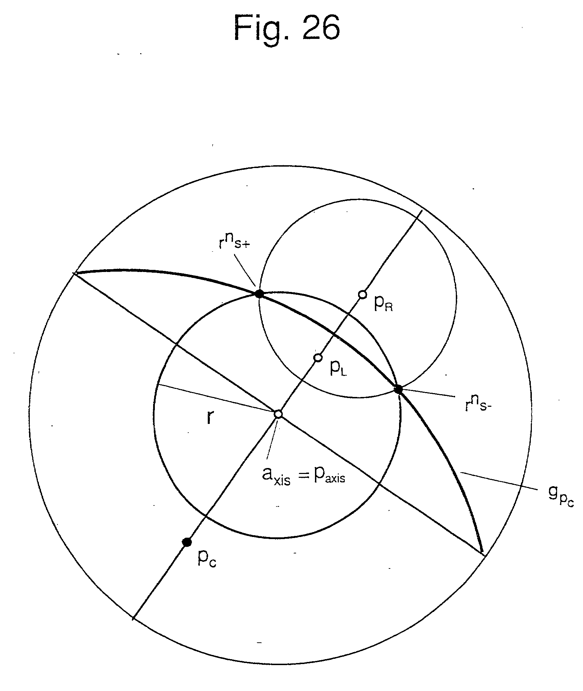

Fig. 26 is an explanatory view useful for understanding a principle of measuring the shortest distance up to a plane.

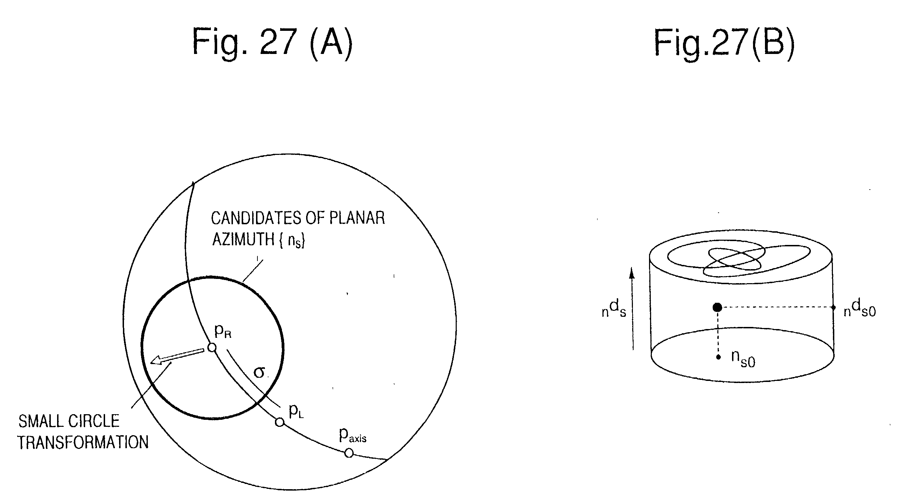

Each of Figs. 27(A) and 27(B) is an explanatory view useful for understanding a principle of measuring a normalization shortest distance by a cylindrical arrangement.

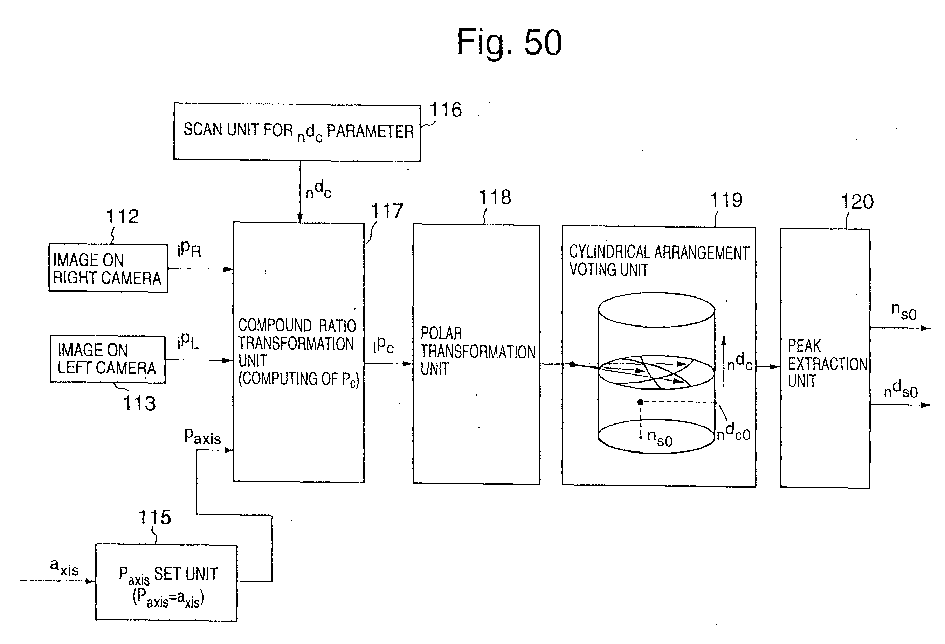

Figures 28 to 49 deleted.

Fig. 50 is a block diagram of an embodiment B-1 of the present invention.

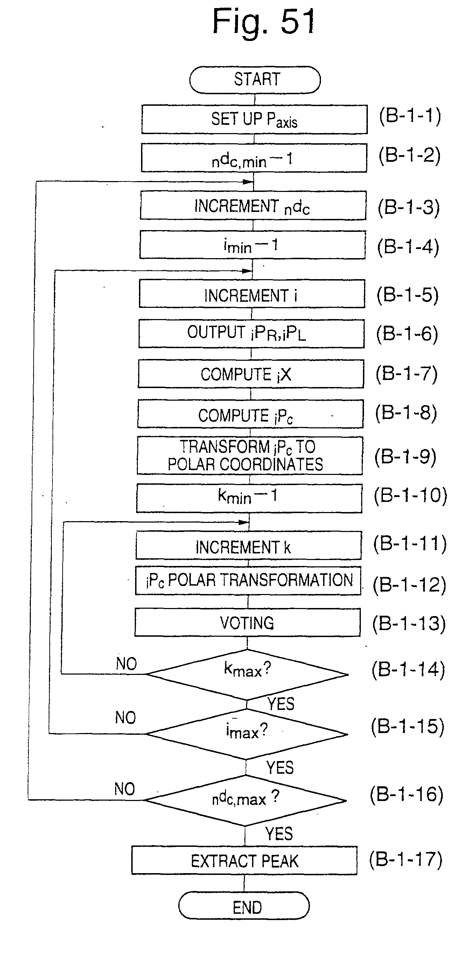

Fig. 51 is a flowchart of the embodiment B-1.

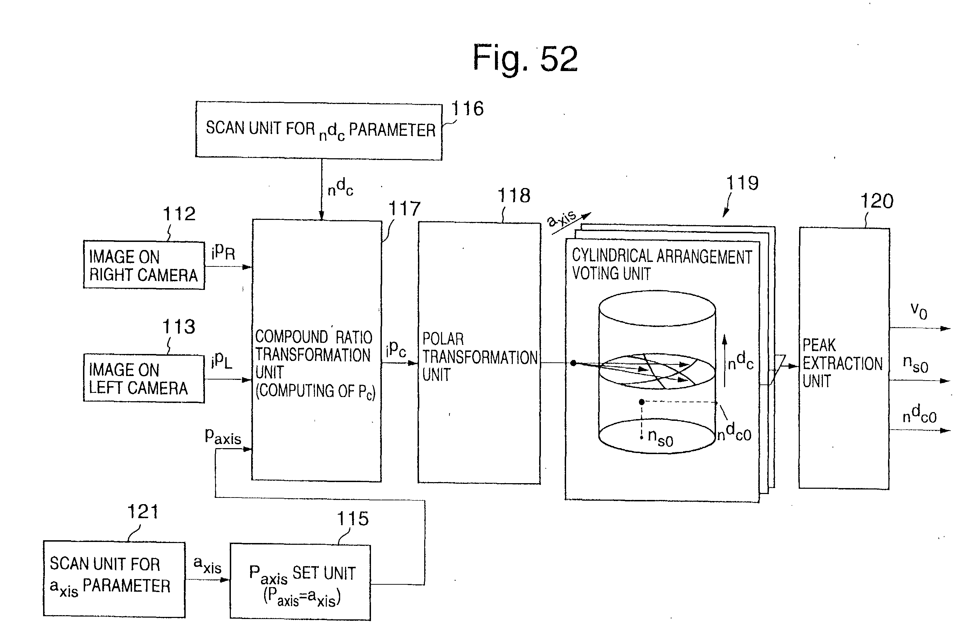

Fig. 52 is a block diagram of an embodiment B-2 of the present invention.

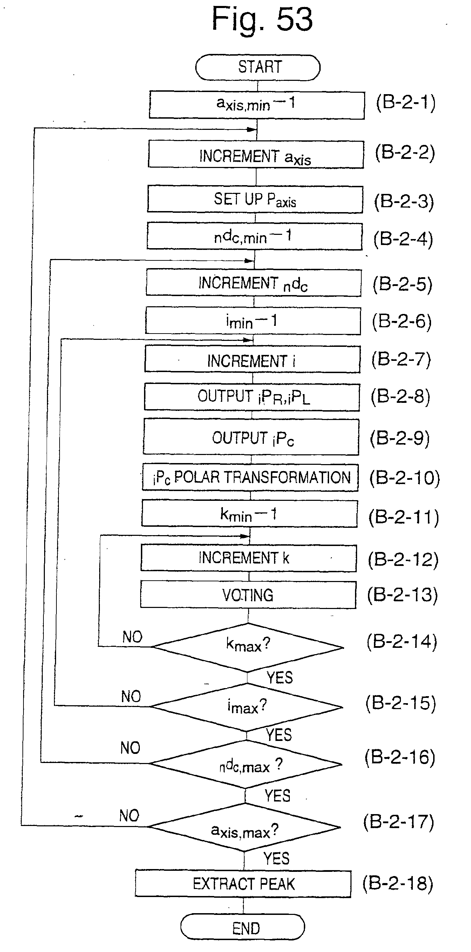

Fig. 53 is a flowchart of the embodiment B-2.

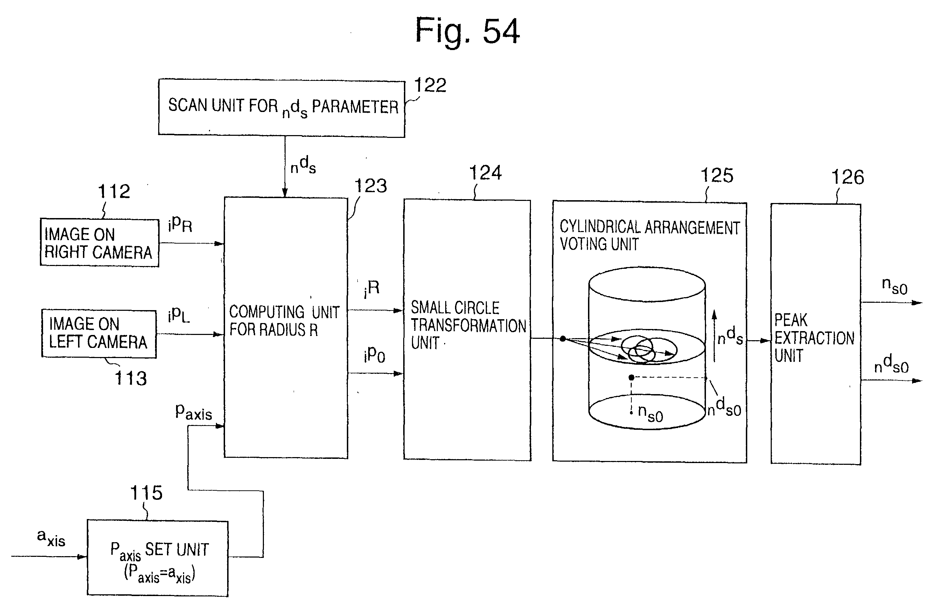

Fig. 54 is a block diagram of an embodiment B-3 of the present invention.

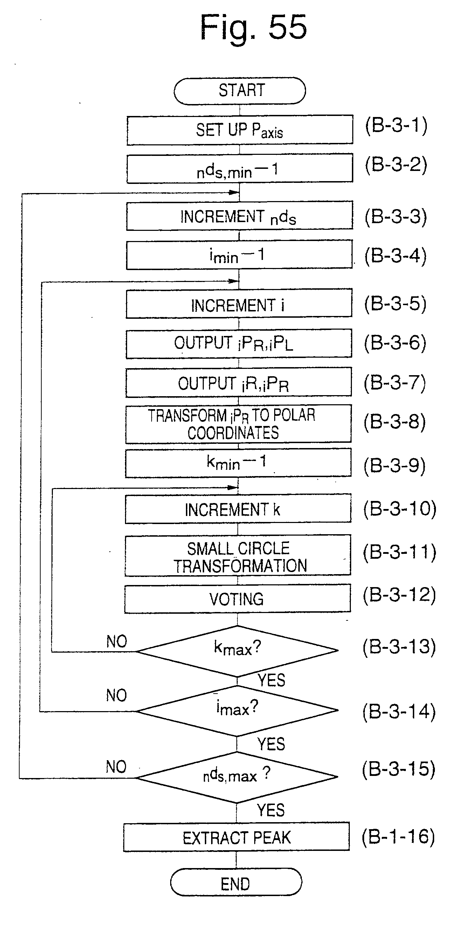

Fig. 55 is a flowchart of the embodiment B-3.

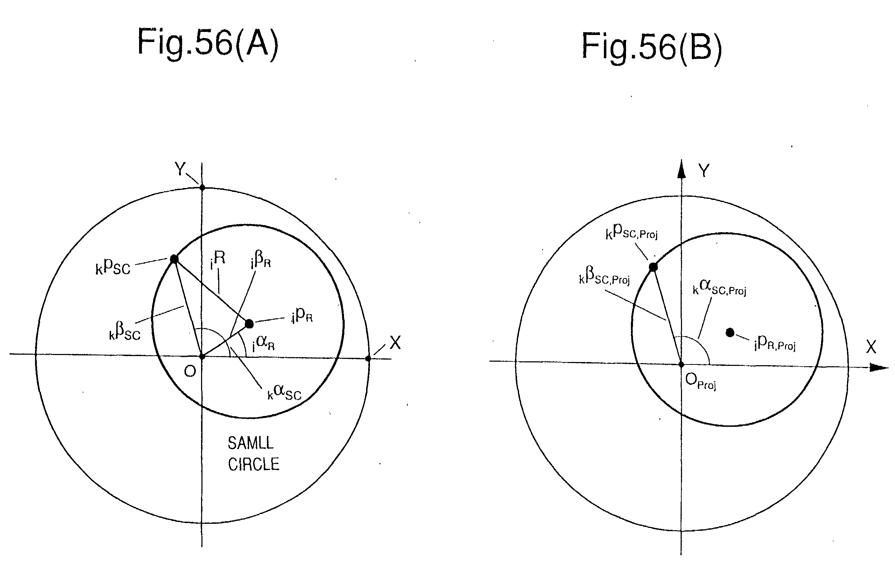

Fig. 56 is an explanatory view useful for understanding the embodiment B-3.

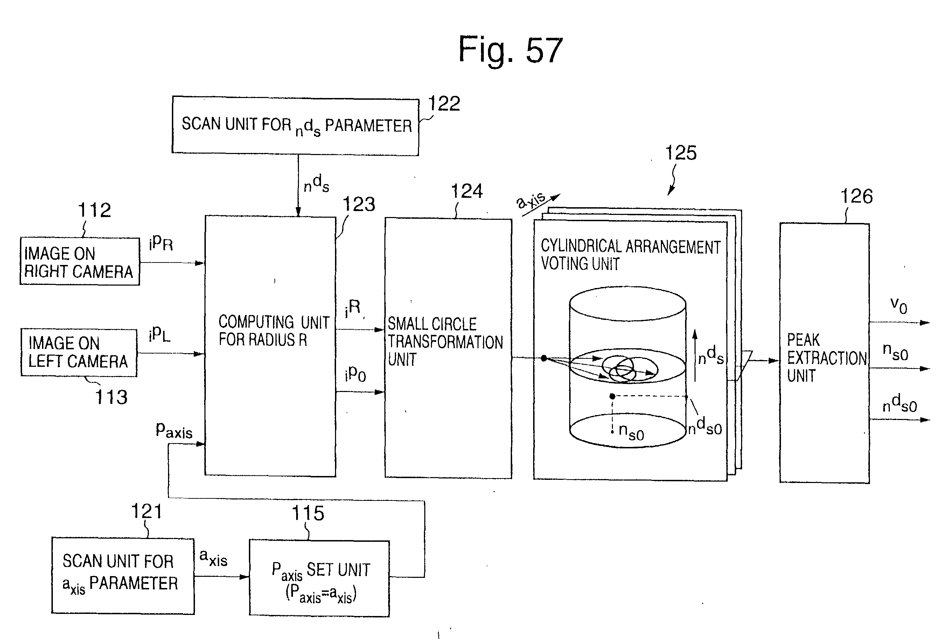

Fig. 57 is a block diagram of an embodiment B-4 of the present invention.

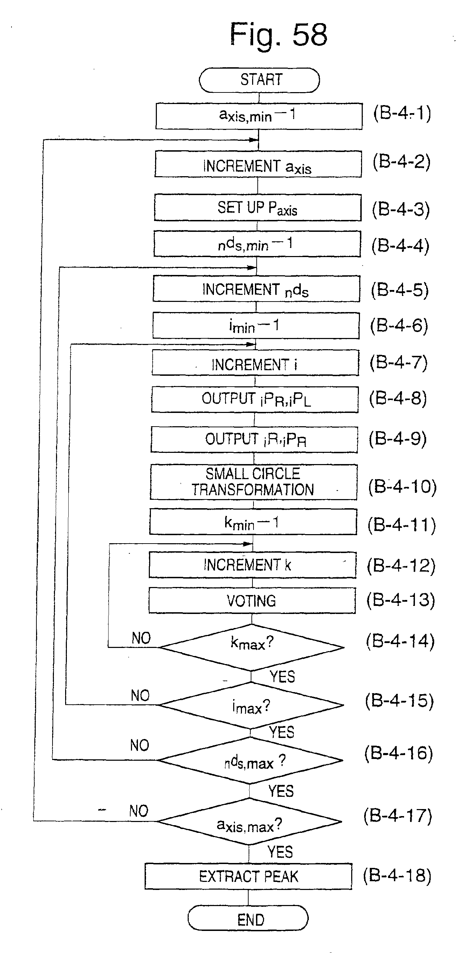

Fig. 58 is a flowchart of the embodiment B-4.

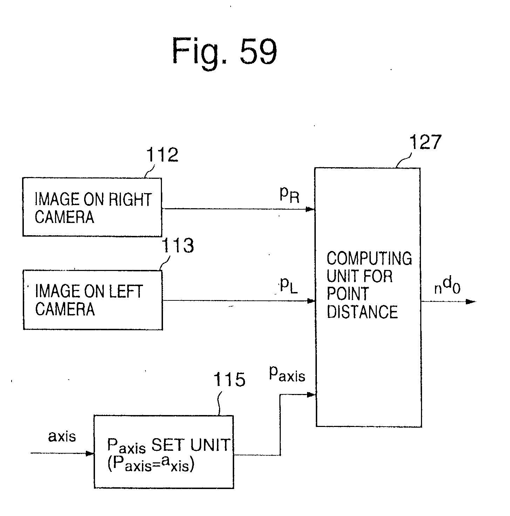

Fig. 59 is a block diagram of an embodiment B-5 of the present invention.

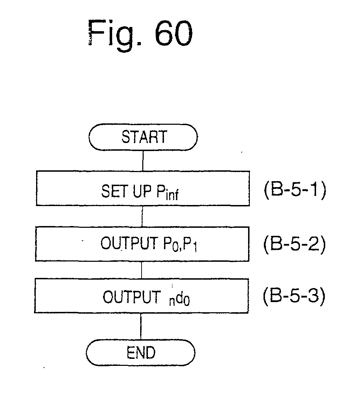

Fig. 60 is a flowchart of the embodiment B-5.

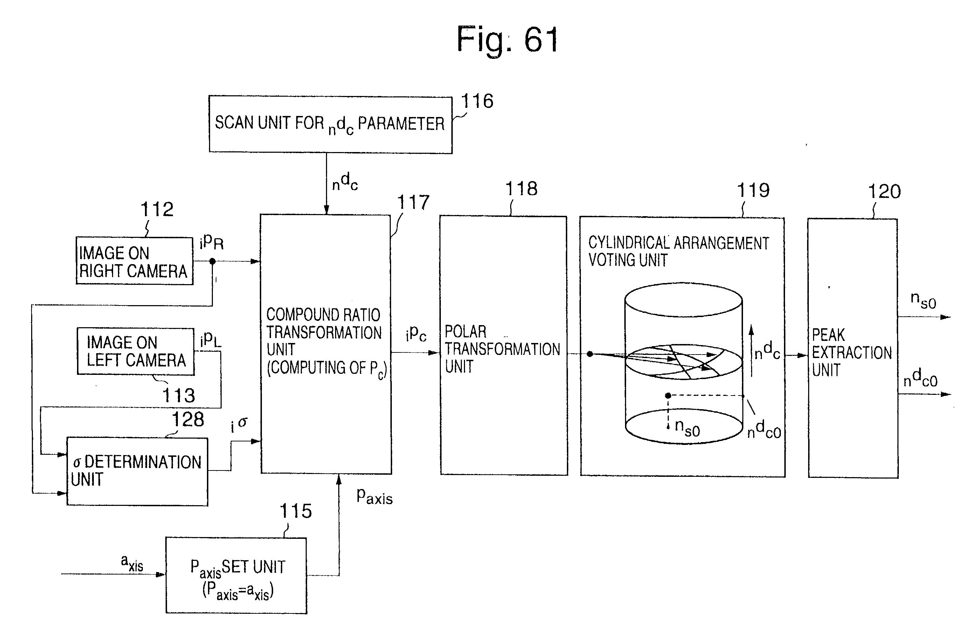

Fig. 61 is a block diagram of an embodiment B-6 of the present invention.

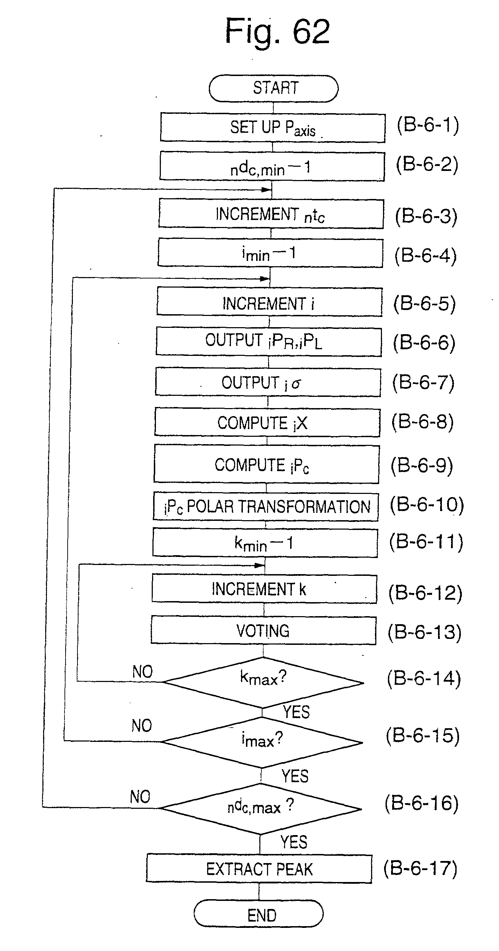

Fig. 62 is a flowchart of the embodiment B-6.

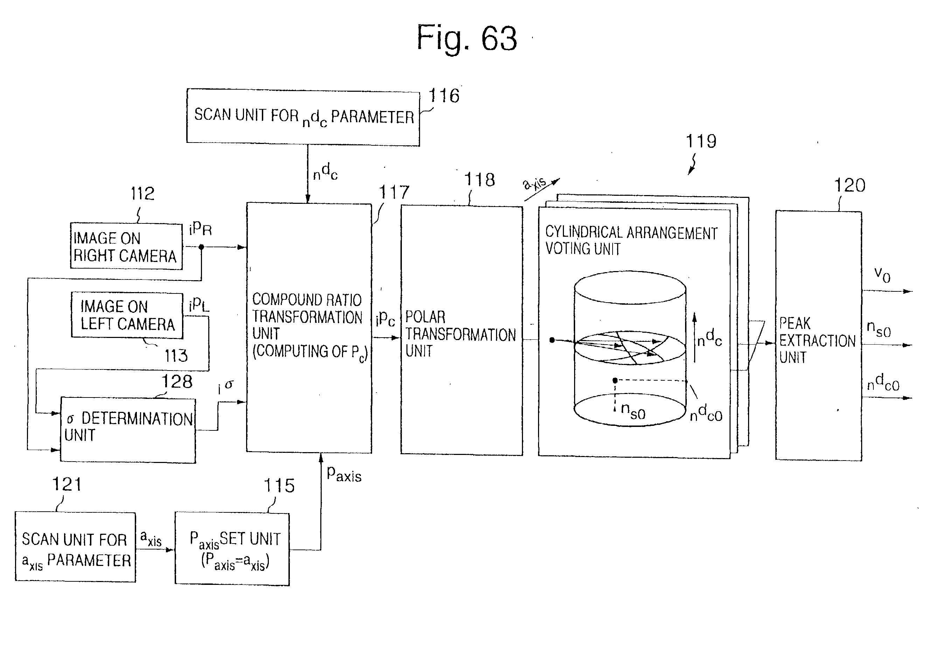

Fig. 63 is a block diagram of an embodiment B-7 of the present invention.

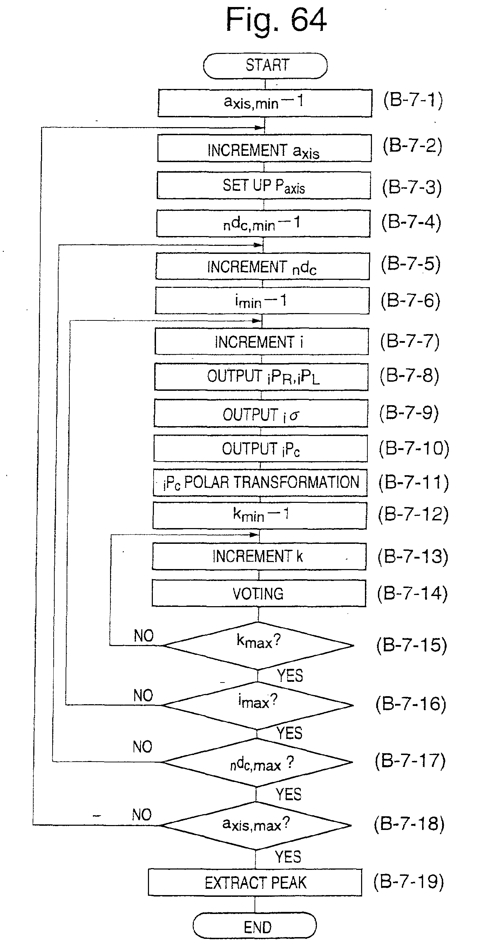

Fig. 64 is a flowchart of the embodiment B-7.

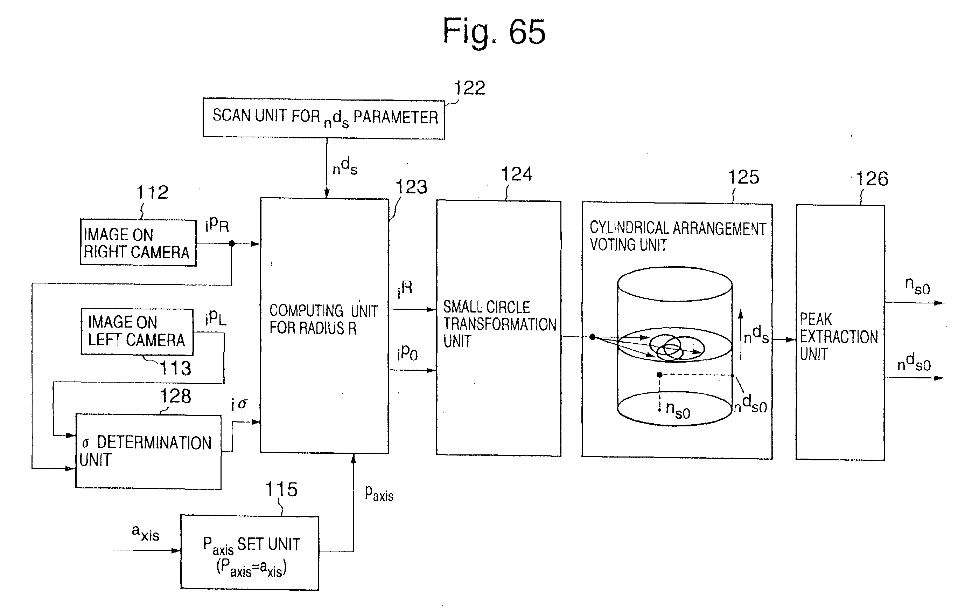

Fig. 65 is a block diagram of an embodiment B-8 of the present invention.

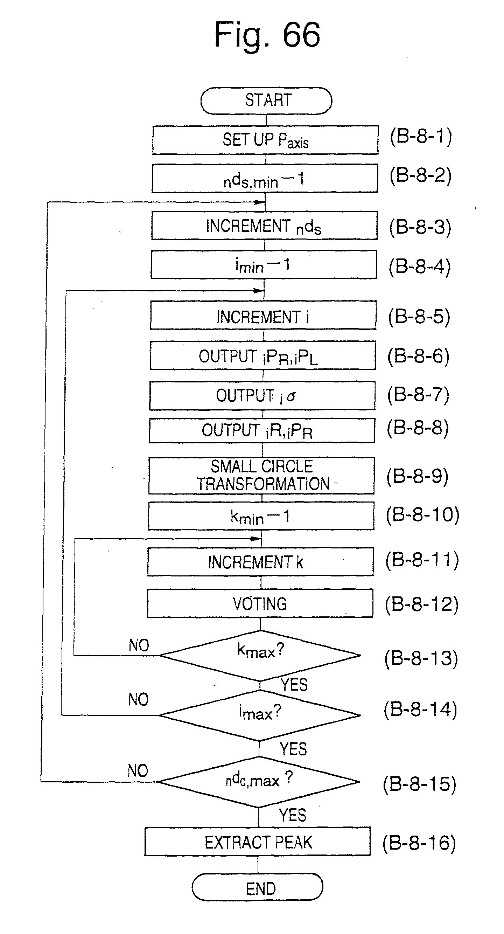

Fig. 66 is a flowchart of the embodiment B-8.

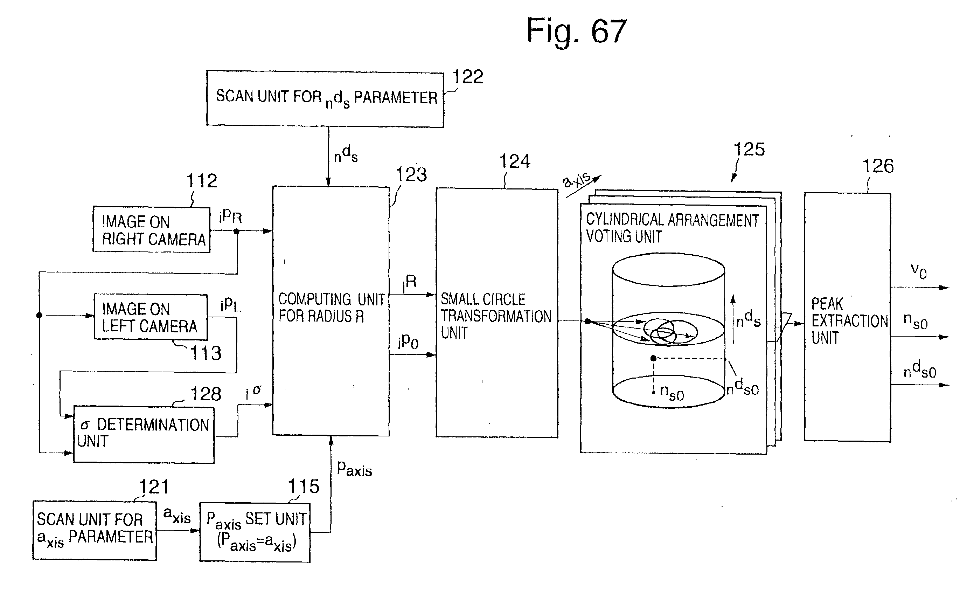

Fig. 67 is a block diagram of an embodiment B-9 of the present invention.

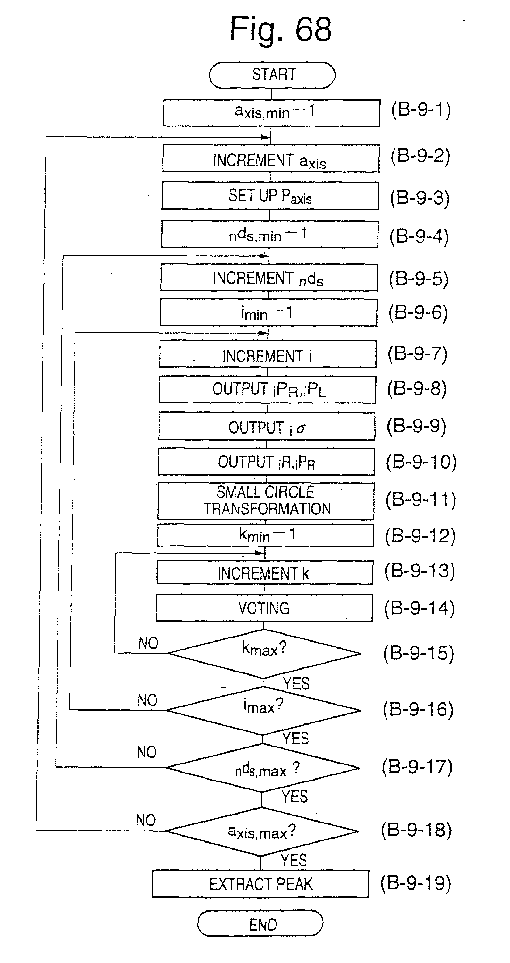

Fig. 68 is a flowchart of the embodiment B-9.

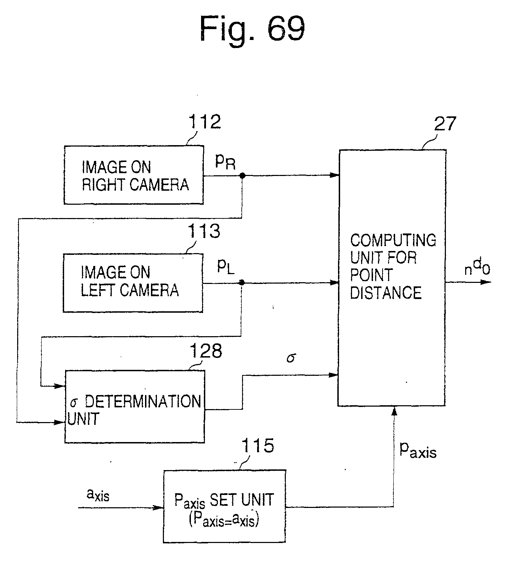

Fig. 69 is a block diagram of an embodiment B-10 of the present invention.

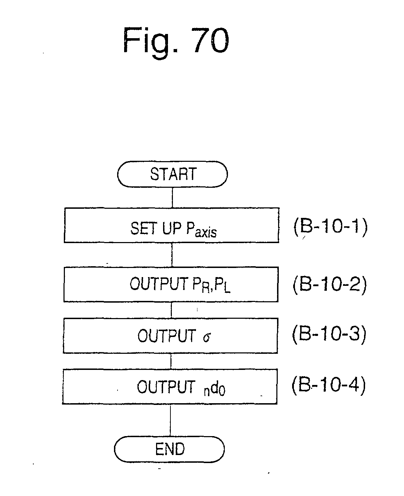

Fig. 70 is a flowchart of the embodiment B-10.

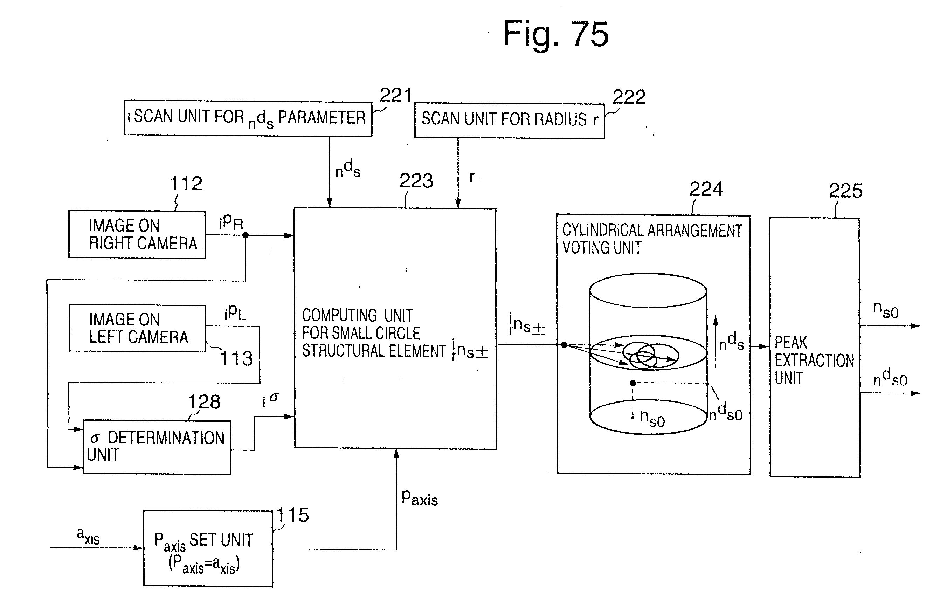

Figures 71 to 74 deleted.

Fig. 75 is a block diagram of an embodiment C-3 of the present invention.

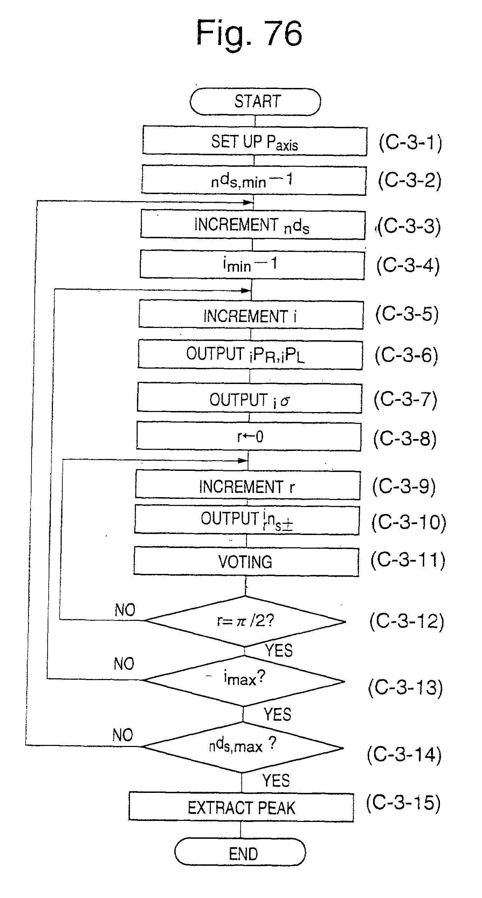

Fig. 76 is a flowchart of the embodiment C-3.

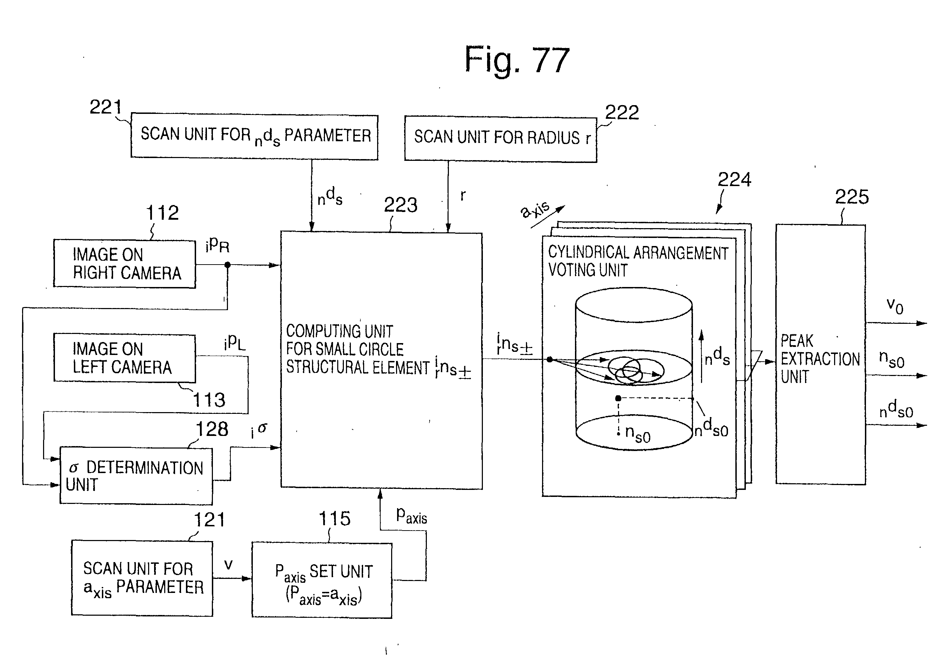

Fig. 77 is a block diagram of an embodiment C-4 of the present invention.

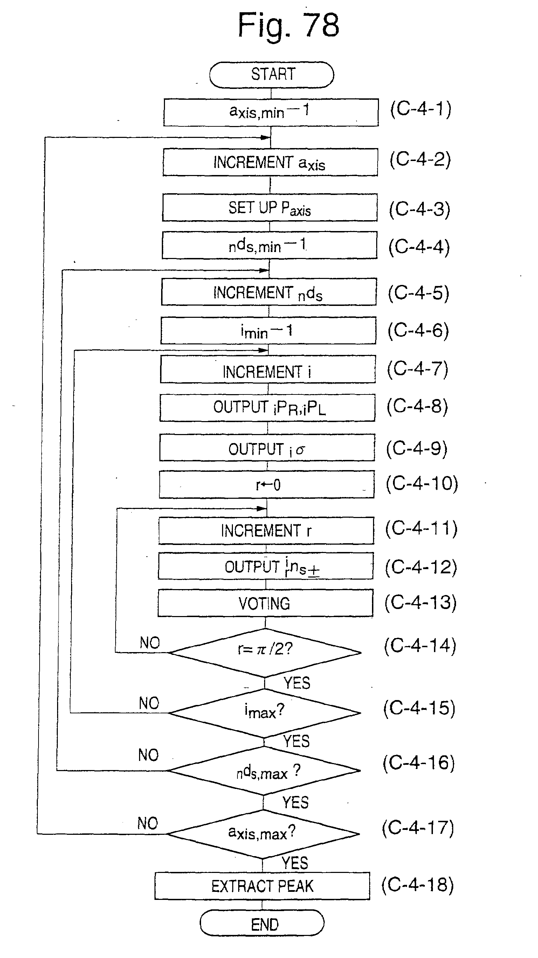

Fig. 78 is a flowchart of the embodiment C-4.

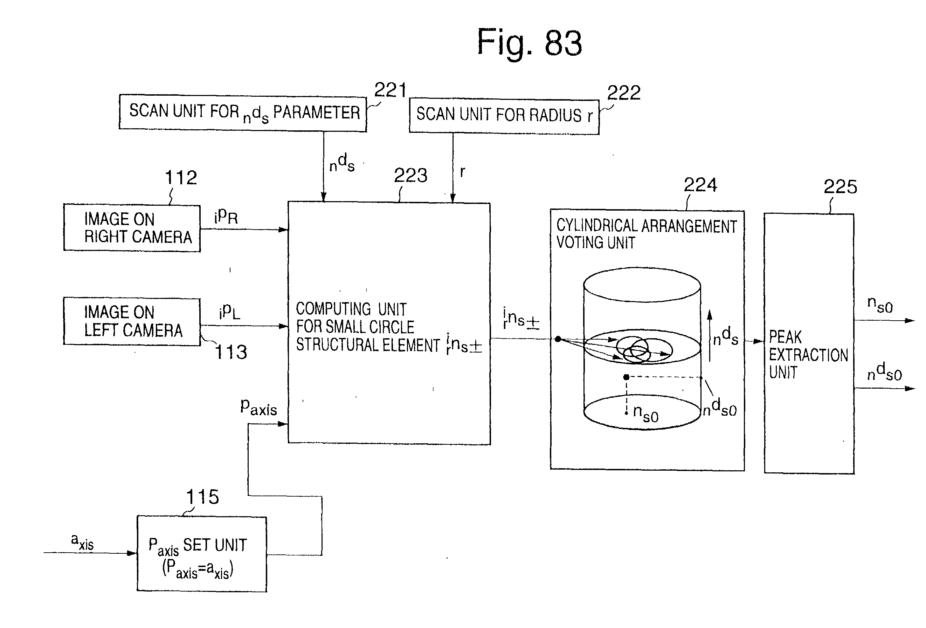

Figures 79 to 82 deleted.

Fig. 83 is a block diagram of an embodiment C-7 of the present invention.

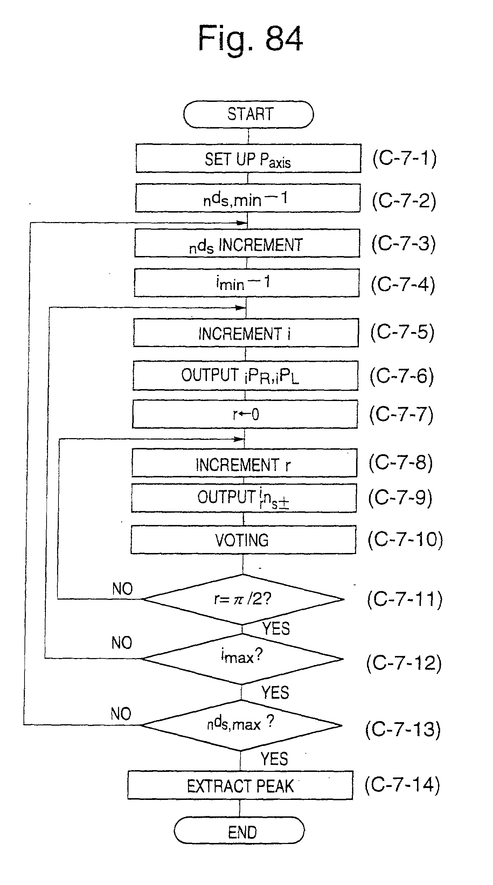

Fig. 84 is a flowchart of the embodiment C-7.

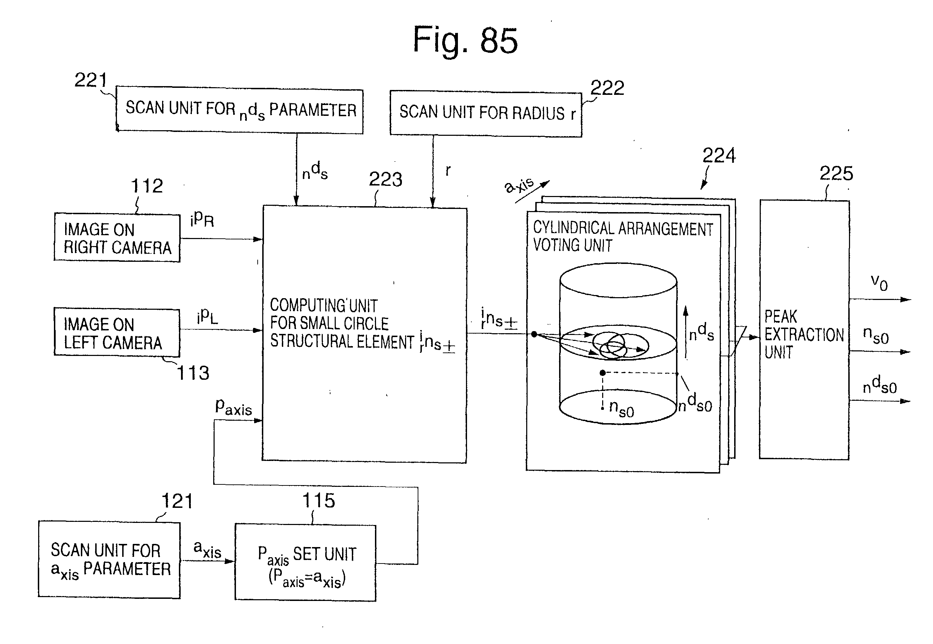

Fig. 85 is a block diagram of an embodiment C-8 of the present invention.

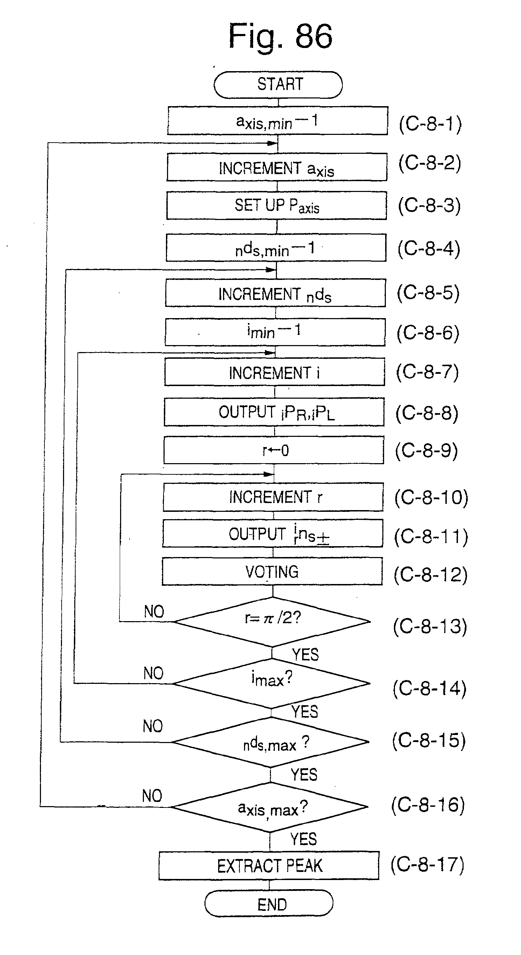

Fig. 86 is a flowchart of the embodiment C-8.

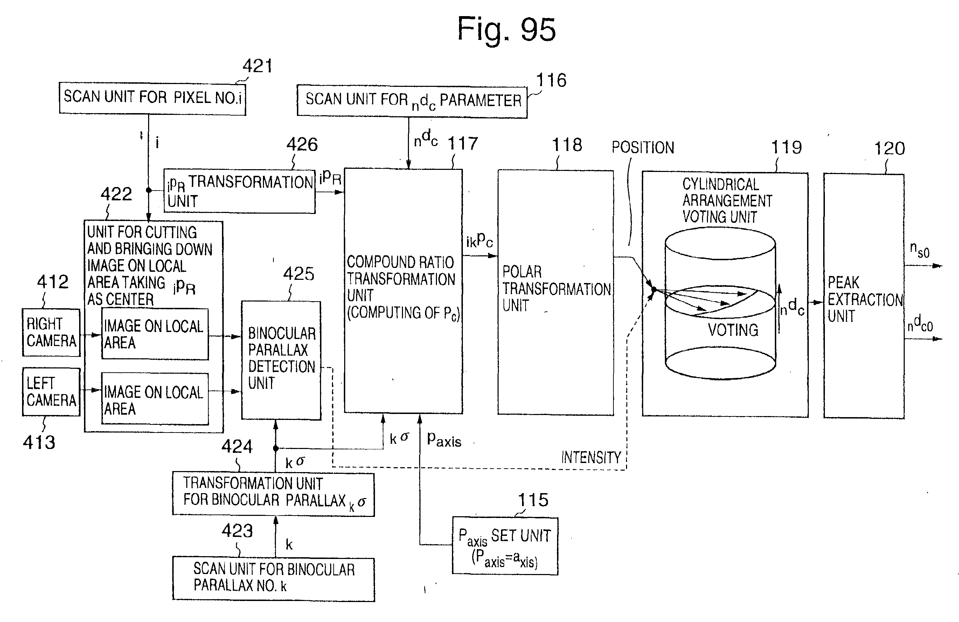

Figures 87 to 94 deleted.

Fig. 95 is a block diagram of an embodiment D-5 of the present invention.

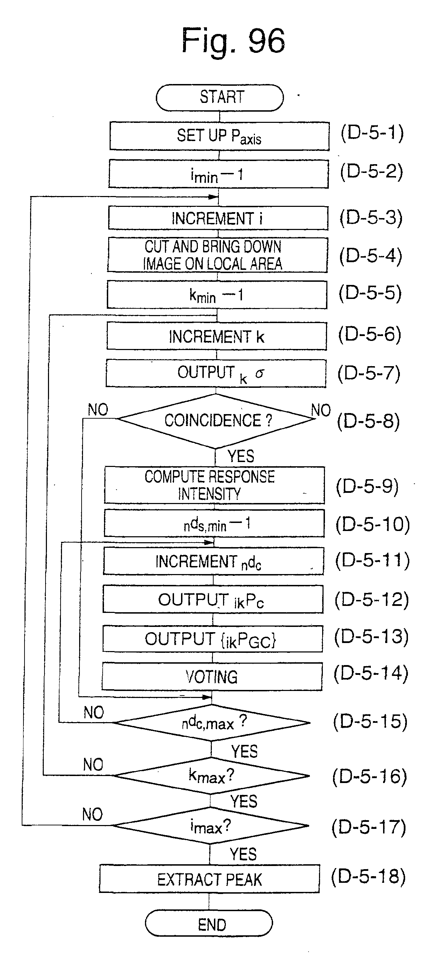

Fig. 96 is a flowchart of the embodiment D-5.

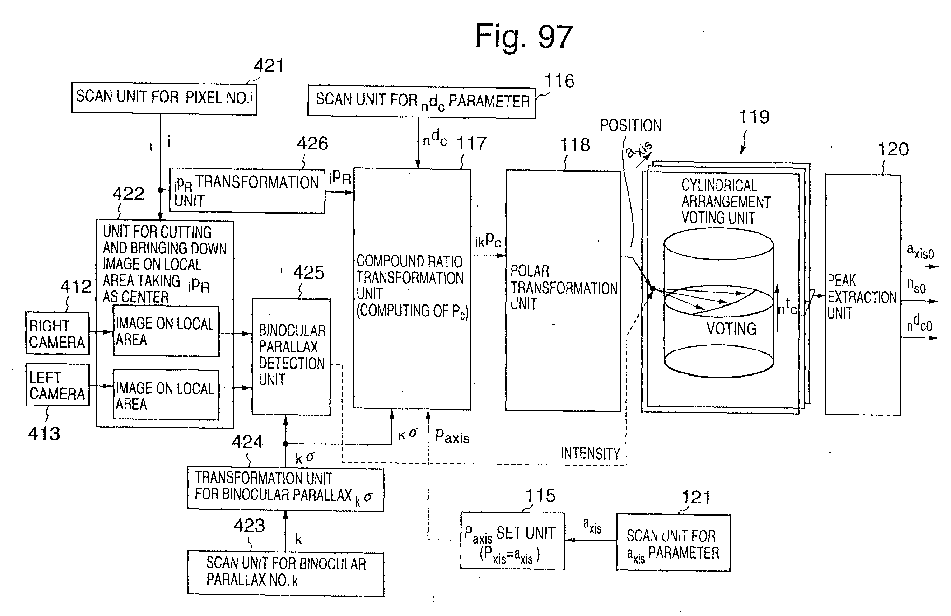

Fig. 97 is a block diagram of an embodiment D-6 of the present invention.

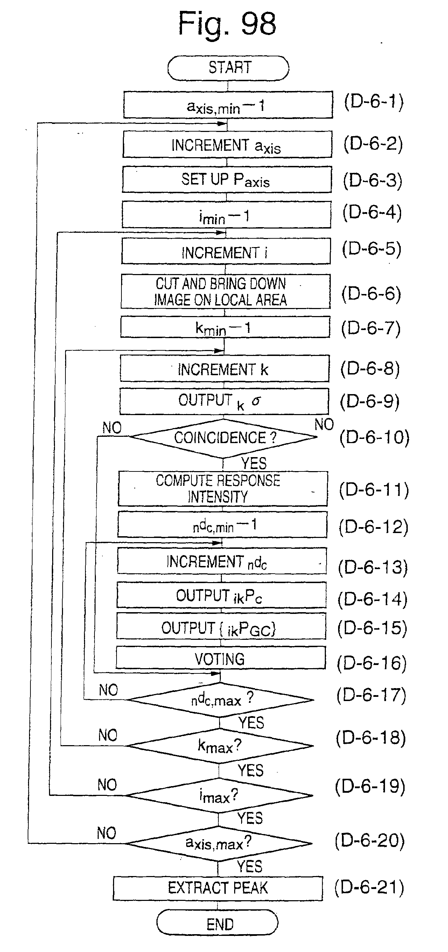

Fig. 98 is a flowchart of the embodiment D-6.

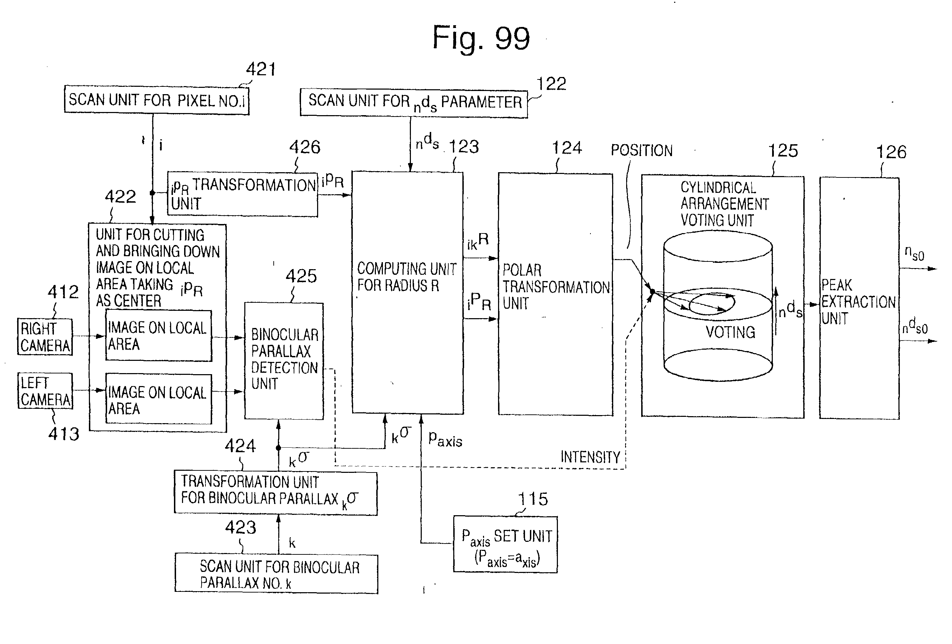

Fig. 99 is a block diagram of an embodiment D-7 of the present invention.

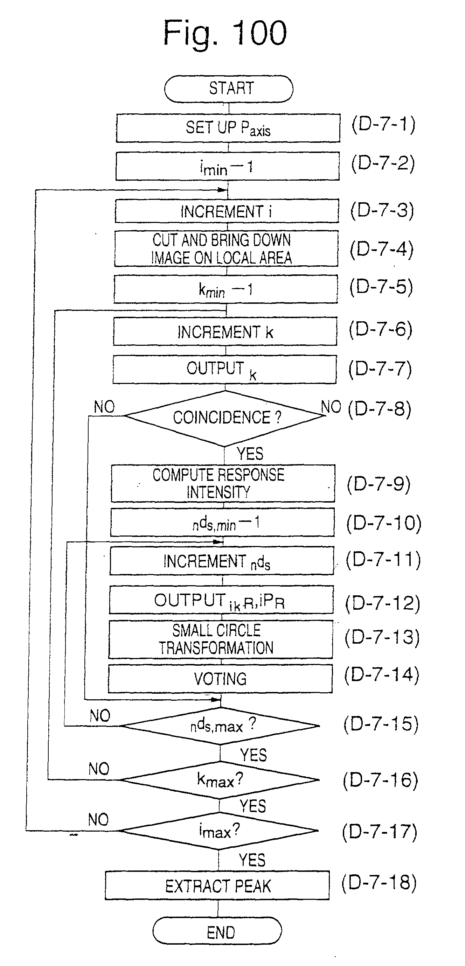

Fig. 100 is a flowchart of the embodiment D-7.

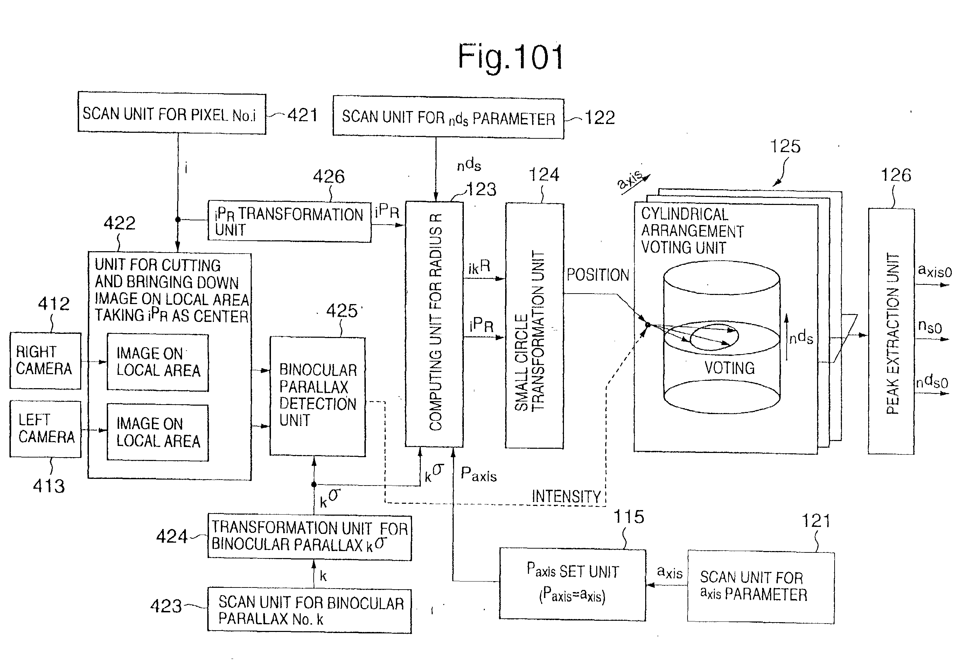

Fig. 101 is a block diagram of an embodiment D-8 of the present invention.

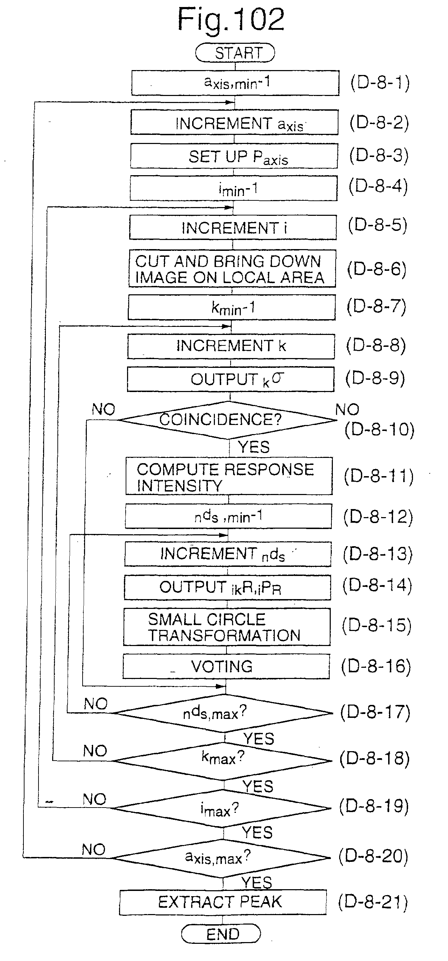

Fig. 102 is a flowchart of the embodiment D-8.

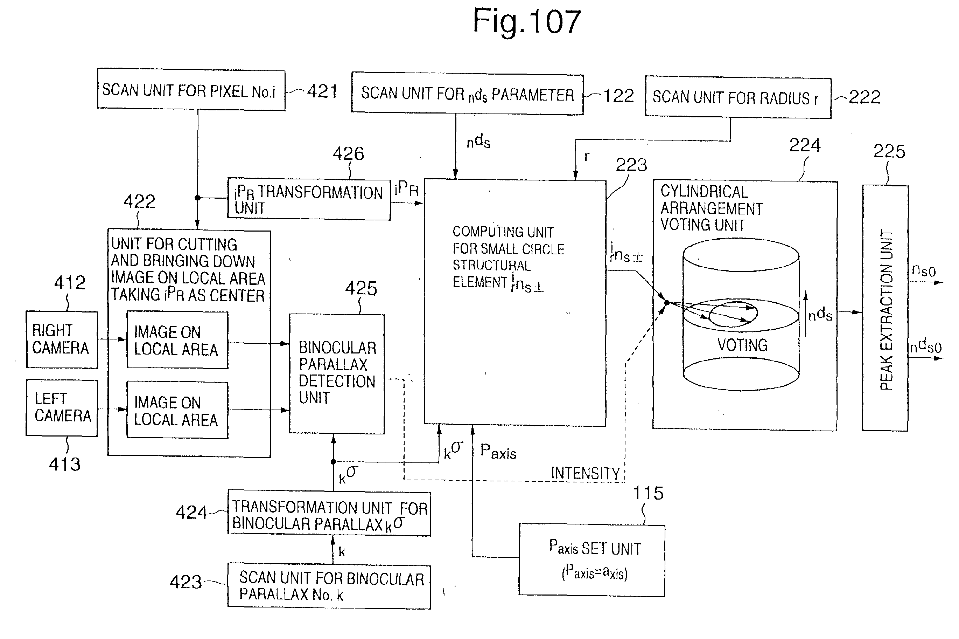

Figures 103 to 106 deleted.

Fig. 107 is a block diagram of an embodiment D-11 of the present invention.

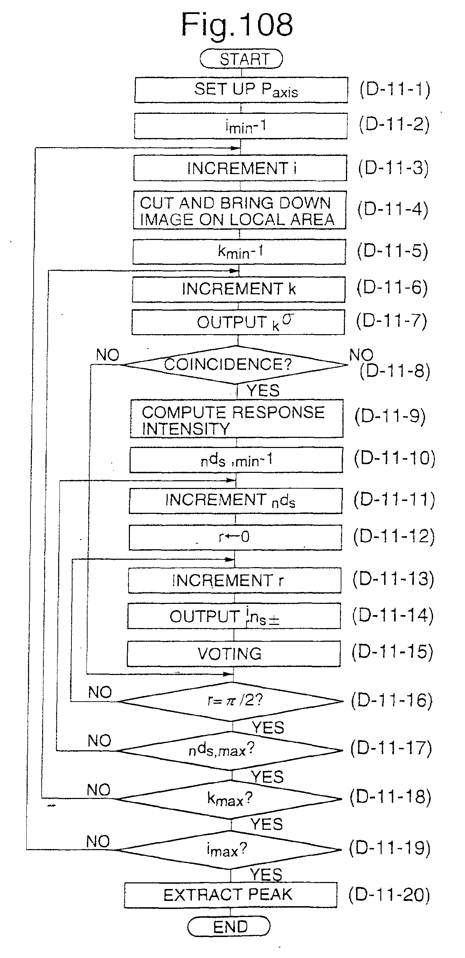

Fig. 108 is a flowchart of the embodiment D-11.

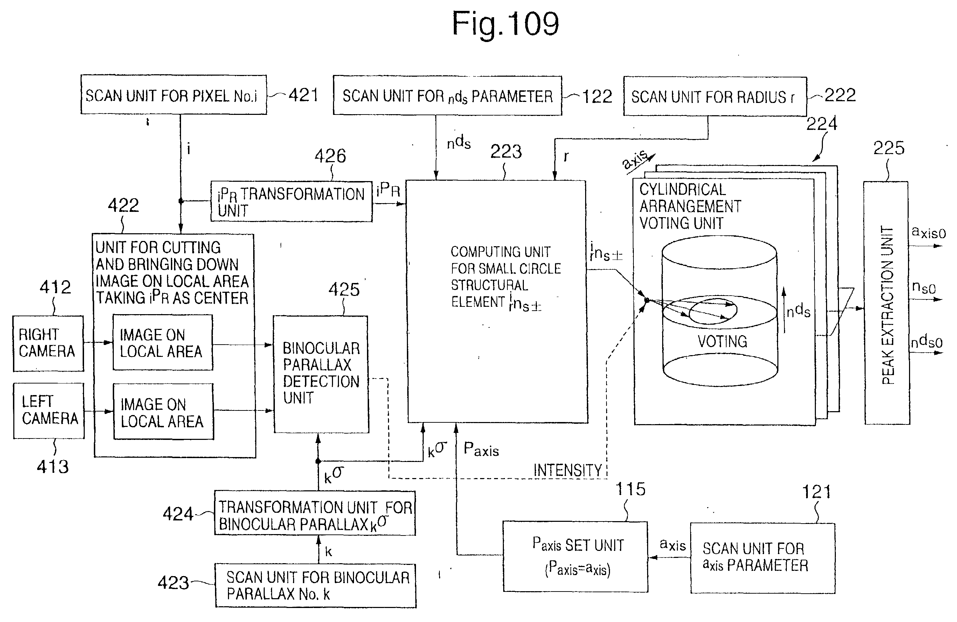

Fig. 109 is a block diagram of an embodiment D-12 of the present invention.

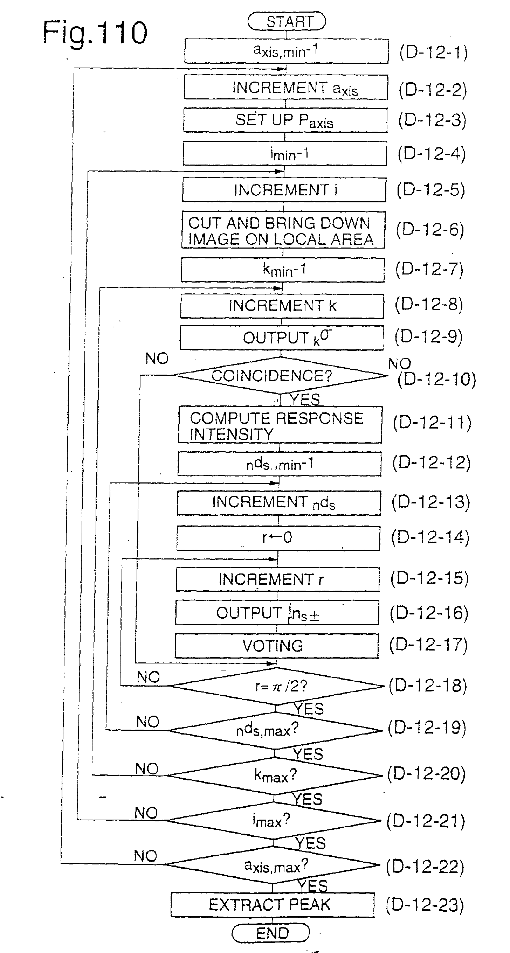

Fig. 110 is a flowchart of the embodiment D-12.

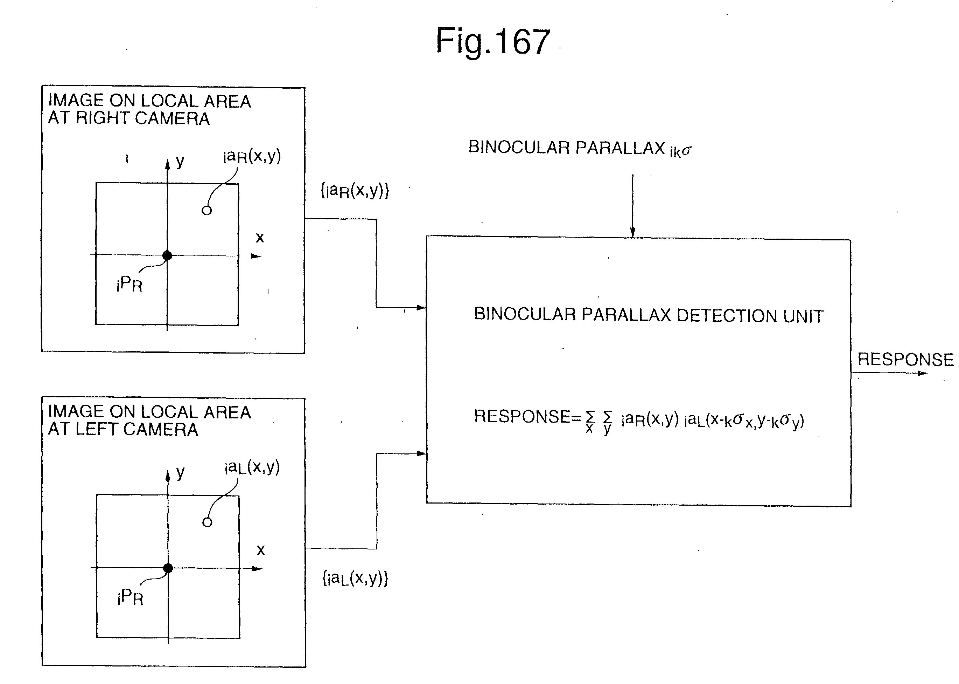

Figures 111 to 166 deleted.

Fig. 167 is a block diagram of a binocular parallax detection unit.

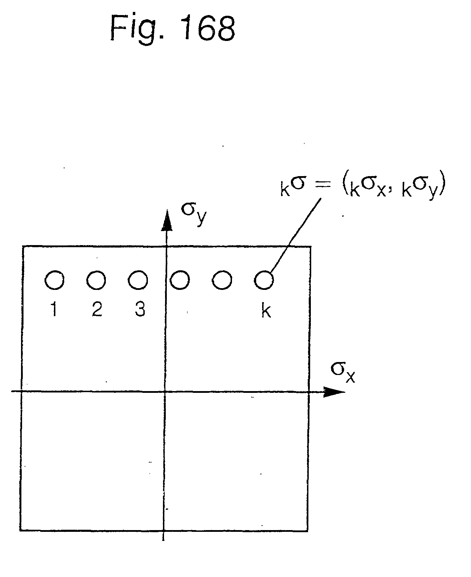

Fig. 168 is an illustration useful for understanding an association between a binocular parallax $_k\sigma$ and a parallactic vector $(_k\sigma_x, {}_k\sigma_y)$.

DETAILED DESCRIPTION OF PREFERRED EMBODIMENTS

Embodiments of the present invention will be described with reference to the accompanying drawings.

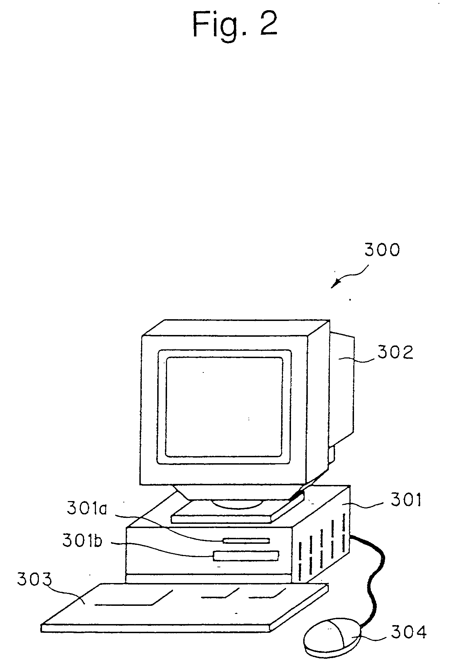

Fig. 2 is a perspective illustration of a computer system which is adopted as one embodiment of an image measurement apparatus of the present invention.

A computer system 300 comprises a main frame 301 incorporating thereinto a CPU, a RAM memory, a magnetic disk, a communication board,-an image input board, etc., a CRT display 302 for performing an image display in accordance with an instruction from the main frame 301, a keyboard 303 for inputting a user's instruction and character information into the computer, and a mouse 304 for designating an arbitrary position on a display screen of the CRT display 302 to input an instruction according to an icon displayed on the position. The main frame 301 has on appearances a floppy disk loading slot 301a and an MO (magneto-optic disk) loading slot 301b onto which a floppy disk and an MO (magneto-optic disk) are detachably loaded, respectively. And the main frame 301 also incorporates thereinto a floppy disk driver for driving the loaded floppy disk and an MO (magneto-optic disk) driver for driving the loaded MO.

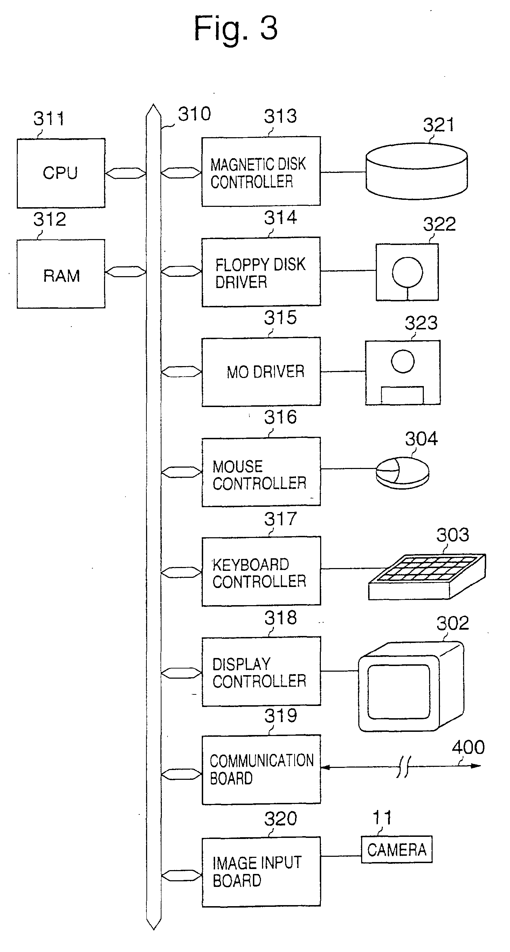

Fig. 3 is a block diagram of the computer system shown in Fig. 2.

The computer system shown in Fig. 3 comprises a central processing unit (CPU) 311, a RAM 312, a magnetic disk controller 313, a floppy disk driver 314, an MO (magneto-optic disk) driver 315, a mouse controller 316, a keyboard controller 317, a display controller 318, a communication board 319, and an image input board 320. Those constituting elements are coupled with a bus 310.

The magnetic disk controller 313 serves to access a magnetic disk 321 incorporated into the main frame 301 (cf. Fig. 2).

The floppy disk driver 314 and the MO driver 315, onto which a floppy disk 322 and an MO (magneto-optic disk) 323 are detachably loaded, respectively, serve to access the floppy disk 322 and the MO 323, respectively.

The mouse controller 316 and the keyboard controller 317 serve to transmit operations of the mouse 304 and the keyboard 303 into the computer.

The display controller 318 causes the CRT display 302 to display an image in accordance with a program operative in the CPU 311.

The communication board 319 is connected through a communication line 400 to a communication network such as a LAN and an internet, and serves to receive image data via the communication network for instance.

The image input board 320 is connected to an external camera 11 (e.g. an electronic still camera, or a video camera), and serves to take in image data obtained through a photography by the camera 11 inside the computer. While Fig. 3 shows only one camera, it is acceptable that two cameras are connected to the image input board 320, so that two sheets of image, which are obtained through a simultaneous photography for the same subject by the two cameras from mutually different directions corresponding to human's binocular parallax for example, can be entered.

A program, which is stored in the floppy disk 322 and the MO 323, or a program, which is transmitted via the communication line 400, is installed in the computer system 300, so that the computer system 300 is operable as an image measurement apparatus according to the present invention which will be described latter. Thus, an embodiment of an image measurement apparatus according to the present invention is implemented in the form of a combination of a hardware of the computer system shown in Figs. 2 and 3 and a program installed in the computer system and to be executed. A program, which causes the computer system to be operative as an image measurement apparatus according to the present invention, corresponds to an image measurement program referred to in the present invention. In the event that the image measurement program is stored in the floppy disk 322 and the MO 323, the floppy disk 322 and the MO 323, which store the image measurement program, correspond to an image measurement program storage medium referred to in the present invention. When the image measurement program is installed in the computer system, the installed image measurement program is stored in the magnetic disk 321. Thus, the magnetic disk 321, which stores the image measurement program, also corresponds to an image measurement program storage medium referred to in the present invention.

Here, functions of the computer system 300 shown in Figs. 2 and 3 as the image measurement apparatus are shown in the various types of function block diagrams, which will be described later, and the contents of the image measurement program operative in the computer system 300 are shown in the various types of flowcharts, which will be described later. The various types of flowcharts, which will be described later, can be understood in the form of "methods", and thus the various types of flowcharts, which will be described later, correspond to the various embodiments of an image measurement method according to the present invention.

Here, the explanation of the embodiments of the present invention is discontinued, and the principle of the image measurement according to the present invention will be described and thereafter the various embodiments of the present invention will be described.


1. A measurement method of a three-dimensional azimuth of a plane and a time up to crossing.


There will be provided hereinafter a method of measuring a three-dimensional azimuth $n_s$ of a plane and a time $t_c$ up to crossing the plane, of the three-dimensional geometric information of the plane.

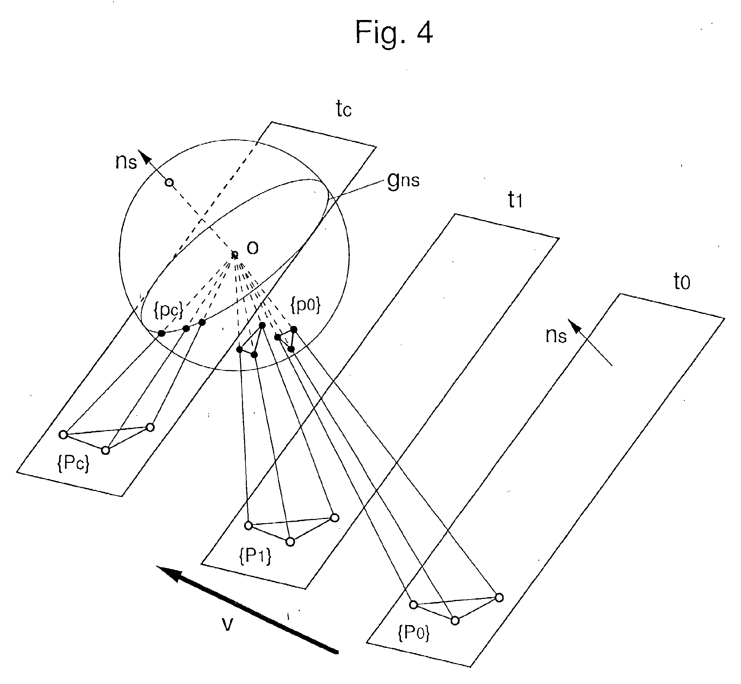

It is assumed that a plane is moved in a direction v. Fig. 4 shows a state that a plane wherein a normal vector is given by $n_s$ (a plane wherein a three-dimensional azimuth is given by $n_s$ ) is moved from the present time $t_0$ to the subsequent time $t_1$, and the plane goes across a camera center O at time $t_c$. The tops (white circles) of a triangle on the plane at the respective times are projected on a retina of an eyeball (or a spherical camera) in the form of cross points (black circles) between lines coupling the camera center O with the- respective tops and a surface of the eyeball (or a spherical camera). Hereinafter, for the purpose of simplification, it is assumed that the diameter of the eyeball (or a spherical camera) is given by 1. Consequently, the vector coupling the camera center O with the black circle offers a "unit vector" of magnitude 1.


1. 1. The principles of measuring a three-dimensional azimuth $n_s$ of a plane


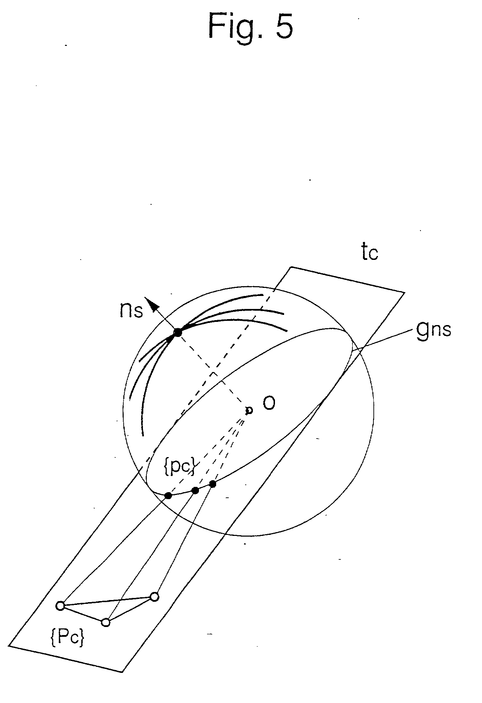

Fig. 5 is an explanatory view useful for understanding a principle of measuring a three-dimensional azimuth of a plane. Fig. 5 shows a state at time $t_c$. At that time, the plane passes through the camera center O. Accordingly, a dot group (white circles) on a plane is projected on a sphere in the form of a "dot group (black circles) on a large circle $g_{ns}$" through a degeneration. This large circle is a line of intersection of the plane with the sphere. Consequently, the vector $p_c$ perpendicularly intersects with the normal vector $n_s$ of the plane. From this relation, the normal vector $n_s$ of the plane can be measured in the form of a "polar transformation" of the vector $p_c$ as follows. That is, when a large circle (the largest circle on the sphere) is drawn on each of the vectors $p_c$ taking it as a center, a group of large circles intersect at one point so that a normal vector (that is, a three-dimensional azimuth) $n_s$ of the plane is measured in the form of the cross point. In this manner, a determination of $p_c$ on a plurality of points makes it possible to determine a three-dimensional azimuth of the plane through the polar transformation. Here, the term of the polar transformation will be explained. The points $p_c$ and the large circles on the sphere are referred to as "poles" and "polar lines", respectively, and an operation of transferring the pole $p_c$ to the polar line (large circle) is referred to as the "polar transformation" or a "duality".


1. 2. The principles of measuring a normalized time $_n t_c$ up to going across a plane


The principle of measuring the normalized time $_n t_c$ will be described. Here, the normalized time is defined as a time wherein time $t_c$ up to crossing a plane is normalized with a time difference $\Delta t$ between the present time $t_0$ and the subsequent time $t_1$, and is expressed by the following equation (1).


$$_n t_c = t_c / \Delta t \tag{1}$$

$$\Delta t = t_1 - t_0 \tag{2}$$

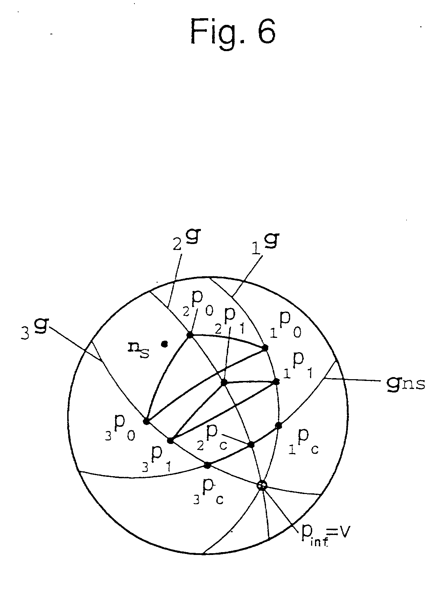

Fig. 6 is a view showing a state that a triangle (black circles), which is projected on a sphere shown in Fig. 4, is moved. A triangle $_1p_0$, $_2p_0$, $_3p_0$ at the present time $t_0$ is moved to $_1p_1$, $_2p_1$, $_3p_1$ at the subsequent time $t_1$, and is moved, at the time $t_c$ crossing a plane, to three points $_1p_c$, $_2p_c$, $_3p_c$ on the "large circle $g_{ns}$ perpendicularly intersecting with the normal vector $n_s$ of a plane" through a degeneration, and finally converges in a moving direction v after the infinite time elapses. The three tops are moved on "large circles $_1g$, $_2g$, $_3g$ coupling those with the moving direction v", respectively. It is noted that the moving direction v is involved in a position after the infinite time elapses and thus is also denoted by $p_{inf}$ hereinafter.

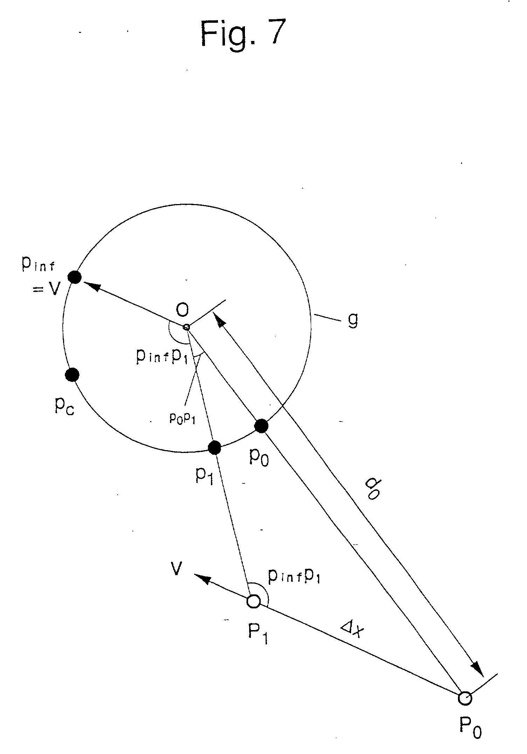

Fig. 7 is an explanatory view useful for understanding a principle of measuring a distance up to a point.

As a preparation for measuring the normalized time $_nt_c$ , it is possible that a position $P_0$ at the present time, a position $P_1$ at the subsequent time, and a position $P_{inf}$ after the infinite time elapses are determined so that a three-dimensional distance $d_0$ of a point at the present time (or a distance from the camera center O to the point $P_0$ ) can be measured. Fig. 7 shows a sectional view wherein a sphere is cut at "one (g) of the large circles each representative of a moving locus" shown in Fig. 6. When a sine theorem is applied to a triangle O $P_0$ $P_1$, there is a relation as set forth between a distance $d_0$ to a point $P_0$ and a "moving distance $\triangle x$ from the present time to the subsequent time".

$$\Delta x/\sin (p_0 p_1) = d_0/\sin (p_{inf}p_1) \tag{3}$$

Where $p_0 p_1$ denotes a central angle from $p_0$ to $p_1$, and $p_{inf}p_1$ denotes a central angle from $p_{inf}$ to $p_1$. When the equation (3) is modified, the distance $d_0$ to the point $p_0$ is expressed by the following equation.

$$d_0 = \Delta x \sin (p_{inf}p_1) /\sin (p_0 p_1) \tag{4}$$

where a "simple ratio (a b c) as to three points a, b, c of the large circle is defined (cf. "Projective Geometry (by Gurevic, G.B., Tokyo Books)", page 6) as follows.

$$(abc) = ac/bc = \sin (ac)/\sin (bc) \tag{5}$$

when the simple ratio is used, the equation (4) is expressed by the equation (6). The adoption of the expression of the simple ratio may avoid the necessity of the adoption of the scheme of the central projection, and thus makes it possible to measure the distance $d_0$ from not only the above-mentioned three points $p_0$, $p_1$, $p_c$ moving on the large circle of a "spherical camera or an eyeball", but also three points $p_0$, $p_1$, $p_c$ moving on a "straight line of an image on a planar camera". That is, it is possible to measure the distance $d_0$ of a point on a three-dimensional basis regardless of a camera system for a photography of an image.

$$d_0 = \Delta x (p_{inf}p_0 p_1) \tag{6}$$

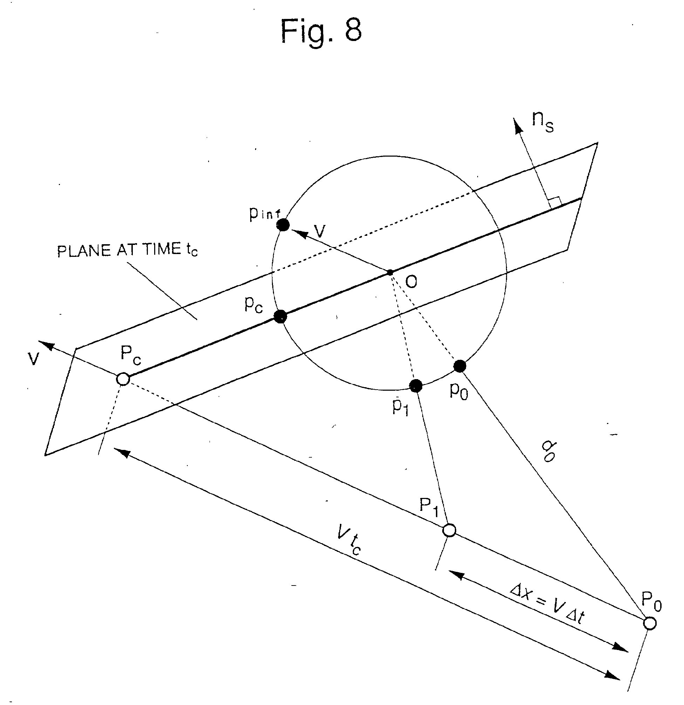

Next, there will be explained the principle of measuring the normalized time $_nt_c$ on the basis of the above-mentioned preparation. Fig. 8 is an explanatory view useful for understanding a principle of measuring a normalized time. Fig. 8 is equivalent to a figure in which a "plane crossing the camera center O at the time $t_c$" is added into Fig. 7. Assuming that a moving velocity is given by V, a relation between the "moving distance $\Delta x$ from the present time to the subsequent time" and the time difference $\Delta t$ between the present time and the subsequent time is expressed by the following equation (7).

$$\Delta x = V \Delta t \tag{7}$$

When the equation (7) is substituted for the equation (4) and the equation (6), the following equations (8a) and (8b) can be obtained.

$$d_0 = V \, \Delta t \, \sin(p_{inf}p_1) / \sin(p_0p_1) \qquad (8a)$$

$$= V \, \Delta t \, (p_{inf}p_0p_1) \qquad (8b)$$

Assuming that time up to crossing the plane is expressed by $t_c$, when a sine theorem is applied to a triangle $O\,P_0\,P_c$, the distance $d_0$ can be determined in accordance with the following equations (9a) and (9b).

$$d_0 = V \, t_c \, \sin(p_{inf}p_c) / \sin(p_0p_c) \qquad (9a)$$

$$= V \, t_c \, (p_{inf}p_0p_c) \qquad (9b)$$

From the ratio of the equations (8a) and (8b) and the equations (9a) and (9b), the normalized time $_n t_c$ up to going across the plane can be determined in accordance with the following equations (10a) and (10b).

$$_n t_c = t_c / \Delta t$$

$$= (\sin(p_{inf}p_1) / \sin(p_0p_1)) / (\sin(p_{inf}p_c)$$
$$/ \sin(p_0p_c)) \qquad (10a)$$

$$= (p_{inf}p_0p_1) / (p_{inf}p_0p_c) \qquad (10b)$$

Here, the compound ratio {a b c d} as to four points a, b, c, d on the large circle is defined by the following equation (11a) in the form of the "ratio of two simple ratios (a b c) and (a b d)", and is expressed by the relation set forth in the following equation (11b) (cf. "Projective Geometry (by Gurevic, G.B., Tokyo Books)", pages 257 and 119).

$$\{a\,b\,c\,d\} = (a\,b\,c) / (a\,b\,d)$$
$$= (a\,c / b\,c) / (a\,d / b\,d) \qquad (11a)$$
$$= (\sin(a\,c) / \sin(b\,c))$$
$$/ (\sin(a\,d) / \sin(b\,d)) \qquad (11b)$$
$$\{a\,b\,c\,d\} = \{b\,a\,d\,c\} = \{c\,d\,a\,b\} = \{d\,c\,b\,a\} \qquad (11c)$$

When the definition of the compound ratio equation (11a) is used, the equations (10a) and (10b) are expressed by the following equation (12a).

$$_n t_c = \{p_{inf}p_0p_1p_c\} \qquad (12a)$$

In this manner, a determination of four points $p_0$, $p_1$, $p_c$, $p_{inf}$ on the moving locus makes it possible to determine the normalized time $_n t_c$ in the form of the compound ratio of the equation (12a).

Here, let us consider the projective geometric meaning of the equation (12a). According to the description at page 86 of "Projective Geometry (by Yanaga and Hirano, Asakura Book Store)", the compound ratio is defined such that "the coordinates $\lambda$ of d by the basic point system a, b, c is referred to as the compound ratio, and is represented by {a b c d}" (also at page 119 of "Projective Geometry (by Gurevic, G.B., Tokyo Books)", there is the similar description).

In this definition, when the basic point system a, b, c is replaced by the basic point system $p_{inf}$, $p_0$, $p_1$, and the value $\lambda$ of the compound ratio is replaced by $_nt_c$, the definition of the compound ratio is changed to read as "the coordinates $_nt_c$ of $p_c$ by the basic point system $p_{inf}$, $p_0$, $p_1$, is referred to as the compound ratio, and is represented by $\{p_{inf}, p_0, p_1, p_c\}$". Consequently, the equation (12a) means on a projective geometric basis

"the normalized time $_nt_c$ is coordinates of $p_c$ which is measured by a basic point system wherein the original point, the infinite-point and the unit point are given by $p_0$, $p_{inf}$, $p_1$, respectively". (12b)

The compound ratio of the equation (12a) is the basic invariant of the projective geometry, and is constant for the arbitrary projection and cut. That is, the compound ratio is constant for an "image on an arbitrary camera system" of a spherical camera, a planar camera and the like. Consequently, it is possible to measure in the form of the compound ratio the "normalized time $_nt_c$ up to crossing a plane" from not only the above-mentioned four points $p_0$, $p_1$, $p_c$, $p_{inf}$ moving on the large circle of a "spherical camera or an eyeball", but also four points $p_0$, $p_1$, $p_c$, $p_{inf}$ moving on a "straight line of an image on a planar camera". That is, it is possible to measure the normalized time $_nt_c$ regardless of a camera system for a photography of an image.

1. 3. A method of determining a three-dimensional geometric information of a plane by a compound ratio transformation and a polar transformation.

Let us consider as to whether it is possible to know four positions $p_0$, $p_1$, $p_c$, $p_{inf}$ used in the above-mentioned principle. First, the position $p_0$ at the present time and the position $p_1$ at the subsequent time can be known from an image on a camera. Next, the position at the infinite time can be known since it is equivalent to a moving direction v of the plane (or the camera). Of the above-mentioned four positions, what is impossible to be known directly is the position $p_c$ at the time $t_c$ wherein the plane goes across the camera center.

The position $p_c$ can be estimated by the "compound ratio transformation" which is obtained through a modification of the equation (10a) or the equation (12a). The three-dimensional geometric information (a three-dimensional azimuth $n_{s0}$ and a normalized time $_nt_{c0}$ up to crossing) of a plane can be measured through the "polar transformation" of $p_c$ in accordance with the method of 1.1. These matters will be explained hereinafter.

1. 3. 1 A compound ratio transformation

According to this compound ratio transformation, the normalized time $_nt_c$ and positions $p_0$, $p_1$, $p_{inf}$ at three times are determined, and "the above-mentioned position $p_c$", which is important for determination of the three-dimensional geometric information, is computed. Since four variables $_nt_c$, $p_0$, $p_1$, $p_{inf}$ can be determined in the equation (12a), it is possible to determine the remaining variable $p_c$. This computation is well known as a method of computation for a compound ratio of a projective geometry.

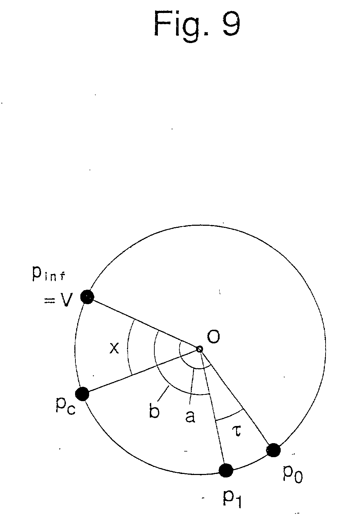

This computation will be given by a mathematical expression. Fig. 9 shows a sectional portion of the sphere extracted from Fig. 8. The positions of $p_0$, $p_1$, $p_c$ are represented by the central angles a, b, x taking $p_{inf}$ as the basic point (it is acceptable that the basic point may be an arbitrary position). The various central angles are as follows.

$$p_{inf}\, p_0 = a \tag{13}$$

$$p_{inf}\, p_1 = b$$

$$p_{inf}\, p_c = x$$

$$p_0\, p_1 = b - a$$

$$p_0\, p_c = x - a$$

The above-mentioned compound ratio transformation will be given by the mathematical expression using those central angles. When the right-hand member of the equation (10a), that is, the compound ratio is expressed by the use of the central angles shown in the equation (13), the following equation is obtained.

$$_nt_c = (\sin (b) /\sin (b - a))$$

$$/ (\sin (x) /\sin (x - a)) \tag{14a}$$

When it is modified, the central angle x between $p_c$ and $p_{inf}$ is given by the following equation.

$$x = \tan^{-1} ( (\sin (a) \sin (b))$$

$$/ (\cos (a) \sin (b) -_nt_c \sin (b-a))) \tag{14b}$$

Accordingly, when the normalized time $_nt_c$ and "positions $p_0$, $p_1$, $p_{inf}$ at three times" are given, the position $p_c$ at the time crossing a plane is computed in accordance with the equation (14b). That is, the mathematical expressions for the compound ratio transformation are shown.

In the general dynamic picture image processing and the optical flow, it often happens that "change $p_1$-$p_0$ from the present time (that is, it is the motion parallax $\tau$ and is expressed by the central angle $p_0 p_1$)" instead of "the position $p_1$ at the subsequent time" is treated. The respective arrows of the optical flow pattern (Fig. 1) correspond to this change, and the starting point and the terminating point of the arrow correspond to the present time position $p_0$ and the subsequent time position $p_1$, respectively. In Fig. 9, such a change is represented by the angle $\tau$. In this case, the mathematical expressions for the compound ratio transformation will be set forth below.

The various central angles are given as follows.

$$p_{inf}p_0 = a \tag{15}$$

$$p_0 p_1 = \tau$$

$$p_{inf}p_c = x$$

$$p_{inf}p_1 = a + \tau$$

$$p_0 p_c = x - a$$

When the right-hand member of the equation (10a) is expressed using the central angles of the equation (15), the following equation can be obtained.

$$_nt_c = (\sin (a + \tau) /\sin (\tau))$$

$$/ (\sin (x) /\sin (x - a)) \tag{16a}$$

When this is modified, the central angle x between $p_c$ and $p_{inf}$ is given by the following equation.

$$x = \tan^{-1} ((\sin (a) \sin (a + \tau))$$

$$/(\cos (a) \sin (a + \tau) - _nt_c \sin (\tau))) \tag{16b}$$

Thus, additional mathematical expressions for the compound ratio transformation can be obtained.

1. 3. 2 A method of determining a three-dimensional azimuth of a plane and a normalized time up to going across the plane

There will be explained a method of determining a three-dimensional azimuth $n_s$ of a plane and a normalized time $_nt_c$ up to going across the plane. It is performed in the following four steps.

(1) Set up arbitrarily a normalized time parameter $_nt_c$.
(2) With respect to the respective points of an image, determine the positions $p_0$, $p_1$ at the present time and the subsequent time from the image on a camera, respectively, and determine the position $p_{inf}$ after the infinite time elapses from the moving direction v, and substitute those positions for the equation (14b) or the equation (16b) to perform the compound ratio transformation so that the position $p_c$ is computed.
(3) Determine candidates for the normal vector $n_s$ of a plane in accordance with "the principles of measuring a three-dimensional azimuth $n_s$ of a plane" of 1.1. That is, $p_c$ determined in the step (2) is subjected to the polar transformation to draw large circles on a sphere. Here there will be explained the meaning of drawing the large circles. If the normalized time parameter $_nt_c$ given in the step (1) is a true normalized time $_nt_{c0}$, as described in connection with Fig. 5, it is possible to determine the normal vector $n_{s0}$ of a plane in the form of the cross point of the large circles. However, in the step (1), the parameter $_nt_c$ is arbitrarily set up and thus generally the large circles do not intersect with each other at one point. Therefore, the large circles drawn here mean determining candidates for the normal vector $n_s$ of a plane. Incidentally, intensity of the large circle corresponds to "brightness of position $p_0$ in an image", and in the place wherein a plurality of large circles intersect with each other, intensity of the large circles is added.
(4) The above-mentioned steps (1) to (3) are repeatedly carried out through changing the normalized time parameter $_nt_c$ to determine a parameter value $_nt_{c0}$ wherein a plurality of large circles drawn in the step (3) intersect with each other at one point. Thus, a "normalized time $_nt_{c0}$ up to crossing a plane" is obtained in the form of the parameter value. Further, the azimuth $n_{s0}$ of a plane is obtained in the form of coordinates of the above-mentioned cross point. It is acceptable that a point wherein intensity offers a peak is detected instead of detection of the above-mentioned cross point.

Here, there will be described a geometric meaning of the position $p_c$ computed through the compound ratio transformation in the step (2). The position $p_c$ is one in which the position at the arbitrarily time $_nt_c\triangle t$ is "predicted". This prediction is apparent from the derivation process of the equation (10a) which is the base for the compound ratio transformation. On the other hand, intuitively, the equation (12b) may be understood as follows:

"In order to predict the position at the arbitrarily time $_nt_c\triangle t$ (that is, the normalized time parameter $_nt_c$), it is effective to determine the position $p_c$ of $_nt_c$ in coordinates in a basic point system wherein the original point, the infinite-point and the unit point are given by $p_0$, $p_{inf}$, $p_1$, respectively"

The time, in which the positions $p_c$ thus predicted are located on the large circles, corresponds to the "time $_nt_{c0}\triangle t$ in which a plane crosses the camera center (that is, the time $t_{c0}$)", and the "normalized time $_nt_{c0}$ up to crossing a plane" is determined in accordance with that time. The large circles, in which those positions $p_c$ are subjected to the polar transformation, intersect with each other at one point, so that the three-dimensional azimuth $n_{s0}$ of a plane is determined in the form of the coordinates of the cross point (cf. Fig. 5).

1. 3. 3 Geometric meaning of the above-mentioned steps

Geometric meaning of the above-mentioned steps will be explained in conjunction with Figs. 10(A) and 10 (B). As shown in Fig. 10(A), the respective points on an image on a spherical camera move from the position $p_0$ at the present time to the position $p_1$ at the subsequent time, pass through the position $p_c$ at the "time in which a plane crosses the camera center" , and finally after the infinite time elapses, reach the "position $p_{inf}$ equivalent to the moving direction v of a plane (or a camera)" (cf. Fig. 6).

Determination of the position $p_c$ (Meaning of the step (2)): The "positions $p_0$ , $p_1$ at the present time and the subsequent time" and the "normalized time parameter $_nt_c$ " given by the step (1) are subjected to the compound ratio transformation in accordance with the equation (14b) so that the position $p_c$ at the "time in which a plane crosses the camera center" is determined. This is shown in Fig. 10(A). Incidentally, in the event that the compound ratio transformation according to the equation (16b) is used, a "difference vector $\tau$ from the position $p_0$ at the present time to the position $p_1$ at the subsequent time" is used instead of the position $p_1$ at the subsequent time.

Drawing of a candidate group $\{n_s\}$ of a planer azimuth (Meaning of the step (3)): The position $p_c$ determined as mentioned above is subjected to the polar transformation to draw on a sphere a large circle or a candidate group $\{n_s\}$ of a planer azimuth as shown in Fig. 10(A). If the normalized time parameter $_nt_c$ given in the step (1) is a true normalized time $_nt_{c0}$, it is possible to determine the normal vector $n_{s0}$ of a plane in the form of the cross point of these large circles associated with a plurality of points on the image.

Determination of three-dimensional geometric information in the form of coordinate value of a cylindrical arrangement (Meaning of the step (4)): A sphere shown in Fig. 10(A) is projected onto the plane to transform the image on the sphere into the inside of the "circle". As a projecting method, there are known an isometric solid angle projection, an equidistant projection, an orthogonal projection, etc. ("Problems associated with newest lens design course 23 lens design (1) (by Nakagawa, Photography Industry, 1982)" : Section 4.2.2.1, "Report of Sho. 59 Utility Nuclear Electric Power Generation Institution Robot Development Contract Research (Advanced Robot Technology Research Association)"; Section 4.2.2.1, "Report of Sho. 60 Utility Nuclear Electric Power Generation Institution Robot Development Contract Research (Advanced Robot Technology Research Association)". The circles are accumulated taking the normalized time parameter $_nt_c$ as a vertical axis to form the "cylindrical arrangement" as shown in Fig. 10(B). This feature makes the geometric meaning of the step (1) clear. That is, it means that the "normalized time parameter $_nt_c$" arbitrarily given by the step (1) designates height coordinates of this cylinder, and in the steps (2) and (3) the sectional circle at that height, or one in which a spherical image shown in Fig. 10(A) is transformed inside the "circle", is drawn. In step (1), the parameter $_nt_c$ is arbitrarily given, and thus, as seen from Fig. 10(B), the large circles do not intersect with each other at one point. However, on the sectional circle, in which it's height is equivalent to the true normalized time $_nt_{c0}$, the large circles intersect with each other at one point. Thus, it is possible to obtain the normalized time $_nt_{c0}$ of a plane in the form of the "height coordinates" of the cylinder, and also to obtain the three-dimensional azimuth $n_s$ in the form of the "intersection coordinates inside a sectional circle" (Fig. 10(B)).

1. 4 A confirmation by a simulation

It will be shown by a computer simulation that the "algorithm of measuring three-dimensional geometric information of a plane" explained in 1. 3. 2 and 1. 3. 3 is correct (Fig. 11). The simulation was carried out in accordance with a flow of an embodiment A-1.

First, there will be described input data. There is a vertical plane right in front of a spherical camera (or an eyeball), and a distance up to the camera center is 3m. The plane moves in a direction vertical to the plane (that is, a direction parallel with the normal vector $n_{s0}$ of the plane) toward the camera at the velocity lm/second. There are eight points on the plane. The "positions $p_0$ , $p_1$ on the sphere at the present time and the subsequent time" are observed in the form of input image data. A time difference $\triangle t$ between the present time and the subsequent time is 0.05 second. The position $p_{inf}$ at the infinite time is equivalent to a moving direction v and is located at the center of the visual field. From the above, the time $t_c$ until the camera goes across the plane is 3/1 = 3 second, and thus the normalized time $_nt_{c0}$ is 3/0.05 = 60. The normal vector $n_{s0}$ of the plane is located at the center of the visual field.

Fig. 11 is an illustration showing a result of a computer simulation in which three-dimensional geometric information of a plane ($_nt_{c0}$ and $n_{s0}$) is determined from the positions $p_0$, $p_1$ at the present time and the subsequent time and the position $p_{inf}$ after the infinite time elapses in accordance with the above-mentioned algorithm (the compound ratio transformation and the polar transformation). In Fig. 11, there are shown the "sectional circles of cylinders" at the respective normalized time parameters $_nt_c$ explained in connection with 1. 3. 3. Each of the sectional circles is obtained through a projection of the sphere of Fig. 10(A) onto a plane passing through the sphere in accordance with the "equidistant projection (cf. the equation (103c) explained 1. 3. 3". The lower right is of the sectional circle at time $_nt_c$ = 0 corresponding to the present time, and the respective sectional circles are arranged in such an order that the parameter $_nt_c$ is incremented toward $_nt_c$ = infinity corresponding to the infinite time of the upper left. Next, there will be explained the respective sectional circles. In each of the sectional circles, the position $p_c$, which is computed through the "compound ratio transformation" on the basis of the positions $p_0$, $p_1$ and the parameter $_nt_c$, is drawn in the form of a dot. Eight positions $p_c$ associated with eight points on the plane are drawn. Those positions $p_c$ are, as described in 1. 3. 2, to "predict" the positions wherein the respective points are observed at an arbitrarily time $_nt_c$ $\triangle t$. Next, eight large circles, wherein those positions $p_c$ are subjected to the "polar transformation", are drawn.

On the first sectional circle (lower right, $_nt_c$ = 0), those large circles are scattered. As the parameter $_nt_c$ is incremented, the large circles are converged, and on the sectional circle (the second circle from the upper of the right) wherein $_nt_c$ is 60, those large circles intersect with each other at one point. When the parameter $_nt_c$ is further incremented, those large circles are scattered again. In this manner, the large circles intersect with each other at one point only in the height $_nt_c$ = 60. This height $_nt_c$ is equivalent to the value 60 of the above-mentioned "normalized time $_nt_{c0}$ up to going across a plane". The azimuth of intersecting with one point is in the center of the visual field, and is equivalent to the "normal vector $n_{s0}$ of the plane". From the above-mentioned simulation, it has been confirmed that "algorithm of measuring three-dimensional geometric information of a plane" explained in 1. 3. 2 and 1. 3. 3 is correct.

1. 5 A method of measuring a normalized distance $_nd_c$ up to going across a plane in a moving direction

The normalized distance $_nd_c$ is one in which the "distance $d_c$ up to going across a plane in a moving direction" (this distance is V $t_c$ in Fig. 8) is normalized with the "moving distance $\Delta x$ from the present time to the subsequent time". The normalized distance $_nd_c$ is expressed by the following equation.

$$_nd_c=d_c/\Delta x$$

$$=Vt_c/\Delta x \tag{17a}$$

The equation (7) is substituted for the equation (17a), and the equation (17a) is modified. Thus, the following expression can be obtained.

$$_nd_c =V\, t_c/\, (V\, \Delta\, t) = t_c/\Delta\, t$$

$$= {}_nt_c \tag{17b}$$

This shows that the normalized distance $_nd_c$ is equivalent to the above-mentioned "normalized time $_nt_c$". Therefore, it is possible to measure the normalized distance $_nd_c$ using the method (1. 3. 2) of determining the normalized time $_nt_c$ as it is.

1. 6 A method in which it is acceptable that the moving direction v is unknown

In the above, there is described a method of measuring the three-dimensional azimuth $n_s$ of a plane and the normalized time $_nt_c$ up to crossing the plane, under the condition that the moving direction v is known. That is, the "position $P_{inf}$ after the infinite time elapses" is determined from the direction v, then the compound ratio transformation is performed using the position thus determined, and finally the polar transformation is performed, so that the three-dimensional azimuth $n_s$ and the normalized time $_nt_c$ are determined.

Here, there is provided a method capable of measuring "the three-dimensional azimuth $n_s$ and the normalized time $_nt_c$" even if the moving direction v is unknown. According to this method, even if the moving direction on photography as to an image of an internet, a video, a movie, etc., for instance, is unknown, it is possible to measure the "azimuth and time". Further, in the event that a plane moves, generally, the moving direction is unknown. However, even in such a case, it is possible to measure the "azimuth and time" together with the moving direction v. The outline of the method will be described hereinafter. Assuming that there is a possibility that the moving direction v takes any direction, "a compound ratio transformation and a polar transformation" in 1. 3. 2 is performed for each of the moving directions to draw a polar line. When the moving direction, wherein the polar lines intersect with each other at one point, is determined, it is a true moving direction $v_0$, and it is possible to determine a three-dimensional azimuth $n_s$ of a plane and a normalized time $_nt_c$ in the form of the coordinates of the cross point. This is carried out in the following steps.

(1) Set up arbitrarily a moving direction parameter v.
(2) Give a direction of the parameter v in the form of "position $P_{inf}$ after the infinite time elapses".
(3) Execute the steps (1) to (4) in 1. 3. 2 so that polar lines for all the normalized time parameters $_n\, t_c$ are drawn inside the cylindrical arrangement (Fig. 10(B)).
(4) The above-mentioned steps (1) to (3) are repeatedly carried out through changing the moving direction parameter v to determine a parameter value $v_0$

wherein a plurality of polar lines drawn in the step (3) intersect with each other at one point. This parameter value is a true moving direction $v_0$ . Thus, an azimuth $n_{s0}$ of a plane and a normalized time $_nt_{c0}$ up to crossing a plane are obtained in the form of coordinates of the above-mentioned cross point. It is acceptable that a point wherein intensity offers a peak is detected instead of detection of the above-mentioned cross point.

2. A method of measuring the normalization shortest distance up to a plane

There is provided a method of measuring a three-dimensional azimuth $n_s$ of a plane and a normalization shortest distance $_nd_s$ up to a plane. The normalization shortest distance is one in which the shortest distance $d_s$ up to a plane is normalized with the "moving distance $\Delta x$ of a camera (or a plane) from the present time to the subsequent time". The normalization shortest distance is expressed by the following equation (19).

$$_n d_s = d_s / \Delta x \qquad (19)$$

Between the normalization shortest distance $_n d_s$ and the "normalized time $_n t_c$ explained in 1", there is a relation as expressed by the following equation (20) where $n_s$ denotes a plane a three-dimensional azimuth of a plane, v denotes a moving direction, and () denotes a scalar product.

$$_n d_s = {_n t_c} (n_s \cdot v) \qquad (20)$$

The reason will be described using Fig. 12 (Fig. 12 shows a section of a plane wherein a vector $n_s$ of the plane and a moving direction v lie). The "shortest distance $d_s$ up to a plane from the camera center O" is a normal direction component of the "distance $V t_c$ up to going across a plane in the moving direction". Consequently, the following equation consists.

$$d_s = V t_c (n_s \cdot v) \qquad (21)$$

where V denotes a magnitude of a moving velocity

When both members of the equation (21) is normalized with the moving, distance $\Delta x$, the following equation is obtained.

$$\begin{aligned}
_n d_s &= d_s / \Delta x \\
&= (V t_c / \Delta x)\ (n_s \cdot v) \\
&= (V t_c / (V \Delta t))\ (n_s \cdot v) \\
&= {_n t_c}\ (n_s \cdot v) \qquad\qquad (22)
\end{aligned}$$

The equation (22) is equivalent to the equation (20). In the modification as referenced above, the following relation between the "time difference $\Delta t$ between the present time $t_0$ and the subsequent time $t_1$" and the "distance $\Delta x$ moving during that period of time" is used.

$$\Delta x = V \Delta t \qquad (23)$$

2. 1 A method of measuring a normalization shortest distance $_n d_s$ up to a plane and a three-dimensional azimuth $n_s$ of a plane

A combination of the "relation between $_n d_s$ and $_n t_c$ (the equation (20))" with the algorithm (the compound ratio transformation and the polar transformation) as mentioned in 1. 3. 2 makes it possible to measure a three-dimensional azimuth $n_s$ of a plane and a normalization shortest distance $_n d_s$ up to a plane.

This will be explained in conjunction with Fig. 13. It is implemented in accordance with the following six steps.

(1) Set up arbitrarily a normalization shortest distance parameter $_n d_s$.
(2) Consider a small circle taking a moving direction v as the center, and set up arbitrarily a radius r of the circle (Fig. 13). Determine "three-dimensional azimuth candidates $n_s$ of a plane" on the small circle in accordance with a step (4). In order to implement this step, there is a need to set up the normalized time parameter $_n t_c$ to a value determined by the following equation.

$$_n t_c = {_n d_s} / \cos (r) \qquad (24)$$

The reason why this is to do so is as follows. Since the candidates $n_s$ are located on the "small circle having a radius r taking the moving direction v as the center", there is the relation among $n_s$, v and r, as given by the

following equation.

$$\cos (r) = (n_s \cdot v) \qquad (25a)$$

Since there is a need that $n_s$ satisfies the equation (20), the equation (25a) is substituted for equation (20). Thus, following equation is obtained.

$$_n d_s = {}_n t_c \cos (r) \qquad (25b)$$

When this is modified, the equation (24) can be obtained.

(3) With respect to the respective points of an image, determine the positions $p_0$, $p_1$ at the present time and the subsequent time from the image on a camera, respectively, and determine the position $p_{inf}$ after the infinite time elapses from the moving direction v, and substitute those positions and the normalized time parameter $_n t_c$ for the equation (14b) or the equation (16b) to perform the compound ratio transformation so that the position $p_c$ is computed.

(4) $p_c$ determined in the step (3) is subjected to the polar transformation to draw a large circle $g_{pc}$ on a sphere. Two cross points $_r n_{s+}$, $_r n_{s-}$ of the large circle and the small circle in the step (2) are the "three-dimensional azimuth candidates of a plane" (Fig. 13). It will be described later that the cross point is expressed by the equation (29).

(5) The above-mentioned steps (2) to (4) are repeatedly carried out through changing the radius r so as to draw a curved line consisting of the two cross points $_r n_{s+}$, $_r n_{s-}$ determined in the step (4) (Fig. 13). This curved line becomes, as will be described in 2. 2, a "small circle taking $p_0$ as the center". If the normalization shortest distance parameter $_n d_s$ given in the step (1) is a true normalization shortest distance $_n d_{s0}$, it is possible to determine the normal vector $n_{s0}$ of a plane in the form of the cross point of the curved lines. However, in the step (1), the parameter $_n d_s$ is arbitrarily set up and thus generally the curved lines do not cross at one point. Therefore, the curved lines drawn here mean determining candidates for the normal vector $n_s$ of a plane. Incidentally, intensity of the curved line corresponds to "brightness of position $p_0$ in an image", and in the place wherein a plurality of curved lines intersect with each other, intensity of the curved lines is added.

(6) The above-mentioned steps (1) to (5) are repeatedly carried out through changing the normalization shortest distance parameter $_n d_s$ to determine a parameter value $_n d_{s0}$ wherein a plurality of curved lines drawn in the step (5) intersect with each other at one point. Thus, a "normalization shortest distance $_n d_{s0}$ from the camera center O to a plane" is obtained in the form of the parameter value. Further, the azimuth $n_{s0}$ of a plane is obtained in the form of coordinates of the above-mentioned cross point. It is acceptable that a point wherein intensity offers a peak is detected instead of detection of the above-mentioned cross point.

2. 2 Another method of measuring a normalization shortest distance $_n d_s$ up to a plane and a three-dimensional azimuth $n_s$ of a plane

First, it is shown that the-curved line drawn in the step (5) of 2. 1 is a small circle, and then there will be explained a method of measuring a normalization shortest distance $_n d_{s0}$ up to a plane and a three-dimensional azimuth $n_{s0}$ of a plane.

2. 2. 1 Proof that a curved line becomes a small circle

Fig. 14 shows, for the purpose of proof, one in which various parameters are drawn in Fig. 13. The steps (3) to (5) of 2. 1 are expressed with following mathematical expression using those parameters, and it will be shown that the curved line of the step (5) of 2. 1 is a small circle.

First, the "position $p_c$ " described in the step (3) is given by the mathematical expression. That is, the central angle x (Fig. 9) of $p_c$ and $p_{inf}$ is expressed by the following equation through substituting the equation (24) for the equation (16b). Incidentally, while the equation (16b) is used, it is acceptable that the equation (14b), which is equivalent to the equation (16b), is also used for proof.

$$\tan x \, (x) = (\sin (a) \sin (a + \tau))$$

$$/ (\cos (a) \sin (a + \tau)$$

$$- (_nd_s/\cos(r))\sin(\tau)) \tag{26}$$

Next, the cross point of the "large circle wherein the position $p_c$ is subjected to the polar transformation" with the "small circle of the step (2)", that is, the three-dimensional azimuth candidates $_rn_{s+}$, $_rn_{s-}$ of a plane are given by the mathematical expression. When the cosine theorem is applied to the triangle $_rn_{s+}\, p_c\, v$, the following equation can be obtained.

$$
\begin{aligned}
\cos(\pi/2) &= \cos(r)\cos(-x) \\
&\quad + \sin(r)\sin(-x)\cos(\pi - (_r\alpha_{s+} - \alpha_a)) \\
&= \cos(r)\cos(x) \\
&\quad + \sin(r)\sin(x)\cos(_r\alpha_{s+} - \alpha_a) \tag{27}
\end{aligned}
$$

$\pi/2$ of the equation (27) is owing to the fact that the azimuth candidate point $_rn_{s+}$ is located on the "polar line of $p_c$". When the equation (26) is substituted for the equation (27) and x is erased, the following equation can be obtained.

$$
\begin{aligned}
\cos(_r\alpha_{s+} - \alpha_a) &= -\cot(r)\cot(x) \\
&= -\cot(r)(\cos(a)\sin(a+\tau) \\
&\quad - (_nd_s/\cos(r))\sin(\tau)) \\
&\quad / (\sin(a)\sin(a+\tau)) \\
&= -(\cos(r)\cos(a)\sin(a+\tau) \\
&\quad - {}_nd_s\sin(\tau)) \\
&\quad / (\sin(r)\sin(a)\sin(a+\tau))
\end{aligned}
$$

Further, when this equation is transferred, the following equation can be obtained.

$$\cos(r)\cos(a) + \sin(r)\sin(a)\cos(_r\alpha_{st} - \alpha_a)$$

$$= {}_nd_s\sin(\tau)/\sin(a+\tau) \tag{28}$$

Longitudinal coordinates points $_r\alpha_{s+}$, $_r\alpha_{s-}$ of the azimuth candidates points $_rn_{s+}$, $_rn_{s-}$ of a plane are computed by the following equations through a modification of the equation (28).

$$
\begin{aligned}
_r\alpha_{s+} &= \alpha_a + (_r\alpha_{s+} - \alpha_a) \\
&= \alpha_a + \cos^{-1}((( _nd_s\sin(\tau)/\sin(a+\tau)) \\
&\quad - \cos(r)\cos(a))/(\sin(r)\sin(a))) \\
_r\alpha_{s-} &= \alpha_a - (_r\alpha_{s+} - \alpha_a) \\
&= \alpha_a - \cos^{-1}((( _nd_s\sin(\tau)/\sin(a+\tau)) \\
&\quad - \cos(r)\cos(a))/(\sin(r)\sin(a)))
\end{aligned}
\tag{29}
$$

Accordingly, longitudinal coordinates r of the azimuth candidates points $_rn_{s+}$, $_rn_{s-}$ of a plane are expressed in the form of the "radius r of the small circle of the step (2)", and the longitudinal coordinates points $_r\alpha_{s+}$, $_r\alpha_{s-}$ are expressed by the equation (29).

It will be explained on the basis of the above-mentioned preparation that the "curved line consisting of two

cross points $_rn_{s+}$, $_rn_{s-}$" is a small circle taking $p_0$ as its center. The small circle of the radius R taking $p_0$ as its center is expressed by the following equation (30), when the cosine theorem is applied to the triangle $_rn_{s+}$ $p_0$ v ("Geometry Dictionary 2 (I. Iwata, Maki Book Shop)", page 72).

$$\cos (r) \cos (a)$$

$$+ \sin (r) \sin (a) \cos (_r\alpha_{st} - \alpha_a) = \cos (R) \tag{30}$$

When the equation (30) is compared with the equation (28), it is understood that the equation (28), that is, the "curved line consisting of two cross points $_rn_{s+}$, $_rn_{s-}$", is the "small circle taking $p_0$ as its center wherein the radius R is expressed by the following equation".

$$R = \cos^{-1} (_nd_s \sin(\tau)/\sin(a+\tau)) \tag{31}$$

Thus, it is shown that the curved line consisting of two cross points $_rn_{s+}$, $_rn_{s-}$ shown in Fig. 14 (that is, the equation (28)) is the "small circle of the radius R taking $p_0$ as its center". This implies that it is possible to transfer an arbitrary point $p_0$ to the small circle. This transformation is referred to as a "small circle transformation". Here, the equation (31) may be expressed with a position $P_0$ at the present time, a position $P_1$ at the subsequent time, and a position $P_{inf}$ after the infinite time elapses. When $\tau$ and a + $\tau$ are expressed by the central angle of the equation (15), the equation (31) is given by the following equation.

$$R = \cos^{-1} (_nd_s \sin (p_0p_1) /\sin (p_{inf}p_1)) \tag{32}$$

The equation (31) expresses the radius R using motion parallax $\tau$. However, in the event that the position $p_1$ at the subsequent time is known, the radius R is given by the following equation through substituting the equation (13) for the equation (32).

$$R = \cos^{-1} (_nd_s \sin(b-a)/\sin(b)) \tag{33}$$

2. 2. 2 Geometric meaning of the small circle transformation

(1) Geometric meaning of the radius R

When the equation (32) is modified using the equation (4), the following equation can be obtained.

$$R = \cos^{-1} (_nd_s/(d_0/\Delta x)) \tag{34a}$$

Further, the equation (34a) is modified through substituting the equation (19), the following equation can be obtained.

$$R = \cos^{-1} ( (d_s/\Delta x) / (d_0/\Delta x) )$$
$$= \cos^{-1} (d_s/d_0) \tag{34b}$$

Next, the geometric meaning of the radius R will be explained in conjunction with Fig. 15. The radius R determined by the equation (34b) indicates a necessary condition for the existence of a plane passing the "point $P_0$ located at the distance $d_0$ from the camera center O" wherein the shortest distance is given by $d_s$. That is, the radius R determined by the equation (34b) indicates that the azimuth $n_s$ has to be inclined from the direction $P_0$ of the point by the "angle R determined by the equation (34b)" for existence of the plane.

There are a lot of such "plane passing the point $p_0$ wherein the shortest distance is given by $d_s$ " taking $p_0$ as

a rotary axis. When all the feet of perpendicular of those planes are drawn, there is formed a base of the "right circular cone (length of an edge: $d_s$, dihedral angle: 2R) taking the camera center O as a vertex" shown in Fig. 16. The line of intersection of the edge of the right circular cone with the "unit sphere taking O as its center" forms a small circle. The small circle transformation described in 2. 2. 1 implies that the "direction $p_0$ of the point" is transformed to the small circle thus formed.

Incidentally, the equation (34b) can be expressed in the form of the equation (35) using the "normalization shortest distance $_nd_s$ of a plane" and the "normalization shortest distance $_nd_0$ of a point" defined by the equation (36).

$$R = \cos^{-1}\left(_nd_s/_nd_0\right) \tag{35}$$

$$_nd_0 = d_0/\Delta x \tag{36}$$

Further, the equation (34b) can be also expressed in the form of the following equation (37) through substituting the equation (6) for the equation (34a).

$$R = \cos^{-1}\left(_nd_s/\left(p_{inf}p_0p_1\right)\right) \tag{37}$$

(2) Geometric meaning of the small circle transformation

From the above-mentioned consideration, it would be understood that the small circle transformation on the sphere in 2. 2. 1 is equivalent to the subsequent transformation in the three-dimensional space. In other words, it is equivalent to the transformation of the "point $P_0$ in the space (direction $p_0$, distance $d_0$)" to the circumference of the right circular cone shown in Fig. 16, that is, the normal vector group $\{n_s\}$ of the "whole plane passing through $P_0$ wherein the shortest distance from the camera center O is given by $d_s$". This is the geometric meaning of the small circle transformation.

2. 2. 3 Another method of measuring a normalization shortest distance $_nd_s$ up to a plane and a three-dimensional, azimuth $n_s$ of a plane

There will be explained a method of measuring a normalization shortest distance $_nd_s$ up to a plane and a three-dimensional azimuth $n_s$ of a plane using the "small circle transformation" explained in 2. 2. 2. It is implemented in accordance with the following four steps.

(1) Set up arbitrarily a normalization shortest distance parameter $_nd_s$.
(2) With respect to the respective points of an image, determine the positions $p_0$, $p_1$ at the present time and the subsequent time from the image on a camera, respectively, and determine the position $p_{inf}$ after the infinite time elapses from the moving direction v, and compute the radius R of a small circle transformation in accordance with the equation (32).
(3) The respective points $p_0$ are subjected to the small circle transformation to draw on a sphere a small circle of the radius R taking $p_0$ as its center. Here there will be explained the meaning of drawing the small circle. If the normalization shortest distance parameter $_nd_s$ given in the step (1) is a true normalization shortest distance $_nd_{s0}$, it is possible to determine the normal vector $n_{s0}$ of a plane in the form of the cross point of the small circles. However, in the step (1), the parameter $_nd_s$ is arbitrarily set up and thus generally the small circles do not intersect with each other at one point. Therefore, the small circles drawn here mean determining candidates for the normal vector $n_s$ of a plane. Incidentally, intensity of the small circle corresponds to "brightness of position $p_0$ in an image", and in the place wherein a plurality of small circles intersect with each other, intensity of the small circles is added.
(4) The above-mentioned steps (1) to (3) are repeatedly carried out through changing the normalization shortest distance parameter $_nd_s$ to determine a parameter value $_nd_{s0}$ wherein a plurality of small circles drawn in the step (3) intersect with each other at one point. Thus, a "normalization shortest distance $_nd_{s0}$ from the camera center O to a plane" is obtained in the form of the parameter value. Further, the azimuth $n_{s0}$ of a plane is obtained in the form of coordinates of the above-mentioned cross point. It is acceptable that a point wherein intensity offers a peak is detected instead of detection of the above-mentioned cross point.

Here, there will be described the above-mentioned small circle transformation method on a geometric basis in reference to Fig. 17. With respect to the respective points of an image, determine the positions $p_0$, $p_1$ at the present time and the subsequent time from the image on a camera, respectively, and determine the position $p_{inf}$ after the infinite time elapses from the moving direction v, and give the normalization shortest distance parameter $_nd_s$ in the step (1). Those are substituted for the equation (32) to determine the radius R, so that the small circle transformation is performed as shown in Fig. 17(A). That is, the small circle of the radius R is drawn on the sphere taking $p_0$ as its center. Next, the sphere shown in Fig. 17(A) is projected onto a plane in a similar fashion to that of the step (4) in 1. 3. 3, so that an image on the sphere is transformed inside the "circle". The circles are accumulated taking the normalization shortest distance parameter $_nd_s$ as a vertical axis to form the "cylindrical arrangement" as shown in Fig. 17(B).

It means that the normalization shortest distance parameter $_nd_s$ arbitrarily given by the step (1) designates height coordinates of this cylinder, and in the steps (2) and (3) the sectional circle at that height, or one in which a spherical image is transformed inside the "circle", is drawn. In step (1), the parameter $_nd_s$ is arbitrarily given, and thus, as seen from Fig. 17(B), the small circles do not intersect with each other at one point. However, on the sectional circle, in which it's height is equivalent to the true normalization shortest distance $_nd_{s0}$ , the small circles intersect with each other at one point. Thus, it is possible to obtain the normalization shortest distance $_nd_{s0}$ of a plane in the form of the "height coordinates" of the cylinder, and also to obtain the three-dimensional azimuth $n_s$ in the form of the "intersection coordinates inside a sectional circle".

Now, let us consider a range and properties of the parameter $_nd_s$ wherein the small circle transformation is formed. The small circle transformation is formed on the following condition. That is, in the equation (35), $|COS(R)| \leqq$ 1, that is,

$$|_nd_s| \leqq |_nd_0| \qquad (38)$$

In this range, the radius R varies in accordance with the parameter $_nd_s$ as follows. At $_nd_s = 0$, the radius R of the small circle is $\pi/2$ (large circle). As $|_nd_s|$ becomes larger, the radius R becomes smaller. At $|_nd_s| \leqq |_nd_0|$, the radius R becomes zero. "$_nd_s$ wherein the radius R becomes zero" corresponds to the "plane passing through the point $P_0$ and perpendicularly intersecting with the vector $0P_0$ " in Fig. 15.

In accordance with the above-mentioned consideration, there will be described as to how an arbitrary point $p_0$ in an image is subjected to the small circle transformation in a geometric figure in the cylindrical arrangement with reference to Fig. 17(C). The center of the small circle to be transformed is located at $p_0$ regardless of the height $_nd_s$ , and the radius R varies as described above. Thus, the point $P_0$ is subjected to the small circle transformation onto a surface of the "solid like a spheroid". The vertex is denoted by $_nd_0$, and the axis of rotation is denoted by $p_0$. When a plurality of points exist in an image, "spheroid surfaces" wherein the plurality of points are subjected to the small circle transformation are intersect with each other at one point, so that the three-dimensional azimuth $n_{s0}$ of a plane and a normalization shortest distance $_nd_{s0}$ can be obtained in the form of coordinates of the cross point. Incidentally, in Fig. 17(C), the "spheroid", wherein $p_0$ is located at the center of the cylinder, is drawn. On the other hand, in the event that $P_0$ is located out of the center of the cylinder, the spheroid is out of the cylinder. It is acceptable that this portion can be omitted in drawing.

2. 3 A confirmation by a simulation

It will be shown by a computer simulation that the "algorithm of measuring three-dimensional geometric information of a plane" explained in 2. 2. 3 is correct (Fig. 18). The simulation was carried out in accordance with a flow of an embodiment A-3.

First, there will be described input data. There is a vertical plane right in front of a spherical camera (or an eyeball), and a distance up to the camera center O is 3m. The plane moves in a direction vertical to the plane (that is, a direction parallel with the normal vector $n_{s0}$ of the plane) toward the camera at the velocity 1m/second. There are eight points on the plane. The "positions $p_0$, $p_1$ on the sphere at-the present time and the subsequent time" are observed in the form of input image data. A time difference $\Delta t$ between the present time and the subsequent time is 0.05 second. Therefore, a moving distance $\Delta x$ from the present time to the subsequent time is 0.05 x 1 = 0.05 m. The position $p_{inf}$ at the infinite time is equivalent to a moving direction v and is located at the center of the visual field. From the above, the normalization shortest distance $_nd_{s0}$ of the plane is 3/0.05 = 60. The normal vector $n_{s0}$ of the plane is located at the center of the visual field.

Fig. 18 is an illustration showing a result of a computer simulation in which three-dimensional geometric information of a plane ($_nd_{s0}$ and $n_{s0}$ ) is determined from the positions $p_0$ , $p_1$ at the present time and the subsequent time and the position $p_{inf}$ after the infinite time elapses in accordance with the small circle transformation algorithm described in 2. 2. 3. In Fig. 18, there are shown the "sectional circles of cylinders at the respective normalization shortest

distance parameters $_nd_s$" explained in connection with Fig. 17(B). Each of the sectional circles is obtained through a projection of the sphere of Fig. 17(A) onto a plane passing through the sphere in accordance with the "equidistant projection (cf. the equation (107c) explained 1. 3. 3". The lower right is of the sectional circle at $_nd_s = 0$, and the respective sectional circles are arranged in such an order that the parameter $_nd_s$ is incremented toward the upper left. Next, there will be explained the respective sectional circles. In each of the sectional circles, the position $p_0$ at the present time is drawn in the form of a dot. Eight "small circles each having the radius R computed in accordance with the equation (32)" are drawn in association with eight points on the plane taking $p_0$ as their centers.

On the first sectional circle (lower right, $_nd_s = 0$), those small circles are scattered. As the parameter $_nd_s$ is incremented, the small circles are converged, and on the sectional circle (the second circle from the upper of the right) wherein $_nd_s$ is 60, those small circles intersect with each other at one point. When the parameter $_nd_s$ is further incremented, those small circles are scattered again. In this manner, the small circles intersect with each other at one point only in the height $_nd_s = 60$. This height $_nd_s$ is equivalent to the value 60 of the above-mentioned "normalized time $_nd_{s0}$ up to going across a plane". The azimuth of intersecting with one point is in the center of the visual field, and is equivalent to the "normal vector $n_{s0}$ of the plane". From the above-mentioned simulation, it has been confirmed that the "small circle transformation algorithm" explained in 2. 2. 3 is correct. Incidentally, it has been confirmed through the simulation that the three-dimensional geometric information of a plane can be accurately determined in accordance with the method in 2. 1 too.

2. 4 A method in which it-is acceptable that the moving direction v is unknown

In 2. 1 and 2. 2. 3, there is described a method of measuring the three-dimensional azimuth $n_s$ of a plane and the normalization shortest distance $_nd_s$ , under the condition that the moving direction v is known. Here, there is provided a method capable of measuring the azimuth and the distance even if the moving direction v is unknown. This method is similar to that of 1. 6. According to this method, even if the moving direction on photography as to an image of an internet, a video, a movie, etc., for instance, is unknown, it is possible to measure the "azimuth and distance". Further, in the event that a plane moves, generally, the moving direction is unknown. However, even in such a case, it is possible to measure the "azimuth and distance" together with the moving direction v. The outline of the method will be described with respect to 2. 2. 3 (also 2. 1). Assuming that there is a possibility that the moving direction v takes any direction, "a small circle transformation" in 2. 2. 3 is performed for each of the moving directions to draw a small circle. When the moving direction, wherein the small circles intersect with each other at one point, is determined, it is a true moving direction $v_0$, and it is possible to determine a three-dimensional azimuth $n_s$ of a plane and a normalization shortest distance $_nd_s$ in the form of the coordinates of the cross point. This is carried out in the following steps.

(1) Set up arbitrarily a moving direction parameter v.
(2) Give a direction of the parameter v in the form of "position $P_{inf}$ after the infinite time elapses".
(3) Execute the steps (1) to (4) in 2. 2. 3 so that small circles for all the normalization shortest distance parameter $_nd_s$ are drawn inside the cylindrical arrangement (Fig. 17(B)).
(4) The above-mentioned steps (1) to (3) are repeatedly carried out through changing the moving direction parameter v to determine a parameter value $v_0$

wherein a plurality of small circles drawn in the step (3) intersect with each other at one point. This parameter value is a true moving direction $v_0$. Thus, an azimuth $n_{s0}$ of a plane and a normalization shortest distance $_nd_{s0}$ are obtained in the form of coordinates of the above-mentioned cross point. It is acceptable that a point wherein intensity offers a peak is detected instead of detection of the above-mentioned cross point.

4. A method of measuring three-dimensional geometric information from a stereo image

An alteration of the parameter name of the above-mentioned movement vision algorithm, that is, an algorithm wherein a camera (or a plane) is moved to measure three-dimensional geometric information of a plane, to a name of binocular vision makes it possible to measure three-dimensional geometric information from the stereo image. That is, when the position $p_0$ at the present time, the position $p_1$ at the subsequent time, and the position $p_{inf}$ after the infinite time elapses, on the movement vision algorithm are replaced by the position $P_R$ on an image on a right camera, the position $P_L$ on an image on a left camera, and the "position $p_{axis}$ on an optical axis coupling between the right camera and the left camera", it is possible to determine from the stereo image, using the algorithm, (i) a three-dimensional azimuth $n_s$ of a plane, (ii) a normalized distance $_nd_c$ up to going across a plane in an optical axis, (iii) a normalization shortest distance $_nd_s$ up to a plane, and (iv) a normalized distance $_nd_0$ up to a point. There will be described a method of measuring the azimuth and the distance hereinafter. Here, the normalized distance $_nd_c$ up to going across a plane in an optical axis, the normalization shortest distance $_nd_s$ up to a plane, and the normalized distance $_nd_0$ up to a point are ones wherein "a distance $d_c$ from the right camera up to going across a plane in an optical axis", "a shortest distance $d_s$ from the right camera up to a plane", and "a distance $d_0$ from the right camera up to a point" are normalized with a distance $\Delta X_{RL}$ between the right camera and the left camera (cf. Figs. 22(A) and (B)). Those distances are expressed by the following equations. Incidentally, it is acceptable that the right camera and the left camera are exchanged one another.

$$_n d_c = d_c / \Delta x_{LR} \tag{50}$$

$$_n d_s = d_s / \Delta x_{LR} \tag{51}$$

$$_n d_0 = d_0 / \Delta x_{LR} \tag{52}$$

4. 1 Association with movement vision

The parameter (cf. Figs. 22(A) and (B)) of the binocular vision is associated with the parameter (cf. Figs. 19 (A) and (B)) in the following manner.

Fig. 22(A) shows a state that the "point P on a plane" is observed through both eyes. Angles $\alpha_L$, $\alpha_R$ of a point P looking from the centers $O_L$, $O_R$ of the left camera and the right camera are observed so that the positions $P_L$, $P_R$ on the spheres are determined. A position $P_{axis}$ on the optical axis coupling the left camera with the right camera, which corresponds to the position $p_{inf}$ (e.g. Fig. 19(B)) after the infinite time elapses, is equivalent to an optical axis direction $a_{xis}$. $O_c$ denotes a position of the camera center wherein it is considered that the right camera moves up to going across a plane in the optical axis direction. Angle $\alpha_c$ of the point P looking from $O_c$ is observed so that the position $P_c$ on the sphere is determined.

As Fig. 22(A) is compared with Fig. 19(A), both the figures are completely the same as each other but names. That is, in Fig. 19(A), when the position $p_0$ at the present time, the position $p_1$ at the subsequent time, the position $p_{inf}$ after the infinite time elapses, the unit moving distance $\Delta x$, and the distance $V\,t_c$ up to going across a plane in a moving direction are replaced by the position $p_R$ on an image on the right camera, the position $p_L$ on an image on the left camera, the position $p_{axis}$ on the optical axis, the distance $\Delta X_{RL}$ between the right camera and the left camera, and the distance $d_c$ up to going across the plane in the optical axis, respectively, Fig. 19(A) is equivalent to Fig. 22(A). Fig. 22(B) is one modified from Fig. 22(A) in such a manner that four positions $p_R$, $p_L$, $p_c$, $p_{axis}$ are superposed on the "sphere taking $O_c$ as the center" in Fig. 22(A). When those four positions are replaced by "$p_0$, $p_1$, $p_c$, $p_{inf}$ in the movement vision", Fig. 19(B) is equivalent to Fig. 22(B).

As described above, the geometric relation between the movement vision and the stereo vision is completely the same as one another when the names of the parameters are exchanged. Thus, it would be understood that an alteration of the names of the parameters of the above-mentioned movement vision algorithm (1. 3. 2, 2. 1, 2. 2. 3) makes it possible to measure three-dimensional geometric information of a plane through the stereo image in accordance with the same algorithm.

4. 2 A method of measuring a three-dimensional azimuth $n_s$ of a plane and "a normalized distance $_n d_c$ up to going across a plane in an optical axis direction"

it is possible to measure a three-dimensional azimuth $n_s$ of a plane and "a normalized distance $_n d_c$ up to going across a plane in an optical axis direction" in accordance with the procedure similar to the movement vision algorithm (1. 2, 1. 3).

4. 2. 1 Expression of the normalized distance $_n d_c$ by the compound ratio $\{p_{axis} p_R p_L p_c\}$

In Fig. 22(B), when the sine theorem is applied to the triangle $P_R P_L O_c$, between the distance $d_0$ from $O_c$ to the point $P_R$ and the distance $\Delta x_{LR}$ between the left camera and the right camera, there is a following relation.

$$\Delta x_{LR} / \sin(\alpha_L - \alpha_R) = d_0 / \sin(\pi - \alpha_L) \tag{53a}$$

When this is expressed with the positions $p_L$, $p_R$, $p_{axis}$ on a sphere, the following equation can be obtained.

$$\Delta x_{LR}/\sin(p_R p_L) = -d_0/\sin(p_{axis}p_L) \tag{53b}$$

When this is modified, the distance $d_0$ can be determined in accordance with the following equation.

$$d_0 = -\Delta x_{LR}\ \sin(p_{axis}p_L) / \sin(p_R p_L) \tag{54a}$$
$$= -\Delta x_{LR}\ (p_{axis}p_R p_L) \tag{54b}$$

When the sine theorem is applied to the triangle $P_R P_L O_c$, and the similar modification is made, the distance $d_0$ can be determined in accordance with the following equation.

$$d_0 = -d_c\ \sin(p_{axis}p_c) / \sin(p_R p_c) \tag{55a}$$
$$= -d_c\ (p_{axis}p_R p_c) \tag{55b}$$

When the ratio of the equation (54) to the equation (55) is given and then rearranged, the normalized distance $_n d_c$ is determined in the form of the compound ratio $\{p_{axis}p_R p_L p_c\}$ in accordance with the following equation

$$_n d_c = d_c / \Delta x_{LR}$$
$$= (\sin(p_{axis}p_L) / \sin(p_R p_L))$$
$$/ (\sin(p_{axis}p_c) / \sin(p_R p_c)) \tag{56a}$$
$$= \{p_{axis}p_R p_L p_c\} \tag{56b}$$

Incidentally, the equation (56b) is equivalent to one wherein in the equation (12a) the "movement vision parameters $_n t_c$, $p_{inf}$, $p_0$, $p_1$, $p_c$" are replaced by the "binocular vision parameters $_n d_c$, $p_{axis}$, $p_R$, $p_L$, $p_c$", respectively.

4. 2. 2 Compound ratio transformation

The compound ratio transformation is a transformation in which four variables $_n d_c$, $p_R$, $p_L$, $p_{axis}$ are determined, and the remaining variable $p_c$ is computed using the equation (56). This corresponds to the compound ratio transformation (1. 3. 1) in case of the movement vision.

This compound ratio transformation will be shown by the mathematical expression. Fig. 23 shows one in which a cross section of the sphere shown in Fig. 22(B) is picked up. The positions $p_R$, $p_L$, $p_c$ are indicated with the central angles c, d, x, taking $p_{axis}$ as the basic point (it is acceptable that this basic point is selected at an arbitrary position). Those central angles are as follows:

$$p_{axis}p_R = c \tag{57}$$

$$p_{axis}p_L = d$$

$$p_{axis}p_c = x$$

$$p_R p_L = d - c$$

$$p_R p_c = x - c$$

The compound ratio transformation will be shown by the mathematical expression using those central angles. When the right-hand member of the equation (56a), that is, the compound ratio, is expressed using the central angles, the following equation can be obtained.

$$_{n}d_{c} = (\sin (d) /\sin (d-c))$$

$$/ (\sin (x) /\sin (x-c)) \tag{58a}$$

When this is modified, the central angle $x$ between $p_c$ and $p_{axis}$ are given by the following expression.

$$x = \tan^{-1} ( (\sin (c) \sin (d))$$

$$/ (\cos (c) \sin (d) - {_n}d_c \sin (d-c))) \tag{58b}$$

Accordingly, when the normalized distance $_{n}d_{c}$ and "three positions $p_R$, $p_L$, $p_{axis}$ on the sphere" are given, "the position $p_c$ at the time where the right camera goes across the plane (Fig. 22(B))" may be computed in accordance with the equation (56a). This is the mathematical expression of the compound ratio transformation. Incidentally, the equation (58b) is equivalent to one wherein in the equation (14b) the parameters of the movement vision (the normalized time $_{n}t_{c}$ and the central angles $p_{inf}p_0$, $p_{inf}p_1$, $p_0p_1$, $p_{inf}p_c$) are replaced by the parameters of the binocular vision (the normalized distance $_{n}d_{c}$ and the central angles $p_{axis} p_R$, $p_{axis} p_L$, $p_R p_L$, $p_{axis}p_c$), that is, the parameters of the movement vision (the normalized time $_{n}t_{c}$ and the positions on the sphere $p_{inf}$, $p_0$, $p_1$, $p_c$) are replaced by the parameters of the binocular vision (the normalized distance $_{n}d_{c}$ and the central angles $p_{axis}$, $p_R$, $p_L$, $p_c$).

Here, according to the study of the general image stereo image processing, it often happens that "the variable component $p_L$-$p_R$ from the right camera (that is, the binocular parallax $\sigma$, represented by the central angle $p_R$-$p_L$)" is dealt with, instead of "the position $p_L$ of the left camera". In this case, the mathematical expression of the compound ratio transformation will be set forth below. The various sorts of central angles are given as follows:

$$p_{axis} \, p_R = c \tag{59}$$

$$p_R p_L = \sigma$$

$$p_{axis} p_c = x$$

$$p_{axis} p_L = c + \sigma$$

$$p_R p_c = x - c$$

When the right-hand member of the equation (56a) is expressed using the central angles of the equation (59), the following expression can be obtained.

$$_{n}d_{c} = (\sin (c + \sigma) /\sin (\sigma))$$

$$/ ( \sin (x) / \sin (x - c)) \tag{60a}$$

When this is modified, the central angle $X$ between $P_c$ and $P_{inf}$ is given by the following expression.

$$x = \tan^{-1} ( (\sin (c) \sin (c + \sigma))$$

$$/ (\cos (c) \sin (c + \sigma) -_n d_c \sin (\sigma))) \qquad (60b)$$

Thus, an alternative mathematical expression for the compound ratio transformation is obtained. Incidentally, the equation (60b) is equivalent to one wherein in the equation (16b) the parameters of the movement vision (the normalized time $_n t_c$ and the central angles $p_{inf} p_0$, $p_{inf} p_1$, $p_0 p_1$, $p_{inf} p_c$) are replaced by the parameters of the binocular vision (the normalized distance $_n d_c$ and the central angles $p_{axis} p_R$, $p_{axis} p_L$, $p_R p_L$, $p_{axis} p_c$) that is, the parameters of the movement vision (the normalized time $_n t_c$ and the positions on the sphere $p_{inf}$, $P_0$, $p_1$, $p_c$) are replaced by the parameters of the binocular vision (the normalized distance $_n d_c$ and the positions on the sphere $p_{axis}$, $p_R$, $p_L$, $p_c$).

4. 2. 3 A method of determining a three-dimensional azimuth $n_s$ of a plane and a normalized distance $_n d_c$

There will be explained a method of determining a three-dimensional azimuth $n_s$ of a plane and a normalized distance $_n d_c$. This is performed in a similar fashion to that of the case of the movement vision (1. 3. 2). It is performed in the following four steps.

(1) Set up arbitrarily a normalized distance parameter $_n d_c$ .
(2) With respect to the respective points of an image, determine the positions $p_L$ , $p_R$ at the left camera and the right camera from images on the cameras, respectively, and determine the position $p_{axis}$ on the optical axis from the optical axis direction a $_{xis}$ , and substitute those positions for the equation (58b) or the equation (60b) to perform the compound ratio transformation so that the position $p_c$ is computed.
(3) Determine candidates for the normal vector $n_s$ of a plane in accordance with "the principles of measuring a three-dimensional azimuth $n_s$ of a plane" of 1.1. That is, $p_c$ determined in the step (2) is subjected to the polar transformation to draw large circles on a sphere. Here there will be explained the meaning of drawing the large circles. If the normalized distance parameter $_n d_c$ given in the step (1) is a true normalized distance $_n d_{c0}$, as described in connection with Fig. 5, it is possible to determine the normal vector $n_{s0}$ of a plane in the form of the cross point of the large circles. However, in the step (1), the parameter $_n d_c$ is arbitrarily set up and thus generally the large circles do not intersect with each other at one point. Therefore, the large circles drawn here mean determining candidates for the normal vector $n_s$ of a plane. Incidentally, intensity of the large circle corresponds to "brightness of position $p_R$ in an image", and in the place wherein a plurality of large circles intersect with each other, intensity of the large circles is added.
(4) The above-mentioned steps (1) to (3) are repeatedly carried out through changing the normalized distance parameter $_n d_c$ to determine a parameter value $_n d_{c0}$

wherein a plurality of large circles drawn in the step (3) intersect with each other at one point. Thus, a "normalized distance $_n d_{c0}$ up to crossing a plane in the optical axis direction" is obtained in the form of the parameter value. Further, the azimuth $n_{s0}$ of a plane is obtained in the form of coordinates of the above-mentioned cross point. It is acceptable that a point wherein intensity offers a peak is detected instead of detection of the above-mentioned cross point.

Incidentally, this method is equivalent to one wherein in 1. 3. 2 the movement vision parameters (the normalized time $_n t_c$, and the positions on the sphere $p_{inf}$, $p_0$, $p_1$) are replaced by the binocular vision parameters (the normalized distance $_n d_c$, and the positions on the sphere $p_{axis}$, $p_R$, $p_L$ ), respectively.

4. 2. 4 Geometric meaning of the above-mentioned steps

Geometric meaning of the above-mentioned steps will be explained in conjunction with Figs. 24(A) and 24(B). In the "geometric meaning in the case of the movement vision" mentioned in 1. 3. 3, the movement vision parameters are replaced by the binocular vision parameters.

Drawing of a candidate group $\{n_s\}$ of a planer azimuth (the step (3)): The position $p_c$, which is determined through the compound ratio transformation in the step (2), is subjected to the polar transformation to draw on a sphere a large circle or a candidate group $\{n_s\}$ of a planer azimuth as shown in Fig. 24(A).

Determination of three-dimensional geometric information in the form of coordinate value of a cylindrical arrangement (Meaning of the step (4)): A sphere shown in Fig. 24(A) is projected onto the plane, in a similar fashion to that of the step (4) of 1. 3. 3, so as to transform the image on the sphere into the inside of the "circle". The circles are accumulated taking the normalization shortest distance parameter $_n d_c$ as a vertical axis to form the "cylindrical arrangement" as shown in Fig. 24(B). This feature makes the geometric meaning of the step (1) clear. That is, it means that the "normalized distance parameter $_n d_c$ " arbitrarily given by the step (1) designates height coordinates of this cylinder, and in the steps (2) and (3) the sectional circle at that height, or one in which a spherical image shown in Fig. 24(A) is transformed inside the "circle", is drawn. In step (1), the parameter $_nd_c$ is arbitrarily given, and thus, as seen from Fig. 24(B), the large circles do not intersect with each other at one point. However, on the sectional circle, in which it's height is equivalent to the true normalized distance $_nd_{c0}$, the large circles intersect with each other at one point. Thus, it is possible to obtain the normalized distance $_nd_{c0}$ of a plane in the form of the "height coordinates" of the cylinder, and also to obtain the three-dimensional azimuth $n_s$ in the form of the "intersection coordinates inside a sectional circle" (Fig. 24(B)).

4. 2. 5 A method in which it is acceptable that the optical axis direction $a_{xis}$ is unknown

In the above, there is described a method of measuring the three-dimensional azimuth $n_s$ of a plane and the normalized distance $_nd_c$ , under the condition that the optical axis direction $a_{xis}$ is known. That is, as the "position on the sphere equal to the direction $a_{xis}$ " , $p_{axis}$ " is determined, then the compound ratio transformation is performed using the position thus determined, and finally the polar transformation is performed, so that the three-dimensional azimuth $n_s$ and the normalized distance $_nd_c$ are determined.

Here, there is provided a method capable of measuring "the three-dimensional azimuth $n_s$ and the normalized distance $_nd_c$" even if the optical axis direction $a_{xis}$ is unknown. This method is similar to that of 1. 6. According to this method, even if the moving direction on photography as to an image of an internet, a video, a movie, etc., for instance, is unknown, it is possible to measure the "azimuth and distance". Further, in the event that a plane moves, generally, the optical axis direction is unknown. However, even in such a case, it is possible to measure the "azimuth and distance" together with the optical axis direction $a_{xis}$. The outline of the method will be described hereinafter. Assuming that there is a possibility that the optical axis direction $a_{xis}$ takes any direction, "a compound ratio transformation and a polar transformation" in 4. 2. 3 is performed for each of the optical axis directions to draw a polar line. When the optical axis direction, wherein the polar lines intersect with each other at one point, is determined, it is a true optical axis direction $a_{xis0}$ , and it is possible to determine a three-dimensional azimuth $n_s$ of a plane and a normalized distance $_nd_c$ in the form of the coordinates of the cross point. This is carried out in the following steps.

(1) Set up arbitrarily an optical axis direction $a_{xis}$.
(2) Give a direction of the parameter $a_{xis}$ in the form of "position $P_{axis}$ on the sphere".
(3) Execute the steps (1) to (4) in 4. 2. 3 so that polar lines for all the normalized distance parameters $_nd_c$ are drawn inside the cylindrical arrangement (Fig. 24(B)).
(4) The above-mentioned steps (1) to (3) are repeatedly carried out through changing the optical axis direction parameter $a_{xis}$ to determine a parameter value $a_{xis0}$ wherein a plurality of polar lines drawn in the step (3) intersect with each other at one point. This parameter value is a true optical axis direction $a_{xis0}$. Thus, an azimuth $n_{s0}$ of a plane and a normalized distance $_nd_{c0}$ up to crossing a plane are obtained in the form of coordinates of the above-mentioned cross point. It is acceptable that a point wherein intensity offers a peak is detected instead of detection of the above-mentioned cross point.

4. 3 A method of measuring the normalization shortest distance up to a plane

There is provided a method of measuring a three-dimensional azimuth $n_s$ of a plane and "a normalization shortest distance $_nd_s$ of the equation (51)". This is performed in a similar fashion to the algorithm of the movement vision described in 2. Between the normalization shortest distance $_nd_s$ and the "normalized distance $_nd_c$ explained in 4. 2. 3", there is a relation as expressed by the following equation (61) where $n_s$ denotes a plane a three-dimensional azimuth of a plane, $a_{xis}$ denotes an optical axis direction, and () denotes a scalar product.

$$_nd_s =\,_nd_s\,(n_s \cdot a_{xis}) \tag{61}$$

The reason will be described using Fig. 25 (Fig. 25 shows a section of a plane wherein a normal vector $n_s$ of the plane and an optical axis direction $a_{xis}$ lie. The "shortest distance $d_s$ up to a plane from the right camera center $O_R$ " is a normal direction component of the "distance $d_c$ up to going across a plane in the optical axis direction". Consequently, the following equation consists.

$$d_s = d_c\,(n_s \cdot a_{xis}) \tag{62}$$

When both members of the equation (62) is normalized with the camera-to-camera distance $\Delta x_{LR}$, the following

equation is obtained.

$$\dot{_n d_s} = d_s / \Delta x_{LR} = (d_c / \Delta x_{LR}) \ (n_s \cdot a_{xis})$$
$$= {_n d_c} \ (n_s \cdot a_{xis}) \qquad\qquad (6\ 3)$$

The equation (63) is equivalent to the equation (61).

4. 3. 1 A method of measuring a normalization shortest distance $_n d_s$ up to a plane and a three-dimensional azimuth $n_s$ of a plane

A combination of the "relation between $_n d_s$ and $_n d_c$ (the equation (61))" with the algorithm (the compound ratio transformation and the polar transformation) as mentioned in 4. 2. 3 makes it possible to measure a three-dimensional azimuth $n_s$ of a plane and a normalization shortest distance $_n d_s$ up to a plane.
This will be explained in conjunction with Fig. 26. This is performed in a similar fashion to the algorithm of the movement vision described in 2. 1. It is implemented in accordance with the following six steps.

(1) Set up arbitrarily a normalization shortest distance parameter $_n d_s$ .
(2) Consider a small circle taking an optical axis direction $a_{xis}$ as the center, and set up arbitrarily a radius r of the circle (Fig. 26). Determine "three-dimensional azimuth candidates $n_s$ of a plane" on the small circle in accordance with a step (4). In order to implement this step, there is a need to set up the normalized distance parameter $_n d_c$ to a value determined by the following equation.

$$_n d_c = {_n d_s} / \cos (r) \qquad\qquad (64)$$

The reason why this is to do so is as follows. Since the candidates $n_s$ are located on the "small circle having a radius r taking the optical axis direction $a_{xis}$ as the center", there is the relation among $n_s$ , $a_{xis}$ and r, as given by the following equation.

$$\cos (r) = (n_s \cdot a_{xis}) \qquad\qquad (65a)$$

Since there is a need that $n_s$ satisfies the equation (61), the equation (65a) is substituted for equation (61). Thus, following equation is obtained.

$$_n d_s = {_n d_c} \cos (r) \qquad\qquad (65b)$$

When this is modified, the equation (64) can be obtained.
(3) With respect to the respective points of an image, determine the spherical positions $p_L$, $p_R$ on the light camera and the right camera from the images on the cameras, respectively, and determine the position $p_{axis}$ on the optical axis from the optical axis direction $a_{xis}$, and substitute those positions and the normalized distance parameter $_n d_c$ for the equation (58b) or the equation (60b) to perform the compound ratio transformation so that the position $p_c$ is computed.
(4) $p_c$ determined in the step (3) is subjected to the polar transformation to draw a large circle $g_{pc}$ on a sphere. Two cross points $_r n_{s+}$, $_r n_{s-}$ of the large circle and the small circle in the step (2) are the "three-dimensional azimuth candidates of a plane" (Fig. 26). Incidentally, the latitudinal coordinates of this cross point is given by r (cf. Fig. 26). Longitudinal coordinates points $_r \alpha_{s+}$, $_r \alpha_{s-}$ are computed by the following equations through a substitution of the "movement vision parameters $\alpha_a$, a, $\tau$" for the "binocular vision parameters $\alpha_c$, C, $\sigma$ " in the equation (29).

$$_r\alpha_{s+} = \alpha_c + \cos^{-1}(((\ _nd_s \ \sin(\sigma)/\sin(c+\sigma)) - \cos(r)\ \cos(c))/(\sin(r)\ \sin(c)))$$
$$_r\alpha_{s-} = \alpha_c - \cos^{-1}(((\ _nd_s \ \sin(\sigma)/\sin(c+\sigma)) - \cos(r)\ \cos(c))/(\sin(r)\ \sin(c)))$$

$$(65c)$$

Where $\alpha_c$ and C are the longitudinal coordinates and the latitudinal coordinates of $p_R$ for "the movement vision parameters $\alpha_a$ and a in Fig. 14 (that is, the longitudinal coordinates and the latitudinal coordinates of $p_c$ )", respectively.

(5) The above-mentioned steps (2) to (4) are repeatedly carried out through changing the radius r so as to draw a curved line consisting of the two cross points $_rn_{s+}$, $_rn_{s-}$ determined in the step (4) (Fig. 26). This curved line becomes, as will be described in 4. 3. 2, a "small circle taking $p_R$ as the center". If the normalization shortest distance parameter $_nd_s$ given in the step (1) is a true normalization shortest distance $_nd_s$ , it is possible to determine the normal vector $n_{s0}$ of a plane in the form of the cross point of the curved lines. However, in the step (1), the parameter $_nd_s$ is arbitrarily set up and thus generally the curved lines do not cross at one point. Therefore, the curved lines drawn here mean determining candidates for the normal vector $n_s$ of a plane. Incidentally, intensity of the curved line corresponds to "brightness of position $p_R$ in an image", and in the place wherein a plurality of curved lines intersect with each other, intensity of the curved lines is added.

(6) The above-mentioned steps (1) to (5) are repeatedly carried out through changing the normalization shortest distance parameter $_nd_s$ to determine a parameter value $_nd_{s0}$ wherein a plurality of curved lines drawn in the step (5) intersect with each other at one point. Thus, a "normalization shortest distance $_nd_{s0}$ from the right camera center $O_R$ to a plane" is obtained in the form of the parameter value. Further, the azimuth $n_{s0}$ of a plane is obtained in the form of coordinates of the above-mentioned cross point. It is acceptable that a point wherein intensity offers a peak is detected instead of detection of the above-mentioned cross point.

4. 3. 2 Another method of measuring a normalization shortest distance $_nd_s$ up to a plane and a three-dimensional azimuth $n_s$ of a plane

When the "parameters $p_R$, $p_L$, $p_{axis}$, $a_{xis}$ as to the binocular vision" is replaced by the "parameters $p_0$, $p_1$, $p_{inf}$, V as to the movement vision", Fig. 26 is equivalent to Fig. 13. Consequently, the curved line of the step (5) in 4. 3. 1, to which the proof in 2. 2. 1 can be applied, is the "small circle of radius R taking $p_0$ as its center". The radius R is expressed by the following equation, wherein "the movement vision parameters $\tau$, a, $p_0p_1$, $p_{inf} p_1$" are replaced by "the binocular vision parameters $\sigma$, C, $p_Rp_L$, $p_{axis} p_L$".

$$R = \cos^{-1}(\ _nd_s \ \sin(\sigma)/\sin(c+\sigma)) \qquad (66a)$$
$$= \cos^{-1}(\ _nd_s \ \sin(p_Rp_L)/\sin(p_{axis}p_L)) \qquad (66b)$$

Thus, it is shown that the curved line consisting of two cross points $_rn_{s+}$, $_rn_{s-}$ shown in Fig. 26 is the "small circle of the radius-R taking $p_R$ as its center". This implies that it is possible to transfer an arbitrary point $p_R$ to the small circle. This transformation is referred to as a "small circle transformation". The nature of the small circle transformation is the same as the movement vision, and is shown in 2. 2. 2. The equation (66a) expresses the radius R using binocular parallax $\sigma$. However, in the event that the position $P_L$ on the left camera is known, the radius R is given by the following equation through substituting the equation (57) for the equation (66b).

$$R = \cos^{-1}(\ _nd_s \ \sin(d-c)/\sin(d)) \qquad (66c)$$

In accordance with the above preparation, there will be explained another method of measuring a normalization shortest distance $_nd_s$ up to a plane and a three-dimensional azimuth $n_s$ of a plane using the "small circle transformation". It is implemented in accordance with the following four steps. This is similar to the algorithm of the movement vision described in 2. 2. 3.

(1) Set up arbitrarily a normalization shortest distance parameter $_nd_s$.

(2) With respect to the respective points of an image, determine the positions $p_L$, $p_R$ at the left camera and the right camera from images on the cameras, respectively, and determine the "position $P_{axis}$ on the optical axis coupling the left camera and the right camera from the optical axis direction $a_{axis}$, and compute the radius R of a small circle transformation in accordance with the equation (66b).

(3) The respective points $p_R$ are subjected to the small circle transformation to draw on a sphere a small circle of the radius R taking $p_R$ as its center. Here there will be explained the meaning of drawing the small circle. If the normalization shortest distance parameter $_nd_s$ given in the step (1) is a true normalization shortest distance $_nd_{s0}$, it is possible to determine the normal vector $n_{s0}$ of a plane in the form of the cross point of the small circles. However, in the step (1), the parameter $_nd_s$ is arbitrarily set up and thus generally the small circles do not intersect with each other at one point. Therefore, the small circles drawn here mean determining candidates for the normal vector $n_s$ of a plane. Incidentally, intensity of the small circle corresponds to "brightness of position $p_R$ in an image", and in the place wherein a plurality of small circles intersect with each other, intensity of the small circles is added.

(4) The above-mentioned steps (1) to (3) are repeatedly carried out through changing the normalization shortest distance parameter $_nd_s$ to determine a parameter value $_nd_{s0}$ wherein a plurality of small circles drawn in the step (3) intersect with each other at one point. Thus, a "normalization shortest distance $_nd_{s0}$ from the camera center $O_R$ to a plane" is obtained in the form of the parameter value. Further, the azimuth $n_{s0}$ of a plane is obtained in the form of coordinates of the above-mentioned cross point. It is acceptable that a point wherein intensity offers a peak is detected instead of detection of the above-mentioned cross point.

Here, there will be described the above-mentioned small circle transformation method-on a geometric basis in reference to Fig. 27. With respect to the respective points of an image, determine the positions $p_L$, $p_R$ at the left camera and the right camera from images on the cameras, respectively, and determine the "position $P_{axis}$ on the optical axis coupling the left camera and the right camera" from the optical axis direction $a_{axis}$, and give the normalization shortest distance parameter $_nd_s$ in the step (1). Those are substituted for the equation (66b) to determine the radius R, so that the small circle transformation is performed as shown in Fig. 27(A). That is, the small circle of the radius R is drawn on the sphere taking $p_R$ as its center. Next, the sphere shown in Fig. 27(A) is projected onto a plane in a similar fashion to that of the step (4) in 1. 3. 3, so that an image on the sphere is transformed inside the "circle". The circles are accumulated taking the normalization shortest distance parameter $_nd_s$ as a vertical axis to form the "cylindrical arrangement" as shown in Fig. 27(B).

It means that the normalization shortest distance parameter $_nd_s$ arbitrarily given by the step (1) designates height coordinates of this cylinder, and in the steps (2) and (3) the sectional circle at that height, or one in which a spherical image is transformed inside the "circle", is drawn. In step (1), the parameter $_nd_s$ is arbitrarily given, and thus, as seen from Fig. 27(B), the small circles do not intersect with each other at one point. However, on the sectional circle, in which it's height is equivalent to the true normalization shortest distance $_nd_{s0}$, the small circles intersect with each other at one point. Thus, it is possible to obtain the normalization shortest distance $_nd_{s0}$ of a plane in the form of the "height coordinates" of the cylinder, and also to obtain the three-dimensional azimuth $n_s$ in the form of the "intersection coordinates inside a sectional circle".

4. 3. 3 A method in which it is acceptable that the optical axis direction $a_{xis}$ is unknown

In 4. 3. 1 and 4. 3. 2, there is described a method of measuring the three-dimensional azimuth $n_s$ of a plane and the normalization shortest distance $_nd_s$, under the condition that the optical axis direction $a_{xis}$ is known. Here, there is provided a method capable of measuring the azimuth and the distance even if the optical axis direction $a_{xis}$ is unknown. This method is similar to that of 2. 5. According to this method, even if the optical axis direction on photography as to an image of an internet, a video, a movie, etc., for instance, is unknown, it is possible to measure the "azimuth and distance". Further, in the event that a plane moves, generally, the optical axis direction is unknown. However, even in such a case, it is possible to measure the "azimuth and distance" together with the optical axis direction $a_{xis}$. The outline of the method will be described with respect to 4. 3. 2 (also 4. 3. 1). Assuming that there is a possibility that the optical axis direction $a_{xis}$ takes any direction, "a small circle transformation" in 4. 3. 2 is performed for each of the optical axis directions $a_{xis}$ to draw a small circle. When the optical axis direction, wherein the small circles intersect with each other at one point, is determined, it is a true optical axis direction $a_{xis0}$, and it is possible to determine a three-dimensional azimuth $n_s$ of a plane and a normalization shortest distance $_nd_s$ in the form of the coordinates of the cross point. This is carried out in the following steps.

(1) Set up arbitrarily an optical axis direction parameter $a_{xis}$.

(2) Give a direction of the parameter $a_{xis}$ in the form of "position $p_{axis}$ on the sphere".

(3) Execute the steps (1) to (4) in 4. 3. 2 so that small circles for all the normalization shortest distance parameter $_nd_s$

are drawn inside the cylindrical arrangement (Fig. 27(B)).

(4) The above-mentioned steps (1) to (3) are repeatedly carried out through changing the optical axis direction parameter $a_{xis}$ to determine a parameter value $a_{xis0}$ wherein a plurality of small circles drawn in the step (3) intersect with each other at one point. This parameter value is a true optical axis direction $a_{xis0}$. Thus, an azimuth $n_{s0}$ of a plane and a normalization shortest distance $_nd_{s0}$ are obtained in the form of coordinates of the above-mentioned cross point. It is acceptable that a point wherein intensity offers a peak is detected instead of detection of the above-mentioned cross point.

### 4. 4 Generalization

### 4. 4. 1 Voting to cylindrical arrangement

In Fig. 24(B), the "curved line wherein a large circle on a sphere is projected onto a plane" is "drawn" on each of the sectional circles of the cylinder. Instead of such a drawing, it is acceptable that the respective sectional circles are arranged in the form of a memory arrangement or a register arrangement, and a voting is made for memory or register associated with the curved line.

In Fig. 27(B), the "curved line wherein a small circle on a sphere is projected onto a plane" is "drawn" on each of the sectional circles of the cylinder. Instead of such a drawing, it is acceptable that the respective sectional circles are arranged in the form of a memory arrangement or a register arrangement, and a voting is made for memory or register associated with the curved line.

### 4. 4. 2 Polar transformation on a plane

In 4. 2. 3 (3), the polar line, wherein $p_c$ is subjected to the polar transformation, is drawn in the form of the "large circle on the sphere". In a similar fashion to that of 3. 3, it is acceptable that such a polar line is drawn in the form of the "straight line on the plane".

Further, in 4. 3. 1 (5), 4. 3. 2 (3), the small circle, wherein $p_R$ is subjected to the small circle transformation, is drawn on "the sphere". It is acceptable that such a small circle is drawn in the form of the ellipse through projection of the small circle from the camera center onto the "arbitrary plane".

### 4. 4. 3 A method of measuring the normalized distance $_nd_0$ up to a point

In the equation (39a), when the "movement vision parameters $\Delta x$, $p_0$, $p_1$, $p_{inf}$" are replaced by the "binocular vision parameters $\triangle x_{LR}$, $p_R$, $p_L$, $p_{axis}$", the normalized distance is expressed by the following equation (67a).

$$_nd_0 = d_0 / \Delta x_{LR}$$
$$= (p_{axis} \, p_R \, p_L) \qquad (67a)$$

In accordance with this equation, it is possible to measure the normalized distance $_nd_0$. When the equation (57) (or equation (59)) is substituted for the equation (67a), and it is expressed with the central angle, then the following equation can be obtained.

$$_nd_0 = \sin(d) / \sin(d - c) \qquad (67b)$$
$$= \sin(c + \sigma) / \sin(\sigma) \qquad (67c)$$

### 4. 4. 4 Planer camera

While the above-mentioned explanation has been made wherein an image on a spherical camera (or an eyeball) is used, it is possible also to use an image on a planer camera. In such a case, in a similar fashion to that of 3. 5, it is effective that the image photographed by the planer camera is transformed to the image on the sphere, and the above-mentioned "algorithm on the sphere" is carried out.

Here, the explanation for the principles of the present invention is terminated, and hereinafter there will be described the various embodiments of the present invention. Incidentally, the various block diagrams, which will be explained hereinafter, may be understood as the functional blocks of the computer system 300 shown in Figs. 2 and 3, and also be understood as the various embodiments of an image measurement apparatus according to the present invention where the image measurement apparatus is constructed with the hardware. Further, the various flowcharts, which will be explained hereinafter, may be understood as the various embodiments of the image measurement programs referred to in the present invention, which are executed when they are installed in the computer system 300 shown in Figs. 2 and 3, and also be understood as the various embodiments of an image measurement method according to the present invention.

Embodiment B Binocular Vision

Embodiment B-1. (Measurement of a three-dimensional azimuth $n_{s0}$ of a plane and a normalized distance $_{n}d_{c0}$ up to going across the plane)

This measurement, that is, the method of 4. 2. 3 will be explained in conjunction with the embodiment of Fig. 50. It is performed in accordance with the following flowchart shown in Fig. 51. The step (6) et seqq. are the same as the embodiment A-1.
(Start)

(1) The "optical axis direction $a_{xis}$ coupling the right camera and the left camera" is generally known from the geometric position of the stereo cameras. Set up the "position $P_{axis}$ on the optical axis", as being equal to the optical axis direction $a_{xis}$, by a "$P_{axis}$ set unit 115".
(2) Scan a normalized distance parameter $_{n}d_{c}$ by a "scan unit for $_{n}d_{c}$ parameter 116" from the minimum value $_{n}d_{c, min}$ to the maximum value $_{n}d_{c, max}$ (B-1-2, B-1-3, B-1-16). (Scan $_{n}d_{c}$)
(3) Scan the respective addresses from the minimum value $i_{min}$ to the maximum value $i_{max}$ (B-1-4, B-1-5, B-1-15).

(Scan i )

(4) Output positions $_{i}p_{R}$ and $_{i}p_{L}$ on the right camera and the left camera from the "register 112 for an image on right camera" and the "register 113 for an image on left camera", respectively (B-1-6).
(5) Feed four parameters $_{n}d_{c}$, $_{i}p_{R}$, $_{i}p_{L}$, $p_{axis}$ thus set up to a "compound ratio transformation unit 117" and output a position $_{i}p_{c}$. A computation of the position $_{i}p_{c}$ is performed by the "compound ratio transformation unit 117" in following two steps.

(a) Computation of a central angle $_{i}X$ between $_{i}p_{c}$ and $p_{axis}$ (B-1-7)
From $_{n}d_{c}$, $_{i}p_{R}$, $_{i}p_{L}$, $p_{axis}$, the central angle $_{i}X$ is computed in accordance with the following equation based on the equation (58b) (cf. Fig. 23).

$$_{i}x = \tan^{-1} ( (\sin (_{i}c) \sin (_{i}d))$$

$$/(\cos (_{i}c) \sin (_{i}d) - _{n}d_{c} \sin (_{i}d) - (_{i}c))) \tag{150a}$$

(b) Computation of $_{i}p_{c}$ (B-1-8)
Compute the position $_{i}p_{c}$ on the sphere, using the above-mentioned central angle $_{i}x$, in accordance with the following equation.

$$_{i}p_{c} = \cos (_{i}x) \ \Gamma_{x} + \sin^{-}(_{i}x) \ \Gamma_{y} \tag{150b}$$

Here, $\Gamma_{x}$ and $\Gamma_{y}$ are computed in accordance with following equations where [×] and | | denote the exterior product operation and the absolute value operation, respectively.

$$\Gamma_{x} = a_{xis} \tag{150c}$$

$$\Gamma_{z} = [a_{xis} \times _{i}p_{R}]/| [a_{xis} \times _{i}p_{R}] |$$

$$\Gamma_y = [\Gamma_z \times \Gamma_x]$$

(6) The above-mentioned position $_ip_c$ is subjected to a polar transformation into a large circle on a sphere by a "polar transformation unit 118" (cf. Fig. 24(A)). The polar transformation is performed by the "polar transformation unit 118" in following two steps (cf. Fig. 30(A)).

(a) Transformation of $_ip_c$ to polar coordinates (B-1-9)
$_ip_c$ is expressed on the rectangular coordinates and the "polar coordinates on a sphere" as follows.

$$_ip_c = (_ip_{cX}, \ _ip_{cY}, \ _ip_{cZ}) \qquad (151a)$$
$$= (_i\alpha_c, \ _i\beta_c) \qquad (151b)$$

Polar coordinates components (longitude $_i\alpha_c$ latitude $_i\beta_c$) of $_ip_c$ are computed in accordance with the following equations.

$$_i\alpha_c = \tan^{-1}(_ip_{cY}/_ip_{cX}) \qquad (151c)$$

$$_i\beta_c = \tan^{-1}(\sqrt{(_ip_{cX}{}^2 + _ip_{cY}{}^2)}/_ip_{cZ})) \qquad (151d)$$

(Scan k (B-1-10, B-1-11, B-1-14)
(b) Polar transformation of $_ip_c$ (B-1-12)
A large circle on a sphere, wherein the position $_ip_c$ is subjected to the polar transformation, that is, coordinates (longitude $_k\alpha_{GC}$ latitude $_k\beta_{GC}$) of an arbitrary point $_kP_{GC}$ (the address is given by k) constituting the large circle, is determined by the coordinates $_i\alpha_c$ and $_i\beta_c$ of $_ip_c$, and is expressed by the equation (152b).

$$_kP_{GC} = (_k\alpha_{GC}, \ _k\beta_{GC}) \qquad (152a)$$

$$\cos (_k\alpha_{GC} - _i\alpha_c) = -\cot (_k\beta_{GC}) \cot (_i\beta_c) \qquad (152b)$$

A computation for the large circle is performed as follows in such a manner that k is scanned from the minimum value $k_{min}$ to the maximum value $k_{max}$. The latitude $_k\beta_{GC}$ is computed together $k\Delta\beta_{GC}$ where $\triangle\beta_{GC}$ denotes a latitudinal resolution, and the longitude $_k\alpha_{GC}$ is computed in accordance with the following equation using the latitude.

$$_k\alpha_{GC} = _i\alpha_c + \cos^{-1} (\cot (_k\beta_{GC}) \cot (_i\beta_c)) \qquad (152c)$$

(7) Points $_kP_{GC}$ constituting the above-mentioned large circle are transformed to points $_kp_{GC,Proj}$ represented by polar coordinates (inclination $_k\alpha_{GC,Proj}$ and radius $_k\beta_{GC,Proj}$) in the sectional circle of height $_nd_c$ of a "cylindrical arrangement voting unit 19", and voting is performed (B-1-13). This transformation is expressed by the following expressions wherein f () is generally given as the projective function.

$$_k\beta_{GC,Proj} = f (_k\beta_{GC}) \qquad (153a)$$

$$_k\alpha_{GC,Proj} = _k\alpha_{GC} \qquad (153b)$$

In case of the equidistant projection, f () = 1, and $_k\beta_{GC,Proj}$ is given by the following equation.

$$_k\beta_{GC,Proj} = _k\beta_{GC} \qquad (153c)$$

To summarize the above, the "points $_kP_{GC}$ on the sphere", which constitute the large circle, are transformed to the "points $_kp_{GC,Proj}$ on the plane" in the sectional circle, and the "brightness of the position $_ip_R$" is voted for (added to) the points thus transformed. It is possible to implement the respective sectional circle with a register arrangement or a memory arrangement.

(Scan k (B-1-14)

(8) In the processing up to here, there is drawn one large circle, wherein the point of the position $_ip_R$ is subjected to "the compound ratio transformation and the polar transformation", in the sectional circle of $_nd_c$ in height. It is noted that the large circle has been transformed in accordance with the equations (153a) to (153c).

(Scan i (B-1-15))

(9) In the processing up to here, there are drawn large circles, wherein "all the points $\{_ip_R\}$ in the image" are subjected to the compound ratio transformation and the polar transformation, in the sectional circle of $_nd_c$ in height.

(Scan $_nd_c$ (B-1-16))

(10) In the processing up to here, there are drawn large circles, wherein "all the points $\{_ip_R\}$ in the image" are subjected to the compound ratio transformation and the polar transformation, in the sectional circles of $\{_nd_c\}$ in all the heights. That is, the voting is performed for the inside of all the sectional circles of the cylindrical arrangement.
(11) Extract a "point wherein the voted intensity offers the maximum (peak)" in the cylindrical arrangement, by a "peak extraction unit 120". This maximum point is a "place wherein the large circles intersect with each other at one point". The "normalized distance $_nd_{c0}$ up to going across the plane" is determined in the form of a "height coordinates" of the maximum point, and the "three-dimensional azimuth $n_{s0}$ of the plane" is determined in the form of a "sectional circle inside coordinates" (B-1-17).

(End)

Embodiment B-2. (Measurement of a three-dimensional azimuth $n_{s0}$ of a plane and a normalized distance $_nd_{c0}$ without determination of an optical axis direction $a_{xis}$)

This measurement, that is, the method of 4. 2. 5, will be explained in conjunction with the embodiment of Fig. 52, which is one wherein the embodiment B-1 is modified. It is performed in accordance with a flowchart shown in Fig. 53. The following steps (2) - (10) are the same as the corresponding steps of the embodiment B-1.
(Start)

(0) Scan an "optical axis direction parameter $a_{xis}$" over any possible directions (from the minimum value $a_{xis,min}$ to the maximum value $a_{xis,\ max}$) by a "scan unit for $a_{xis}$ parameter 121" (B-2-1, B-2-2, B-2-17).

(Scan $a_{xis}$)

(1) Set up the "position $P_{axis}$ on the optical axis", as being equal to the parameter $a_{xis}$, by a "$P_{axis}$ set unit 115" (B-2-3).
(2) Scan a normalized distance parameter $_nd_c$ by a "scan unit for $_nd_c$ parameter 116" from the minimum value $_nd_{c,\ min}$ to the maximum value $_nd_{c,\ max}$ (B-2-4, B-2-5, B-2-16).

(Scan $_nd_c$)

(3) Scan the respective addresses from the minimum value $i_{min}$ to the maximum value $i_{max}$ (B-2-6, B-2-7, B-2-15).

(Scan i )

(4) Output positions $_ip_R$ and $_ip_L$ on the right camera and the left camera from the "register 112 for an image on the right camera and the "register 113 for an image on the left camera", respectively (B-2-8).

(5) Feed four parameters $_nd_c$, $_ip_R$, $_ip_L$, $p_{axis}$ thus set up to a "compound ratio transformation unit 117" and output a position $_ip_c$ (B-2-9).

(6) The above-mentioned position $_ip_c$ is subjected to a polar transformation into a large circle on a sphere by a "polar transformation unit 118" (B-2-10).

(Scan k (B-2-11, B-2-12, B-12-14)

(7) Points $_kP_{GC}$ constituting the above-mentioned large circle are transformed to "points in the sectional circle of height $_nd_c$ " of a "cylindrical arrangement voting unit 119", and voting is performed (B-2-13).

(8) In the processing up to here, there is drawn one large circle, wherein the point of the position $_ip_R$ is subjected to "the compound ratio transformation and the polar transformation", in the sectional circle of $_nd_c$ in height. It is noted that the large circle has been transformed in accordance with the equations (153a) to (153c).

(Scan i (B-2-15))

(9) In the processing up to here, there are drawn large circles, wherein "all the points $\{_ip_R\}$ in the image" are subjected to the compound ratio transformation and the polar transformation, in the sectional circle of $_nd_c$ in height.

(Scan $_nd_c$ (B-2-16))

(10) In the processing up to here, there are drawn large circles, wherein "all the points $\{_ip_R\}$ in the image" are subjected to the compound ratio transformation and the polar transformation, in the sectional circles of $\{_nd_c\}$ in all the heights. That is, the voting is performed for the inside of all the sectional circles of the cylindrical arrangement.

(scan $a_{xis}$ (B-2-17))

(11) In the processing up to here, the voting is performed for all the sectional circles of the "cylindrical arrangements for all the optical axis direction parameters $a_{xis}$".

(12) Extract a "specified cylindrical arrangement" wherein the intensity offers the maximum from among the cylindrical arrangements, by a "peak extraction unit 120". Thus, a true optical axis direction parameters $a_{xis0}$ is determined in the form of the optical axis direction parameters for this arrangement. When a point, wherein the intensity offers the peak in the cylindrical arrangement, is extracted, the normalized distance $_nd_{c0}$ up to going across the plane is determined in the form of a "height coordinates" of the maximum point, and the three-dimensional azimuth $n_{s0}$ of the plane is determined in the form of a "sectional circle inside coordinates" (B-2-18).

(End)

Embodiment B-3. (Measurement of a three-dimensional azimuth $n_{s0}$ of a plane and a normalization shortest distance $_nd_{s0}$ )

This measurement, that is, the method of 4. 3. 2 will be explained in conjunction with the embodiment of Fig. 54. It is performed in accordance with the following flowchart shown in Fig. 55. The step (7) et seqq. are the same as those in the embodiment A-3.

(Start)

(1) Set up the "position $P_{axis}$ on the optical axis", as being equal to the optical axis direction $a_{xis}$, by a "$P_{axis}$ set unit 115" (cf. the embodiment B-1 (B-3-1)).

(2) Scan a normalization shortest distance parameter $_nd_s$ by a "scan unit for $_nd_s$ parameter 122" from the minimum value $_nd_{s, min}$ to the maximum value $_nd_{s, max}$ (B-3-2, B-3-3, B-3-15).

(Scan $_nd_s$ )

(3) Scan the respective addresses from the minimum value $i_{min}$ to the maximum value $i_{max}$ (B-3-4, B-3-5, B-3-14).

(Scan i )

(4) Output positions $_ip_R$ and $_ip_L$ on the right camera and the left camera from the "register 112 for an image on right camera" and the "register 113 for an image on left camera", respectively (B-3-6).

(5) Feed four parameters $_nd_s$, $_ip_R$, $_ip_L$, $p_{axis}$ thus set up to a "computing unit 123 for radius R " and output a radius $_iR$ and a position $_ip_R$ (B-3-7). In the unit 123, the radius $_iR$ is computed with the following equation based on the equation (66c).

$$_iR=\cos^{-1} (_nd_s \sin (_id-_ic) /\sin (_id)) \tag{154}$$

(6) The above-mentioned radius $_iR$ and position $_ip_R$ are fed to a "small circle transformation unit 124" to perform a small circle transformation wherein the position $_ip_R$ is transformed to a "small circle on a sphere" of the radius $_iR$ taking the position $_ip_R$ as the center (cf. 4. 3. 2, and Fig. 27(A)). The small circle transformation is performed by the unit in following two steps (cf. Fig. 56(A)).

(a) Transformation of $_ip_R$ to polar coordinates (B-3-8)

$_ip_R$ is expressed on the rectangular coordinates and the "polar coordinates on a sphere" as follows.

$$_ip_R= (_ip_{RX}, \ _ip_{RY}, \ _ip_{RZ}) \tag{155a}$$

$$= (_i\alpha_R, \ _i\beta_R) \tag{155b}$$

Polar coordinates components (longitude $_i\alpha_R$ latitude $_i\beta_R$ ) of $_ip_R$ are computed in accordance with the following equations.

$$_i\alpha_0= \tan^{-1} (_ip_{RY}/_ip_{RX}) \tag{155c}$$

$$_i\beta_0= \tan^{-1} (\sqrt{(_ip_{RX}^2+_ip_{RY}^2)} /_ip_{RZ}) \tag{155d}$$

{Scan k)

(b) Small circle transformation (B-3-11)

A large circle on a sphere, wherein the position $_ip_R$ is subjected to the small circle transformation, that is, coordinates (longitude $_k\alpha_{SC}$ latitude $_k\beta_{SC}$) of an arbitrary point $_kP_{SC}$ (the address is given by k) constituting the small circle, is determined by the coordinates $_i\alpha_R$ and $_i\beta_R$ of $_ip_R$, and is expressed by the equation (156b). This equation is equivalent to one in which the equation (30) is expressed using the parameters in Fig. 56(A).

$$_kP_{SC}= (_k\alpha_{SC}, \ _k\beta_{SC}) \tag{156a}$$

$$\cos (_k\beta_{SC}) \cos (_i\beta_R)$$

$$+ \sin (_k\beta_{SC}) \sin (_i\beta_R) \cos (_k\alpha_{SC}-_i\alpha_R)$$

$$= \cos (_iR) \tag{156b}$$

A computation for the small circle is performed as follows in such a manner that k is scanned. The latitude $_k\beta_{SC}$ is computed together $k\Delta\beta_{SC}$ where $\Delta\beta_{SC}$ denotes a latitudinal resolution, and the longitude $_k\alpha_{SC}$ is computed in accordance with the following equation using the latitude.

$$_k\alpha_{SC}=_i\alpha_R+\cos^{-1} ((\cos (_iR)-\cos (_k\beta_{SC}) \cos (_i\beta_R))$$

$$/ (\sin (_k\beta_{SC}) \sin (_i\beta_R))) \tag{156c}$$

(7) Points $_kP_{SC}$ constituting the above-mentioned small circle are transformed to points $_kp_{SC,Proj}$ represented by polar coordinates (inclination $_k\alpha_{SC,Proj}$ and radius $_k\beta_{SC,Proj}$) in the sectional circle of height $_nd_s$ of a "cylindrical arrangement voting unit 125", and voting is performed (B-3-12). This transformation is expressed by the following expressions wherein f () is given as the projective function.

$$_k\beta_{SC,Proj} = f(_k\beta_{SC}) \qquad (157a)$$

$$_k\alpha_{SC,Proj} = {}_k\alpha_{SC} \qquad (157b)$$

In case of the equidistant projection, f () = 1, and $_k\beta_{SC,Proj}$ is given by the following equation.

$$_k\beta_{SC,Proj} = {}_k\beta_{SC} \qquad (157c)$$

To summarize the above, the "points $_kP_{SC}$ on the sphere", which constitute the small circle, are transformed to the "points $_kp_{SC,Proj}$ on the plane" in the sectional circle, and the "brightness of the position $_ip_R$" is voted for (added to) the points thus transformed. It is possible to implement the respective sectional circle with a register arrangement or a memory arrangement.

(Scan k (B-3-13)

(8) In the processing up to here, there is drawn one small circle, wherein the point of the position $_ip_R$ is subjected to the transformation, in the sectional circle of $_nd_s$ in height. It is noted that the small circle has been transformed in accordance with the equations (157a) to (157c).

(Scan i (B-3-14))

(9) In the processing up to here, there are drawn small circles, wherein "all the points $\{_ip_R\}$ in the image" are subjected to the transformation, in the sectional circle of $_nd_s$ in height.

(Scan $_nd_s$ (B-3-15))

(10) In the processing up to here, there are drawn small circles, wherein "all the points $\{_ip_R\}$ in the image" are subjected to the transformation, in the sectional circles of $\{_nd_s\}$ in all the heights. That is, the voting is performed for the inside of all the sectional circles of the cylindrical arrangement.
(11) Extract a "point wherein the voted intensity offers the maximum (peak)" in the cylindrical arrangement, by a "peak extraction unit 26". This maximum point is a "place wherein the small circles intersect with each other at one point". The normalization shortest distance $_nd_s$ is determined in the form of a "height coordinates" of the maximum point, and the "three-dimensional azimuth $n_{s0}$ of the plane" is determined in the form of a "sectional circle inside coordinates" (B-3-16).

(End)

Embodiment B-4. (Measurement of a three-dimensional azimuth $n_{s0}$ of a plane and a normalization shortest distance $_nd_{s0}$ without determination of an optical axis direction $a_{xis}$)

This measurement, that is, the method of 4. 3.3 will be explained in conjunction with the embodiment of Fig. 57, which is one wherein the embodiment B-3 is modified. It is performed in accordance with a flowchart shown in Fig. 58. The following steps (2) - (10) are the same as the corresponding steps of the embodiment B-3.
(Start)

(0) Scan an "optical axis direction $a_{xis}$" over any possible directions (from the minimum value $a_{xis, min}$ to the maximum value $a_{xis, max}$) by a "scan unit for $a_{xis}$ parameter 121" (B-4-1, B-4-2, B-4-17).

(Scan $a_{xis}$)

(1) Set up the "position $P_{axis}$ on the optical axis", as being equal to the parameter $a_{xis}$, by a "$P_{axis}$ set unit 115" (B-4-3).

(2) Scan a normalization shortest distance parameter $_nd_s$ by a "scan unit for $_nd_s$ parameter 122" from the minimum value $_nd_{s, min}$ to the maximum value $_nd_{s, max}$ (B-4-4, B-4-5, B-4-16).

(Scan $_nd_s$ )

(3) Scan the respective addresses from the minimum value $i_{min}$ to the maximum value $i_{max}$ (B-4-6, B-4-7, B-4-15).

(Scan i )

(4) Output positions $_ip_R$ and $_ip_L$ on the right camera and the left camera from the "register 112 for an image on the right camera" and the "register 113 for an image on the left camera", respectively (B-4-8).

(5) Feed four parameters $_nd_s$, $_ip_R$, $_ip_L$, $p_{axis}$ thus set up to a "computing unit 123 for radius R " and output a radius $_iR$ and a position $_ip_R$ (B-4-9).

(6) The above-mentioned radius $_iR$ and position $_ip_R$ are fed to a "small circle transformation unit 124" to perform a small circle transformation wherein the position $_ip_R$ is transformed to a "small circle on a sphere" of the radius $_iR$ taking the position $_ip_R$ as the center (B-4-10).

(7) Points $_kp_{SC}$ constituting the above-mentioned small circle are transformed to points $_kp_{SC,Proj}$ represented by polar coordinates (inclination $_k\alpha_{SC,Proj}$ and radius $_k\beta_{SC,Proj}$ ) in the sectional circle of height $_nd_s$ of a "cylindrical arrangement voting unit 125", and voting is performed (B-4-13).

(Scan k (B-4-14)

(8) In the processing up to here, there is drawn one small circle, wherein the point of the position $_ip_R$ is subjected to the transformation, in the sectional circle of $_nd_s$ in height. It is noted that the small circle has been transformed in accordance with the equations (157a) to (157c).

(Scan i (B-4-15))

(9) In the processing up to here, there are drawn small circles, wherein "all the points $\{_ip_R\}$ in the image" are subjected to the transformation, in the sectional circle of $_nd_s$ in height.

(Scan $_nd_s$ (B-4-16))

(10) In the processing up to here, there are drawn small circles, wherein "all the points $\{_ip_R\}$ in the image" are subjected to the transformation, in the sectional circles of $\{_nd_s\}$ in all the heights. That is, the voting is performed for the inside of all the sectional circles of the cylindrical arrangement.

(Scan v (B-4-17))

(11) In the processing up to here, the voting is performed for all the sectional circles of the "cylindrical arrangements for all the optical axis direction parameters $a_{xis}$ ".

(12) Extract a "specified cylindrical arrangement" wherein the intensity offers the maximum from among the cylindrical arrangements, by a "peak extraction unit 26". Thus, a true moving direction $a_{xis0}$ is determined in the form of the optical axis direction parameter for this arrangement. When a point, wherein the intensity offers the peak in the cylindrical arrangement, is extracted, the normalization shortest distance $_nd_s$ is determined in the form of a "height coordinates" of the maximum point, and the three-dimensional azimuth $n_{s0}$ of the plane is determined in the form of a "sectional circle inside coordinates" (B-4-18).

(End)

Embodiment B-5. (Measurement of a "normalized distance $_nd_0$ of a point")

This measurement, that is, the method of 4. 4. 3 will be explained in conjunction with the embodiment of Fig. 59. It is performed in accordance with the following flowchart shown in Fig. 60.
(Start)

(1) Set up the "position $P_{axis}$ on the optical axis", as being equal to the optical axis direction $a_{xis}$ , by a "$P_{axis}$ set unit 115" (cf. the embodiment B-1 (B-5-1)).

(2) Output positions $p_R$ and $p_L$ on the right camera and the left camera from the "register 112 for an image on right camera" and the "register 113 for an image on left camera", respectively (B-5-2).

(3) Feed three parameters $p_R$, $p_L$, $p_{axis}$ thus set up to a "computing unit 127 for point distance" and output a normalized distance $_nd_0$ up to a point (B-5-3). In the unit 27, the normalized distance $_nd_0$ is computed with the equation (67b).

(End)

Embodiment B-6. (Measurement of a three-dimensional azimuth $n_{s0}$ of a plane-and a normalized distance $_nd_{c0}$ through the binocular parallax σ)

This measurement, that is, a case wherein in the method of 4. 2. 3 the "compound ratio transformation by the binocular parallax σ (the equation (60b))" is used, will be explained in conjunction with the embodiment of Fig. 61. It is performed in accordance with a flowchart shown in Fig. 62. The following steps (7) - (12) are the same as the corresponding steps of the embodiment B-1.

(Start)

(1) Set up the "position $p_{axis}$ on the optical axis", as being equal to the optical axis direction $a_{xis}$ , by a "$P_{axis}$ set unit 115" (cf. the embodiment B-1).

(2) Scan a normalized distance parameter $_nd_c$ by a "scan unit for $_nd_c$ parameter 116" from the minimum value $_nd_{c, min}$ to the maximum value $_nd_{c, max}$ (B-6-2, B-6-3, B-6-16).

(Scan $_nd_c$ )

(3) Scan the respective addresses from the minimum value $i_{min}$ to the maximum value $i_{max}$ (B-6-4, B-6-5, B-6-15).

(Scan i )

(4) Output positions $_ip_R$ and $_ip_L$ on the right camera and the left camera from the "register 112 for an image on right camera" and the "register 113 for an image on left camera", respectively (B-6-6).

(5) Feed positions $_ip_R$ and $_ip_L$ on the right camera and the left camera to a "σ determination unit 128" and output a binocular parallax $_i\sigma$ (that is, $_ip_L$ - $_ip_R$) (B-6-7). The algorithm for measuring the binocular parallax and the method of implementing the algorithm are disclosed, for example, in Japanese Patent Laid Open Gazettes Hei. 05-165956, Hei. 05-165957, Hei. 06-044364, and Hei. 09-081369; "A method of performing a two-dimensional correlation and a convolution along the ρ coordinates on the Hough plane on a one-dimensional basis" by Kawakami, S. and Okamoto, H., SINNGAKUGIHOU, vol. IE96-19, pp. 31-38, 1996.

(6) Feed four parameters $_nd_c$, $_i\sigma$ , $_ip_R$, $p_{axis}$ thus set up to a "compound ratio transformation unit 117" and output a position $_ip_c$ . A computation of the position $_ip_c$ is performed by the "compound ratio transformation unit 117" in following two steps.

    (a) Computation of a central angle $_iX$ between $_ip_c$ and $p_{axis}$ (B-6-8)

        From $_nd_c$, $_i\sigma$ , $_ip_R$, $p_{axis}$ , the central angle $_iX$ is computed in accordance with the following equation based on the equation (60b).

$$x = \tan^{-1} ((\sin (_ic) \sin (_ic + _i\sigma))$$

$$/(\cos (_ic) \sin (_ic + _i\sigma) - _nd_c \sin (_i\sigma))) \qquad (160a)$$

    (b) Computation of $_ip_c$ (B-6-9)

        Compute the position $_ip_c$ on the sphere, using the above-mentioned central angle $_iX$, in accordance with the following equation.

$$_ip_c = \cos (_ix) \, \Gamma_x + \sin (_ix) \, \Gamma_y \qquad (160b)$$

Here, $\Gamma_x$ and $\Gamma_y$ are computed in accordance with the equation (150c) in the embodiment B-1.

(7) The above-mentioned position $_ip_c$ is subjected to a polar transformation into a large circle on a sphere by a "polar transformation unit 118" (B-6-10).

(Scan k (B-6-11, B-6-12, B-6-14)

(8) Points $_kP_{GC}$ constituting the above-mentioned large circle are transformed to points $_kp_{GC,Proj}$ represented by polar coordinates (inclination $_k\alpha_{GC,Proj}$ and radius $_k\beta_{GC,Proj}$) in the sectional circle of height $_nd_c$ of a "cylindrical arrangement voting unit 119", and voting is performed (B-6-13).

(Scan k (B-6-14))

(9) In the processing up to here, there is drawn one large circle, wherein the point of the position $_ip_R$ is subjected to "the compound ratio transformation and the polar transformation", in the sectional circle of $_nd_c$ in height. It is noted that the large circle has been transformed in accordance with the equations (153a) to (153c).

(Scan i (B-6-15))

(10) In the processing up to here, there are drawn large circles, wherein "all the points $\{_ip_R\}$ in the image" are subjected to the compound ratio transformation and the polar transformation, in the sectional circle of $_nd_c$ in height.

(Scan $_nd_c$ (B-6-16))

(11) In the processing up to here, there are drawn large circles, wherein "all the points $\{_ip_R\}$ in the image" are subjected to the compound ratio transformation and the polar transformation, in the sectional circles of $\{_nd_c\}$ in all the heights. That is, the voting is performed for the inside of all the sectional circles of the cylindrical arrangement.
(12) Extract a "point wherein the voted intensity offers the maximum (peak)" in the cylindrical arrangement, by a "peak extraction unit 120". This maximum point is a "place wherein the large circles intersect with each other at one point". The "normalized distance $_nd_{c0}$ up to going across the plane" is determined in the form of a "height coordinates" of the maximum point, and the "three-dimensional azimuth $n_{s0}$ of the plane" is determined in the form of a "sectional circle inside coordinates" (B-6-17).

(End)

Embodiment B-7. (Measurement of a three-dimensional azimuth $n_{s0}$ of a plane and a normalized distance $_nd_{c0}$ up to going across the plane, without determination of an optical axis direction $a_{xis}$, through the binocular parallax $\sigma$)

This measurement, that is, a case wherein in the method of 4. 2. 5 the "compound ratio transformation by the binocular parallax $\sigma$ (the equation (60b))" is used, will be explained in conjunction with the embodiment of Fig. 63, which is one wherein the embodiment B-6 is modified. It is performed in accordance with a flowchart shown in Fig. 64. The following steps (2) - (11) are the same as the corresponding steps of the embodiment B-6.
(Start)

(0) Scan an "optical axis direction parameter $a_{xis}$" over any possible directions (from the minimum value $a_{xis, min}$ to the maximum value $a_{xis, max}$) by a "scan unit for a xis parameter 121".

(Scan $a_{xis}$)

(1) Set up the "position $P_{axis}$ on the optical axis ", as being equal to the parameter $a_{xis}$, by a "$P_{axis}$ set unit 115" (B-7-3).
(2) Scan a normalized distance parameter $_nd_c$ by a "scan unit for $_nd_c$ parameter 116" from the minimum value $_nd_{c, min}$ to the maximum value $_nd_{c, max}$ (B-7-4, B-7-5, B-7-17).

(Scan $_nd_c$)

(3) Scan the respective addresses from the minimum value $i_{min}$ to the maximum value $i_{max}$ (B-7-6, B-7-7, B-7-16).

(Scan i )

(4) Output positions $_ip_R$ and $_ip_L$ on the right camera and the left camera from the "register 112 for an image on right camera" and the "register 113 for an image on left camera", respectively (B-7-8).

(5) Feed positions $_ip_R$ and $_ip_L$ on the right camera and the left camera to a "σ determination unit 128" and output a binocular parallax $_i\sigma$ (that is, $_ip_L$-$_ip_R$ ) (B-7-9).

(6) Feed four parameters $_nd_c$, $_i\sigma$, $_ip_R$, $p_{axis}$ thus set up to a "compound ratio transformation unit 117" and output a position $_ip_c$ (B-7-10).

(7) The above-mentioned position $_ip_c$ is subjected to a polar transformation into a large circle on a sphere by a "polar transformation unit 118" (B-7-11).

(Scan k (B-7-12, B-7-13, B-7-15)

(8) Points $_kP_{GC}$ constituting the above-mentioned large circle are transformed to points $_kP_{GC,Proj}$ represented by polar coordinates (inclination $_k\alpha_{GC,Proj}$ and radius $_k\beta_{GC,Proj}$) in the sectional circle of height $_nd_c$ of a "cylindrical arrangement voting unit 119", and voting is performed (B-7-14).

(Scan k (B-7-15))

(9) In the processing up to here, there is drawn one large circle, wherein the point of the position $_ip_R$ is subjected to "the compound ratio transformation and the polar transformation", in the sectional circle of $_nd_c$ in height. It is noted that the large circle has been transformed in accordance with the equations (153a) to (153c).

(Scan i (B-7-16))

(10) In the processing up to here, there are drawn large circles, wherein "all the points $\{_ip_R\}$ in the image" are subjected to the compound ratio transformation and the polar transformation, in the sectional circle of $_nd_c$ in height.

(Scan $_nd_c$ (B-7-17))

(11) In the processing up to here, there are drawn large circles, wherein "all the points $\{_ip_R\}$ in the image" are subjected to the compound ratio transformation and the polar transformation, in the sectional circles of $\{_nd_c\}$ in all the heights. That is, the voting is performed for the inside of all the sectional circles of the cylindrical arrangement.

(Scan $a_{xis}$ (B-7-18))

(12) In the processing up to here, the voting is performed for all the sectional circles of the "cylindrical arrangements for all the optical axis direction parameters $a_{xis}$".

(13) Extract a "specified cylindrical arrangement" wherein the intensity offers the maximum from among the cylindrical arrangements, by a "peak extraction unit 120". Thus, a true optical axis direction $a_{xis0}$ is determined in the form of the optical axis direction parameter for this arrangement. When a point, wherein the intensity offers the peak in the cylindrical arrangement, is extracted, the normalized distance $_nd_{c0}$ up to going across the plane is determined in the form of a "height coordinates" of the maximum point, and the three-dimensional azimuth $n_{s0}$ of the plane is determined in the form of a "sectional circle inside coordinates" (B-7-19).

(End)

Embodiment B-8. (Measurement of a three-dimensional azimuth $n_{s0}$ of a plane and a normalization shortest distance $_nd_{s0}$ through the binocular parallax σ)

This measurement, that is, a case wherein in the method of 4. 3. 2 the "small circle transformation by the binocular parallax σ (the equation (66b))" is used, will be explained in conjunction with the embodiment of Fig. 65. It is performed in accordance with a flowchart shown in Fig. 66. The following steps (1) - (4) and (7) - (12) are the same as the corresponding steps of the embodiment B-3. Further, the following step (5) is the same as the corresponding step of the embodiment B-6.

(Start)

(1) Set up the "position $P_{axis}$ on the optical axis", as being equal to the optical axis direction $a_{xis}$, by a "$P_{axis}$ set

unit 115" (cf. the embodiment B-1 (B-8-1)).

(2) Scan a normalization shortest distance parameter $_nd_s$ by a "scan unit for $_nd_s$ parameter 122" from the minimum value $_nd_{s,\,min}$ to the maximum value $_nd_{s,\,max}$ (B-8-2, B-8-3, B-8-15).

(Scan $_nd_s$)

(3) Scan the respective addresses from the minimum value $i_{min}$ to the maximum value $i_{max}$ (B-8-4, B-8-5, B-8-14).

(Scan i )

(4) Output positions $_ip_R$ and $_ip_L$ on the right camera and the left camera from the "register 112 for an image on right camera" and the "register 113 for an image on left camera", respectively (B-8-6).

(5) Feed positions $_ip_R$ and $_ip_L$ on the right camera and the left camera to a "σ determination unit 128" and output a binocular parallax $_i\sigma$ (that is, $_ip_L$-$_ip_R$ ) (B-8-7).

(6) Feed four parameters $_nd_s$, $_i\sigma$, $_ip_R$, $p_{axis}$ thus set up to a "computing unit 123 for radius R " and output a radius $_iR$ and a position $_ip_R$ (B-8-8). In the unit 123, the radius iR is computed with the following equation based on the equation (66a).

$$_iR = \cos^{-1} (_nd_s \sin (_i\sigma) / \sin (_ic + _i\sigma)) \tag{161}$$

(7) The above-mentioned radius $_iR$ and position $_ip_R$ are fed to a "small circle transformation unit 124" to perform a small circle transformation wherein the position $_ip_R$ is transformed to a "small circle on a sphere" of the radius $_iR$ taking the position $_ip_R$ as the center (B-8-9).

(Scan k (B-8-10, B-8-11, B-8-13))

(8) Points $_kP_{SC}$ constituting the above-mentioned small circle are transformed to points $_kp_{SC,Proj}$ represented by polar coordinates (inclination $_k\alpha_{SC,Proj}$ and radius $_k\beta_{SC,Proj}$ ) in the sectional circle of height $_nd_s$ of a "cylindrical arrangement voting unit 125", and voting is performed (B-8-12).

(Scan k (B-8-13))

(9) In the processing up to here, there is drawn one small circle, wherein the point of the position $_ip_R$ is subjected to the transformation, in the sectional circle of $_nd_s$ in height. It is noted that the small circle has been transformed in accordance with the equations (157a) to (157c).

(Scan i (B-8-14))

(10) In the processing up to here, there are drawn small circles, wherein "all the points $\{_ip_R\}$ in the image" are subjected to the transformation, in the sectional circle of $_nd_s$ in height.

(Scan $_nd_s$ (B-8-15))

(11) In the processing up to here, there are drawn small circles, wherein "all the points $\{_ip_R\}$ in the image" are subjected to the transformation, in the sectional circles of $\{_nd_s\}$ in all the heights. That is, the voting is performed for the inside of all the sectional circles of the cylindrical arrangement.

(12) Extract a "point wherein the voted intensity offers the maximum (peak)" in the cylindrical arrangement, by a "peak extraction unit 126". This maximum point is a "place wherein the small circles intersect with each other at one point". The normalization shortest distance $_nd_s$ is determined in the form of a "height coordinates" of the maximum point, and the "three-dimensional azimuth $n_{s0}$ of the plane" is determined in the form of a "sectional circle inside coordinates" (B-8-16).

(End)

Embodiment B-9. (Measurement of a three-dimensional azimuth $n_{s0}$ of a plane and a normalization shortest distance $_n d_{s0}$, without determination of an optical axis direction $a_{xis}$, through the binocular parallax σ)

This measurement, that is, a case wherein in the method of 4. 3. 3 the "small circle transformation by the binocular parallax σ (the equation (66a))" is used, will be explained in conjunction with the embodiment of Fig. 67, which is one wherein the embodiment B-8 is modified. It is performed in accordance with a flowchart shown in Fig. 68. The following steps (2) - (11) are the same as the corresponding steps of the embodiment B-8.
(Start)

(0) Scan an "optical axis direction parameter $a_{xis}$ " over any possible directions (from the minimum value $a_{xis, min}$ to the maximum value $a_{xis, max}$ ) by a "scan unit for axis parameter 121".

(Scan $a_{xis}$ )

(1) Set up the "position $P_{axis}$ on the optical axis", as being equal to the parameter $a_{xis}$ , by a "$P_{axis}$ set unit 115" (B-9-3).
(2) Scan a normalization shortest distance parameter $_n d_s$ by a "scan unit for $_n d_s$ parameter 122" from the minimum value $_n d_{s, min}$ to the maximum value $_n d_{s. max}$ (B-9-4, B-9-5, B-9-17).

(Scan $_n d_s$)

(3) Scan the respective addresses from the minimum value $i_{min}$ to the maximum value $i_{max}$ (B-9-6, B-9-7, B-9-16).

(Scan i )

(4) Output positions $_i p_R$ and $_i p_L$ on the right camera and the left camera from the "register 112 for an image on right camera" and the "register 113 for an image on left camera", respectively (B-9-8).
(5) Feed positions $_i p_R$ and $_i p_L$ on the right camera and the left camera to a "σ determination unit 128" and output a binocular parallax $_i σ$ (that is, $_i p_L$-$_i p_R$) (B-9-9).
(6) Feed four parameters $_n d_s$, $_i σ$ , $_i p_R$, $p_{axis}$ thus set up to a "computing unit 123 for radius R " and output a radius $_i R$ and a position $_i p_R$ (B-9-10).
(7) The above-mentioned radius $_i R$ and position $_i p_R$ are fed to a "small circle transformation unit 124" to perform a small circle transformation wherein the position $_i p_R$ is transformed to a "small circle on a sphere" of the radius iR taking the position $_i p_R$ as the center (B-9-11). (Scan k (B-9-12, B-9-13, B-9-15)
(8) Points $_k P_{SC}$ constituting the above-mentioned small circle are transformed to points $_k p_{SC,Proj}$ represented by polar coordinates (inclination $_k α_{SC,Proj}$ and radius $_k β_{SC,Proj}$ ) in the sectional circle of height $_n d_s$ of a "cylindrical arrangement voting unit 125", and voting is performed (B-9-14).

(Scan k (B-9-15))

(9) In the processing up to here, there is drawn one small circle, wherein the point of the position $_i p_R$ is subjected to the transformation, in the sectional circle of $_n d_s$ in height. It is noted that the small circle has been transformed in accordance with the equations (157a) to (157c).

(Scan i (B-9-16))

(10) In the processing up to here, there are drawn small circles, wherein "all the points $\{_i p_R\}$ in the image" are subjected to the transformation, in the sectional circle of $_n d_s$ in height.

(Scan $_n d_s$ (B-9-17))

(11) In the processing up to here, there are drawn small circles, wherein "all the points $\{_i p_R\}$ in the image" are subjected to the transformation, in the sectional circles of $\{_n d_s\}$ in all the heights. That is, the voting is performed for the inside of all the sectional circles of the cylindrical arrangement.

(Scan $a_{xis}$ (B-9-18))

(12) In the processing up to here, the voting is performed for all the sectional circles of the "cylindrical arrangements for all the optical axis direction parameters $a_{xis}$ ".

(13) Extract a "specified cylindrical arrangement" wherein the intensity offers the maximum from among the cylindrical arrangements, by a "peak extraction unit 126". Thus, a true optical axis direction $a_{xis0}$ is determined in the form of the optical axis direction parameter for this arrangement. When a point, wherein the intensity offers the peak in the cylindrical arrangement, is extracted, the normalization shortest distance $_nd_s$ of the plane is determined in the form of a "height coordinates" of the maximum point, and the three-dimensional azimuth $n_{s0}$ of the plane is determined in the form of a "sectional circle inside coordinates" (B-9-19).

(End)

Embodiment B-10. (Measurement of a "normalized distance $_nd_0$ of a point through the binocular parallax σ)

This measurement, that is, a case wherein in the method of 4. 4. 3 the "measurement method by the binocular parallax σ (the equation (67c))" is used, will be explained in conjunction with the embodiment of Fig. 69. It is performed in accordance with a flowchart shown in Fig. 70.
(Start)

(1) Set up the "position $p_{axis}$ on the optical axis", as being equal to the optical axis direction $a_{xis}$ , by a "$p_{axis}$ set unit 115" (cf. the embodiment B-1) (B-10-1).
(2) Output positions $p_R$ and $p_L$ on the right camera and the left camera from the "register 112 for an image on right camera" and the "register 113 for an image on left camera", respectively (B-10-2).
(3) Feed positions $_ip_R$ and $_ip_L$ on the right camera and the left camera to a "σ determination unit 128" and output a binocular parallax $_i\sigma$ (that is, $_ip_L$-$_ip_R$) (B-10-3).
(4) Feed three parameters $p_R$, σ, $p_{axis}$ thus set up to a "computing unit 127 for point distance" and output a normalized distance $_nd_0$ up to a point (B-10-4). In the unit 127, the normalized distance $_nd_0$ is computed with the equation (67c).

(End)

Embodiment C-3. (Measurement of a three-dimensional azimuth $n_{s0}$ of a plane and a normalization shortest distance $_nd_{s0}$ through the binocular parallax σ)

This measurement, that is, a case wherein in the method of 4. 3. 1 the binocular parallax σ is used, will be explained in conjunction with the embodiment of Fig. 75. It is performed in accordance with a flowchart shown in Fig. 76. The steps (8) et seqq. are the same as the corresponding steps of the embodiment C-1 when $_ip_R$ and $\{_ip_R\}$ are replaced by $_ip_0$ and $\{_ip_0\}$ , respectively.
(Start)

(1) Set up the "position $P_{axis}$ on the optical axis", as being equal to the optical axis direction $a_{xis}$, by a "$P_{axis}$ set unit 115" (cf. the step (1) of the embodiment B-1).
(2) Scan a normalization shortest distance parameter $_nd_s$ by a "scan unit for $_nd_s$ parameter 221" from the minimum value $_nd_{s, min}$ to the maximum value $_nd_{s, max}$ (C-3-2, C-3-3, C-3-14).

(Scan $_nd_s$ )

(3) Scan the respective addresses from the minimum value $i_{min}$ to the maximum value $i_{max}$ (C-3-4, C-3-5, C-3-13).

(Scan i )

(4) Output positions $_ip_R$ and $_ip_L$ on the right camera and the left camera from the "register 112 for an image on right camera" and the "register 113 for an image on left camera", respectively (C-3-6).
(5) Feed positions $_ip_R$ and $_ip_L$ on the right camera and the left camera to a "σ determination unit 128" and output a binocular parallax $_i\sigma$ (that is, $_ip_L$-$_ip_R$ ) (cf. the step (5) of the embodiment B-6 (C-3-7)).
(6) Consider a circle (Fig. 26) of radius r taking the moving direction v as the center, and scan the radius r from 0 to π/2 by a "scan unit for radius r 222" (C-3-8, C-3-9, C-3-12).

(Scan r)

(7) Feed five parameters $_nd_s$, $_ip_0$, $p_{inf}$, $_i\sigma$, r thus set up to a "computing unit 223 for small circle structural element $^i_rn_{s+}$, $^i_rn_{s-}$" and output two cross points $^i_rn_{s+}$, $^i_rn_{s-}$ in 4. 3. 1 (4) (C-3-10). As proved in 4. 3. 2, those cross points are structural elements of the "small circle of the radius $_iR$ taking $_ip_0$ as its center". "Polar coordinates (longitudes $^i_r\alpha_{s+}$, $^i_r\alpha_{s-}$, latitudes $^i_r\beta_{s+}$, $^i_r\beta_{s-}$) of the cross points $^i_rn_{s+}$, $^i_rn_{s-}$ are computed in accordance with the following equations as described in 4. 3. 1 (4).

$$^i_r\beta_+ = r$$

$$^i_r\beta_- = r \qquad\qquad (210a)$$

$$^i_r\alpha_{s+} = {}_i\alpha_c + \cos^{-1}(((_nd_s \ \sin(_i\sigma)/\sin(_ic+_i\sigma))$$
$$-\cos(r)\cos(_ic))/(\sin(r)-\sin(_ic)))$$
$$^i_r\alpha_{s-} = {}_i\alpha_c - \cos^{-1}(((_nd_s \ \sin(_i\sigma)/\sin(_ic+_i\sigma))$$
$$-\cos(r)\cos(_ic))/(\sin(r)-\sin(_ic)))$$
$$(210b)$$

(8) Points $^i_rn_{s+}$, $^i_rn_{s-}$ constituting the above-mentioned small circle are transformed to points $^i_rn_{s+,Proj}$, $^i_rn_{s-,Proj}$ represented by polar coordinates (inclination $^i_r\alpha_{s+,Proj}$, $^i_r\alpha_{s-,Proj}$, and radius $^i_r\beta_{s+,Proj}$, $^i_r\beta_{s-,Proj}$) in the sectional circle of height $_nd_s$ of a "cylindrical arrangement voting unit 224", and voting is performed (C-3-11).

(Scan r (C-3-12).

(9) In the processing up to here, there is drawn one small circle, wherein the point of the position $_ip_R$ is subjected to the transformation, in the sectional circle of $_nd_s$ in height. It is noted that the small circle has been transformed in accordance with the equations (201a) to (201c).

(Scan i (C-3-13))

(10) In the processing up to here, there are drawn small circles, wherein "all the points $\{_ip_R\}$ in the image" are subjected to the transformation, in the sectional circle of $_nd_s$ in height.

(Scan $_nd_s$ (C-3-14))

(11) In the processing up to here, there are drawn small circles, wherein "all the points $\{_ip_R\}$ in the image" are subjected to the transformation, in the sectional circles of $\{_nd_s\}$ in all the heights. That is, the voting is performed for the inside of all the sectional circles of the cylindrical arrangement.

(12) Extract a "point wherein the voted intensity offers the maximum (peak)" in the cylindrical arrangement, by a "peak extraction unit 225" (C-3-15). This maximum point is a "place wherein the small circles intersect with each other at one point". The normalization shortest distance $_nd_s$ is determined in the form of a "height coordinates" of the maximum point, and the "three-dimensional azimuth $n_{s0}$ of the plane" is determined in the form of a "sectional circle inside coordinates".

(End)

Embodiment C-4. (Measurement of a three-dimensional azimuth $n_{s0}$ of a plane and a normalization shortest distance $_nd_{s0}$, without determination of an optical axis direction $a_{xis}$, through the binocular parallax σ)

This measurement, that is, a case wherein in the method of 4. 3. 3 the binocular parallax σ is used with respect to 4. 3. 1, will be explained in conjunction with the embodiment of Fig. 77, which is one wherein the embodiment C-3 is modified. It is performed in accordance with a flowchart shown in Fig. 78. The following steps (1) - (11) are the same as the corresponding steps of the embodiment C-3.

(Start)

(0) Scan an "optical axis direction parameter $a_{xis}$ " over any possible directions (from the minimum value $a_{xis,\,min}$ to the maximum value $a_{xis,\,max}$ ) by a "scan unit for $a_{xis}$ parameter 121" (C-4-1, C-4-2, C-4-17).

(Scan $a_{xis}$ )

(1) Set up the "position $P_{axis}$ on the optical axis", as being equal to the parameter $a_{xis}$ , by a "$P_{axis}$ set unit 115" (C-4-3).

(2) Scan a normalization shortest distance parameter $_n d_s$ by a "scan unit for $_n d_s$ parameter 221" from the minimum value $_n d_s$, min to the maximum value $_n d_{s,\,max}$ (C-4-4, C-4-5, C-4-16).

(Scan $_n d_s$ )

(3) Scan the respective addresses from the minimum value $i_{min}$ to the maximum value $i_{max}$ (C-4-6, C-4-7, C-4-15).

(Scan i )

(4) Output positions $_i p_R$ and $_i p_L$ on the right camera and the left camera from the "register 112 for an image on right camera" and the "register 113 for an image on left camera", respectively (C-4-8).

(5) Feed positions $_i p_R$ and $_i p_L$ on the right camera and the left camera to a "σ determination unit 128" and output a binocular parallax $_i \sigma$ (that is, $_i p_L$-$_i p_R$ ) (C-4-9).

(6) Consider a circle (Fig. 26) of radius r taking the moving direction v as the center, and scan the radius r from 0 to $\pi/2$ by a "scan unit for radius r 222" (C-4-10, C-4-11, C-4-14).

(7) Feed five parameters $_n d_s$, $_i p_0$, $p_{inf}$, $_i \sigma$ , r thus set up to a "computing unit 223 for small circle structural element $^i_r n_{s+}$, $^i_r n_{s-}$ " and output two cross points $^i_r n_{s+}$, $^i_r n_{s-}$ in 4. 3. 1 (4) (C-4-12).

(8) Points $^i_r n_{s+}$, $^i_r n_{s-}$ constituting the above-mentioned small circle are transformed to points $^i_r n_{s+,Proj}$, $^i_r n_{s-,Proj}$ represented by polar coordinates (inclination $^i_r \alpha_{s+,Proj}$, $^i_r \alpha_{s-,Proj}$, and radius $^i_r \beta_{s+,Proj}$, $^i_r \beta_{s-,Proj}$ ) in the sectional circle of height $_n d_s$ of a "cylindrical arrangement voting unit 224", and voting is performed (C-4-13).

(Scan r (C-4-14).

(9) In the processing up to here, there is drawn one small circle, wherein the point of the position $_i p_R$ is subjected to the transformation, in the sectional circle of $_n d_s$ in height. It is noted that the small circle has been transformed in accordance with the equations (201a) to (201c).

(Scan i (C-4-15))

(10) In the processing up to here, there are drawn small circles, wherein "all the points $\{_i p_R\}$ in the image" are subjected to the transformation, in the sectional circle of $_n d_s$ in height.

(Scan $_n d_s$ (C-4-16))

(11) In the processing up to here, there are drawn small circles, wherein "all the points $\{_i p_R \}$ in the image" are subjected to the transformation, in the sectional circles of $\{_n d_s \}$ in all the heights. That is, the voting is performed for the inside of all the sectional circles of the cylindrical arrangement.

(Scan $a_{xis}$ (C-4-17))

(12) In the processing up to here, the voting is performed for all the sectional circles of the "cylindrical arrangements for all the optical axis direction parameters $a_{xis}$ ".

(13) Extract a "specified cylindrical arrangement" wherein the intensity offers the maximum from among the cylindrical arrangements, by a "peak extraction unit 225". Thus, a true optical axis direction $a_{xis0}$ is determined in the form of the optical axis direction parameter for this arrangement. When a point, wherein the intensity offers the peak in the cylindrical arrangement, is extracted, the normalization shortest distance $_n d_s$ of the plane is determined in the form of a "height coordinates" of the maximum point, and the three-dimensional azimuth $n_{s0}$ of the plane is determined in the form of a "sectional circle inside coordinates" (C-4-18).

(End)

Embodiment C-7. (Measurement of a three-dimensional azimuth $n_{s0}$ of a plane and a normalization shortest distance $_nd_{s0}$ )

This measurement, that is, the method of 4. 3. 1 will be explained in conjunction with the embodiment of Fig. 83. It is performed in accordance with the following flowchart shown in Fig. 84. The step (7) et seqq. are the same as those in the embodiment C-5, when $_ip_R$ and $\{_ip_R\}$ are replaced by $_ip_0$ and $\{_ip_0\}$, respectively.
(Start)

(1) Set up the "position P $_{axis}$ on the optical axis", as being equal to the optical axis direction a $_{xis}$ , by a "P$_{axis}$ set unit 115" (cf. the embodiment B-1 (C-7-1)).
(2) Scan a normalization shortest distance parameter $_nd_s$ by a "scan unit for $_nd_s$ parameter 221" from the minimum value $_nd_s$, min to the maximum value $_nd_s$, max (C-7-2, C-7-3, C-7-13).

(Scan $_nd_s$ )

(3) Scan the respective addresses from the minimum value i $_{min}$ to the maximum value i $_{max}$ (C-7-4, C-7-5, C-7-12).

(Scan i )

(4) Output positions $_ip_R$ and $_ip_L$ on the right camera and the left camera from the "register 112 for an image on right camera" and the "register 113 for an image on left camera", respectively (C-7-6).
(5) Consider a circle (Fig. 26) of radius r taking the moving direction v as the center, and scan the radius r from 0 to $\pi/2$ by a "scan unit for radius r 222" (C-7-8, C-7-9, C-7-11).
(6) Feed five parameters $_nd_s$, $_ip_R$, $_ip_L$, $p_{axis}$, r thus set up to a "computing unit 223 for small circle structural element $^i_rn_{s+}$, $^i_rn_{s-}$ " and output two cross points $^i_rn_{s+}$, $^i_rn_{s-}$ in 4. 3. 1 (4). As proved in 4. 3. 2, those cross points are structural elements of the "small circle of the radius $_iR$ taking $_ip_R$ as its center". "Polar coordinates (longitudes $^i_r\alpha_{s+}$, $^i_r\alpha_{s-}$, latitudes $^i_r\beta_{s+}$, $^i_r\beta_{s-}$) of the cross points $^i_rn_{s+}$, $^i_rn_{s-}$ are computed in accordance with the following equations with modification of the equation (65c).

$$^i_r\beta_{st}=r$$

$$^i_r\beta_{s-}=r \tag{230a}$$

$$^i_r\alpha_{s+}=_i\alpha_c+\cos^{-1}(((_nd_s \sin(_id-_ic)/\sin(_id))$$
$$-\cos(r)\cos(_ic))/(\sin(r)-\sin(_ic)))$$
$$^i_r\alpha_{s-}=_i\alpha_c-\cos^{-1}(((_nd_s \sin(_id-_ic)/\sin(_id))$$
$$-\cos(r)\cos(_ic))/(\sin(r)-\sin(_ic)))$$
$$\tag{230b}$$

where $_i\alpha_c$ and $_ic$ denote the longitude coordinates and the latitude coordinates of $_ip_R$ , respectively, and $_id$ denotes the latitude coordinates of $_ip_L$ (cf. Fig. 26 and Fig 23).
(7) Points $^i_rn_{s+}$, $^i_rn_{s-}$ constituting the above-mentioned small circle are transformed to points $^i_rn_{s+,Proj}$, $^i_rn_{s-,Proj}$ represented by polar coordinates (inclination $^i_r\alpha_{s+,Proj}$, $^i_r\alpha_{s-,Proj}$, and radius $^i_r\beta_{s+,Proj}$, $^i_r\beta_{s-,Proj}$ ) in the sectional circle of height $_nd_s$ of a "cylindrical arrangement voting unit 224", and voting is performed (C-7-10).

(Scan r (C-7-11)

(8) In the processing up to here, there is drawn one small circle, wherein the point of the position $_ip_r$ is subjected to the transformation, in the sectional circle of $_nd_s$ in height. It is noted that the small circle has been transformed in accordance with the equations (201a) to (201c).

(Scan i (C-7-12))

(9) In the processing up to here, there are drawn small circles, wherein "all the points $\{_ip_R\}$ in the image" are subjected to the transformation, in the sectional circle of $_nd_s$ in height.

(Scan $_nd_s$ (C-7-13))

(10) In the processing up to here, there are drawn small circles, wherein "all the points $\{_ip_R\}$ in the image" are subjected to the transformation, in the sectional circles of $\{_nd_s\}$ in all the heights. That is, the voting is performed for the inside of all the sectional circles of the cylindrical arrangement.

(11) Extract a "point wherein the voted intensity offers the maximum (peak)" in the cylindrical arrangement, by a "peak extraction unit 225". This maximum point is a "place wherein the small circles intersect with each other at one point". The normalization shortest distance $_nd_s$ is determined in the form of a "height coordinates" of the maximum point, and the "three-dimensionalazimuth $n_{s0}$ of the plane" is determined in the form of a "sectional circle inside coordinates" (C-7-14).

(End)

Embodiment C-8. (Measurement of a three-dimensional azimuth $n_{s0}$ of a plane and a normalization shortest distance $_nd_{s0}$ without determination of an optical axis direction $a_{xis}$ ).

This measurement, that is, the method of 4. 3. 3 will be explained in conjunction with the embodiment of Fig. 85 with respect to 4. 3. 1, which is one wherein the embodiment C-7 is modified. It is performed in accordance with a flowchart shown in Fig. 86. The following steps (2) - (10) are the same as the corresponding steps of the embodiment B-3.

(Start)

(0) Scan an "optical axis direction $a_{xis}$ " over any possible directions (from the minimum value $a_{xis, min}$ to the maximum value $a_{xis, max}$ ) by a "scan unit for $a_{xis}$ parameter 121" (C-8-1, C-8-2, C-8-16).

(Scan $a_{xis}$ )

(1) Set up the "position $P_{axis}$ on the optical axis", as being equal to the parameter $a_{xis}$ , by a "$P_{axis}$ set unit 115" (C-8-3).

(2) Scan a normalization shortest distance parameter $_nd_s$ by a "scan unit for $_nd_s$ parameter 221" from the minimum value $_nd_{s, min}$ to the maximum value $_nd_{s, max}$ (C-8-4, C-8-5, C-8-15).

(Scan $_nd_s$)

(3) Scan the respective addresses from the minimum value $i_{min}$ to the maximum value $i_{max}$ (C-8-6, C-8-7, C-8-14).

(Scan i )

(4) Output positions $_ip_R$ and $_ip_L$ on the right camera and the left camera from the "register 112 for an image on right camera" and the "register 113 for an image on left camera", respectively (C-8-8).

(5) Consider a circle (Fig. 26) of radius r taking the moving direction v as the center, and scan the radius r from 0 to $\pi/2$ by a "scan unit for radius r 222" (C-8-9, C-8-10, C-8-13).

(6) Feed five parameters $_nd_s$, $_ip_R$, $_ip_L$, $p_{axis}$, r thus set up to a "computing unit 223 for small circle structural element $^i_rn_{s+}$, $^i_rn_{s-}$ " and output two cross points $^i_rn_{s+}$, $^i_rn_{s-}$ in 4. 3. 1 (4) (C-8-11).

(7) Points $^i_rn_{s+}$, $^i_rn_{s-}$ constituting the above-mentioned small circle are transformed to points $^i_rn_{s+,Proj}$, $^i_rn_{s-,Proj}$ represented by polar coordinates (inclination $^i_r\alpha_{s+,Proj}$, $^i_r\alpha_{s-,Proj}$, and radius $^i_r\beta_{s+,Proj}$, $^i_r\beta_{s-,Proj}$ ) in the sectional circle of height $_nd_s$ of a "cylindrical arrangement voting unit 224", and voting is performed (C-8-12).

(Scan r (C-8-13)

(8) In the processing up to here, there is drawn one small circle, wherein the point of the position $_ip_0$ is subjected to the transformation, in the sectional circle of $_nd_s$ in height. It is noted that the small circle has been transformed in accordance with the equations (201a) to (201c).

(Scan i (C-8-14))

(9) In the processing up to here, there are drawn small circles, wherein "all the points $\{_ip_R\}$ in the image" are subjected to the transformation, in the sectional circle of $_nd_s$ in height.

(Scan $_nd_s$ (C-8-15))

(10) In the processing up to here, there are drawn small circles, wherein "all the points $\{_ip_R\}$ in the image" are subjected to the transformation, in the sectional circles of $\{_nd_s\}$ in all the heights. That is, the voting is performed for the inside of all the sectional circles of the cylindrical arrangement.
(Scan $a_{xis}$ (C-8-16))
(11) In the processing up to here, the voting is performed for all the sectional circles of the "cylindrical arrangements for all the optical axis direction parameters $a_{xis}$ ".
(12) Extract a "specified cylindrical arrangement" wherein the intensity offers the maximum from among the cylindrical arrangements, by a "peak extraction unit 225". Thus, a true moving direction $a_{xis0}$ is determined in the form of the optical axis direction parameter for this arrangement. When a point, wherein the intensity offers the peak in the cylindrical arrangement, is extracted, the normalization shortest distance $_nd_s$ is determined in the form of a "height coordinates" of the maximum point, and the three-dimensional azimuth $n_{s0}$ of the plane is determined in the form of a "sectional circle inside coordinates" (C-8-17).

(End)

Embodiment D-5. (Stereo + a normalized distance)

Fig. 95 is a block diagram of an embodiment D-5 of the present invention. Fig. 96 is a flowchart of the embodiment D-5.

(1) In a similar fashion to that of the embodiment B-1, set up the "position $P_{axis}$ on the optical axis", as being equal to the optical axis direction $a_{xis}$ , by a "$P_{axis}$ set unit 115" (D-5-1).
(2) Scan the respective addresses i from the minimum value $i_{min}$ to the maximum value $i_{max}$ by a "scan unit 421 for pixel No. i" (D-5-2, D-5-3, D-5-17).

(Scan i )

(3) Cut and bring down images on local areas taking a "pixel $_ip_R$ associated with the address i" as the center from images, which are obtained by a right camera 412 and a left camera 413, respectively, as shown in Fig. 167, by a "unit 422 for cutting and bringing down images on local areas taking $_ip_R$ as the center" (D-5-4).
(4) Scan the binocular parallax No. k from the minimum value $k_{min}$ to the maximum value $k_{max}$ by a " scan unit 423 for binocular parallax No. k" (D-5-5, D-5-6, D-5-16).

(Scan k )

(5) The number k is a serial number of the binocular parallax, and is associated with the binocular parallax $_k\sigma$, that is, the parallactic vector $(_k\sigma_x {}_k\sigma_y)$ , as shown in Fig. 168. Such an association is performed by a "transformation unit 424 for binocular parallax $_k\sigma$" to output the binocular parallax $_k\sigma$ (D-5-7).
In the event that the direction of the binocular parallax $_k\sigma$, that is, the parallactic vector $(_k\sigma_x {}_k\sigma_y)$ is different from the "direction from $_ip_R$ to a $_{xis}$ (that is, p $_{axis}$ ) in Fig. 24(A), it is the binocular parallax which conflicts with this optical axis direction a $_{xis}$ . Thus, in this case, the process skips to the step (10) (D-5-8).
(6) Feed the "images on local areas on the right camera and the left camera "and the "binocular parallax $_k$ σ" to a "binocular parallax detection unit 425" (cf. Fig. 167) to compute the response intensity in accordance with the following equation (D-5-9).

$$\text{Response intensity} = \Sigma_x\Sigma_y\,_ia_R\,(x,\,y)_i\,a_L\,(x\text{-}_k\sigma_x,\,y\text{-}_k\sigma_y) \qquad (302)$$

Here, $_ia_R$ (x, y) and $_ia_L$ (x,y) denote intensity of (x, y) pixels on an image on a local area on the right camera (cf. the upper left of Fig. 167) and intensity of (x, y) pixels on an image on a local area on the left camera (cf. the lower left of Fig. 167), respectively.
Incidentally, with respect to the computation of the above-mentioned response intensity, for the purpose of simplification, there is shown the two-dimensional correlation. However, it is acceptable to adopt a two-dimensional correlation according to the difference absolute value generally used in the MPEG2 encoder for example, a two-dimensional correlation according to the multiplicative operation, and a correlation according to the Hough transformation and the inverse Hough transformation ("A method of performing a two-dimensional correlation and a convolution along the $\rho$ coordinates on the Hough plane on a one-dimensional basis by Kawakami, S. and Okamoto, H., SINNGAKUGIHOU, vol. IE96-19, pp. 31-38, 1996; and Japanese Patent Laid Open Gazettes Hei. 05-165956, Hei. 06-165957, Hei. 06-044364, and Hei. 09-081369). Further, it is also acceptable to adopt a method of detecting the velocity such as a differential gradient method. That is, anyone is acceptable, as the response intensity, which is determined in accordance with intensity of a pixel.

(7) Scan a normalized time parameter $_nd_c$ by a "scan unit for $_nd_c$ parameter 116" from the minimum value $_nd_{c,\,min}$ to the maximum value $_nd_{c,\,max}$ (D-5-10, D-5-11, D-5-15).

(Scan $_nd_c$)

The following processing is performed in a similar fashion to that of the above-mentioned embodiment B-6. But, the present embodiment D-5 is different from the embodiment B-6 in the point that in the step (10) such a processing that "the response intensity of the binocular parallax detection unit is voted" is performed.

(8) Transform the pixel No. i to the pixel $_ip_R$ in an $_ip_R$ transformation unit (426), and feed four parameters $_nd_c$, $_k\sigma$, $_ip_R$, $p_{axis}$ thus set up to a "compound ratio transformation unit 117" and output a position $_{ik}p_c$ (D-5-12).
(9) The above-mentioned position $_{ik}p_c$ is subjected to a polar transformation into a large circle on a sphere by a "polar transformation unit 118" to output the position $\{_{ik}p_{GC}\}$ of points constituting the large circle (D-5-13).
(10) The "response intensity of the binocular parallax detection unit 425" is voted for "points on the large circle of height $_nd_c$ " of a "cylindrical arrangement voting unit 119" (D-5-14). In the processing up to here, there is drawn one large circle, wherein the point of the position $_ip_R$ is subjected to "the compound ratio transformation and the polar transformation", in the sectional circle of $_nd_c$ in height.

(Scan $_nd_c$ (D-5-15))
(Scan k (D-5-16))
(Scan i (D-5-17))

(11) In the processing up to here, there are drawn large circles, wherein "all the points $\{_ip_R\}$ in the image" are subjected to the compound ratio transformation and the polar transformation, in the sectional circles of $\{_nd_c\}$ in all the heights. That is, the voting is performed for the inside of all the sectional circles of the cylindrical arrangement.
(12) Extract a "point wherein the voted intensity offers the maximum (peak)" in the cylindrical arrangement, by a "peak extraction unit 120". This maximum point is a "place wherein the large circles intersect with each other at one point". The "normalized distance $_nd_{c0}$ up to going across the plane" is determined in the form of a "height coordinates" of the maximum point, and the "three-dimensional azimuth $n_{s0}$ of the plane" is determined in the form of a "sectional circle inside coordinates" (D-5-18).

In the above, the normalized distance $_nd_c$ is referred to. However, since $\Delta x_{LR}$ is constant, it is acceptable that the distance is replaced by the absolute distance $d_c$ (that is, $_nd_c\Delta x_{LR}$). In this respect, the theory is applicable to all the embodiments dealing with the normalized distance $_nd_c$.

Embodiment D-6. (Stereo + a normalized distance + a $_{xis}$ unknown)

Fig. 97 is a block diagram of an embodiment D-6 of the present invention. Fig. 98 is a flowchart of the embodiment D-6.
The following steps (2) - (11) are the same as the corresponding steps of the embodiment D-5.

(0) Scan an "optical axis direction parameter a $_{xis}$" over any possible directions (from the minimum value a $_{xis,\,min}$ to the maximum value a $_{xis,\,max}$) by a "scan unit for a $_{xis}$ parameter 121" (D-6-1, D-6-2, D-6-20).

(Scan a $_{xis}$)

(1) Set up the "position $P_{axis}$ on the optical axis", as being equal to the parameter a $_{xis}$, by a "$P_{axis}$ set unit 115" (D-6-3).
(2) Scan the respective addresses i from the minimum value i $_{min}$ to the maximum value i $_{max}$ by a "scan unit 421 for pixel No. i" (D-6-4, D-6-5, D-6-19).

(Scan i )

(3) Cut and bring down images on local areas taking a "pixel $_i p_R$ associated with the address i" as the center from images, which are obtained by a right camera 412 and a left camera 413, respectively, as shown in Fig. 167, by a "unit 422 for cutting and bringing down images on local areas taking $_i p_R$ as the center" (D-6-6).
(4) Scan the binocular parallax No. k from the minimum value $k_{min}$ to the maximum value $k_{max}$ by a "scan unit 423 for binocular parallax No. k" (D-6-7, D-6-8, D-6-18).

(Scan k )

(5) In a similar fashion to that of the step (5) of the embodiment D-5, the number k is transformed to the binocular parallax $_k\sigma$ by a "transformation unit 424 for binocular parallax $_k\sigma$" to output the binocular parallax $_k\sigma$ (D-6-9).
In the event that the direction of the binocular parallax $_k\sigma$, that is, the parallactic vector $(_k\sigma_x {}_k\sigma_y)$ is different from the "direction from $_i p_R$ to a $_{xis}$ (that is, $p_{axis}$) in Fig. 24(A), it is the binocular parallax which conflicts with this optical axis direction a $_{xis}$. Thus, in this case, the process skips to the step (10) (D-6-10).
(6) Feed the "images on local areas on the right camera and the left camera " and the "binocular parallax $_k\sigma$" to a "binocular parallax detection unit 425" (cf. Fig. 167) to compute the response intensity in accordance with the following equation (D-6-11).

$$\text{Response intensity} = \Sigma_x \Sigma_y {}_i a_R (x, y) {}_i a_L (x - {}_k\sigma_x, y - {}_k\sigma_y)$$

(7) Scan a normalized time parameter $_n d_c$ by a "scan unit for $_n d_c$ parameter 16" from the minimum value $_n d_{c, min}$ to the maximum value $_n d_{c, max}$ (D-6-12, D-6-13, D-6-17).

(Scan $_n d_c$)
The following processing is performed in a similar fashion to that of the above-mentioned embodiment B-6. But, the present embodiment D-5 is different from the embodiment B-6 in the point that in the step (10) such a processing that "the response intensity of the binocular parallax detection unit is voted" is performed.

(8) Transform the pixel No. i to the pixel $_i p_R$ in an "$_i p_R$ transformation unit (426), and feed four parameters $_n d_c$, $_k\sigma$, $_i p_R$, $p_{axis}$ thus set up to a "compound ratio transformation unit 117" and output a position $_{ik} p_c$ (D-6-14).
(9) The above-mentioned position $_{ik} p_c$ is subjected to a polar transformation into a large circle on a sphere by a "polar transformation unit 118" to output the position $\{_{ik} p_{GC}\}$ of points constituting the large circle (D-6-15).
(10) The "response intensity of the binocular parallax detection unit 425" is voted for "points on the large circle of height $_n d_c$ " of a "cylindrical arrangement voting unit 119" (D-6-16). In the processing up to here, there is drawn one large circle, wherein the point of the position $_i p_R$ is subjected to "the compound ratio transformation and the polar transformation", in the sectional circle of $_n d_c$ in height.

(Scan $_n d_c$ (D-6-17))
(Scan k (D-6-18))
(Scan i (D-6-19))

(11) In the processing up to here, there are drawn large circles, wherein "all the points $\{_i p_R\}$ in the image" are subjected to the compound ratio transformation and the polar transformation, in the sectional circles of $\{_n d_c\}$ in all the heights. That is, the voting is performed for the inside of all the sectional circles of the cylindrical arrangement.

(scan a$_{xis}$ (B-6-20))

(12) In the processing up to here, the voting is performed for all the sectional circles of the "cylindrical arrangements for all the optical axis direction parameters axis ".
(13) Extract a "specified cylindrical arrangement" wherein the intensity offers the maximum from among the cylindrical arrangements, by a "peak extraction unit 120" (D-6-21). Thus, a true optical axis direction parameters $a_{xis0}$ is determined in the form of the optical axis direction parameters for this arrangement. When a point, wherein the intensity offers the peak in the cylindrical arrangement, is extracted, the normalized distance $_n d_{c0}$ up to going across the plane is determined in the form of a "height coordinates" of the maximum point, and the three-dimensional azimuth $n_{s0}$ of the plane is determined in the form of a "sectional circle inside coordinates".

Embodiment D-7. (Stereo + a normalization shortest distance)

Fig. 99 is a block diagram of an embodiment D-6 of the present invention. Fig. 100 is a flowchart of the embodiment D-6.

(1) In a similar fashion to that of the embodiment B-1, set up the "position $P_{axis}$ on the optical axis", as being equal to the optical axis direction $a_{xis}$, by a "$P_{axis}$ set unit 115" (D-7-1).

(2) Scan the respective addresses i from the minimum value $i_{min}$ to the maximum value $i_{max}$ by a "scan unit 421 for pixel No. i" (D-7-2, D-7-3, D-7-17).

(Scan i )

(3) Cut and bring down images on local areas taking a "pixel $_ip_R$ associated with the address i" as the center from images, which are obtained by a right camera 412 and a left camera 413, respectively, as shown in Fig. 167, by a "unit 422 for cutting and bringing down images on local areas taking $_ip_R$ as the center" (D-7-4).

(4) Scan the binocular parallax No. k from the minimum value $k_{min}$ to the maximum value $k_{max}$ by a "scan unit 423 for binocular parallax No. k" (D-7-5, D-7-6, D-7-16).

(5) The number k is a serial number of the binocular parallax, and is associated with the binocular parallax $_k\sigma$, that is, the parallactic vector $(_k\sigma_x {}_k\sigma_y)$, as shown in Fig. 168. Such an association is performed by a "transformation unit 424 for binocular parallax $_k\sigma$" to output the binocular parallax $_k\sigma$ (D-7-7). In the event that the direction of the binocular parallax $_k\sigma$, that is, the parallactic vector $(_k\sigma_x {}_k\sigma_y)$ is different from the "direction from $_ip_R$ to a $_{xis}$ (that is, $p_{axis}$) in Fig. 24(A), it is the binocular parallax which conflicts with this. optical axis direction $a_{xis}$. Thus, in this case, the process skips to the step (10) (D-7-8).

(6) In a similar fashion to that of the step (6) of the embodiment D-5, feed the "images on local areas on the right camera and the left camera " and the "binocular parallax $_k\sigma$" to a "binocular parallax detection unit 425" (cf. Fig. 167) to compute the response intensity in accordance with the following equation (D-7-9).

$$\text{Response intensity} = \Sigma_x\Sigma_y \, {}_ia_R (x, y) \, {}_ia_L (x - {}_k\sigma_x, y - {}_k\sigma_y)$$

(7) Scan a normalized time parameter $_nd_s$ by a "scan unit for $_nd_s$ parameter 122" from the minimum value $_nd_{s, min}$ to the maximum value $_nd_{s, max}$ (D-7-10, D-7-11, D-7-15).

(Scan $_nd_s$)

The following processing is performed in a similar fashion to that of the above-mentioned embodiment B-8. But, the present embodiment D-7 is different from the embodiment B-8 in the point that in the step (10) such a processing that "the response intensity of the binocular parallax detection unit is voted" is performed.

(8) Transform the pixel No. i to the pixel $_ip_R$ in an "$_ip_R$ transformation unit (426), and in a similar fashion to that of the step (6) of the embodiment B-8, feed four parameters $_nd_s$, $_k\sigma$, $_ip_R$, $p_{axis}$ thus set up to a "computing unit 123 for radius R " and output a radius $_{ik}R$ and a position $_ip_R$ (D-7-12). In the unit 123, the radius $_{ik}R$ is computed with the following equation.

$$_{ik}R = \cos^{-1} (_nd_s \sin {}_k\sigma / \sin (_ic + {}_k\sigma))$$

(9) In a similar fashion to that of the step (7) of the embodiment B-8, the above-mentioned radius $_{ik}R$ and position $_ip_R$ are fed to a "small circle transformation unit 124" to perform a small circle transformation wherein the position $_ip_R$ is transformed to a "small circle on a sphere" of the radius $_{ik}R$ taking the position $_ip_R$ as the center (D-7-13).

(10) In a similar fashion to that of the steps (8) to (9) of the embodiment B-8, the response intensity of the binocular parallax detection unit 425 is voted for "points on the small circle of height $_nd_s$ " of a "cylindrical arrangement voting unit 125" (D-7-14). In the processing up to here, there is drawn one small circle, wherein the point of the position $_ip_R$ is subjected to "the small circle transformation", in the sectional circle of $_nd_s$ in height.

(Scan $_nd_s$ (D-7-15))
(Scan k (D-7-16))
(Scan i (D-7-17))

(11) In the processing up to here, there are drawn small circles, wherein "all the points $\{_ip_R\}$ in the image" are subjected to the small circle transformation, in the sectional circles of $\{_nd_s\}$ in all the heights. That is, the voting is performed for the inside of all the sectional circles of the cylindrical arrangement.

(12) Extract a "point wherein the voted intensity offers the maximum (peak)" in the cylindrical arrangement, by a "peak extraction unit 126". This maximum point is a "place wherein the small circles intersect with each other at one point". The "normalized distance $_nd_{s0}$ up to going across the plane" is determined in the form of a "height coordinates" of the maximum point, and the "three-dimensional azimuth $n_{s0}$ of the plane" is determined in the form of a "sectional circle inside coordinates" (D-7-18).

Embodiment D-8. (Stereo + a normalization shortest distance + a $_{xis}$ unknown)

Fig. 101 is a block diagram of an embodiment D-6 of the present invention. Fig. 102 is a flowchart of the embodiment D-6.

The following steps (2) - (11) are the same as the corresponding steps of the embodiment D-7.

(0) Scan an "optical axis direction parameter a $_{xis}$ " over any possible directions (from the minimum value a $_{xis, min}$ to the maximum value $a_{xis, max}$ ) by a "scan unit for a $_{xis}$ parameter 121" (D-8-1, D-8-2, D-8-20).

(Scan a $_{xis}$ )

(1) Set up the "position $P_{axis}$ on the optical axis", as being equal to the parameter $a_{xis}$, by a "$P_{axis}$ set unit 115" (D-8-3).

(2) Scan the respective addresses i from the minimum value i $_{min}$ to the maximum value i $_{max}$ by a "scan unit 421 for pixel No. i" (D-8-4, D-8-5, D-8-19).

(Scan i )

(3) Cut and bring down images on local areas taking a "pixel $_ip_R$ associated with the address i" as the center from images, which are obtained by a right camera 412 and a left camera 413, respectively, as shown in Fig. 167, by a "unit 422 for cutting and bringing down images on local areas taking $_ip_R$ as the center" (D-8-6).

(4) Scan the binocular parallax No. k from the minimum value k $_{min}$ to the maximum value k $_{max}$ by a "scan unit 423 for binocular parallax No. k" (D-8-7, D-8-8, D-8-18).

(5) The number k is a serial number of the binocular parallax, and is associated with the binocular parallax $_k\sigma$. that is, the parallactic vector $(_k\sigma_x {}_k\sigma_y)$, as shown in Fig. 168. Such an association is performed by a "transformation unit 424 for binocular parallax $_k\sigma$" to output the binocular parallax $_k\sigma$ (D-8-9). In the event that the direction of the binocular parallax $_k\sigma$, that is, the parallactic vector $(_k\sigma_x {}_k\sigma_y)$ is different from the "direction from $_ip_R$ to a $_{xis}$ (that is, p $_{axis}$) in Fig. 24(A), it is the binocular parallax which conflicts with this optical axis direction a $_{xis}$. Thus, in this case, the process skips to the step (10.) (D-8-10).

(6) In a similar fashion to that of the step (6) of the embodiment D-5, feed the "images on local areas on the right camera and the left camera " and the "binocular parallax $_k\sigma$" to a "binocular parallax detection unit 425" (cf. Fig. 167) to compute the response intensity in accordance with the following equation (D-8-11).

$$\text{Response intensity} = \Sigma_x \Sigma_y {}_ia_R (x, y) {}_ia_L (x-{}_k\sigma_x, y-{}_k\sigma_y)$$

(7) Scan a normalized time parameter $_nd_s$ by a "scan unit for $_nd_s$ parameter 122" from the minimum value $_nd_{s, min}$ to the maximum value $_nd_{s, max}$ (D-8-12, D-8-13, D-8-17).

(Scan $_nd_s$)

The following processing is performed in a similar fashion to that of the above-mentioned embodiment B-8. But, the present embodiment D-8 is different from the embodiment B-8 in the point that in the step (10) such a processing that "the response; intensity of the binocular parallax detection unit is voted" is performed.

(8) Transform the pixel No. i to the pixel $_ip_R$ in an "$_ip_R$ transformation unit (426)", and in a similar fashion to that of the step (6) of the embodiment B-8, feed four parameters $_nd_s, {}_k\sigma, {}_ip_R, p_{axis}$ thus set up to a "computing unit 123 for radius R " and output a radius $_{ik}R$ and a position $_ip_R$ (D-8-14). In the unit 123, the radius $_{ik}R$ is computed with the following equation.

$$_{ik}R = \cos^{-1}(_nd_s \sin{}_k\sigma/\sin({}_ic + {}_k\sigma))$$

(9) In a similar fashion to that of the step (7) of the embodiment B-8, the above-mentioned radius $_{ik}R$ and position $_ip_R$ are fed to a "small circle transformation unit 124" to perform a small circle transformation wherein the position $_ip_R$ is transformed to a "small circle on a sphere" of the radius $_{ik}R$ taking the position $_ip_R$ as the center (D-8-15).

(10) In a similar fashion to that of the steps (8) to (9) of the embodiment B-8, the response intensity of the binocular parallax detection unit 425 is voted for "points on the small circle of height $_nd_s$" of a "cylindrical arrangement voting unit 125" (D-8-16). In the processing up to here, there is drawn one small circle, wherein the point of the position $_ip_R$ is subjected to "the small circle transformation", in the sectional circle of $_nd_s$ in height.

(Scan $_nd_s$ (D-8-17))
(Scan k (D-8-18))
(Scan i (D-8-19))

(11) In the processing up to here, there are drawn small circles, wherein "all the points $\{_ip_R\}$ in the image" are subjected to the small circle transformation, in the sectional circles of $\{_nd_s\}$ in all the heights. That is, the voting is performed for the inside of all the sectional circles of the cylindrical arrangement.

(12) In the processing up to here, the voting is performed for all the sectional circles of the "cylindrical arrangements for all the optical axis direction parameters a$_{xis}$".

(13) Extract a "specified cylindrical arrangement" wherein the intensity offers the maximum from among the cylindrical arrangements, by a "peak extraction unit 126". Thus, a true moving direction a$_{xis0}$ is determined in the form of the optical axis direction parameter for this arrangement. When a point, wherein the intensity offers the peak in the cylindrical arrangement, is extracted, the normalization shortest distance $_nd_s$ is determined in the form of a "height coordinates" of the maximum point, and the three-dimensional azimuth n$_{s0}$ of the plane is determined in the form of a "sectional circle inside coordinates" (D-8-21).

Embodiment D-11. (Stereo + a normalization shortest distance)

Fig. 107 is a block diagram of an embodiment D-11 of the present invention. Fig. 108 is a flowchart of the embodiment D-11.

(1) In a similar fashion to that of the embodiment B-1, set up the "position P$_{axis}$ on the optical axis", as being equal to the optical axis direction a$_{xis}$, by a "P$_{axis}$ set unit 115" (D-11-1).

(2) Scan the respective addresses i from the minimum value i$_{min}$ to the maximum value i$_{max}$ by a "scan unit 421 for pixel No. i" (D-11-2, D-11-3, D-11-19).

(Scan i )

(3) Cut and bring down images on local areas taking a "pixel $_ip_R$ associated with the address i" as the center from images, which are obtained by a right camera 412 and a left camera 413, respectively, as shown in Fig. 167, by a "unit 422 for cutting and bringing down images on local areas taking $_ip_R$ as the center" (D-11-4).

(4) Scan the binocular parallax No. k from the minimum value k$_{min}$ to the maximum value k$_{max}$ by a "scan unit 423 for binocular parallax No. k" (D-11-5, D-11-6, D-11-18).

(5) The number k is a serial number of the binocular parallax, and is associated with the binocular parallax $_k\sigma$, that is, the parallactic vector ($_k\sigma_x {}_k\sigma_y$), as shown in Fig. 168. Such an association is performed by a "transformation unit 424 for binocular parallax $_k\sigma$" to output the binocular parallax $_k\sigma$ (D-11-7). In the event that the direction of the binocular parallax $_k\sigma$, that is, the parallactic vector ($_k\sigma_x {}_k\sigma_y$) is different from the "direction from $_ip_R$ to a $_{xis}$ (that is, p $_{axis}$) in Fig. 24(A), it is the binocular parallax which conflicts with this optical axis direction a $_{xis}$. Thus, in this case, the process skips to the step (10) (D-11-8).

(6) In a similar fashion to that of the step (6) of the embodiment D-5, feed the "images on local areas on the right camera and the left camera " and the "binocular parallax $_k\sigma$" to a "binocular parallax detection unit 425" (cf. Fig. 167) to compute the response intensity in accordance with the following equation (D-11-9).

$$\text{Response intensity} = \Sigma_x\Sigma_y {}_ia_R(x, y) {}_ia_L(x-{}_k\sigma_x, y-{}_k\sigma_y)$$

(7) Scan a normalized time parameter $_nd_s$ by a "scan unit for $_nd_s$ parameter 122" from the minimum value $_nd_{s, min}$

to the maximum value $_nd_{s,\,max}$ (D-11-10, D-11-11, D-11-17).

(Scan $_nd_s$ )

The following processing is performed in a similar fashion to that of the above-mentioned embodiment C-3. But, the present embodiment D-11 is different from the embodiment C-3 in the point that in the step (10) such a processing that "the response intensity of the binocular parallax detection unit is voted" is performed.

(8) Consider a circle (Fig. 26) of radius r taking the moving direction v as the center, and scan the radius r from 0 to $\pi/2$ by a "scan unit for radius r 222" (D-11-12, D-11-13, D-11-16).

(Scan r)

(9) Transform the pixel No. i to the pixel $_ip_R$ in an $_ip_R$ transformation unit (426), and feed five parameters $_nd_s$, $_ip_R$, $p_{inf}$, $_i\sigma$, r thus set up to a "computing unit 223 for small circle structural element $^i_rn_{s+}$, $^i_rn_{s-}$" and output two cross points $^i_rn_{s+}$, $^i_rn_{s-}$ explained with reference to Fig. 26 (D-11-14).

(10) Points $^i_rn_{s+}$, $^i_rn_{s-}$ constituting the above-mentioned small circle are transformed to points in the sectional circle of height $_nd_s$ of a "cylindrical arrangement voting unit 224". Next, "the response intensity of the binocular parallax detection unit", which is calculated in the step (6), is voted for those points thus transformed (D-11-15).

(Scan r (D-11-16)).

(11) In the processing up to here, there is drawn one small circle, wherein the point of the position $_ip_R$ is subjected to the transformation, in the sectional circle of $_nd_s$ in height.

(Scan $_nd_s$ (D-11-17))
(Scan k (D-11-18))
(Scan i (D-11-19))

(12) In the processing up to here, there are drawn small circles, wherein "all the points $\{_ip_R\}$ in the image" are subjected to the small circle transformation, in the sectional circles of $\{_nd_s\}$ in all the heights. That is, the voting is performed for the inside of all the sectional circles of the cylindrical arrangement.

(13) Extract a "point wherein the voted intensity offers the maximum (peak)" in the cylindrical arrangement, by a "peak extraction unit 225" (C-1-15). This maximum point is a "place wherein the small circles intersect with each other at one point". The normalization shortest distance $_nd_{s0}$ is determined in the form of a "height coordinates" of the maximum point, and the "three-dimensional azimuth $n_{s0}$ of the plane" is determined in the form of a "sectional circle inside coordinates" .

In the above, the normalization shortest distance $_nd_s$ is referred to. However, since $\Delta x_{LR}$ is constant, it is acceptable that the distance is replaced by the shortest distance $d_s$ (that is, $_nd_s\Delta x_{LR}$). In this respect, the theory is applicable to all the embodiments dealing with the normalization shortest distance $_nd_s$.

Embodiment D-12. (Stereo + a normalization shortest distance $a_{xis}$ unknown)

Fig. 109 is a block diagram of an embodiment D-12 of the present invention. Fig. 110 is a flowchart of the embodiment D-12.
The following steps (2) - (11) are the same as the corresponding steps of the embodiment D-11.

(0) Scan an "optical axis direction parameter $a_{xis}$ " over any possible directions (from the minimum value $a_{xis,\,min}$ to the maximum value $a_{xis,\,max}$ ) by a "scan unit for $a_{xis}$ parameter 121" (D-12-1, D-12-2, D-12-22).
(1) Set up the "position $P_{axis}$ on the optical axis", as being equal to the parameter $a_{xis}$ , by a "$P_{axis}$ set unit 115" (D-12-3).

(Scan $a_{xis}$ )

(2) Scan the respective addresses i from the minimum value $i_{min}$ to the maximum value $i_{max}$ by a "scan unit 421 for pixel No. i" (D-12-4, D-12-5, D-12-21).

(Scan i )

(3) Cut and bring down images on local areas taking a "pixel $_ip_R$ associated with the address i" as the center from images, which are obtained by a right camera 412 and a left camera 413, respectively, as shown in Fig. 167, by a "unit 422 for cutting and bringing down images on local areas taking $_ip_R$ as the center" (D-12-6).

(4) Scan the binocular parallax No. k from the minimum value $k_{min}$ to the maximum value $k_{max}$ by a "scan unit 423 for binocular parallax No. k" (D-12-7, D-12-8, D-12-20).

(5) The number k is a serial number of the binocular parallax, and is associated with the binocular parallax $_k\sigma$, that is, the parallactic vector $(_k\sigma_x {}_k\sigma_y)$, as shown in Fig. 168. Such an association is performed by a "transformation unit 424 for binocular parallax $_k\sigma$" to output the binocular parallax $_k\sigma$ (D-12-9). In the event that the direction of the binocular parallax $_k\sigma$, that is, the parallactic vector $(_k\sigma_x {}_k\sigma_y)$ is different from the "direction from $_ip_R$ to a $_{xis}$ (that is, p $_{axis}$) in Fig. 24(A), it is the binocular parallax which conflicts with this optical axis direction a $_{xis}$. Thus, in this case, the process skips to the step (10) (D-12-10).

(6) In a similar fashion to that of the step (6) of the embodiment D-5, feed the "images on local areas on the right camera and the left camera " and the "binocular parallax $_k\sigma$" to a "binocular parallax detection unit 425" (cf. Fig. 167) to compute the response intensity in accordance with the following equation (D-12-11).

$$\text{Response intensity} = \Sigma_x\Sigma_y {}_ia_R\ (x,\ y)\ {}_ia_L\ (x{-}_k\sigma_x,\ y{-}_k\sigma_y)$$

(7) Scan a normalized time parameter $_nd_s$ by a "scan unit for $_nd_s$ parameter 122" from the minimum value $_nd_{s,\ min}$ to the maximum value $_nd_{s,\ max}$ (D-12-12, D-12-13, D-12-19).

(Scan $_nd_s$ )

The following processing is performed in a similar fashion to that of the above-mentioned embodiment C-4. But, the present embodiment D-12 is different from the embodiment C-4 in the point that in the step (10) such a processing that "the response intensity of the binocular parallax detection unit is voted" is performed.

(8) Consider a circle (Fig. 26) of radius r taking the moving direction v as the center, and scan the radius r from 0 to $\pi/2$ by a "scan unit for radius r 222" (D-12-14, D-12-15, D-12-18).

(Scan r)

(9) Transform the pixel No. i to the pixel $_ip_R$ in an $_ip_R$ transformation unit (426), and feed five parameters $_nd_s$, $_ip_R$, $p_{inf}$, $_i\sigma$, r thus set up to a "computing unit 223 for small circle structural element $^i_rn_{s+}$, $^i_rn_{s-}$ " and output two cross points $^i_rn_{s+}$, $^i_rn_{s-}$ explained with reference to Fig. 26 (D-12-16).

(10) Points $^i_rn_{s+}$, $^i_rn_{s-}$ constituting the above-mentioned small circle are transformed to points in the sectional circle of height $_nd_s$ of a "cylindrical arrangement voting unit 224". Next, "the response intensity of the binocular parallax detection unit", which is calculated in the step (6), is voted for those points thus transformed (D-12-17).

(Scan r (D-12-18)).

(11) In the processing up to here, there is drawn one small circle, wherein the point of the position $_ip_R$ is subjected to the transformation, in the sectional circle of $_nd_s$ in height.

(Scan $_nd_s$ (D-12-19))
(Scan k (D-12-20))
(Scan i (D-12-21))

(12) In the processing up to here, there are drawn small circles, wherein "all the points $\{_ip_R\}$ in the image" are subjected to the transformation, in the sectional circles of $\{_nd_s\}$ in all the heights. That is, the voting is performed for the inside of all the sectional circles of the cylindrical arrangement.

(Scan $a_{xis}$ (D-12-22))

(13) In the processing up to here, the voting is performed for all the sectional circles of the "cylindrical arrangements for all the optical axis direction parameters $a_{xis}$".

(14) Extract a "specified cylindrical arrangement" wherein the intensity offers the maximum from among the cylindrical arrangements, by a "peak extraction unit 225". Thus, a true optical axis direction $a_{xis0}$ is determined in the form of the optical axis direction parameter for this arrangement. When a point, wherein the intensity offers the peak in the cylindrical arrangement, is extracted, the normalization shortest distance $_n d_{s0}$ of the plane is determined in the form of a "height coordinates" of the maximum point, and the three-dimensional azimuth $n_{s0}$ of the plane is determined in the form of a "sectional circle inside coordinates" (D-12-23).

Effect of the Invention

1. Binocular vision algorithm

(1) Effects of a method of determining a normalization shortest distance $_n d_s$

As stated in the paragraphs 4. 3. 1 and 4. 3. 2, it is possible to determine a three-dimensional azimuth $n_s$ of a plane and a normalization shortest distance $_n d_s$ through determination of the positions $p_L$, $p_R$ on images as to the left camera and the right camera, respectively, and determination of the "position $p_{axis}$ on an optical axis coupling the left camera and the right camera".

This method of determining a normalization shortest distance is very useful for a "depth separation of a plurality of objects and environments which look like that they are superposed". That is, a "relative depth" and a "gradient" of a plane constituting the objects and the environments can be measured in the form of the normalization shortest distance $_n d_s$ and the three-dimensional azimuth $n_s$. Thus, it is possible to separate and identify the objects and the environments even if they are superposed.

This depth separation is characterized in the point that only determination of the positions $p_L$, $p_R$ on the left camera and the right camera and $p_{axis}$ on the optical axis permits the separation, even if the left camera-to-right camera distance $\Delta x_{LR}$ is unknown. In the event that a shortest distance $ds$ to the plane is needed, it is possible to obtain the shortest distance $ds$ by means of multiplying the "left camera-to-right camera distance $\Delta x_{LR}$" by the normalization shortest distance $_n d_s$.

Further, according to the method described in paragraph 4. 3. 3, it is possible to measure the normalization shortest distance $_n d_s$ and the azimuth $n_s$ only through determination of positions $p_L$ and $p_R$ on the left camera and the right camera, even if $p_{axis}$ (a optical axis direction $a_{xis}$) is unknown. According to this method, for example, in connection with a stereo image on an internet, even if the optical axis direction in photography is unknown, it is possible to measure the "three-dimensional azimuth $n_s$ and the normalization shortest distance $_n d_s$", so that the depth separation can be performed.

Incidentally, the above-mentioned depth separation can be implemented using the "normalized distance $_n d_c$ up to crossing a plane in the optical axis direction" and the "three-dimensional azimuth $n_s$ of a plane" which are measured in the paragraph 4. 2. 3.

The above-mentioned methods are not reported.

**Claims**

1.  An image measurement method of determining an azimuth of a measuring plane and/or a physical quantity indexing a distance between the measuring plane and one observation point of predetermined two observation points in an optical axis direction v coupling said two observation points, using a compound ratio $\{p_{axis}\ p_R p_L p_c\}$, which is determined by four positions $p_{axis}$, $p_R$, $p_L$, $p_c$, or an operation equivalent to said compound ratio, where $p_R$ and $p_L$ denote measuring positions through observation of said two observation points on an arbitrary measuring point appearing on an image obtained through viewing a predetermined measurement space from said two observation points inside the measurement space, respectively, $p_{axis}$ denotes a position of an infinite-point on a straight line extending in a direction identical to the optical axis direction v, including the measuring point, and $p_c$ denotes a position of an intersection point with said straight line on an observation plane extending in parallel to a measuring plane including the measuring point, including one observation point of said two observation points.

2.  An image measurement method according to claim 1, wherein said compound ratio $\{p_{axis}\ p_R p_L p_c\}$ or the operation equivalent to said compound ratio include an operation using the measuring position $p_R$ through observation on said measuring point from one observation point of said two observation points, and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points.

3.  An image measurement method according to claim 1, wherein as said physical quantity indexing a distance between the measuring plane and one observation point of said two observation points in the optical axis direction,

a normalized distance $_nd_c$, which is expressed by the following equation, is adopted,

$$_nd_c = d_c/\Delta x_{LR}$$

where $d_c$ denotes a distance between the measuring plane and one observation point of said two observation points in the optical axis direction, and $\Delta x_{LR}$ denotes a distance between said two observation points, and said normalized distance $_nd_c$ is determined in accordance with the following equation

$$_nd_c = \{p_{axis}p_Rp_Lp_c\}$$

or an equation equivalent to the above equation.

**4.** An image measurement method according to claim 1, wherein an azimuth of a measuring plane including a plurality of measuring points associated with a plurality of polar lines intersecting at a cross point and/or a physical quantity indexing a distance between the measuring plane and one observation point of said two observation points in the optical axis direction are determined in such a manner that a process of determining a polar line associated with the position $p_c$ of the intersection point on the observation plane through a polar transformation for the position $p_c$ is executed as to a plurality of measuring points existing in the measurement space, and cross points of polar lines, which are formed when a plurality of polar lines determined through an execution of said process are drawn on a polar line drawing space, are determined.

**5.** An image measurement method according to claim 1, wherein the measuring point appearing on the image has information as to intensity, and an azimuth of a measuring plane including a plurality of measuring points associated with a plurality of polar lines joining a voting for a maximal point and/or a physical quantity indexing a distance between the measuring plane and one observation point of said two observation points in the optical axis direction are determined in such a manner that a process of determining a polar line associated with the measuring point through a polar transformation for the position $p_c$ of the intersection point on the observation plane , and of voting a value associated with intensity of a measuring point associated with the polar line for each point on a locus of the polar line, which is formed when the polar line thus determined is drawn on a polar line drawing space, is executed as to a plurality of measuring points existing in the measurement space, and a maximal point wherein a value by a voting through an execution of said process offers a maximal value.

**6.** An image measurement method according to claim 1, wherein the measuring point appearing on the image has information as to intensity, and an azimuth of a measuring plane including a plurality of measuring points associated with a plurality of polar lines joining a voting for a maximal point and/or a physical quantity indexing a distance between the measuring plane and one observation point of said two observation points in the optical axis direction are determined in such a manner that a process of determining a polar line associated with the measuring point through a polar transformation for the position $p_c$ of the intersection point on the observation plane, and determining a response intensity associated with a binocular parallax σ, which is a positional difference between the two measuring positions $p_R$ and $p_L$ through observation on said measuring point from said two observation points, and of voting the response intensity associated with the binocular parallax σ of a measuring point associated with the polar line for each point on a locus of the polar line, which is formed when the polar line thus determined is drawn on a polar line drawing space, is executed as to a plurality of measuring points existing in the measurement space, and a maximal point wherein a value by a voting through an execution of said process offers a maximal value is determined.

**7.** An image measurement method according to claim 4, wherein the position $p_c$ of the intersection point on the observation plane is determined using said compound ratio $\{p_{axis}p_Rp_Lp_c\}$ or the operation equivalent to said compound ratio, upon determination of a physical quantity indexing a distance between the measuring plane and one observation point of said two observation points in the optical axis direction, the two measuring positions $p_R$ and $p_L$ of the measuring point through observation from said two observation points or the measuring position $p_R$ through observation on said measuring point from one observation point of said two observation points and a binocular parallax σ, which is a positional difference between the two measuring positions $p_R$ and $p_L$ through observation on said measuring point from said two observation points, instead of the two measuring positions $p_R$ and $p_L$ , and the position $p_{axis}$ of said infinite-point of the measuring point.

**8.** An image measurement method according to claim 1, comprising:

a first step of setting up the physical quantity indexing a distance between the measuring plane and one observation point of said two observation points in the optical axis direction in form of a parameter;

a second step of determining the position $p_c$ of the intersection point on the observation plane, using said compound ratio $\{p_{axis}p_Rp_Lp_c\}$ or the operation equivalent to said compound ratio, in accordance with the physical quantity indexing a distance between the measuring plane and one observation point of said two observation points in the optical axis direction set up in the first step, the two measuring positions $p_R$ and $p_L$ of the measuring point through observation on said measuring point from said two observation points or the measuring position $p_R$ through observation on said measuring point from one observation point of said two observation points and a binocular parallax $\sigma$, which is a positional difference between the two measuring positions $p_R$ and $p_L$ through observation on said measuring point from said two observation points, instead of the two measuring positions $p_R$ and $p_L$, and the position $p_{axis}$ of said infinite-point of the measuring point; and

a third step of determining a polar line associated with the measuring point through a polar transformation of the position $p_c$ of the intersection point on the observation plane,

wherein said second step and said third step are repeated by a plurality of number of times on a plurality of measuring points in said measurement space, while a value of said parameter is altered in said first step, and thereafter,

effected is a fourth step of determining an azimuth of a measuring plane including a plurality of measuring points associated with a plurality of polar lines intersecting at a cross point and/or a physical quantity indexing said physical quantity indexing a distance between the measuring plane and one observation point of said two observation points in the optical axis direction in such a manner that cross points of polar lines, which are formed when a plurality of polar lines determined through a repetition of said first to third steps by a plurality of number of times are drawn on a polar line drawing space, are determined.

**9.** An image measurement method according to claim 8, wherein the measuring point appearing on the image has information as to intensity,

said third step is a step of determining the polar line, and of voting a value associated with intensity of a measuring point associated with the polar line for each point on a locus of the polar line, which is formed when the polar line thus determined is drawn on a polar line drawing space, and

said fourth step is a step of determining an azimuth of a measuring plane including a plurality of measuring points associated with a plurality of polar lines joining a voting for a maximal point and/or said physical quantity indexing a distance between the measuring'plane and one observation point of said two observation points in the optical axis direction in such a manner that a maximal point wherein a value by a voting through a repetition of execution of said first to third steps by a plurality of number of times offers a maximal value, instead of determining of the cross point, is determined.

**10.** An image measurement method according to claim 8, wherein the measuring point appearing on the image has information as to intensity,

said image measurement method further comprises a fifth step of setting up a binocular parallax $\sigma$, which is a positional difference between the two measuring positions $p_R$ and $p_L$ through observation on said measuring point from said two observation points, in the form of a second parameter,

said second step is a step of determining the position $p_c$ of the intersection point on the observation plane using the physical quantity indexing a distance between the measuring plane and one observation point of said two observation points in the optical axis direction , which is set up in said first step, the measuring position $p_R$ through observation on said measuring point from one observation point of said two observation points, the binocular parallax $\sigma$, which is set up in said fifth step, and the position $p_{axis}$ of said infinite-point of the measuring point,

said third step is a step of determining a polar line associated with the measuring point, and determining a response intensity associated with the binocular parallax $\sigma$ on the measuring point, and of voting the response intensity associated with the binocular parallax $\sigma$ of a measuring point associated with the polar line for each point on a locus of the polar line, which is formed when the polar line thus determined is drawn on a polar line drawing space,

said second step and the third step are repeated by a plurality of number of times on a plurality of measuring points in said measurement space, while values of said parameters are altered in said first step and said fifth step, and

said fourth step is a step of determining an azimuth of a measuring plane including a plurality of measuring points associated with a plurality of polar lines joining a voting for a maximal point and/or said physical quantity indexing a distance between the measuring plane and one observation point of said two observation points in the optical axis direction in such a manner that a maximal point wherein a value by a voting through a repetition of said first; fifth, second and third steps by a plurality of number of times offers a maximal value is determined, instead of determination of said cross point.

11. An image measurement method according to claim 8, wherein said third step is a step of determining a polar line drawn on a sphere in form of a large circle through a polar transformation of the position $p_c$.

12. An image measurement method according to claim 8, wherein said third step is a step of determining a polar line drawn in form of a large circle on a sphere through a polar transformation of the position $p_c$, and projected into an inside of a circle on a plane.

13. An image measurement method according to claim 8, wherein said third step is a step of determining a polar line drawn on a plane in form of a straight line through a polar transformation of the position $p_c$.

14. An image measurement method according to claim 1, comprising:

a first step of setting up the position $p_{axis}$ of said infinite-point of the measuring point through setting up the optical axis direction v in form of a first parameter;

a second step of setting up the physical quantity indexing a distance between the measuring plane and one observation point of said two observation points in the optical axis direction in form of a second parameter;

a third step of determining the position $p_c$ of the intersection point on the observation plane, using said compound ratio $\{p_{axis}p_Rp_Lp_c\}$ or the operation equivalent to said compound ratio, in accordance with the position $p_{axis}$ set up in said first step, the physical quantity indexing a distance between the measuring plane and one observation point of said two observation points in the optical axis direction set up in the second step, and the two measuring positions $p_R$ and $p_L$ of the measuring point through observation on said measuring point from said two observation points or the measuring position $p_R$ through observation on said measuring point from one observation point of said two observation points and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points; and

a fourth step of determining a polar line associated with the measuring point through a polar transformation of the position $p_c$ of the intersection point on the observation plane,

wherein said third step and said fourth step of said first step to said fourth step are repeated by a plurality of number of times on a plurality of measuring points in said measurement space, while values of said first parameter and said second parameter are altered in said first step and said second step, and thereafter,

effected is a fifth step of determining a true optical axis direction , and of determining an azimuth of a measuring plane including a plurality of measuring points associated with a plurality of polar lines intersecting at a cross point determined on a polar line drawing space associated with the true optical axis direction , and/or said physical quantity indexing a distance between the measuring plane and one observation point of said two observation points in the optical axis direction in such a manner that cross points of polar lines, which are formed when a plurality of polar lines determined through a repetition of said first to fourth steps are drawn on an associated polar line drawing space of a plurality of polar line drawing spaces according to said first parameter, are determined on each polar line drawing space, and a polar line drawing space associated with the true optical axis direction relative to said observation point on said measuring point is selected in accordance with information as to a number of polar lines intersecting at the cross points.

15. An image measurement method according to claim 14, wherein the measuring point appearing on the image has information as to intensity,

said fourth step is a step of determining the polar line, and of voting a value associated with intensity of a measuring point associated with the polar line for each point on a locus of the polar line, which is formed when the polar line thus determined is drawn on the polar line drawing space,

said fifth step is a step of determining the true optical axis direction , and of determining an azimuth of a measuring plane including a plurality of measuring points associated with a plurality of polar lines joining a voting for a maximal point determined on a polar line drawing space associated with the true optical axis direction , and/or said physical quantity indexing a distance between the measuring plane and one observation point of said two observation points in the optical axis direction in such a manner that a maximal point wherein a value by a voting through a repetition of execution of said first to fourth steps offers a maximal value, instead of determining of the cross point, is determined on each polar line drawing space, and a polar line drawing space associated with the true optical axis direction is selected in accordance with information as to a maximal value at the maximal point.

16. An image measurement method according to claim 14, wherein the measuring point appearing on the image has information as to intensity,

said image measurement method further comprises a sixth step of setting up a binocular parallax $\sigma$, which is a positional difference between the two measuring positions $p_R$ and $p_L$ through observation on said measuring point from said two observation points, in the form of a third parameter,
said third step is a step of determining the position $p_c$ of the intersection point on the observation plane using the position $p_{axis}$, which is set up in said first step, the physical quantity indexing a distance between the measuring plane and one observation point of said two observation points in the optical axis direction , which is set up in said second step, the measuring position $p_R$ through observation on said measuring point from one observation point of said two observation points, and the binocular parallax $\sigma$, which is set up in said sixth step,
said fourth step is a step of determining a polar line associated with the measuring point, and determining a response intensity associated with the binocular parallax $\sigma$ on the measuring point, and of voting the response intensity associated with the binocular parallax $\sigma$ of a measuring point associated with the polar line for each point on a locus of the polar line, which is formed when the polar line thus determined is drawn on a polar line drawing space,
said third step and the fourth step are repeated by a plurality of number of times on a plurality of measuring points in said measurement space, while values of said parameters are altered in said second step and said sixth step, and
said fifth step is a step of determining the true optical axis direction, and of determining an azimuth of a measuring plane including a plurality of measuring points associated with a plurality of polar lines joining a voting for a maximal point determined on a polar line drawing space associated with the true optical axis direction , and/or said physical quantity indexing a distance between the measuring plane and one observation point of said two observation points in the optical axis direction in such a manner that a maximal point wherein a value by a voting through a repetition of execution of the first, second, sixth, third and fourth steps by a plurality of number of times offers a maximal value, instead of determining of the cross point, is determined on each polar line drawing space, and a polar line drawing space associated with the true optical axis direction is selected in accordance with information as to a maximal value at the maximal point.

17. An image measurement method of determining an azimuth $n_s$ of a measuring plane and/or a physical quantity indexing a shortest distance between the measuring plane and one observation point of predetermined two observation points, using a compound ratio $\{p_{axis}p_Rp_Lp_c\}$, which is determined by four positions $p_{axis}$, $p_R$, $p_L$, $p_c$ of a measuring point, or an operation equivalent to said compound ratio, and an inner product $(n_s \cdot v)$ of the azimuth $n_s$ of the measuring plane and an optical axis direction v, where $p_R$ and $p_L$ denote measuring positions through observation of said two observation points on an arbitrary measuring point appearing on an image obtained through viewing a predetermined measurement space from predetermined two observation points inside the measurement space, respectively, v denotes the optical axis direction coupling said two observation points, $p_{axis}$ denotes a position of an infinite-point on a straight line extending in a direction identical to the optical axis direction v, including the measuring point, $p_c$ denotes a position of an intersection point with said straight line on an observation plane extending in parallel to a measuring plane including the measuring point, including one observation point of said two observation points, and $n_s$ denotes the azimuth of the measuring plane.

18. An image measurement method according to claim 17, wherein said compound ratio $\{p_{axis}p_Rp_Lp_c\}$ or the operation equivalent to said compound ratio include an operation using the measuring position $p_R$ through observation on said measuring point from one observation point of said two observation points, and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points.

**19.** An image measurement method according to claim 17, wherein as said physical quantity indexing the shortest distance, a normalization shortest distance $_nd_s$, which is expressed by the following equation, is adopted,

$$_nd_s = d_s/\Delta x_{LR}$$

and said normalization shortest distance $_nd_s$ is determined in accordance with the following equation,

$$_nd_s = {_nd_c} (n_s \cdot v)$$

using a normalized distance $_nd_c$, which is expressed by the following equation, and the inner product $(n_s \cdot v)$

$$_nd_c = d_c/\Delta x_{LR}$$

where $d_s$ denotes a shortest distance between the measuring plane and one observation point of said two observation points, $d_c$ denotes a distance between the measuring plane and one observation point of said two observation points in an optical axis direction, and $\Delta x_{LR}$ denotes a distance between said two observation points.

**20.** An image measurement method according to claim 17, comprising:

a first step of setting up the physical quantity indexing the shortest distance in form of a first parameter;
a second step of setting up the inner product $(n_s \cdot v)$ in form of a second parameter;
a third step of determining the position $p_c$ of the intersection point on the observation plane, using said compound ratio $\{p_{axis}p_Rp_Lp_c\}$ or the operation equivalent to said compound ratio, in accordance with the physical quantity indexing the shortest distance set up in the first step, the inner product $(n_s \cdot v)$ set up in the second step, the two measuring positions $p_R$ and $p_L$ of the measuring point through observation on said measuring point from said two observation points or the measuring position $p_R$ through observation on said measuring point from one observation point of said two observation points and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points, and the position $p_{axis}$ of said infinite-point of the measuring point;
a fourth step of determining a polar line associated with the position $p_c$ of the intersection point on the observation plane through a polar transformation of the position $p_c$, and
a fifth step of determining a point on the polar line, said'point being given with an angle r with respect to the optical axis direction v,

$$r = \cos^{-1} (n_s \cdot v)$$

wherein said third step to said fifth step, of said first step to said fifth step, are repeated by a plurality of number of times on a plurality of measuring points in said measurement space, while values of said first parameter and said second parameter are altered in said first step and said second step, so that a curved line, which couples a plurality of points determined through an execution of said. fifth step as to one measuring point by a plurality of number of times wherein a value of said first parameter is identical and a value of said second parameter is varied, is determined on the plurality of measuring points for each value of said first parameter, and thereafter,
effected is a sixth step of determining an azimuth $n_s$ of a measuring plane including a plurality of measuring points associated with a plurality of curved lines intersecting at a cross point and/or a physical quantity indexing a shortest distance between the measuring plane and one observation point of said two observation points in such a manner that cross points of curved lines, which are formed when a plurality of curved lines determined through a repetition of said first to fifth steps by a plurality of number of times are drawn on a curved line drawing space, are determined.

**21.** An image measurement method according to claim 20, wherein the measuring point appearing on the image has information as to intensity,

said fifth step is a step of determining said point, and of voting a value associated with intensity of a measuring point associated with said point for a point associated with said point in said curved line drawing space, said sixth step is a step of determining an azimuth $n_s$ of a measuring plane including a plurality of measuring points associated with a plurality of curved lines joining a voting for a maximal point and/or a physical quantity indexing a shortest distance between the measuring plane and one observation point of predetermined two observation points in such a manner that a maximal point wherein a value by a voting through a repetition of execution of said first to fifth steps by a plurality of number of times offers a maximal value, instead of determining of the cross point, is determined.

**22.** An image measurement method according to claim 20, wherein the measuring point appearing on the image has information as to intensity,

said image measurement method further comprises a seventh step of setting up a binocular parallax σ, which is a positional difference between the two measuring positions $p_R$ and $p_L$ through observation on said measuring point from said two observation points, in the form of a third parameter, said third step is a step of determining the position $p_c$ of the intersection point on the observation plane using the physical quantity indexing the shortest distance set up in the first step, the inner product $(n_s \cdot v)$ set up in the second step, the measuring position $p_R$ through observation on said measuring point from one observation point of said two observation points, the binocular parallax σ, which is set up in said seventh step, and the position $p_{axis}$ of said infinite-point of the measuring point, said fifth step is a step of determining said point on a polar line associated with the measuring point, and determining a response intensity associated with the binocular parallax σ on the measuring point, and of voting the response intensity associated with the binocular parallax σ of a measuring point associated with said point on the polar line for a point associated with said point on the polar line in said curved line drawing space, said third step to said fifth step are repeated by a plurality of number of times on a plurality of measuring points in said measurement space, while values of the parameters are altered in said first step, said second step and said seventh step, and said sixth step is a step of determining an azimuth $n_s$ of a measuring plane including a plurality of measuring points associated with a plurality of curved lines joining a voting for a maximal point and/or a physical quantity indexing a shortest distance between the measuring plane and one observation point of said two observation points in such a manner that a maximal point wherein a value by a voting through a repetition of said first, second, seventh and third to fifth steps by a plurality of number of times offers a maximal value is determined, instead of determination of said cross point.

**23.** An image measurement method according to claim 20, wherein said fifth step is a step of determining a curved line drawn on a sphere in form of a curved line coupling a plurality of lines involved in one measuring point, which is determined through repetition of said fifth step.

**24.** An image measurement method according to claim 20, wherein said fifth step is a step of determining a curved line drawn on a sphere in form of a curved line coupling a plurality of lines involved in one measuring point, which is determined through repetition of said fifth step, said curved line being projected into an inside of a circle on a plane.

**25.** An image measurement method according to claim 17, comprising:

a first step of setting up the position $p_{axis}$ of said infinite-point of the measuring point through setting up the optical axis direction v in form of a first parameter; a second step of setting up the physical quantity indexing the shortest distance in form of a second parameter; a third step of setting up the inner product $(n_s \cdot v)$ in form of a third parameter; a fourth step of determining the position $p_c$ of the intersection point on the observation plane, using said compound ratio $\{p_{axis}p_Rp_Lp_c\}$ or the operation equivalent to said compound ratio, in accordance with the position $p_{axis}$ of said infinite-point of the measuring point, which is set up in said first step, the physical quantity indexing the shortest distance, which is set up in the second step, the inner product $(n_s \cdot v)$ set up in the third step, and the two measuring positions $p_R$ and $p_L$ of the measuring point through observation on said measuring point from said two observation points or the measuring position $p_R$ through observation on said measuring point from one observation point of said two observation points and a binocular parallax σ, which is a positional difference between the two measuring positions $p_R$ and $p_L$ through observation on said measuring point from said two observation points, instead of the two measuring positions $p_R$ and $p_L$ through observation- on said measuring point from said two observation points;

a fifth step of determining a polar line associated with the position $p_c$ of the intersection point on the observation plane through a polar transformation of the position $p_c$; and

a sixth step of determining a point on the polar line, said point being given with an angle r with respect to the optical axis direction v,

$$r=\cos^{-1}(n_s \cdot v)$$

wherein said fourth step to said sixth step, of said first step to said sixth step, are repeated by a plurality of number of times on a plurality of measuring points in said measurement space, while values of said first parameter to said third parameter are altered in said first step to said third step, so that a curved line, which couples a plurality of points determined through an execution of said sixth step as to one measuring point by a plurality of number of times wherein a value of said first parameter is identical and a value of said second parameter is identical, and a value of said third parameter is varied, is determined on the plurality of measuring points for each combination of a respective value of said first parameter and a respective value of said second parameter, and thereafter,

effected is a seventh step of determining a true optical axis direction , and of determining an azimuth $n_s$ of a measuring plane including a plurality of measuring points associated with a plurality of curved lines intersecting at a cross point determined on a curved line drawing space associated with the true optical axis direction, and/or a physical quantity indexing a shortest distance between the measuring plane and one observation point of predetermined two observation points in such a manner that cross points of curved lines, which are formed when a plurality of curved lines determined through a repetition of said first to sixth steps are drawn on an associated curved line drawing space of a plurality of curved line drawing spaces according to said first parameter, are determined on each curved line drawing space, and a curved line drawing space associated with the true optical axis direction relative to said observation point on said measuring point is selected in accordance with information as to a number of curved lines intersecting at the cross points.

26. An image measurement method according to claim 25, wherein the measuring point appearing on the image has information as to intensity,

said sixth step is a step of determining said point, and of voting a value associated with intensity of a measuring point associated with said point for points in the curved line drawing space wherein a curved line including said point is drawn,

said seventh step is a step of determining the true optical axis direction, and of determining an azimuth $n_s$ of a measuring plane including a plurality of measuring points associated with a plurality of curved lines joining a voting for a maximal point determined on a curved line drawing space associated with the true optical axis direction, and/or a physical quantity indexing a shortest distance between the measuring plane and one observation point of predetermined two observation points in such a manner that a maximal point wherein a value by a voting through a repetition of execution of said first to sixth steps offers a maximal value, instead of determining of the cross point, is determined on each curved line drawing space, and a curved line drawing space associated with the true optical axis direction is selected in accordance with information as to a maximal value at the maximal point.

27. An image measurement method according to claim 25, wherein the measuring point appearing on the image has information as to intensity,

said image measurement method further comprises a eighth step of setting up a binocular parallax σ, which is a positional difference between the two measuring positions $p_R$ and $p_L$ through observation on said measuring point from said two observation points, in the form of a fourth parameter,

said fourth step is a step of determining the position $p_c$ of the intersection point on the observation plane using the position $p_{axis}$ of said infinite-point of the measuring point, which is set up in said first step, the physical quantity indexing the shortest distance, which is set up in the second step, the inner product $(n_s \cdot v)$ set up in the third step, the measuring position $p_R$ through observation on said measuring point from one observation point of said two observation points, and a binocular parallax σ, which is set up in said eighth step,

said sixth step is a step of determining said point associated with the measuring point, and determining a response intensity associated with the binocular parallax σ on the measuring point, and of voting the response intensity associated with the binocular parallax σ of a measuring point associated with said point on the polar line for points in the curved line drawing space,

said fourth to sixth steps are repeated by a plurality of number of times on a plurality of measuring points in said measurement space, while values of said parameters are altered in said first, second, third and eighth steps, and

said seventh step is a step of determining the true optical axis direction, and of determining an azimuth $n_s$ of a measuring plane including a plurality of measuring points associated with a plurality of curved lines joining a voting for a maximal point determined on a curved line drawing space associated with the true optical axis direction , and/or a physical quantity indexing a shortest distance between the measuring plane and one observation point of predetermined two observation points in such a manner that a maximal point wherein a value by a voting through a repetition of execution of the first, second, third, eighth steps, and the fourth to sixth steps by a plurality of number of times offers a maximal value, instead of determining of the cross point, is determined on each curved line drawing space, and a curved line drawing space associated with the true optical axis direction is selected in accordance with information as to a maximal value at the maximal point.

28. An image measurement method of determining an azimuth of a measuring plane and/or a physical quantity indexing a shortest distance between the measuring plane and one observation point of predetermined two observation points, using a simple ratio($p_{axis}p_R p_L$), which is determined by three positions $p_{axis}$, $p_R$, $p_L$ of a measuring point, or an operation equivalent to said simple ratio, where $p_R$ and $p_L$ denote measuring positions through observation of said two observation points on an arbitrary measuring point appearing on an image obtained through viewing a predetermined measurement space from a predetermined observation point inside the measurement space, respectively, v denotes an optical axis direction coupling said two observation points, and $p_{axis}$ denotes a position of aninfinite-point on a straight line extending in a direction identical to the optical axis direction v, including the measuring point.

29. An image measurement method according to claim 28, wherein said simple ratio ($p_{axis}p_Rp_L$) or the operation equivalent to said simple ratio include an operation using the measuring position $p_R$ through observation on said measuring point from one observation point of said two observation points, and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points.

30. An image measurement method according to claim 28, wherein as the positions $p_{axis}$, $p_R$, $p_L$ of the measuring point, positions projected on a sphere are adopted, and as said physical quantity indexing the shortest distance, a normalization shortest distance $_nd_s$ , which is expressed by the following equation, is adopted,

$$_nd_s=d_s/\Delta x_{LR}$$

where $d_s$ denotes a shortest distance between the measuring plane and one observation point of said two observation points, and $\Delta x_{LR}$ denotes a distance between said two observation points,

wherein said image measurement method comprises:

a first step of setting up the normalization shortest distance $_nd_s$ in form of a parameter;
a second step of determining a radius R defined by the following equation or the equivalent equation;

$$R = \cos^{-1} (_nd_s/ (p_{axis}p_Rp_L))$$

using the normalization shortest distance $_nd_s$ set up in the first step and the simple ratio ($p_{axis}p_Rp_L$) or the operation equivalent to said simple ratio; and
a third step of determining a small circle of a radius R taking as a center a measuring position through observation on said measuring point from one observation point of said two observation points,
wherein said second step and said third step are repeated by a plurality of number of times on a plurality of measuring points in said measurement space, while the parameter is altered in said first step, and thereafter, effected is a fourth step of determining an azimuth $n_{s0}$ of a measuring plane including a plurality of measuring points associated with a plurality of small circles intersecting at a cross point and/or a normalization shortest distance $_nd_{s0}$ on the measuring plane in such a manner that cross points of small circles, which are formed when a plurality of small circles determined through a repetition of said first to third steps by a plurality of number of times are drawn on a small circle drawing space, are determined.

**31.** An image measurement method according to claim 30, wherein the measuring point appearing on the image has information as to intensity,

said third step is a step of determining said small circle, and of voting a value associated with intensity of a measuring point associated with said small circle for each point on a locus of the small circle, which is formed when the small circle thus determined is drawn on a small circle drawing space,

said fourth step is a step of determining an azimuth $n_{s0}$ of a measuring plane including a plurality of measuring points associated with a plurality of small circles joining a voting for a maximal point and/or a normalization shortest distance $_nd_{s0}$ on the measuring plane in such a manner that a maximal point wherein a value by a voting through a repetition of execution of said first to third steps by a plurality of number of times offers a maximal value, instead of determining of the cross point, is determined.

**32.** An image measurement method according to claim 30, wherein the measuring point appearing on the image has information as to intensity,

said image measurement method further comprises a fifth step of setting up a binocular parallax $\sigma$, which is a positional difference between the two measuring positions $p_R$ and $p_L$ through observation on said measuring point from said two observation points, in form of a second parameter,

said second step is a step of determining the radius R using the normalization shortest distance $_nd_s$ set up in the first step, the position $p_{axis}$ of said infinite-point of the measuring point, the measuring position $p_R$ through observation on said measuring point from one observation point of said two observation points, and the binocular parallax $\sigma$, which is set up in said fifth step,

said third step is a step of determining said small circle associated with the measuring point, and determining a response intensity associated with the binocular parallax $\sigma$ on the measuring point, and of voting the response intensity associated with the binocular parallax $\sigma$ of a measuring point associated with said small circle for each point on a locus of the small circle, which is formed when the small circle thus determined is drawn on a small circle drawing space,

said second step and said third step are repeated by a plurality of number of times on a plurality of measuring points in said measurement space, while values of the parameters are altered in said first step and said fifth step, and

said fourth step is a step of determining an azimuth $n_{so}$ of a measuring plane including a plurality of measuring points associated with a plurality of small circles joining a voting for a maximal point and/or a normalization shortest distance $_nd_{s0}$ on the measuring plane in such a manner that a maximal point wherein a value by a voting through a repetition of said first, fifth, second and third steps by a plurality of number of times offers a maximal value is determined, instead of determination of said cross point.

**33.** An image measurement method according to claim 28, wherein said third step is a step of determining a small circle of a radius R on the sphere, and also determining a small circle in which said small circle of a radius R on the sphere is projected into an inside of a circle on a plane.

**34.** An image measurement method according to claim 28, wherein as the positions $p_{axis}$, $p_R$, $p_L$ of the measuring point, positions projected on a sphere are adopted, and as said physical quantity indexing the shortest distance, a normalization shortest distance $_nd_s$, which is expressed by the following equation, is adopted,

$$_nd_s = d_s/\Delta x_{LR}$$

where $d_s$ denotes a shortest distance between the measuring plane and one observation point of said two observation points, and $\Delta x_{LR}$ denotes a distance between said two observation points,

wherein said image measurement method comprises:

a first step of setting up the position $p_{axis}$ of said infinite-point of the measuring point through setting up the optical axis direction v in form of a first parameter;

a second step of setting up the normalization shortest distance $_nd_s$ in form of a second parameter;

a third step of determining a radius R defined by the following equation or the equivalent equation;

$$R = \cos^{-1}(_nd_s/(p_{axis}p_Rp_L))$$

using the position $p_{axis}$ of said infinite-point of the measuring point, which is set up in the first step, the normalization shortest distance $_{n}d_{s}$ set up in the second step and the simple ratio ($p_{axis}p_{R}p_{L}$) or the operation equivalent to said simple ratio, and

a fourth step of determining a small circle of a radius R taking as a center a measuring position through observation on said measuring point from one observation point of said two observation points ,

wherein said third step and said fourth step are repeated by a plurality of number of times on a plurality of measuring points in said measurement space, while values of the first and second parameters are altered in said first step and said second step, and thereafter,

effected is a fifth step of determining a true optical axis direction, and of determining an azimuth $n_{s0}$ of a measuring plane including a plurality of measuring points associated with a plurality of small circles intersecting at a cross point determined on a small circle drawing space associated with the true optical axis direction, and/or a a normalization shortest distance $_{n}d_{s0}$ on the measuring plane in such a manner that cross points of small circles, which are formed when a plurality of small circles determined through a repetition of said first to fourth steps are drawn on an associated small circle drawing space of a plurality of small circle drawing spaces according to said first parameter, are determined on each small circle drawing space, and a small circle drawing space associated with the true optical axis direction relative to said observation point on said measuring point is selected in accordance with information as to a number of small circles intersecting at the cross points.

**35.** An image measurement method according to claim 34, wherein the measuring point appearing on the image has information as to intensity,

said fourth step is a step of determining said small circle, and of voting a value associated with intensity of a measuring point associated with said small circle for each point on a locus of the small circle, which is formed when the small circle thus determined is drawn on a small circle drawing space,

said fifth step is a step of determining a true optical axis direction, and of determining an azimuth $n_{s0}$ of a measuring plane including a plurality of measuring points associated with a plurality of small circles joining a voting for a maximal point determined on a small circle drawing space associated with the true optical axis direction, and/or a normalization shortest distance $_{n}d_{s0}$ on the measuring plane in such a manner that a maximal point wherein a value by a voting through a repetition of execution of said first to fourth steps by a plurality of number of times offers a maximal value, instead of determining of the cross point, is determined on each small circle drawing space, and a small circle drawing space associated with the true optical axis direction is selected in accordance with information as to the maximal value on the maximal point.

**36.** An image measurement method according to claim 34, wherein the measuring point appearing on the image has information as to intensity,

said image measurement method further comprises a sixth step of setting up a binocular parallax σ, which is a positional difference between the two measuring positions $p_{R}$ and $p_{L}$ through observation on said measuring point from said two observation points, in form of a third parameter,

said third step is a step of determining the radius R using the position $p_{axis}$ of said infinite-point of the measuring point, which is set up in said first step, the normalization shortest distance $_{n}d_{s}$ set up in the second step, the measuring position $p_{R}$ through observation on said measuring point from one observation point of said two observation points, and the binocular parallax σ, which is set up in said sixth step,

said fourth step is a step of determining said small circle associated with the measuring point, and determining a response intensity associated with the binocular parallax σ on the measuring point, and of voting the response intensity associated with the binocular parallax σ of a measuring point associated with said small circle for each point on a locus of the small circle, which is formed when the small circle thus determined is drawn on a small circle drawing space associated with the small circle,

said third step and said fourth step are repeated by a plurality of number of times on a plurality of measuring points in said measurement space, while values of the parameters are altered in said first step, said second step and said sixth step, and

said fifth step is a step of determining a true optical axis direction , and of determining an azimuth $n_{s0}$ of a measuring plane including a plurality of measuring points associated with a plurality of small circles joining a voting for a maximal point determined on a small circle drawing space associated with the true optical axis direction, and/or a normalization shortest distance $_{n}d_{s0}$ on the measuring plane in such a manner that a maximal point wherein a value by a voting through a repetition of execution of said first, second, sixth, third and fourth steps by a plurality of number of times offers a maximal value, instead of determining of the cross point, is determined on each small circle drawing space, and a small circle drawing space associated with the true optical axis direction is selected in accordance with information as to the maximal value on the maximal point.

37. An image measurement method of determining a physical quantity indexing a distance between an arbitrary measuring point appearing on an image obtained through viewing a predetermined measurement space from a predetermined observation point inside the measurement space and one observation point of predetermined two observation points, using a simple ratio ($p_{axis}$ $p_R$ $p_L$), which is determined by three positions $p_{axis}$, $p_R$, $p_L$ of the measuring point, or an operation equivalent to said simple ratio, where $p_R$ and $p_L$ denote measuring positions through observation of said two observation points on the measuring point, respectively, and $p_{axis}$ denotes a position of an infinite-point on a straight line extending in a direction identical to an optical axis direction v coupling said two observation points, including the measuring point.

38. An image measurement method according to claim 37, wherein said simple ratio ($p_{axis}p_Rp_L$) or the operation equivalent to said simple ratio include an operation using the measuring position $p_R$ through observation on said measuring point from one observation point of said two observation points, and a binocular parallax σ, which is a positional difference between the two measuring positions $p_R$ and $p_L$ through observation on said measuring point from said two observation points, instead of the two measuring positions $p_R$ and $p_L$ through observation on said measuring point from said two observation points.

39. An image measurement method according to claim 37, wherein as said physical quantity indexing the distance, a normalized distance $_nd_0$ , which is expressed by the following equation, is adopted,

$$_nd_0 = d_0/\Delta x_{LR}$$

where $d_0$ denotes a distance between the measuring point and one observation point of said two observation points, and $\Delta x_{LR}$ denotes a distance between said two observation points, and said normalized distance $_nd_0$ is determined in accordance with the following equation

$$_nd_0 = (p_{axis}p_Rp_L)$$

or an equation equivalent to the above equation.

40. An image measurement apparatus comprising an operating unit for determining an azimuth of a measuring plane and/or a physical quantity indexing a distance between the measuring plane and one observation point of predetermined two observation points in an optical axis direction v coupling said two observation points, using a compound ratio $\{p_{axis}$ $p_Rp_Lp_c\}$, which is determined by four positions $p_{axis}$, $p_R$, $p_L$, $p_c$ , or an operation equivalent to said compound ratio, where $p_R$ and $p_L$ denote measuring positions through observation of said two observation points on an arbitrary measuring point appearing on an image obtained through viewing a predetermined measurement space from said two observation points inside the measurement space, respectively, $p_{axis}$ denotes a position of an infinite-point on a straight line extending in a direction identical to the optical axis direction v, including the measuring point, and $p_c$ denotes a position of an intersection point with said straight line on an observation plane extending in parallel to a measuring plane including the measuring point, including one observation point of said two observation points.

41. An image measurement apparatus according to claim 40, wherein said compound ratio $\{p_{axis}p_Rp_Lp_c\}$ or the operation equivalent to said compound ratio, which are executed in said operating unit, include an operation using the measuring position $p_R$ through observation on said measuring point from one observation point of said two observation points, and a binocular parallax σ, which is a positional difference between the two measuring positions $p_R$ and $p_L$ through observation on said measuring point from said two observation points, instead of the two measuring positions $p_R$ and $p_L$ through observation on said measuring point from said two observation points.

42. An image measurement apparatus according to claim 40, wherein in said operating unit, as said physical quantity indexing a distance between the measuring plane and one observation point of said two observation points in the optical axis direction, a normalized distance $_nd_c$, which is expressed by the following equation, is adopted,

$$_nd_c = d_c/\Delta x_{LR}$$

where $d_c$ denotes a distance between the measuring plane and one observation point of said two observation points in the optical axis direction, and $\Delta x_{LR}$ denotes a distance between said two observation points, and said normalized distance $_nd_c$ is determined in accordance with the following equation

$$_nd_c = \{p_{axis}p_R p_L p_c\}$$

or an equation equivalent to the above equation.

**43.** An image measurement apparatus according to claim 40, wherein said operating unit comprises:

a parameter altering unit for altering a value of a parameter in which the physical quantity indexing a distance between the measuring plane and one observation point of said two observation points in the optical axis direction is set up in form of a parameter;
a compound ratio transformation unit for determining the position $p_c$ of the intersection point on the observation plane, using said compound ratio $\{p_{axis}p_R p_L \cdot p_c\}$ or the operation equivalent to said compound ratio, in accordance with the physical quantity indexing a distance between the measuring plane and one observation point of said two observation points in the optical axis direction set up in said parameter altering unit, the two measuring positions $p_R$ and $p_L$ of the measuring point through observation on said measuring point from said two observation points or the measuring position $p_R$ through observation on said measuring point from one observation point of said two observation points and a binocular parallax $\sigma$, which is a positional difference between the two measuring positions $p_R$ and $p_L$ through observation on said measuring point from said two observation points, instead of the two measuring positions $p_R$ and $p_L$ , and the position $p_{axis}$ of said infinite-point of the measuring point; and
a polar transformation unit for determining a polar line associated with the measuring point through a polar transformation of the position $p_c$ of the intersection point on the observation plane,
wherein said compound ratio transformation unit and said polar transformation unit repeatedly perform operations by a plurality of number of times on a plurality of measuring points in said measurement space, while a value of said parameter is altered in said parameter altering unit, and
said operating unit further comprises a detection unit for determining an azimuth of a measuring plane including a plurality of measuring points associated with a plurality of polar lines intersecting at a cross point and/or a physical quantity indexing said physical quantity indexing a distance between the measuring plane and one observation point of said two observation points in the optical axis direction in such a manner that cross points of polar lines, which are formed when a plurality of polar lines determined through a repetition of execution of operations of said parameter altering unit, said compound ratio transformation unit and said polar transformation unit by a plurality of number of times are drawn on a polar line drawing space, are determined.

**44.** An image measurement apparatus according to claim 43, wherein the measuring point appearing on the image has information as to intensity,

said polar transformation unit determines the polar line, and votes a value associated with intensity of a measuring point associated with the polar line for each point on a locus of the polar line, which is formed when the polar line thus determined is drawn on a polar line drawing space, and
said detection unit determines an azimuth.of a measuring plane including a plurality of measuring points associated with a plurality of polar lines joining a voting for a maximal point and/or said physical quantity indexing a distance between the measuring plane and one observation point of said two observation points in the optical axis direction in such a manner that a maximal point wherein a value by a voting through a repetition of execution of operations of said parameter altering unit, said compound ratio transformation unit and said polar transformation unit by a plurality of number of times offers a maximal value, instead of determining of the cross point, is determined.

**45.** An image measurement apparatus according to claim 43, wherein the measuring point appearing on the image has information as to intensity,

said operating unit further comprises a second parameter altering unit for altering a value of a second parameter in which a binocular parallax $\sigma$, which is a positional difference between the two measuring positions $p_R$ and $p_L$ through observation on said measuring point from said two observation points, is set up in form of the second parameter,

said compound ratio transformation unit determines the position $p_c$ of the intersection point on the observation plane using the physical quantity indexing a distance between the measuring plane and one observation point of said two observation points in the optical axis direction, which is set up in said parameter altering unit, the measuring position $p_R$ through observation on said measuring point from one observation point of said two observation points, the binocular parallax $\sigma$, which is set up in said fifth step, and the position $p_{axis}$ of said infinite-point of the measuring point,

said polar transformation unit determines a polar line associated with the measuring point, and determines a response intensity associated with the binocular parallax $\sigma$ on the measuring point, and votes the response intensity associated with the binocular parallax $\sigma$ of a measuring point associated with the polar line for each point on a locus of the polar line, which is formed when the polar line thus determined is drawn on a polar line drawing space,

said compound ratio transformation unit and said polar transformation unit repeatedly perform operations by a plurality of number of times on a plurality of measuring points in said measurement space, while values of said parameters are altered in said parameter altering unit and said second parameter altering unit, and

said detection unit determines an azimuth of a measuring plane including a plurality of measuring points associated with a plurality of polar lines joining a voting for a maximal point and/or said physical quantity indexing a distance between the measuring plane and one observation point of said two observation points in the optical axis direction in such a manner that a maximal point wherein a value by a voting through a repetition of execution of operations of said first parameter altering unit, said second parameter altering unit, said compound ratio transformation unit and said polar transformation unit by a plurality of number of times offers a maximal value is determined, instead of determination of said cross point.

**46.** An image measurement apparatus according to claim 40, comprising:

a first parameter altering unit for altering a value of a first parameter in which the position $p_{axis}$ of said infinite-point of the measuring point through setting up the optical axis direction v is altered in form of the first parameter;

a second parameter altering unit for altering a value of a second parameter in which the physical quantity indexing a distance between the measuring plane and one observation point of said two observation points in the optical axis direction is set up in form of the second parameter;

a compound ratio transformation unit for determining the position $p_c$ of the intersection point on the observation plane, using said compound ratio $\{p_{axis}p_Rp_L\ p_c\}$ or the operation equivalent to said compound ratio, in accordance with the position $p_{axis}$ set up in said first parameter altering unit, the physical quantity indexing a distance between the measuring plane and one observation point of said two observation points in the optical axis direction set up in the second step, and the two measuring positions $p_R$ and $p_L$ of the measuring point through observation on said measuring point from said two observation points or the measuring position $p_R$ through observation on said measuring point from one observation point of said two observation points and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points; and

a polar transformation unit for determining a polar line associated with the measuring point through a polar transformation of the position $p_c$ of the intersection point on the observation plane,

wherein said compound ratio transformation unit and said polar transformation unit repeatedly perform operations by a plurality of number of times on a plurality of measuring points in said measurement space, while values of said first parameter and said second parameter are altered in said first parameter altering unit and said second parameter altering unit, and

said operating unit further comprises a detection unit for determining a true optical axis direction , and of determining an azimuth of a measuring plane including a plurality of measuring points associated with a plurality of polar lines intersecting at a cross point determined on a polar line drawing space associated with the true optical axis direction, and/or said physical quantity indexing a distance between the measuring plane and one observation point of said two observation points in the optical axis direction in such a manner that cross points of polar lines, which are formed when a plurality of polar lines determined through a repetition of execution of operations of said first parameter altering unit, said second parameter altering unit, said compound ratio transformation unit and said polar transformation unit are drawn on an associated polar line drawing space of a plurality of polar line drawing spaces according to said first parameter, are determined on each polar line drawing space, and a polar line drawing space associated with the true optical axis direction relative to said observation point on said measuring point is selected in accordance with information as to a number of polar lines intersecting at the cross points.

**47.** An image measurement apparatus according to claim 46, wherein the measuring point appearing on the image has information as to intensity,

said polar transformation unit determines the polar line, and votes a value associated with intensity of a measuring point associated with the polar line for each point on a locus of the polar line, which is formed when the polar line thus determined is drawn on the polar line drawing space,

said detection unit determines the true optical axis direction, and determines an azimuth of a measuring plane including a plurality of measuring points associated with a plurality of polar lines joining a voting for a maximal point determined on a polar line drawing space associated with the true optical axis direction , and/or said physical quantity indexing a distance between the measuring plane and one observation point of said two observation points in the optical axis direction in such a manner that a maximal point wherein a value by a voting through a repetition of execution of execution of operations of said first parameter altering unit, said second parameter altering unit, said compound ratio transformation unit and said polar transformation unit offers a maximal value, instead of determining of the cross point, is determined on each polar line drawing space, and a polar line drawing space associated with the true optical axis direction is selected in accordance with information as to a maximal value at the maximal point.

**48.** An image measurement apparatus according to claim 46, wherein the measuring point appearing on the image has information as to intensity,

said operating unit further comprises a third parameter unit for setting up a binocular parallax $\sigma$, which is a positional difference between the two measuring positions $p_R$ and $p_L$ through observation on said measuring point from said two observation points, in the form of a third parameter,

said compound ratio transformation unit determines the position $p_c$ of the intersection point on the observation plane using the position $p_{axis}$, which is set up in said first parameter altering unit, the physical quantity indexing a distance between the measuring plane and one observation point of said two observation points in the optical axis direction-, which is set up in said second parameter altering unit, the measuring position $p_R$ through observation on said measuring point from one observation point of said two observation points, and the binocular parallax $\sigma$, which is set up in said third parameter altering unit,

said polar transformation unit determines a polar line associated with the measuring point, and determines a response intensity associated with the binocular parallax $\sigma$ on the measuring point, and of voting the response intensity associated with the binocular parallax $\sigma$ of a measuring point associated with the polar line for each point on a locus of the polar line, which is formed when the polar line thus determined is drawn on a polar line drawing space,

said compound ratio transformation unit and said polar transformation unit perform operations by a plurality of number of times on a plurality of measuring points in said measurement space, while values of said parameters are altered in said first, second and third parameter units, and

said detection unit determines the true optical axis direction, and determines an azimuth of a measuring plane including a plurality of measuring points associated with a plurality of polar lines joining a voting for a maximal point determined on a polar line drawing space associated with the true optical axis direction , and/or said physical quantity indexing a distance between the measuring plane and one observation point of said two observation points in the optical axis direction in such a manner that a maximal point wherein a value by a voting through a repetition of execution of operations of said first parameter altering unit, said second parameter altering unit, said third parameter altering unit, said compound ratio transformation unit and said polar transformation unit by a plurality of number of times offers a maximal value, instead of determining of the cross point, is determined on each polar line drawing space, and a polar line drawing space associated with the true optical axis direction is selected in accordance with information as to a maximal value at the maximal point.

**49.** An image measurement apparatus comprising an operating unit for determining an azimuth $n_s$ of a measuring plane and/or a physical quantity indexing a shortest distance between the measuring plane and one observation point of predetermined two observation points, using a compound ratio $\{p_{axis}p_Rp_Lp_c\}$, which is determined by four positions $p_{axis}$, $p_R$, $p_L$, $p_c$ of a measuring point, or an operation equivalent to said compound ratio, and an inner product $(n_s \cdot V)$ of the azimuth $n_s$ of the measuring plane and an optical axis direction $v$, where $p_R$ and $p_L$ denote measuring positions through observation of said two observation points on an arbitrary measuring point appearing on an image obtained through viewing a predetermined measurement space from predetermined two observation points inside the measurement space, respectively, v denotes the optical axis direction coupling said two observation points, $p_{axis}$ denotes a position of an infinite-point on a straight line extending in a direction identical to the optical axis direction v, including the measuring point, $p_c$ denotes a position of an intersection point with said straight line on an observation plane extending in parallel to a measuring plane including the measuring point, including one observation point of said two observation points, and $n_s$ denotes the azimuth of the measuring plane.

50. An image measurement apparatus according to claim 49, wherein said compound ratio $\{p_{axis}p_Rp_Lp_c\}$ or the operation equivalent to said compound ratio, which are executed in said operating unit, include an operation using the measuring position $p_R$ through observation on said measuring point from one observation point of said two observation points, and a binocular parallax σ, which is a positional difference between the two measuring positions $p_R$ and $p_L$ through observation on said measuring point from said two observation points, instead of the two measuring positions $p_R$ and $p_L$ through observation on said measuring point from said two observation points.

51. An image measurement apparatus according to claim 49, wherein as said physical quantity indexing the shortest distance, a normalization shortest distance $_nd_s$ , which is expressed by the following equation, is adopted,

$$_nd_s = d_s/\Delta x_{LR}$$

and said normalization shortest distance $_nd_s$ is determined in accordance with the following equation,

$$_nd_s = {_nd_c} (n_s \cdot v)$$

using a normalized distance $_nd_c$ , which is expressed by the following equation, and the inner product $(n_s \cdot v)$

$$_nd_c = d_c/\Delta x_{LR}$$

where $d_s$ denotes a shortest distance between the measuring plane and one observation point of said two observation points, $d_c$ denotes a distance between the measuring plane and one observation point of said two observation points in an optical axis direction, and $\Delta x_{LR}$ denotes a distance between said two observation points.

52. An image measurement apparatus according to claim 49, wherein said operating unit comprising:

a first parameter altering unit for setting up the physical quantity indexing the shortest distance in form of a first parameter;
a second parameter altering unit for setting up the inner product $(n_s \cdot v)$ in form of a second parameter;
a compound ratio transformation unit for determining position $p_c$ of the intersection point on the observation plane, using said compound ratio $\{p_{axis}p_Rp_Lp_c\}$ or the operation equivalent to said compound ratio, in accordance with the physical quantity indexing the shortest distance set up in the first parameter altering unit, the inner product $(n_s \cdot v)$ set up in the second parameter altering unit, the two measuring positions $p_R$ and $p_L$ of the measuring point through observation on said measuring point from said two observation points or the measuring position $p_R$ through observation on said measuring point from one observation point of said two observation points and a binocular parallax σ, which is a positional difference between the two measuring positions $p_R$ and $p_L$ through observation on said measuring point from said two observation points, instead of the two measuring positions $p_R$ and $p_L$ through observation on said measuring point . from said two observation points, and the position $p_{axis}$ of said infinite-point of the measuring point;
a polar transformation unit for determining a polar line associated with the position $p_c$ of the intersection point on the observation plane through a polar transformation of the position $p_c$, and
a point operating unit for determining a point on the polar line, said point being given with an angle r with respect to the optical axis direction v,

$$r = \cos^{-1} (n_s \cdot v)$$

wherein said compound ratio transformation unit, said polar transformation unit and said point operating unit repeatedly perform operations by a plurality of number of times on a plurality of measuring points in said measurement space, while values of said first parameter and said second parameter are altered in said first parameter altering unit and said second parameter altering unit, so that a curved line, which couples a plurality of points determined through an execution of said point operating unit as to one measuring point by a plurality of number of times wherein a value of said first parameter is identical and a value of said second parameter is varied, is determined on the plurality of measuring points for each value of said first parameter, and said operating unit further comprises a detection unit for determining an azimuth $n_s$ of a measuring plane including a plurality of measuring points associated with a plurality of curved lines intersecting at a cross point and/or a physical quantity indexing a shortest distance between the measuring plane and one observation point of said two observation points in such a manner that cross points of curved lines, which are formed when a plurality of curved lines determined through a repetition of execution of operations of said compound ratio transformation unit, said polar transformation unit and said point operating unit by a plurality of number of times are drawn on a curved line drawing space, are determined.

**53.** An image measurement apparatus according to claim 52, wherein the measuring point appearing on the image has information as to intensity,

said point operating unit determines said point, and votes a value associated with intensity of a measuring point associated with said point for a point associated with said point in said curved line drawing space, said detection unit determines an azimuth $n_s$ of a measuring plane including a plurality of measuring points associated with a plurality of curved lines joining a voting for a maximal point and/or a physical quantity indexing a shortest distance between the measuring plane and one observation point of predetermined two observation points in such a manner that a maximal point wherein a value by a voting through a repetition of execution of operations of said compound ratio transformation unit, said polar transformation unit and said point operating unit by a plurality of number of times offers a maximal value, instead of determining of the cross point, is determined.

**54.** An image measurement apparatus according to claim 52, wherein the measuring point appearing on the image has information as to intensity,

said operating unit further comprises a third parameter altering unit for altering a value of a third parameter in which a binocular parallax $\sigma$, which is a positional difference between the two measuring positions $p_R$ and $p_L$ through observation on said measuring point from said two observation points, is set up in the form of the third parameter, said compound ratio transformation unit determines the position $p_c$ of the intersection point on the observation plane using the physical quantity indexing the shortest distance set up in the first parameter altering unit, the inner product ($n_s \cdot v$) set up in the second parameter altering unit step, the measuring position $p_R$ through observation on said measuring point from one observation point of said two observation points, the binocular parallax $\sigma$, which is set up in said third parameter altering unit, and the position $p_{axis}$ of said infinite-point of the measuring point, said point operating unit determines said point on a polar line associated with the measuring point, and determining a response intensity associated with the binocular parallax $\sigma$ on the measuring point, and of voting the response intensity associated with the binocular parallax $\sigma$ of a measuring point associated with said point on the polar line for a point associated with said point on the polar line in said curved line drawing space, said compound ratio transformation unit, said polar transformation unit and said point operating unit repeatedly perform operations by a plurality of number of times on a plurality of measuring points in said measurement space, while values of the parameters are altered in said first step, second and third parameter altering unit, and said detection unit determines an azimuth $n_s$ of a measuring plane including a plurality of measuring points associated with a plurality of curved lines joining a voting for a maximal point and/or a physical quantity indexing a shortest distance between the measuring plane and one observation point of said two observation points in such a manner that a maximal point wherein a value by a voting through a repetition of execution of operations of said first, second and third parameter altering units, said compound ratio transformation unit, said polar transformation unit and said point operating unit by a plurality of number of times offers a maximal value is determined, instead of determination of said cross point.

**55.** An image measurement apparatus according to claim 49, wherein said operating unit comprising:

a first parameter altering unit for altering the position $p_{axis}$ of said infinite-point of the measuring point through altering a value of a first parameter in which the optical axis direction v is set up in form of the first parameter;

a second parameter altering unit for altering a value of a second parameter in which the physical quantity indexing the shortest distance is set up in form of the second parameter;

a third parameter altering unit for altering a value of a third parameter in which the inner product $(n_s \cdot v)$ in form of the third parameter;

a compound ratio transformation unit for determining the position $p_c$ of the intersection point on the observation plane, using said compound ratio $\{p_{axis}p_Rp_L\ p_c\}$ or the operation equivalent to said compound ratio, in accordance with the position $p_{axis}$ of said infinite-point of the measuring point, which is set up in said first parameter altering unit, the physical quantity indexing the shortest distance, which is set up in said second parameter altering unit, the inner product $(n_s \cdot v)$ set up in said third parameter altering unit, and the two measuring positions $p_R$ and $p_L$ of the measuring point through observation on said measuring point from said two observation points or the measuring position $p_R$ through observation on said measuring point from one observation point of said two observation points and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points; and

a polar transformation unit for determining a polar line associated with the position $p_c$ of the intersection point on the observation plane through a polar transformation of the position $p_c$, and

a point transformation unit for determining a point on the polar line, said point being given with an angle r with respect to the optical axis direction v,

$$r = \cos^{-1}(n_s \cdot v)$$

wherein said first, second and third parameter altering units, said compound ratio transformation unit, said polar transformation unit and said point operating unit repeatedly perform operations by a plurality of number of times on a plurality of measuring points in said measurement space, while values of said first parameter to said third parameter are altered in said first parameter altering unit, and said second parameter altering unit and said third parameter altering unit, so that a curved line, which couples a plurality of points determined through an execution of said sixth step as to one measuring point by a plurality of number of times wherein a value of said first parameter is identical and a value of said second parameter is identical, and a value of said third parameter is varied, is determined on the plurality of measuring points for each combination of a respective value of said first parameter and a respective value of said second parameter, and

said operating unit further comprises a detection unit for determining a true optical axis direction, and for determining an azimuth $n_s$ of a measuring plane including a plurality of measuring points associated with a plurality of curved lines intersecting at a cross point determined on a curved line drawing space associated with the true optical axis direction, and/or a physical quantity indexing a shortest distance between the measuring plane and one observation point of predetermined two observation points in such a manner that cross points of curved lines, which are formed when a plurality of curved lines determined through a repetition of execution of operations of said parameter altering unit, said compound ratio transformation unit and said polar transformation unit are drawn on an associated curved line drawing space of a plurality of curved line drawing spaces according to said first parameter, are determined on each curved line drawing space, and a curved line drawing space associated with the true optical axis direction relative to said observation point on said measuring point is selected in accordance with information as to a number of curved lines intersecting at the cross points.

**56.** An image measurement apparatus according to claim 55, wherein the measuring point appearing on the image has information as to intensity,

said point operating unit determines said point, and of voting a value associated with intensity of a measuring point associated with said point for points in the curved line drawing space wherein a curved line including said point is drawn,

said detection unit determines the true optical axis direction, and determines an azimuth $n_s$ of a measuring plane including a plurality of measuring points associated with a plurality of curved lines joining a voting for a maximal point determined on a curved line drawing space associated with the true optical axis direction, and/or a physical quantity indexing a shortest distance between the measuring plane and one observation point of predetermined two observation points in such a manner that a maximal point wherein a value by a voting through a repetition of execution of operations of said parameter altering unit, said compound ratio transformation unit and said polar transformation unit offers a maximal value, instead of determining of the cross point, is determined on each curved line drawing space, and a curved line drawing space associated with the true optical axis direction is selected in accordance with information as to a maximal value at the maximal point.

**57.** An image measurement apparatus according to claim 55, wherein the measuring point appearing on the image has information as to intensity,

said operating unit further comprises a fourth parameter altering unit for altering a value of a fourth parameter in which a binocular parallax $\sigma$, which is a positional difference between the two measuring positions $p_R$ and $p_L$ through observation on said measuring point from said two observation points, is set up in form of the fourth parameter,

said compound ratio transformation unit determines the position $p_c$ of the intersection point on the observation plane using the position $p_{axis}$ of said infinite-point of the measuring point, which is set up in said first parameter altering unit, the physical quantity indexing the shortest distance, which is set up in the second parameter altering unit, the inner product ($n_s \cdot v$) set up in the third parameter altering unit, the measuring position $p_R$ through observation on said measuring point from one observation point of said two observation points, and a binocular parallax $\sigma$, which is set up in said fourth parameter altering unit,

said point operating unit determines said point associated with the measuring point, and determines a response intensity associated with the binocular parallax $\sigma$ on the measuring point, and votes the response intensity associated with the binocular parallax $\sigma$ of a measuring point associated with said point on the polar line for points in the curved line drawing space,

said compound ratio transformation unit, said polar transformation unit and point operating unit repeatedly perform operations by a plurality of number of times on a plurality of measuring points in said measurement space, while values of said parameters are altered in said first, second, third and fourth parameter altering units, and

said detection unit determines the true optical axis direction, and determines an azimuth $n_s$ of a measuring plane including a plurality of measuring points associated with a plurality of curved lines joining a voting for a maximal point determined on a curved line drawing space associated with the true optical axis direction, and/ or a physical quantity indexing a shortest distance between the measuring plane and one observation point of predetermined two observation points in such a manner that a maximal point wherein a value by a voting through a repetition of execution of operations of said first, second and third parameter altering units, said compound ratio transformation unit, said polar transformation unit and said point operating unit by a plurality of number of times offers a maximal value, instead of determining of the cross point, is determined on each curved line drawing space, and a curved line drawing space associated with the true optical axis direction is selected in accordance with information as to a maximal value at the maximal point.

**58.** An image measurement apparatus comprising an operating unit for determining an azimuth of a measuring plane and/or a physical quantity indexing a shortest distance between the measuring plane and one observation point of predetermined two observation points, using a simple ratio($p_{axis}p_R\ p_L$), which is determined by three positions $p_{axis}$, $p_R$, $p_L$ of a measuring point, or an operation equivalent to said simple ratio, where $p_R$ and $p_L$ denote measuring positions through observation of said two observation points on an arbitrary measuring point appearing on an image obtained through viewing a predetermined measurement space from a predetermined observation point inside the measurement space, respectively, v denotes an optical axis direction coupling said two observation points, and $p_{axis}$ denotes a position of an infinite-point on a straight line extending in a direction identical to the optical axis direction v, including the measuring point.

**59.** An image measurement apparatus according to claim 58, wherein said simple ratio ($p_{axis}p_Rp_L$) or the operation equivalent to said simple ratio, which are executed in said operating unit, include an operation using the measuring position $p_R$ through observation on said measuring point from one observation point of said two observation points, and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points.

**60.** An image measurement apparatus according to claim 58, wherein in said operating unit, as the positions $p_{axis}$, $p_R$, $p_L$ of the measuring point, positions projected on a sphere are adopted, and as said physical quantity indexing the shortest distance, a normalization shortest distance $_nd_s$, which is expressed by the following equation, is adopted,

$$_nd_s = d_s / \Delta x_{LR}$$

where $d_s$ denotes a shortest distance between the measuring plane and one observation point of said two observation points, and $\Delta x_{LR}$ denotes a distance between said two observation points,

wherein said operating unit comprises:

a parameter altering unit for altering a parameter in which the normalization shortest distance $_n d_s$ is set up in form of the parameter;

a parameter operating unit for determining a radius R defined by the following equation or the equivalent equation;

$$R = \cos^{-1}{(_n d_s / (p_{axis} p_R P_L))}$$

using the normalization shortest distance $_n d_s$ set up in said parameter altering unit and the simple ratio ($p_{axis} p_R p_L$) or the operation equivalent to said simple ratio; and

a small circle operating unit for determining a small circle of a radius R taking as a center a measuring position through observation on said measuring point from one observation point of said two observation points,

wherein said parameter operating unit and said small circle operating unit repeatedly perform operations by a plurality of number of times on a plurality of measuring points in said measurement space, while the parameter is altered in said parameter altering unit, and

said operating unit further comprises a detection unit for determining an azimuth $n_{s0}$ of a measuring plane including a plurality of measuring points associated with a plurality of small circles intersecting at a cross point and/or a normalization shortest distance $_n d_{s0}$ on the measuring plane in such a manner that cross points of small circles, which are formed when a plurality of small circles determined through a repetition of said parameter altering unit, said parameter operating unit and said small circle operating unit by a plurality of number of times are drawn on a small circle drawing space, are determined.

**61.** An image measurement apparatus according to claim 60, wherein the measuring point appearing on the image has information as to intensity,

said small circle operating unit determines said small circle, and of voting a value associated with intensity of a measuring point associated with said small circle for each point on a locus of the small circle, which is formed when the small circle thus determined is drawn on a small circle drawing space,

said detection unit determines an azimuth $n_{s0}$ of a measuring plane including a plurality of measuring points associated with a plurality of small circles joining a voting for a maximal point and/or a normalization shortest distance $_n d_{s0}$ on the measuring plane in such a manner that a maximal point wherein a value by a voting through a repetition of execution of operations of said parameter operating unit and said small circle operating unit by a plurality of number of times offers a maximal value, instead of determining of the cross point, is determined.

**62.** An image measurement apparatus according to claim 60, wherein the measuring point appearing on the image has information as to intensity,

said operating unit further comprises a fifth step of setting up a binocular parallax $\sigma$, which is a positional difference between the two measuring positions $p_R$ and $p_L$ through observation on said measuring point from said two observation points, in form of a second parameter,

said parameter operating unit determines the radius R using the normalization shortest distance $_n d_s$ set up in said parameter altering unit, the position $p_{axis}$ of said infinite-point of the measuring point, the measuring position $p_R$ through observation on said measuring point from one observation point of said two observation points, and the binocular parallax $\sigma$, which is set up in said second parameter altering unit,

said small circle operating unit determines said small circle associated with the measuring point, and determines a response intensity associated with the binocular parallax $\sigma$ on the measuring point, and votes the response intensity associated with the binocular parallax $\sigma$ of a measuring point associated with said small circle for each point on a locus of the small circle, which is formed when the small circle thus determined is drawn on a small circle drawing space,

said parameter altering unit, said parameter operating unit, said small circle operating unit, said second parameter altering unit repeatedly perform operations by a plurality of number of times on a plurality of measuring points in said measurement space, while values of the parameters are altered in said parameter altering unit and said second parameter altering unit, and

said detection unit determines an azimuth $n_{so}$ of a measuring plane including a plurality of measuring points associated with a plurality of small circles joining a voting for a maximal point and/or a normalization shortest distance $_nd_{so}$ on the measuring plane in such a manner that a maximal point wherein a value by a voting through a repetition of execution of operations of said parameter altering unit, said second parameter altering unit, said parameter operating unit and said small circle operating unit by a plurality of number of times offers a maximal value is determined, instead of determination of said cross point.

**63.** An image measurement apparatus according to claim 58, wherein in said operating unit, as the positions $p_{axis}$, $p_R$, $p_L$ of the measuring point, positions projected on a sphere are adopted, and as said physical quantity indexing the shortest distance, a normalization shortest distance $_nd_s$, which is expressed by the following equation, is adopted,

$$_nd_s = d_s/\Delta X_{LR}$$

where $d_s$ denotes a shortest distance between the measuring plane and one observation point of said two observation points , and $\Delta x_{LR}$ denotes a distance between said two observation points,
   wherein said operating unit comprises:

a first parameter altering unit for altering the position $p_{axis}$ of said infinite-point of the measuring point through altering a value of a first parameter in which the optical axis direction v is set up in form of the first parameter;
a second parameter altering unit for altering a value of a second parameter in which the normalization shortest distance $_nd_s$ is set up in form of the second parameter;
a parameter operating unit for determining a radius R defined by the following equation or the equivalent equation;

$$R=\cos^{-1}(_nd_s/(p_{axis}p_Rp_L))$$

using the position $p_{axis}$ of said infinite-point of the measuring point, which is set up in said parameter altering unit, the normalization shortest distance $_nd_s$ set up in said second parameter altering unit and the simple ratio $(p_{axis}p_Rp_L)$ or the operation equivalent to said simple ratio; and
a small circle operating unit for determining a small circle of a radius R taking as a center a measuring position through observation on said measuring point from one observation point of said two observation points ,
wherein said parameter operating unit and said small circle operating unit repeatedly perform operations by a plurality of number of times on a plurality of measuring points in said measurement space, while values of the first and second parameters are altered in said first parameter altering unit and said second parameter altering unit, and
said operating unit further comprises a detection unit for determining a true optical axis direction, and for determining an azimuth $n_{s0}$ of a measuring plane including a plurality of measuring points associated with a plurality of small circles intersecting at a cross point determined on a small circle drawing space associated with the true optical axis direction, and/or a a normalization shortest distance $_nd_{s0}$ on the measuring plane in such a manner that cross points of small circles, which are formed when a plurality of small circles determined through a repetition of execution of operations of said first parameter altering unit, said second parameter altering unit, said parameter operating unit and said small circle operating unit are drawn on an associated small circle drawing space of a plurality of small circle drawing spaces according to said first parameter, are determined on each small circle drawing space, and a small circle drawing space associated with the true optical axis direction relative to said observation point on said measuring point is selected in accordance with information as to a number of small circles intersecting at the cross points.

**64.** An image measurement apparatus according to claim 63, wherein the measuring point appearing on the image has information as to intensity,

said small circle operating unit determines said small circle, and votes a value associated with intensity of a measuring point associated with said small circle for each point on a locus of the small circle, which is formed when the small circle thus determined is drawn on a small circle drawing space,
said detection unit determines a true optical axis direction, and determines an azimuth $n_{s0}$ of a measuring plane including a plurality of measuring points associated with a plurality of small circles joining a voting for a maximal point determined on a small circle drawing space associated with the true optical axis direction, and/or a normalization shortest distance $_nd_{s0}$ on the measuring plane in such a manner that a maximal point wherein a value by a voting through a repetition of execution of operations of said parameter operating unit and said small circle operating unit by a plurality of number of times offers a maximal value, instead of determining of the cross point, is determined on each small circle drawing space, and a small circle drawing space associated with the true optical axis direction is selected in accordance with information as to the maximal value on the maximal point.

**65.** An image measurement apparatus according to claim 64, wherein the measuring point appearing on the image has information as to intensity,

said operating unit further comprises a third parameter altering unit for altering a value of a third parameter in which a binocular parallax $\sigma$, which is a positional difference between the two measuring positions $p_R$ and $p_L$ through observation on said measuring point from said two observation points, is set up in form of the third parameter,

said parameter operating unit determines the radius R using the position $p_{axis}$ of said infinite-point of the measuring point, which is set up in said first parameter altering unit, the normalization shortest distance $_nd_s$ set up in the second parameter altering unit step, the measuring position $p_R$ through observation on said measuring point from one observation point of said two observation points, and the binocular parallax $\sigma$, which is set up in said parameter altering unit,

said small circle operating unit determines said small circle associated with the measuring point, and determines a response intensity associated with the binocular parallax $\sigma$ on the measuring point, and votes the response intensity associated with the binocular parallax $\sigma$ of a measuring point associated with said small circle for each point on a locus of the small circle, which is formed when the small circle thus determined is drawn on a small circle drawing space associated with the small circle,

said parameter operating unit and said small circle operating unit repeatedly perform operations by a plurality of number of times on a plurality of measuring points in said measurement space, while values of the parameters are altered in said first parameter operating unit, said second parameter operating unit and said third parameter operating unit, and

said detection unit determines a true optical axis direction, and determines an azimuth $n_{s0}$ of a measuring plane including a plurality of measuring points associated with a plurality of small circles joining a voting for a maximal point determined on a small circle drawing space associated with the true optical axis direction, and/ or a normalization shortest distance $_nd_{s0}$ on the measuring plane in such a manner that a maximal point wherein a value by a voting through a repetition of execution of operations of said first parameter altering unit, said second parameter altering unit, said third parameter altering unit, said parameter operating unit and said small circle operating unit by a plurality of number of times offers a maximal value, instead of determining of the cross point, is determined on each small circle drawing space, and a small circle drawing space associated with the true optical axis direction is selected in accordance with information as to the maximal value on the maximal point.

**66.** An image measurement apparatus comprising an operating unit for determining a physical quantity indexing a distance between an arbitrary measuring point appearing on an image obtained through viewing a predetermined measurement space from a predetermined observation point inside the measurement space and one observation point of predetermined two observation points, using a simple ratio ($p_{axis}$ $p_R$ $p_L$), which is determined by three positions $p_{axis}$, $p_R$, $p_L$ of the measuring point, or an operation equivalent to said simple ratio, where $p_R$ and $p_L$ denote measuring positions through observation of said two observation points on the measuring point, respectively, and $p_{axis}$ denotes a position of an infinite-point on a straight line extending in a direction identical to an optical axis direction v coupling said two observation points, including the measuring point.

**67.** An image measurement apparatus according to claim 66, wherein said simple ratio ($p_{axis}p_Rp_L$) or the operation equivalent to said simple ratio, which are executed in said operating unit, include an operation using the measuring position $p_R$ through observation on said measuring point from one observation point of said two observation points, and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points.

**68.** An image measurement apparatus according to claim 182, wherein as said physical quantity indexing the distance, a normalized distance $_nd_0$, which is expressed by the following equation, is adopted,

$$_nd_0 = d_0/\Delta x_{LR}$$

where $d_0$ denotes a distance between the measuring point and one observation point of said two observation points, and $\Delta x_{LR}$ denotes a distance between said two observation points, and said normalized distance $_nd_0$ is determined in accordance with the following equation

$$_nd_0 = (p_{axis}p_Rp_L)$$

or an equation equivalent to the above equation.

**69.** An image measurement program storage medium storing an image measurement program for determining an azimuth of a measuring plane and/or a physical quantity indexing a distance between the measuring plane and one observation point of predetermined two observation points in an optical axis direction v coupling said two observation points, using a compound ratio $\{p_{axis}\ p_Rp_Lp_c\}$, which is determined by four positions $p_{axis}$, $p_R$, $p_L$, $p_c$, or an operation equivalent to said compound ratio, where $p_R$ and $p_L$ denote measuring positions through observation of said two observation points on an arbitrary measuring point appearing on an image obtained through viewing a predetermined measurement space from said two observation points inside the measurement space, respectively, $p_{axis}$ denotes a position of an infinite-point on a straight line extending in a direction identical to the optical axis direction v, including the measuring point, and $p_c$ denotes a position of an intersection point with said straight line on an observation plane extending in parallel to a measuring plane including the measuring point, including one observation point of said two observation points.

**70.** An image measurement program storage medium according to claim 69, wherein said compound ratio $\{p_{axis}p\ _Rp_Lp_c\}$ or the operation equivalent to said compound ratio, which are executed by said image measurement program, include an operation using the measuring position $p_R$ through observation on said measuring point from one observation point of said two observation points, and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points.

**71.** An image measurement program storage medium according to claim 69, wherein in said image measurement program, as the physical quantity indexing a distance between the measuring plane and one observation point of said two observation points in the optical axis direction, a normalized distance $_nd_c$, which is expressed by the following equation, is adopted,

$$_nd_c=d_c/\Delta x_{LR}$$

where $d_c$ denotes a distance between the measuring plane and one observation point of said two observation points in the optical axis direction, and $\Delta X_{LR}$ denotes a distance between said two observation points,
    and said normalized distance $_nd_c$ is determined in accordance with the following equation

$$_nd_c = \{p_{axis}p_Rp_Lp_c\}$$

or an equation equivalent to the above equation.

**72.** An image measurement program storage medium according to claim 69, wherein said image measurement program comprising:

a first step of setting up the physical quantity indexing a distance between the measuring plane and one observation point of said two observation points in the optical axis direction in form of a parameter;
a second step of determining the position $p_c$ of the intersection point on the observation plane, using said compound ratio $\{p_{axis}p_Rp_Lp_c\}$ or the operation equivalent to said compound ratio, in accordance with the physical quantity indexing a distance between the measuring plane and one observation point of said two observation points in the optical axis direction set up in the first step, the two measuring positions $p_R$ and $p_L$ of the measuring point through observation on said measuring point from said two observation points or the measuring position $p_R$ through observation on said measuring point from one observation point of said two observation points and a binocular parallax $\sigma$, which is a positional difference between the two measuring positions $p_R$ and $p_L$ through observation on said measuring point from said two observation points, instead of the two measuring positions $p_R$ and $p_L$, and the position $p_{axis}$ of said infinite-point of the measuring point; and

a third step of determining a polar line associated with the measuring point through a polar transformation of the position $p_c$ of the intersection point on the observation plane,

wherein said-second step and said third step are repeated by a plurality of number of times on a plurality of measuring points in said measurement space, while a value of said parameter is altered in said first step, and thereafter,

effected is a fourth step of determining an azimuth of a measuring plane including a plurality of measuring points associated with a plurality of polar lines intersecting at a cross point and/or a physical quantity indexing said physical quantity indexing a distance between the measuring plane and one observation point of said two observation points in the optical axis direction in such a manner that cross points of polar lines, which are formed when a plurality of polar lines determined through a repetition of said first to third steps by a plurality of number of times are drawn on a polar line drawing space, are determined.

**73.** An image measurement program storage medium according to claim 72, wherein the measuring point appearing on the image has information as to intensity,

said third step is a step of determining the polar line, and of voting a value associated with intensity of a measuring point associated with the polar line for each point on a locus of the polar line, which is formed when the polar line thus determined is drawn on a polar line drawing space, and

said fourth step is a step of determining an azimuth of a measuring plane including a plurality of measuring points associated with a plurality of polar lines joining a voting for a maximal point and/or said physical quantity indexing a distance between the measuring plane and one observation point of said two observation points in the optical axis direction in such a manner that a maximal point wherein a value by a voting through a repetition of execution of said first to third steps by a plurality of number of times offers a maximal value, instead of determining of the cross point, is determined.

**74.** An image measurement program storage medium according to claim 72, wherein the measuring point appearing on the image has information as to intensity,

said image measurement program further comprises a fifth step of setting up a binocular parallax $\sigma$, which is a positional difference between the two measuring positions $p_R$ and $p_L$ through observation on said measuring point from said two observation points, in the form of a second parameter,

said second step is a step of determining the position $p_c$ of the intersection point on the observation plane using the physical quantity indexing a distance between the measuring plane and one observation point of said two observation points in the optical axis direction , which is set up in said first step, the measuring position $p_R$ through observation on said measuring point from one observation point of said two observation points, the binocular parallax $\sigma$, which is set up in said fifth step, and the position $p_{axis}$ of said infinite-point of the measuring point,

said third step is a step of determining a polar line associated with the measuring point, and determining a response intensity associated with the binocular parallax $\sigma$ on the measuring point, and of voting the response intensity associated with the binocular parallax $\sigma$ of a measuring point associated with the polar line for each point on a locus of the polar line, which is formed when the polar line thus determined is drawn on a polar line drawing space,

said second step and the third step are repeated by a plurality of number of times on a plurality of measuring points in said measurement space, while values of said parameters are altered in said first step and said fifth step, and

said fourth step is a step of determining an azimuth of a measuring plane including a plurality of measuring points associated with a plurality of polar lines joining a voting for a maximal point and/or said physical quantity indexing a distance between the measuring plane and one observation point of said two observation points in the optical axis direction in such a manner that a maximal point wherein a value by a voting through a repetition of said first, fifth, second and third steps by a plurality of number of times offers a maximal value is determined, instead of determination of said cross point.

**75.** An image measurement program storage medium according to claim 69, wherein said image measurement program comprising:

a first step of setting up the position $p_{axis}$ of said infinite-point of the measuring point through setting up the optical axis direction v in form of a first parameter;

a second step of setting up the physical quantity indexing a distance between the measuring plane and one observation point of said two observation points in the optical axis direction in form of a second parameter;

a third step of determining the position $p_c$ of the intersection point on the observation plane, using said compound ratio $\{p_{axis}\, p_R p_L p_c\}$ or the operation equivalent to said compound ratio, in accordance with the position $p_{axis}$ set up in said first step, the physical quantity indexing a distance between the measuring plane and one observation point of said two observation points in the optical axis direction set up in the second step, and the two measuring positions $p_R$ and $p_L$ of the measuring point through observation on said measuring point from said two observation points or the measuring position $p_R$ through observation on said measuring point from one observation point of said two observation points and a binocular parallax σ, which is a positional difference between the two measuring positions $p_R$ and $p_L$ through observation on said measuring point from said two observation points, instead of the two measuring positions $p_R$ and $p_L$ through observation on said measuring point from said two observation points; and

a fourth step of determining a polar line associated with the measuring point through a polar transformation of the position $p_c$ of the intersection point on the observation plane,

wherein said third step and said fourth step of said first step to said fourth step are repeated by a plurality of number of times on a plurality of measuring points in said measurement space, while values of said first parameter and said second parameter are altered in said first step and said second step, and thereafter, effected is a fifth step of determining a true optical axis direction , and of determining an azimuth of a measuring plane including a plurality of measuring points associated with a plurality of polar lines intersecting at a cross point determined on a polar line drawing space associated with the true optical axis direction , and/or said physical quantity indexing a distance between the measuring plane and one observation point of said two observation points in the optical axis direction in such a manner that cross points of polar lines, which are formed when a plurality of polar lines determined through a repetition of said first to fourth steps are drawn on an associated polar line drawing space of a plurality of polar line drawing spaces according to said first parameter, are determined on each polar line drawing space, and a polar line drawing space associated with the true optical axis direction relative to said observation point on said measuring point is selected in accordance with information as to a number of polar lines intersecting at the cross points.

**76.** An image measurement program storage medium according to claim 75, wherein the measuring point appearing on the image has information as to intensity,

said fourth step is a step of determining the polar line, and of voting a value associated with intensity of a measuring point associated with the polar line for each point on a locus of the polar line, which is formed when the polar line thus determined is drawn on the polar line drawing space,

said fifth step is a step of determining the true optical axis direction , and of determining an azimuth of a measuring plane including a plurality of measuring points associated with a plurality of polar lines joining a voting for a maximal point determined on a polar line drawing space associated with the true optical axis direction , and/or said physical quantity indexing a distance between the measuring plane and one observation point of said two observation points in the optical axis direction in such a manner that a maximal point wherein a value by a voting through a repetition of execution of said first to fourth steps offers a maximal value, instead of determining of the cross point, is determined on each polar line drawing space, and a polar line drawing space associated with the true optical axis direction is selected in accordance with information as to a maximal value at the maximal point.

**77.** An image measurement program storage medium according to claim 75, wherein the measuring point appearing on the image has information as to intensity,

said image measurement program further comprises a sixth step of setting up a binocular parallax σ, which is a positional difference between the two measuring positions $p_R$ and $p_L$ through observation on said measuring point from said two observation points, in the form of a third parameter,

said third step is a step of determining the position $p_c$ of the intersection point on the observation plane using the position $p_{axis}$ , which is set up in said first step, the physical quantity indexing a distance between the measuring plane and one observation point of said two observation points in the optical axis direction , which is set up in said second step, the measuring position $p_R$ through observation on said measuring point from one observation point of said two observation points, and the binocular parallax $\sigma$, which is set up in said sixth step,

said fourth step is a step of determining a polar line associated with the measuring point, and determining a response intensity associated with the binocular parallax $\sigma$ on the measuring point, and of voting the response intensity associated with the binocular parallax $\sigma$ of a measuring point associated with the polar line for each point on a locus of the polar line, which is formed when the polar line thus determined is drawn on a polar line drawing space,

said third step and the fourth step are repeated by a plurality of number of times on a plurality of measuring points in said measurement space, while values of said parameters are altered in said second step and said sixth step, and

said fifth step is a step of determining the true optical axis direction, and of determining an azimuth of a measuring plane including a plurality of measuring points associated with a plurality of polar lines joining a voting for a maximal point determined on a polar line drawing space associated with the true optical axis direction , and/or said physical quantity indexing a distance between the measuring plane and one observation point of said two observation points in the optical axis direction in such a manner that a maximal point wherein a value by a voting through a repetition of execution of the first, second, sixth, third and fourth steps by a plurality of number of times offers a maximal value, instead of determining of the cross point, is determined on each polar line drawing space, and a polar line drawing space associated with the true optical axis direction is selected in accordance with information as to a maximal value at the maximal point.

**78.** An image measurement program storage medium storing an image measurement program for determining an azimuth $n_s$ of a measuring plane and/or a physical quantity indexing a shortest distance between the measuring plane and one observation point of predetermined two observation points, using a compound ratio $\{p_{axis}p_Rp_Lp_c\}$, which is determined by four positions $p_{axis}$, $p_R$, $p_L$, $p_c$ of a measuring point, or an operation equivalent to said compound ratio, and an inner product $(n_s \cdot v)$ of the azimuth $n_s$ of the measuring plane and an optical axis direction $v$, where $p_R$ and $p_L$ denote measuring positions through observation of said two observation points on an arbitrary measuring point appearing on an image obtained through viewing a predetermined measurement space from predetermined two observation points inside the measurement space, respectively, $v$ denotes the optical axis direction coupling said two observation points, $p_{axis}$ denotes a position of an infinite-point on a straight line extending in a direction identical to the optical axis direction $v$, including the measuring point, $p_c$ denotes a position of an intersection point with said straight line on an observation plane extending in parallel to a measuring plane including the measuring point, including one observation point of said two observation points, and $n_s$ denotes the azimuth of the measuring plane.

**79.** An image measurement program storage medium according to claim 78, wherein said compound ratio $\{p_{axis}p_Rp_Lp_c\}$ or the operation equivalent to said compound ratio, which are executed by said image measurement program, include an operation using the measuring position $p_R$ through observation on said measuring point from one observation point of said two observation points, and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points.

**80.** An image measurement program storage medium according to claim 78, wherein in said image measurement program, as the physical quantity indexing the shortest distance, a normalization shortest distance $_nd_s$ , which is expressed by the following equation, is adopted,

$$_nd_s = d_s/\Delta x_{LR}$$

and said normalization shortest distance $_nd_s$ is determined in accordance with the following equation,

$$_nd_s = {_nd_c} (n_s \cdot v)$$

using a normalized distance $_nd_c$, which is expressed by the following equation, and the inner product $(n_s \cdot v)$

$$_nd_c = d_c/\Delta x_{LR}$$

where $d_s$ denotes a shortest distance between the measuring plane and one observation point of said two observation points, $d_c$ denotes a distance between the measuring plane and one observation point of said two observation points in an optical axis direction, and $\Delta x_{LR}$ denotes a distance between said two observation points.

**81.** An image measurement program storage medium according to claim 78, wherein said image measurement program comprising:

a first step of setting up the physical quantity indexing the shortest distance in form of a first parameter;

a second step of setting up the inner product ($n_s \cdot v$) in form of a second parameter;

a third step of determining the position $p_c$ of the intersection point on the observation plane, using said compound ratio $\{p_{axis}p_R p_L p_c\}$ or the operation equivalent to said compound ratio, in accordance with the physical quantity indexing the shortest distance set up in the first step, the inner product ($n_s \cdot v$) set up in the second step, the two measuring positions $p_R$ and $p_L$ of the measuring point through observation on said measuring point from said two observation points or the measuring position $p_R$ through observation on said measuring point from one observation point of said two observation points and a binocular parallax σ, which is a positional difference between the two measuring positions $p_R$ and $p_L$ through observation on said measuring point from said two observation points, instead of the two measuring positions $p_R$ and $p_L$ through observation on said measuring point from said two observation points, and the position $p_{axis}$ of said infinite-point of the measuring point;

a fourth step of determining a polar line associated with the position $p_c$ of the intersection point on the observation plane through a polar transformation of the position $p_c$ , and

a fifth step of determining a point on the polar line, said point being given with an angle r with respect to the optical axis direction v,

$$r = \cos^{-1} (n_s \cdot v)$$

wherein said third step to said fifth step, of said first step to said fifth step, are repeated by a plurality of number of times on a plurality of measuring points in said measurement space, while values of said first parameter and said second parameter are altered in said first step and said second step, so that a curved line, which couples a plurality of points determined through an execution of said fifth step as to one measuring point by a plurality of number of times wherein a value of said first parameter is identical and a value of said second parameter is varied, is determined on the plurality of measuring points for each value of said first parameter, and thereafter,

effected is a sixth step of determining an azimuth $n_s$ of a measuring plane including a'plurality of measuring points associated with a plurality of curved lines intersecting at a cross point and/or a physical quantity indexing a shortest distance between the measuring plane and one observation point of said two observation points in such a manner that cross points of curved lines, which are formed when a plurality of curved lines determined through a repetition of said first to fifth steps by a plurality of number of times are drawn on a curved line drawing space, are determined.

**82.** An image measurement program storage medium according to claim 81, wherein the measuring point appearing on the image has information as to intensity,

said fifth step is a step of determining said point, and of voting a value associated with intensity of a measuring point associated with said point for a point associated with said point in said curved line drawing space, said sixth step is a step of determining an azimuth $n_s$ of a measuring plane including a plurality of measuring points associated with a plurality of curved lines joining a voting for a maximal point and/or a physical quantity indexing a shortest distance between the measuring plane and one observation point of predetermined two observation points in such a manner that a maximal point wherein a value by a voting through a repetition of execution of said first to fifth steps by a plurality of number of times offers a maximal value, instead of determining of the cross point, is determined.

**83.** An image measurement program storage medium according to claim 81, wherein the measuring point appearing on the image has information as to intensity,

said image measurement program further comprises a seventh step of setting up a binocular parallax σ, which is a positional difference between the two measuring positions $p_R$ and $p_L$ through observation on said measuring point from said two observation points, in the form of a third parameter,

said third step is a step of determining the position $p_c$ of the intersection point on the observation plane using the physical quantity indexing the shortest distance set up in the first step, the inner product $(n_s \cdot v)$ set up in the second step, the measuring position $p_R$ through observation on said measuring point from one observation point of said two observation points, the binocular parallax $\sigma$, which is set up in said seventh step, and the position $p_{axis}$ of said infinite-point of the measuring point,

said fifth step is a step of determining said point on a polar line associated with the measuring point, and determining a response intensity associated with the binocular parallax $\sigma$ on the measuring point, and of voting the response intensity associated with the binocular parallax $\sigma$ of a measuring point associated with said point on the polar line for a point associated with said point on the polar line in said curved line drawing space,

said third step to said fifth step are repeated by a plurality of number of times on a plurality of measuring points in said measurement space, while values of the parameters are altered in said first step, said second step and said seventh step, and

said sixth step is a step of determining an azimuth $n_s$ of a measuring plane including a plurality of measuring points associated with a plurality of curved lines joining a voting for a maximal point and/or a physical quantity indexing a shortest distance between the measuring plane and one observation point of said two observation points in such a manner that a maximal point wherein a value by a voting through a repetition of said first, second, seventh and third to fifth steps by a plurality of number of times offers a maximal value is determined, instead of determination of said cross point.

84. An image measurement program storage medium according to claim 78, wherein said image measurement program comprising::

a first step of setting up the position $p_{axis}$ of said infinite-point of the measuring point through setting up the optical axis direction $v$ in form of a first parameter;

a second step of setting up the physical quantity indexing the shortest distance in form of a second parameter;

a third step of setting up the inner product $(n_s \cdot v)$ in form of a third parameter;

a fourth step of determining the position $p_c$ of the intersection point on the observation plane, using said compound ratio $\{p_{axis}p_Rp_Lp_c\}$ or the operation equivalent to said compound ratio, in accordance with the position $p_{axis}$ of said infinite-point of the measuring point, which is set up in said first step, the physical quantity indexing the shortest distance, which is set up in the second step, the inner product $(n_s \cdot v)$ set up in the third step, and the two measuring positions $p_R$ and $p_L$ of the measuring point through observation on said measuring point from said two observation points or the measuring position $p_R$ through observation on said measuring point from one observation point of said two observation points and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points; and

a fifth step of determining a polar line associated with the position $p_c$ of the intersection point on the observation plane through a polar transformation of the position $p_c$ , and

a sixth step of determining a point on the polar line, said point being given with an angle $r$ with respect to the optical axis direction $v$,

$$r=\cos^{-1} (n_s \cdot v)$$

wherein said fourth step to said sixth step, of said first step to said sixth step, are repeated by a plurality of number of times on a plurality of measuring points in said measurement space, while values of said first parameter to said third parameter are altered in said first step to said third step, so that a curved line, which couples a plurality of points determined through an execution of said sixth step as to one measuring point by a plurality of number of times wherein a value of said first parameter is identical and a value of said second parameter is identical, and a value of said third parameter is varied, is determined on the plurality of measuring points for each combination of a respective value of said first parameter and a respective value of said second parameter, and thereafter,

effected is a seventh step of determining a true optical axis direction , and of determining an azimuth $n_s$ of a measuring plane including a plurality of measuring points associated with a plurality of curved lines intersecting at a cross point determined on a curved line drawing space associated with the true optical axis direction, and/or a physical quantity indexing a shortest distance between the measuring plane and one observation point of predetermined two observation points in such a manner that cross points of curved lines, which are formed when a plurality of curved lines determined through a repetition of said first to sixth steps are drawn on an associated curved line drawing space of a plurality of curved line drawing spaces according to said first parameter, are determined on each curved line drawing space, and a curved line drawing space associated with the true optical axis direction relative to said observation point on said measuring point is selected in accordance with information as to a number of curved lines intersecting at the cross points.

85. An image measurement program storage medium according to claim 84, wherein the measuring point appearing on the image has information as to intensity,

said sixth step is a step of determining said point, and of voting a value associated with intensity of a measuring point associated with said point for points in the curved line drawing space wherein a curved line including said point is drawn,

said seventh step is a step of determining the true optical axis direction, and of determining an azimuth $n_s$ of a measuring plane including a plurality of measuring points associated with a plurality of curved lines joining a voting for a maximal point determined on a curved line drawing space associated with the true optical axis direction, and/or a physical quantity indexing a shortest distance between the measuring plane and one observation point of predetermined two observation points in such a manner that a maximal point wherein a value by a voting through a repetition of execution of said first to sixth steps offers a maximal value, instead of determining of the cross point, is determined on each curved line drawing space, and a curved line drawing space associated with the true optical axis direction is selected in accordance with information as to a maximal value at the maximal point.

86. An image measurement program storage medium according to claim 84, wherein the measuring point appearing on the image has information as to intensity,

said image measurement program further comprises a eighth step of setting up a binocular parallax σ, which is a positional difference between the two measuring positions $p_R$ and $p_L$ through observation on said measuring point from said two observation points, in the form of a fourth parameter,

said fourth step is a step of determining the position $p_c$ of the intersection point on the observation plane using the position $p_{axis}$ of said infinite-point of the measuring point, which is set up in said first step, the physical quantity indexing the shortest distance, which is set up in the second step, the inner product $(n_s \cdot v)$ set up in the third step, the measuring position $p_R$ through observation on said measuring point from one observation point of said two observation points, and a binocular parallax σ, which is set up in said eighth step,

said sixth step is a step of determining said point associated with the measuring point, and determining a response intensity associated with the binocular parallax σ on the measuring point, and of voting the response intensity associated with the binocular parallax σ of a measuring point associated with said point on the polar line for points in the curved line drawing space,

said fourth to sixth steps are repeated by a plurality of number of times on a plurality of measuring points in said measurement space, while values of said parameters are altered in said first, second, third and eighth steps, and

said seventh step is a step of determining the true optical axis direction, and of determining an azimuth $n_s$ of a measuring plane including a plurality of measuring points associated with a plurality of curved lines joining a voting for a maximal point determined on a curved line drawing space associated with the true optical axis direction , and/or a physical quantity indexing a shortest distance between the measuring plane and one observation point of predetermined two observation points in such a manner that a maximal point wherein a value by a voting through a repetition of execution of the first, second, third, eighth steps, and the fourth to sixth steps by a plurality of number of times offers a maximal value, instead of determining of the cross point, is determined on each curved line drawing space, and a curved line drawing space associated with the true optical axis direction is selected in accordance with information as to a maximal value at the maximal point.

87. An image measurement program storage medium storing an image measurement program for determining an azimuth of a measuring plane and/or a physical quantity indexing a shortest distance between the measuring plane and one observation point of predetermined two observation points, using a simple ratio$(p_{axis} p_R\ p_L)$, which is determined by three positions $p_{axis}$, $p_R$, $p_L$ of a measuring point, or an operation equivalent to said simple ratio, where $p_R$ and $p_L$ denote measuring positions through observation of said two observation points on an arbitrary measuring point appearing on an image obtained through viewing a predetermined measurement space from a predetermined observation point inside the measurement space, respectively, v denotes an optical axis direction coupling said two observation points, and $p_{axis}$ denotes a position of an infinite-point on a straight line extending in a direction identical to the optical axis direction v, including the measuring point.

**88.** An image measurement program storage medium according to claim 87, wherein said simple ratio ($p_{axis}$ $p_R$ $p_L$) or the operation equivalent to said simple ratio, which are executed by said image measurement program, include an operation using the measuring position $p_R$ through observation on said measuring point from one observation point of said two observation points, and a binocular parallax σ, which is a positional difference between the two measuring positions $p_R$ and $p_L$ through observation on said measuring point from said two observation points, instead of the two measuring positions $p_R$ and $p_L$ through observation on said measuring point from said two observation points.

**89.** An image measurement program storage medium according to claim 87, wherein in said image measurement program, as the positions $p_{axis}$, $p_R$, $p_L$ of the measuring point, positions projected on a sphere are adopted, and as said physical quantity indexing the shortest distance, a normalization shortest distance $_n d_s$ , which is expressed by the following equation, is adopted,

$$_n d_s = d_s / \Delta x_{LR}$$

where $d_s$ denotes a shortest distance between the measuring plane and one observation point of said two observation points, and $\Delta x_{LR}$ denotes a distance between said two observation points,

a first step of setting up the normalization shortest distance $_n d_s$ in form of a parameter;
a second step of determining a radius R defined by the following equation or the equivalent equation;

$$R = \cos^{-1}(_n d_s / (p_{axis} p_R p_L))$$

using the normalization shortest distance $_n d_s$ set up in the first step and the simple ratio ($p_{axis} p_R p_L$) or the operation equivalent to said simple ratio, and
a third step of determining a small circle of a radius R taking as a center a measuring position through observation on said measuring point from one observation point of said two observation points,
wherein said second step and said third step are repeated by a plurality of number of times on a plurality of measuring points in said measurement space, while the parameter is altered in said first step, and thereafter, effected is a fourth step of determining an azimuth $n_{s0}$ of a measuring plane including a plurality of measuring points associated with a plurality of small circles intersecting at a cross point and/or a normalization shortest distance $_n d_{s0}$ on the measuring plane in such a manner that cross points of small circles, which are formed when a plurality of small circles determined through a repetition of said first to third steps by a plurality of number of times are drawn on a small circle drawing space, are determined.

**90.** An image measurement program storage medium according to claim 89, wherein the measuring point appearing on the image has information as to intensity,

said third step is a step of determining said small circle, and of voting a value associated with intensity of a measuring point associated with said small circle for each point on a locus of the small circle, which is formed when the small circle thus determined is drawn on a small circle drawing space,
said fourth step is a step of determining an azimuth $n_{s0}$ of a measuring plane including a plurality of measuring points associated with a plurality of small circles joining a voting for a maximal point and/or a normalization shortest distance $_n d_{s0}$ on the measuring plane in such a manner that a maximal point wherein a value by a voting through a repetition of execution of said first to third steps by a plurality of number of times offers a maximal value, instead of determining of the cross point, is determined.

**91.** An image measurement program storage medium according to claim 89, wherein the measuring point appearing on the image has information as to intensity,

said image measurement program further comprises a fifth step of setting up a binocular parallax σ, which is a positional difference between the two measuring positions $p_R$ and $p_L$ through observation on said measuring point from said two observation points, in form of a second parameter,
said second step is a step of determining the radius R using the normalization shortest distance $_n d_s$ set up in the first step, the position $p_{axis}$ of said infinite-point of the measuring point, the measuring position $p_R$ through observation on said measuring point from one observation point of said two observation points, and the binocular parallax σ, which is set up in said fifth step,

said third step is a step of determining said small circle associated with the measuring point, and determining a response intensity associated with the binocular parallax σ on the measuring point, and of voting the response intensity associated with the binocular parallax σ of a measuring point associated with said small circle for each point on a locus of the small circle, which is formed when the small circle thus determined is drawn on a small circle drawing space,

said second step and said third step are repeated by a plurality of number of times on a plurality of measuring points in said measurement space, while values of the parameters are altered in said first step and said fifth step, and

said fourth step is a step of determining an azimuth $n_{so}$ of a measuring plane including a plurality of measuring points associated with a plurality of small circles joining a voting for a maximal point and/or a normalization shortest distance $_nd_{so}$ on the measuring plane in such a manner that a maximal point wherein a value by a voting through a repetition of said first, fifth, second and third steps by a plurality of number of times offers a maximal value is determined, instead of determination of said cross point.

92. An image measurement program storage medium according to claim 87, wherein in said image measurement program, as the positions $p_{axis}$, $p_R$, $p_L$ of the measuring point, positions projected on a sphere are adopted, and as said physical quantity indexing the shortest distance, a normalization shortest distance $_nd_s$ , which is expressed by the following equation, is adopted,

$$_nd_s = d_s / \Delta x_{LR}$$

where $d_s$ denotes a shortest distance between the measuring plane and one observation point of said two observation points , and $\Delta x_{LR}$ denotes a distance between said two observation points,

a first step of setting up the position $p_{axis}$ of said infinite-point of the measuring point through setting up the optical axis direction v in form of a first parameter;
a second step of setting up the normalization shortest distance $_nd_s$ in form of a second parameter;
a third step of determining a radius R defined by the following equation or the equivalent equation;

$$R = \cos^{-1} (_nd_s / (p_{axis}p_Rp_L))$$

using the position $p_{axis}$ of said infinite-point of the measuring point, which is set up in the first step, the normalization shortest distance $_nd_s$ set up in the second step and the simple ratio $(p_{axis}p_Rp_L)$ or the operation equivalent to said simple ratio, and
a fourth step of determining a small circle of a radius R taking as a center a measuring position through observation on said measuring point from one observation point of said two observation points ,
wherein said third step and said fourth step are repeated by a plurality of number of times on a plurality of measuring points in said measurement space, while values of the first and second parameters are altered in said first step and said second step, and thereafter,
effected is a fifth step of determining a true optical axis direction, and of determining an azimuth $n_{s0}$ of a measuring plane including a plurality of measuring points associated with a plurality of small circles intersecting at a cross point determined on a small circle drawing space associated with the true optical axis direction, and/or a a normalization shortest distance $_nd_{s0}$ on the measuring plane in such a manner that cross points of small circles, which are formed when a plurality of small circles determined through a repetition of said first to fourth steps are drawn on an associated small circle drawing space of a plurality of small circle drawing spaces according to said first parameter, are determined on each small circle drawing space, and a small circle drawing space associated with the true optical axis direction relative to said observation point on said measuring point is selected in accordance with information as to a number of small circles intersecting at the cross points.

93. An image measurement program storage medium according to claim 92, wherein the measuring point appearing on the image has information as to intensity,

said fourth step is a step of determining said small circle, and of voting a value associated with intensity of a measuring point associated with said small circle for each point on a locus of the small circle, which is formed when the small circle thus determined is drawn on a small circle drawing space,

said fifth step is a step of determining a true optical axis direction, and of determining an azimuth $n_{s0}$ of a measuring plane including a plurality of measuring points associated with a plurality of small circles joining a voting for a maximal point determined on a small circle drawing space associated with the true optical axis direction, and/or a normalization shortest distance $_nd_{s0}$ on the measuring plane in such a manner that a maximal point wherein a value by a voting through a repetition of execution of said first to fourth steps by a plurality of number of times offers a maximal value, instead of determining of the cross point, is determined on each small circle drawing space, and a small circle drawing space associated with the true optical axis direction is selected in accordance with information as to the maximal value on the maximal point.

**94.** An image measurement program storage medium according to claim 92, wherein the measuring point appearing on the image has information as to intensity,

said image measurement program further comprises a sixth step of setting up a binocular parallax $\sigma$, which is a positional difference between the two measuring positions $p_R$ and $p_L$ through observation on said measuring point from said two observation points, in form of a third parameter,
said second step is a step of determining the radius R using the position $p_{axis}$ of said infinite-point of the measuring point, which is set up in said first step, the normalization shortest distance $_nd_s$ set up in the second step, the measuring position $p_R$ through observation on said measuring point from one observation point of said two observation points, and the binocular parallax $\sigma$, which is set up in said fifth step,
said fourth step is a step of determining said small circle associated with the measuring point, and determining a response intensity associated with the binocular parallax $\sigma$ on the measuring point, and of voting the response intensity associated with the binocular parallax $\sigma$ of a measuring point associated with said small circle for each point on a locus of the small circle, which is formed when the small circle thus determined is drawn on a small circle drawing space associated with the small circle,
said third step and said fourth step are repeated by a plurality of number of times on a plurality of measuring points in said measurement space, while values of the parameters are altered in said first step, said second step and said sixth step, and
said fifth step is a step of determining a true optical axis direction , and of determining an azimuth $n_{s0}$ of a measuring plane including a plurality of measuring points associated with a plurality of small circles joining a voting for a maximal point determined on a small circle drawing space associated with the true optical axis direction, and/or a normalization shortest distance $_nd_{s0}$ on the measuring plane in such a manner that a maximal point wherein a value by a voting through a repetition of execution of said first, second, sixth, third and fourth steps by a plurality of number of times offers a maximal value, instead of determining of the cross point, is determined on each small circle drawing space, and a small circle drawing space associated with the true optical axis direction is selected in accordance with information as to the maximal value on the maximal point.

**95.** An image measurement program storage medium storing an image measurement program for determining a physical quantity indexing a distance between an arbitrary measuring point appearing on an image obtained through viewing a predetermined measurement space from a predetermined observation point inside the measurement space and one observation point of predetermined two observation points, using a simple ratio ($p_{axis}\ p_R\ p_L$), which is determined by three positions $p_{axis}$, $p_R$, $p_L$ of the measuring point, or an operation equivalent to said simple ratio, where $p_R$ and $p_L$ denote measuring positions through observation of said two observation points on the measuring point, respectively, and $p_{axis}$ denotes a position of an infinite-point on a straight line extending in a direction identical to an optical axis direction v coupling said two observation points, including the measuring point.

**96.** An image measurement program storage medium according to claim 95, wherein said simple ratio ($p_{axis}p_R\ p_L$ ) or the operation equivalent to said simple ratio, which are executed by said image measurement program, include an operation using the measuring position $p_R$ through observation on said measuring point from one observation point of said two observation points, and a binocular parallax $\sigma$, which is a positional difference between the two measuring positions $p_R$ and $p_L$ through observation on said measuring point from said two observation points, instead of the two measuring positions $p_R$ and $p_L$ through observation on said measuring point from said two observation points.

**97.** , An image measurement program storage medium according to claim 95, wherein in said image measurement program, as the physical quantity indexing the distance, a normalized distance $_nd_0$, which is expressed by the following equation, is adopted,

$$_nd_0 = d_0/\Delta x_{LR}$$

where $d_0$ denotes a distance between the measuring point and one observation point of said two observation points, and $\Delta x_{LR}$ denotes a distance between said two observation points, and said normalized distance $_nd_0$ is determined in accordance with the following equation

$$_nd_0 = (p_{axis}p_Rp_L)$$

or an equation equivalent to the above equation.

Fig. 1

# Fig. 2

300

302

301

301a

301b

303

304

# Fig. 3

Fig. 4

# Fig. 5

# Fig. 6

# Fig. 7

# Fig. 8

# Fig. 9

# Fig. 10(A)

CANDIDATES OF PLANAR AZIMUTH($n_s$)

$p_0$

$\tau$

$p_1$

POLAR TRANSFORMATION

$p_{Int} = v$

$p_c$

# Fig. 10(B)

$n^t{}_c$

$n^t{}_{c0}$

$n_{s0}$

EP 1 178 434 A2

Fig. 12

# Fig. 13

# Fig. 14

# Fig. 15

# Fig. 16

# Fig. 17(A)    Fig. 17(B)    Fig. 17(C)

CANDIDATES OF PLANAR AZIMUTH ($n_s$)

$p_0$

$\tau$

$p_1$

$p_{inf} = v$

SMALL CIRCLE TRANSFORMATION

$_nd_s$    $_nd_{s0}$    $n_{s0}$

$_nd_s$    $0$    $nd_s$    $p_0$    $R$    $_nd_0$

Fig. 18

UPPER LIMIT $\leftarrow$ ——————————————— $_n d_s$ ———————————————

CYLINDRICAL
ARRANGEMENT

$_n d_s$

$_n d_{s0}$

$n_{s0}$

EP 1 178 434 A2

144

Fig. 19(A)

Fig. 19(B)

EP 1 178 434 A2

# Fig. 22(A)

# Fig. 22(B)

EP 1 178 434 A2

# Fig. 23

Fig. 24(A)

Fig. 24(B)

# Fig. 25

# Fig. 26

# Fig. 27 (A)

CANDIDATES OF PLANAR
AZIMUTH { $n_s$ }

$p_R$

$\sigma$

$p_L$

$p_{axis}$

SMALL CIRCLE
TRANSFORMATION

# Fig.27(B)

$_n d_s$

$_n d_{s0}$

$n_{s0}$

EP 1 178 434 A2

# Fig. 50

# Fig. 51

```
        ( START )
      ┌──────────────────┐
      │  SET UP P_axis   │  (B-1-1)
      └──────────────────┘
      ┌──────────────────┐
      │  n d_c,min ─ 1   │  (B-1-2)
      └──────────────────┘
      ┌──────────────────┐
      │  INCREMENT n d_c │  (B-1-3)
      └──────────────────┘
      ┌──────────────────┐
      │  i_min ─ 1       │  (B-1-4)
      └──────────────────┘
      ┌──────────────────┐
      │  INCREMENT i     │  (B-1-5)
      └──────────────────┘
      ┌──────────────────┐
      │  OUTPUT iP_R,iP_L│  (B-1-6)
      └──────────────────┘
      ┌──────────────────┐
      │  COMPUTE iX      │  (B-1-7)
      └──────────────────┘
      ┌──────────────────┐
      │  COMPUTE iP_c    │  (B-1-8)
      └──────────────────┘
      ┌──────────────────────┐
      │ TRANSFORM iP_c TO    │  (B-1-9)
      │ POLAR COORDINATES    │
      └──────────────────────┘
      ┌──────────────────┐
      │  k_min ─ 1       │  (B-1-10)
      └──────────────────┘
      ┌──────────────────┐
      │  INCREMENT k     │  (B-1-11)
      └──────────────────┘
      ┌──────────────────────────┐
      │ iP_c POLAR TRANSFORMATION│  (B-1-12)
      └──────────────────────────┘
      ┌──────────────────┐
      │  VOTING          │  (B-1-13)
      └──────────────────┘
   NO  < k_max? >             (B-1-14)
          │ YES
   NO  < i_max? >             (B-1-15)
          │ YES
   NO  < n d_c,max? >         (B-1-16)
          │ YES
      ┌──────────────────┐
      │  EXTRACT PEAK    │  (B-1-17)
      └──────────────────┘
        ( END )
```

# Fig. 52

EP 1 178 434 A2

# Fig. 53

```
          ( START )
```

| | |
|---|---|
| $a_{xis,min} \leftarrow 1$ | (B-2-1) |
| INCREMENT $a_{xis}$ | (B-2-2) |
| SET UP $P_{axis}$ | (B-2-3) |
| $n d_{c,min} \leftarrow 1$ | (B-2-4) |
| INCREMENT $_n d_c$ | (B-2-5) |
| $i_{min} \leftarrow 1$ | (B-2-6) |
| INCREMENT i | (B-2-7) |
| OUTPUT $_i P_R, _i P_L$ | (B-2-8) |
| OUTPUT $_i P_c$ | (B-2-9) |
| $_i P_c$ POLAR TRANSFORMATION | (B-2-10) |
| $k_{min} \leftarrow 1$ | (B-2-11) |
| INCREMENT k | (B-2-12) |
| VOTING | (B-2-13) |

NO ← $k_{max}$?  (B-2-14)  YES ↓

NO ← $i_{max}$?  (B-2-15)  YES ↓

NO ← $n d_{c,max}$?  (B-2-16)  YES ↓

NO ← $a_{xis,max}$?  (B-2-17)  YES ↓

| EXTRACT PEAK | (B-2-18) |

```
          ( END )
```

# Fig. 54

**122** SCAN UNIT FOR $_nd_s$ PARAMETER

$_nd_s$

**112** IMAGE ON RIGHT CAMERA — $_ip_R$

**113** IMAGE ON LEFT CAMERA — $_ip_L$

**123** COMPUTING UNIT FOR RADIUS R

$_iR$

$_ip_0$

**124** SMALL CIRCLE TRANSFORMATION UNIT

**125** CYLINDRICAL ARRANGEMENT VOTING UNIT

$_nd_s$

$_nd_{s0}$

$_ns_0$

**126** PEAK EXTRACTION UNIT

$n_{s0}$

$_nd_{s0}$

$p_{axis}$

**115** $P_{axis}$ SET UNIT ($P_{axis}=a_{axis}$)

$a_{xis}$

EP 1 178 434 A2

# Fig. 55

START

| SET UP $P_{axis}$ | (B-3-1) |

| $_n d_{s,min} - 1$ | (B-3-2) |

| INCREMENT $_n d_s$ | (B-3-3) |

| $i_{min} - 1$ | (B-3-4) |

| INCREMENT $i$ | (B-3-5) |

| OUTPUT $_iP_R, _iP_L$ | (B-3-6) |

| OUTPUT $_iR, _iP_R$ | (B-3-7) |

| TRANSFORM $_iP_R$ TO POLAR COORDINATES | (B-3-8) |

| $k_{min} - 1$ | (B-3-9) |

| INCREMENT $k$ | (B-3-10) |

| SMALL CIRCLE TRANSFORMATION | (B-3-11) |

| VOTING | (B-3-12) |

$k_{max}$? — NO / YES — (B-3-13)

$i_{max}$? — NO / YES — (B-3-14)

$_n d_{s,max}$? — NO / YES — (B-3-15)

| EXTRACT PEAK | (B-1-16) |

END

Fig.56(A)

Fig.56(B)

EP 1 178 434 A2

Fig. 57

EP 1 178 434 A2

# Fig. 58

```
                    ( START )
           ┌──────────────────────────┐
           │      a_xis,min − 1        │    (B-4-1)
           └──────────────────────────┘
           ┌──────────────────────────┐
           │     INCREMENT a_xis       │    (B-4-2)
           └──────────────────────────┘
           ┌──────────────────────────┐
           │      SET UP P_axis        │    (B-4-3)
           └──────────────────────────┘
           ┌──────────────────────────┐
           │      _n d_s,min − 1       │    (B-4-4)
           └──────────────────────────┘
           ┌──────────────────────────┐
           │    INCREMENT _n d_s       │    (B-4-5)
           └──────────────────────────┘
           ┌──────────────────────────┐
           │        i_min − 1          │    (B-4-6)
           └──────────────────────────┘
           ┌──────────────────────────┐
           │       INCREMENT i         │    (B-4-7)
           └──────────────────────────┘
           ┌──────────────────────────┐
           │    OUTPUT _iP_R,_iP_L     │    (B-4-8)
           └──────────────────────────┘
           ┌──────────────────────────┐
           │     OUTPUT _iR,_iP_R      │    (B-4-9)
           └──────────────────────────┘
           ┌──────────────────────────┐
           │     SMALL CIRCLE          │    (B-4-10)
           │    TRANSFORMATION         │
           └──────────────────────────┘
           ┌──────────────────────────┐
           │        k_min − 1          │    (B-4-11)
           └──────────────────────────┘
           ┌──────────────────────────┐
           │      INCREMENT k          │    (B-4-12)
           └──────────────────────────┘
           ┌──────────────────────────┐
           │         VOTING            │    (B-4-13)
           └──────────────────────────┘
      NO        ◇ k_max? ◇                  (B-4-14)
                    │ YES
      NO        ◇ i_max? ◇                  (B-4-15)
                    │ YES
      NO        ◇ _n d_s,max? ◇             (B-4-16)
                    │ YES
      NO        ◇ a_xis,max? ◇              (B-4-17)
                    │ YES
           ┌──────────────────────────┐
           │     EXTRACT PEAK          │    (B-4-18)
           └──────────────────────────┘
                    ( END )
```

# Fig. 59

```
┌─────────────────┐   112                    ┌──────────────┐  127
│ IMAGE ON RIGHT  │            $p_R$         │              │
│ CAMERA          │ ──────────────────────►  │              │
└─────────────────┘                          │              │
                    113                       │ COMPUTING    │
┌─────────────────┐                          │ UNIT FOR     │    $_n d_0$
│ IMAGE ON LEFT   │            $p_L$         │ POINT        │ ──────►
│ CAMERA          │ ──────────────────────►  │ DISTANCE     │
└─────────────────┘                          │              │
                                              │              │
                              $p_{axis}$      │              │
                       115                    └──────────────┘
          ┌──────────────────┐
   axis   │ $P_{axis}$ SET UNIT │
 ───────► │ ($P_{axis}=a_{xis}$) │ ──────────►
          └──────────────────┘
```

# Fig. 60

```
        ┌─────────────┐
        │    START    │
        └─────────────┘
               │
   ┌───────────────────────┐
   │     SET UP $P_{inf}$     │   (B-5-1)
   └───────────────────────┘
               │
   ┌───────────────────────┐
   │   OUTPUT $P_0,P_1$     │   (B-5-2)
   └───────────────────────┘
               │
   ┌───────────────────────┐
   │   OUTPUT $_n d_0$      │   (B-5-3)
   └───────────────────────┘
               │
        ┌─────────────┐
        │     END     │
        └─────────────┘
```

# Fig. 61

SCAN UNIT FOR $_n d_c$ PARAMETER — 116

$_n d_c$

112

IMAGE ON RIGHT CAMERA — $_i p_R$

IMAGE ON LEFT CAMERA — $_i p_L$

113

128

$_i \sigma$

$\sigma$ DETERMINATION UNIT

117

COMPOUND RATIO TRANSFORMATION UNIT (COMPUTING OF $P_c$)

$_i p_c$

118

POLAR TRANSFORMATION UNIT

119

CYLINDRICAL ARRANGEMENT VOTING UNIT

$_n d_c$

$_n s0$

$_n d_{c0}$

120

PEAK EXTRACTION UNIT

$_n s0$

$_n d_{c0}$

115

$a_{xis}$

$P_{axis}$ SET UNIT ($P_{axis} = a_{xis}$)

$p_{axis}$

EP 1 178 434 A2

163

# Fig. 62

START

| | |
|---|---|
| SET UP $P_{axis}$ | (B-6-1) |
| $_nd_{c,min} - 1$ | (B-6-2) |
| INCREMENT $_nt_c$ | (B-6-3) |
| $i_{min} - 1$ | (B-6-4) |
| INCREMENT $i$ | (B-6-5) |
| OUTPUT $_iP_R, _iP_L$ | (B-6-6) |
| OUTPUT $_i\sigma$ | (B-6-7) |
| COMPUTE $_iX$ | (B-6-8) |
| COMPUTE $_iP_c$ | (B-6-9) |
| $_iP_c$ POLAR TRANSFORMATION | (B-6-10) |
| $k_{min} - 1$ | (B-6-11) |
| INCREMENT $k$ | (B-6-12) |
| VOTING | (B-6-13) |

NO    $k_{max}$?    (B-6-14)    YES

NO    $i_{max}$?    (B-6-15)    YES

NO    $_nd_{c,max}$?    (B-6-16)    YES

| | |
|---|---|
| EXTRACT PEAK | (B-6-17) |

END

# Fig. 63

# Fig. 64

START

| | |
|---|---|
| $a_{xis,min} - 1$ | (B-7-1) |
| INCREMENT $a_{xis}$ | (B-7-2) |
| SET UP $P_{axis}$ | (B-7-3) |
| $_nd_{c,min} - 1$ | (B-7-4) |
| INCREMENT $_nd_c$ | (B-7-5) |
| $i_{min} - 1$ | (B-7-6) |
| INCREMENT $i$ | (B-7-7) |
| OUTPUT $_iP_R, _iP_L$ | (B-7-8) |
| OUTPUT $_i\sigma$ | (B-7-9) |
| OUTPUT $_iP_c$ | (B-7-10) |
| $_iP_c$ POLAR TRANSFORMATION | (B-7-11) |
| $k_{min} - 1$ | (B-7-12) |
| INCREMENT $k$ | (B-7-13) |
| VOTING | (B-7-14) |

NO $k_{max}$? (B-7-15) YES

NO $i_{max}$? (B-7-16) YES

NO $_nd_{c,max}$? (B-7-17) YES

NO $a_{xis,max}$? (B-7-18) YES

| | |
|---|---|
| EXTRACT PEAK | (B-7-19) |

END

# Fig. 65

EP 1 178 434 A2

# Fig. 66

START

| | |
|---|---|
| SET UP $P_{axis}$ | (B-8-1) |
| $_nd_{s,min} - 1$ | (B-8-2) |
| INCREMENT $_nd_s$ | (B-8-3) |
| $i_{min} - 1$ | (B-8-4) |
| INCREMENT i | (B-8-5) |
| OUTPUT $_iP_R, _iP_L$ | (B-8-6) |
| OUTPUT $_i\sigma$ | (B-8-7) |
| OUTPUT $_iR, _iP_R$ | (B-8-8) |
| SMALL CIRCLE TRANSFORMATION | (B-8-9) |
| $k_{min} - 1$ | (B-8-10) |
| INCREMENT k | (B-8-11) |
| VOTING | (B-8-12) |

NO — $k_{max}$? (B-8-13)

YES

NO — $i_{max}$? (B-8-14)

YES

NO — $_nd_{c,max}$? (B-8-15)

YES

| | |
|---|---|
| EXTRACT PEAK | (B-8-16) |

END

Fig. 67

# Fig. 68

START

| | |
|---|---|
| $a_{xis,min} - 1$ | (B-9-1) |
| INCREMENT $a_{xis}$ | (B-9-2) |
| SET UP $P_{axis}$ | (B-9-3) |
| $_nd_{s,min} - 1$ | (B-9-4) |
| INCREMENT $_nd_s$ | (B-9-5) |
| $i_{min} - 1$ | (B-9-6) |
| INCREMENT $i$ | (B-9-7) |
| OUTPUT $_iP_R, _iP_L$ | (B-9-8) |
| OUTPUT $_i\sigma$ | (B-9-9) |
| OUTPUT $_iR, _iP_R$ | (B-9-10) |
| SMALL CIRCLE TRANSFORMATION | (B-9-11) |
| $k_{min} - 1$ | (B-9-12) |
| INCREMENT $k$ | (B-9-13) |
| VOTING | (B-9-14) |

$k_{max}$? — NO / YES (B-9-15)

$i_{max}$? — NO / YES (B-9-16)

$_nd_{s,max}$? — NO / YES (B-9-17)

$a_{xis,max}$? — NO / YES (B-9-18)

| EXTRACT PEAK | (B-9-19) |

END

# Fig. 69

# Fig. 70

```
        ( START )
            |
+-----------------------+
|    SET UP P_axis      |   (B-10-1)
+-----------------------+
            |
+-----------------------+
|   OUTPUT P_R, P_L     |   (B-10-2)
+-----------------------+
            |
+-----------------------+
|     OUTPUT σ          |   (B-10-3)
+-----------------------+
            |
+-----------------------+
|   OUTPUT _n d_0       |   (B-10-4)
+-----------------------+
            |
        (  END  )
```

# Fig. 75

# Fig. 76

```
                    ┌─────────────┐
                    │    START    │
                    └──────┬──────┘
              ┌────────────────────────┐
              │     SET UP P_axis      │  (C-3-1)
              └────────────┬───────────┘
              ┌────────────────────────┐
              │     n_ds,min ─ 1        │  (C-3-2)
              └────────────┬───────────┘
              ┌────────────────────────┐
    ┌────────→│    INCREMENT n_ds       │  (C-3-3)
    │         └────────────┬───────────┘
    │         ┌────────────────────────┐
    │         │      i_min ─ 1         │  (C-3-4)
    │         └────────────┬───────────┘
    │         ┌────────────────────────┐
    │  ┌─────→│     INCREMENT i        │  (C-3-5)
    │  │      └────────────┬───────────┘
    │  │      ┌────────────────────────┐
    │  │      │   OUTPUT i_PR,i_PL     │  (C-3-6)
    │  │      └────────────┬───────────┘
    │  │      ┌────────────────────────┐
    │  │      │      OUTPUT i σ        │  (C-3-7)
    │  │      └────────────┬───────────┘
    │  │      ┌────────────────────────┐
    │  │      │         r ← 0          │  (C-3-8)
    │  │      └────────────┬───────────┘
    │  │      ┌────────────────────────┐
    │  │ ┌───→│     INCREMENT r        │  (C-3-9)
    │  │ │    └────────────┬───────────┘
    │  │ │    ┌────────────────────────┐
    │  │ │    │    OUTPUT i_r n_s±      │  (C-3-10)
    │  │ │    └────────────┬───────────┘
    │  │ │    ┌────────────────────────┐
    │  │ │    │        VOTING          │  (C-3-11)
    │  │ │    └────────────┬───────────┘
    │  │ │ NO    ◇─────────────────◇
    │  │ └──────  r = π/2 ?          (C-3-12)
    │  │       ◇─────────────────◇
    │  │              │ YES
    │  │ NO    ◇─────────────────◇
    │  └──────     i_max ?            (C-3-13)
    │          ◇─────────────────◇
    │                 │ YES
    │    NO   ◇─────────────────◇
    └─────────   n_ds,max ?          (C-3-14)
             ◇─────────────────◇
                    │ YES
              ┌────────────────────────┐
              │     EXTRACT PEAK       │  (C-3-15)
              └────────────┬───────────┘
                    ┌──────────────┐
                    │     END      │
                    └──────────────┘
```

174

# Fig. 77

EP 1 178 434 A2

# Fig. 78

START

| | |
|---|---|
| $a_{xis,min} - 1$ | (C-4-1) |
| INCREMENT $a_{xis}$ | (C-4-2) |
| SET UP $P_{axis}$ | (C-4-3) |
| $_nd_{s,min} - 1$ | (C-4-4) |
| INCREMENT $_nd_s$ | (C-4-5) |
| $i_{min} - 1$ | (C-4-6) |
| INCREMENT $i$ | (C-4-7) |
| OUTPUT $_iP_R, _iP_L$ | (C-4-8) |
| OUTPUT $_i\sigma$ | (C-4-9) |
| $r \leftarrow 0$ | (C-4-10) |
| INCREMENT $r$ | (C-4-11) |
| OUTPUT $_r^in_{s+}$ | (C-4-12) |
| VOTING | (C-4-13) |

$r = \pi/2?$ — NO / YES (C-4-14)

$i_{max}?$ — NO / YES (C-4-15)

$_nd_{s,max}?$ — NO / YES (C-4-16)

$a_{xis,max}?$ — NO / YES (C-4-17)

| | |
|---|---|
| EXTRACT PEAK | (C-4-18) |

END

# Fig. 83

EP 1 178 434 A2

221 — SCAN UNIT FOR $_n d_s$ PARAMETER

222 — SCAN UNIT FOR RADIUS $r$

$_n d_s$

$r$

112 — IMAGE ON RIGHT CAMERA

$^i p_R$

113 — IMAGE ON LEFT CAMERA

$^i p_L$

223 — COMPUTING UNIT FOR SMALL CIRCLE STRUCTURAL ELEMENT $^i_r n_{s\pm}$

$^i_r n_{s\pm}$

$P_{axis}$

224 — CYLINDRICAL ARRANGEMENT VOTING UNIT

$_n d_s$

$_n d_{s0}$

$n_{s0}$

225 — PEAK EXTRACTION UNIT

$n_{s0}$

$_n d_{s0}$

115 — $P_{axis}$ SET UNIT ($P_{axis} = a_{xis}$)

$a_{xis}$

# Fig. 84

START

SET UP $P_{axis}$    (C-7-1)

$_n d_{s,min} - 1$    (C-7-2)

$_n d_s$ INCREMENT    (C-7-3)

$i_{min} - 1$    (C-7-4)

INCREMENT $i$    (C-7-5)

OUTPUT $_i P_R, _i P_L$    (C-7-6)

$r \leftarrow 0$    (C-7-7)

INCREMENT $r$    (C-7-8)

OUTPUT $_r^i n_{s\pm}$    (C-7-9)

VOTING    (C-7-10)

NO — $r = \pi/2$?    (C-7-11)

YES

NO — $i_{max}$?    (C-7-12)

YES

NO — $_n d_{s,max}$?    (C-7-13)

YES

EXTRACT PEAK    (C-7-14)

END

# Fig. 85

SCAN UNIT FOR $_n d_s$ PARAMETER — 221

SCAN UNIT FOR RADIUS r — 222

112 — IMAGE ON RIGHT CAMERA

113 — IMAGE ON LEFT CAMERA

223 — COMPUTING UNIT FOR SMALL CIRCLE STRUCTURAL ELEMENT $_j n_{s\pm}$

224 — CYLINDRICAL ARRANGEMENT VOTING UNIT

225 — PEAK EXTRACTION UNIT

121 — SCAN UNIT FOR $a_{xis}$ PARAMETER

115 — $P_{axis}$ SET UNIT ($P_{axis} = a_{xis}$)

$_n d_s$

r

$_i p_R$

$_i p_L$

$p_{axis}$

$_j n_{s\pm}$

$a_{xis}$

$v_0$

$n_{s0}$

$_n d_{s0}$

$_n d_s$

$n_{s0}$

$_n d_{s0}$

# Fig. 86

START

| | |
|---|---|
| $a_{xis,min} - 1$ | (C-8-1) |
| INCREMENT $a_{xis}$ | (C-8-2) |
| SET UP $P_{axis}$ | (C-8-3) |
| $_n d_{s,min} - 1$ | (C-8-4) |
| INCREMENT $_n d_s$ | (C-8-5) |
| $i_{min} - 1$ | (C-8-6) |
| INCREMENT $i$ | (C-8-7) |
| OUTPUT $_i P_R, _i P_L$ | (C-8-8) |
| $r \leftarrow 0$ | (C-8-9) |
| INCREMENT $r$ | (C-8-10) |
| OUTPUT $_r^i n_{s\pm}$ | (C-8-11) |
| VOTING | (C-8-12) |

NO — $r = \pi/2?$ — (C-8-13) — YES

NO — $i_{max}?$ — (C-8-14) — YES

NO — $_n d_{s,max}?$ — (C-8-15) — YES

NO — $a_{xis,max}?$ — (C-8-16) — YES

| EXTRACT PEAK | (C-8-17) |
|---|---|

END

# Fig. 95

EP 1 178 434 A2

# Fig. 96

START

| SET UP $P_{axis}$ | (D-5-1) |

| $i_{min} - 1$ | (D-5-2) |

| INCREMENT i | (D-5-3) |

| CUT AND BRING DOWN IMAGE ON LOCAL AREA | (D-5-4) |

| $k_{min} - 1$ | (D-5-5) |

| INCREMENT k | (D-5-6) |

| OUTPUT $_k\sigma$ | (D-5-7) |

NO — COINCIDENCE ? — NO   (D-5-8)

YES

| COMPUTE RESPONSE INTENSITY | (D-5-9) |

| $_nd_{s,min} - 1$ | (D-5-10) |

| INCREMENT $_nd_c$ | (D-5-11) |

| OUTPUT $_{ik}P_c$ | (D-5-12) |

| OUTPUT $\{_{ik}P_{GC}\}$ | (D-5-13) |

| VOTING | (D-5-14) |

NO — $_nd_{c,max}$ ?   (D-5-15)

YES

NO — $k_{max}$?   (D-5-16)

YES

NO — $i_{max}$?   (D-5-17)

YES

| EXTRACT PEAK | (D-5-18) |

END

# Fig. 97

SCAN UNIT FOR PIXEL NO. i — 421

SCAN UNIT FOR $_n d_c$ PARAMETER — 116

$_i p_R$ TRANSFORMATION UNIT — 426

$_n d_c$ 117

POSITION

119

120

CYLINDRICAL ARRANGEMENT VOTING UNIT

UNIT FOR CUTTING AND BRINGING DOWN IMAGE ON LOCAL AREA TAKING $_i p_R$ AS CENTER — 422

RIGHT CAMERA — 412

IMAGE ON LOCAL AREA

LEFT CAMERA — 413

IMAGE ON LOCAL AREA

BINOCULAR PARALLAX DETECTION UNIT — 425

COMPOUND RATIO TRANSFORMATION UNIT (COMPUTING OF $P_c$) — 117

$_{ik} p_c$

POLAR TRANSFORMATION UNIT — 118

VOTING

$_n t_c$

PEAK EXTRACTION UNIT

$a_{xis0}$

$n_{s0}$

$n_{d_{c0}}$

$k \sigma$

$k \sigma$  $P_{axis}$

INTENSITY

TRANSFORMATION UNIT FOR BINOCULAR PARALLAX $_k \sigma$ — 424

$k \sigma$

SCAN UNIT FOR BINOCULAR PARALLAX NO. k — 423

k

$P_{axis}$ SET UNIT ($P_{xis} = a_{xis}$) — 115

$a_{xis}$

SCAN UNIT FOR $a_{xis}$ PARAMETER — 121

EP 1 178 434 A2

# Fig. 98

START

| | |
|---|---|
| $a_{xis,min} - 1$ | (D-6-1) |
| INCREMENT $a_{xis}$ | (D-6-2) |
| SET UP $P_{axis}$ | (D-6-3) |
| $i_{min} - 1$ | (D-6-4) |
| INCREMENT $i$ | (D-6-5) |
| CUT AND BRING DOWN IMAGE ON LOCAL AREA | (D-6-6) |
| $k_{min} - 1$ | (D-6-7) |
| INCREMENT $k$ | (D-6-8) |
| OUTPUT $_k \sigma$ | (D-6-9) |

NO — COINCIDENCE ? — NO (D-6-10)

YES

| | |
|---|---|
| COMPUTE RESPONSE INTENSITY | (D-6-11) |
| $_n d_{c,min} - 1$ | (D-6-12) |
| INCREMENT $_n d_c$ | (D-6-13) |
| OUTPUT $_{ik}P_c$ | (D-6-14) |
| OUTPUT $\{_{ik}P_{GC}\}$ | (D-6-15) |
| VOTING | (D-6-16) |

NO — $_n d_{c,max}$ ? (D-6-17)

YES

NO — $k_{max}$ ? (D-6-18)

YES

NO — $i_{max}$ ? (D-6-19)

YES

NO — $a_{xis,max}$ ? (D-6-20)

YES

| | |
|---|---|
| EXTRACT PEAK | (D-6-21) |

END

# Fig. 99

Fig. 99

SCAN UNIT FOR PIXEL NO.i — 421

SCAN UNIT FOR $_n d_s$ PARAMETER — 122

$_i p_R$ TRANSFORMATION UNIT — 426

UNIT FOR CUTTING AND BRINGING DOWN IMAGE ON LOCAL AREA TAKING $_i p_R$ AS CENTER — 422

RIGHT CAMERA — 412
LEFT CAMERA — 413

IMAGE ON LOCAL AREA
IMAGE ON LOCAL AREA

SCAN UNIT FOR $_n d_s$ — 123

COMPUTING UNIT FOR RADIUS R — 123

$_{ik}R$
$_i p_R$

POLAR TRANSFORMATION UNIT — 124

POSITION
INTENSITY

CYLINDRICAL ARRANGEMENT VOTING UNIT — 125

VOTING
$_n d_s$

PEAK EXTRACTION UNIT — 126

$n_{s0}$
$_n d_{s0}$

BINOCULAR PARALLAX DETECTION UNIT — 425

$_k\sigma$

TRANSFORMATION UNIT FOR BINOCULAR PARALLAX $_k\sigma$ — 424

SCAN UNIT FOR BINOCULAR PARALLAX NO. k — 423

$p_{axis}$ SET UNIT ($p_{axis} = a_{xis}$) — 115

$p_{axis}$
k

185

# Fig. 100

START

| SET UP $P_{axis}$ | (D-7-1) |
| $i_{min} - 1$ | (D-7-2) |
| INCREMENT i | (D-7-3) |
| CUT AND BRING DOWN IMAGE ON LOCAL AREA | (D-7-4) |
| $k_{min} - 1$ | (D-7-5) |
| INCREMENT k | (D-7-6) |
| OUTPUT $_k$ | (D-7-7) |

COINCIDENCE ?　NO　NO　(D-7-8)

YES

| COMPUTE RESPONSE INTENSITY | (D-7-9) |
| $_nd_{s,min} - 1$ | (D-7-10) |
| INCREMENT $_nd_s$ | (D-7-11) |
| OUTPUT $_{ik}R, iP_R$ | (D-7-12) |
| SMALL CIRCLE TRANSFORMATION | (D-7-13) |
| VOTING | (D-7-14) |

NO　$_nd_{s,max}$ ?　(D-7-15)

YES

NO　$k_{max}$?　(D-7-16)

YES

NO　$i_{max}$?　(D-7-17)

YES

| EXTRACT PEAK | (D-7-18) |

END

# Fig.101

SCAN UNIT FOR PIXEL No.i —421

SCAN UNIT FOR $_n d_s$ PARAMETER —122

426

$_iP_R$ TRANSFORMATION UNIT

422

UNIT FOR CUTTING AND BRINGING DOWN IMAGE ON LOCAL AREA TAKING $_iP_R$ AS CENTER

412

RIGHT CAMERA

IMAGE ON LOCAL AREA

LEFT CAMERA

IMAGE ON LOCAL AREA

413

425

BINOCULAR PARALLAX DETECTION UNIT

123

COMPUTING UNIT FOR RADIUS R

124

SMALL CIRCLE TRANSFORMATION UNIT

POSITION

125

CYLINDRICAL ARRANGEMENT VOTING UNIT

VOTING

126

PEAK EXTRACTION UNIT

$axis0$

$n_{s0}$

$_n d_{s0}$

$_k\sigma$

$P_{axis}$

INTENSITY

424— TRANSFORMATION UNIT FOR BINOCULAR PARALLAX $_k\sigma$

423— SCAN UNIT FOR BINOCULAR PARALLAX No. k

115

$P_{axis}$ SET UNIT ($P_{axis}=a_{xis}$)

121

SCAN UNIT FOR $a_{xis}$ PARAMETER

$a_{xis}$

EP 1 178 434 A2

# Fig.102

START

| | |
|---|---|
| $a_{xis,min}$-1 | (D-8-1) |
| INCREMENT $a_{xis}$ | (D-8-2) |
| SET UP $P_{axis}$ | (D-8-3) |
| $i_{min}$-1 | (D-8-4) |
| INCREMENT i | (D-8-5) |
| CUT AND BRING DOWN IMAGE ON LOCAL AREA | (D-8-6) |
| $k_{min}$-1 | (D-8-7) |
| INCREMENT k | (D-8-8) |
| OUTPUT $_k\sigma$ | (D-8-9) |

NO ◇ COINCIDENCE? NO (D-8-10)

YES

| | |
|---|---|
| COMPUTE RESPONSE INTENSITY | (D-8-11) |
| $_n d_{s,min}$-1 | (D-8-12) |
| INCREMENT $_n d_s$ | (D-8-13) |
| OUTPUT $_{ik}R, _iP_R$ | (D-8-14) |
| SMALL CIRCLE TRANSFORMATION | (D-8-15) |
| VOTING | (D-8-16) |

NO ◇ $_n d_{s,max}$? (D-8-17)

YES

NO ◇ $k_{max}$? (D-8-18)

YES

NO ◇ $i_{max}$? (D-8-19)

YES

NO ◇ $a_{xis,max}$? (D-8-20)

YES

| | |
|---|---|
| EXTRACT PEAK | (D-8-21) |

END

# Fig.107

SCAN UNIT FOR PIXEL No.i ~421    SCAN UNIT FOR $_nd_s$ PARAMETER ~122    SCAN UNIT FOR RADIUS r ~222

426

$_nd_s$

$iP_R$ TRANSFORMATION UNIT

$iP_R$

r    223

224    225

422

COMPUTING UNIT FOR SMALL CIRCLE STRUCTURAL ELEMENT $_r^in_{s\pm}$

CYLINDRICAL ARRANGEMENT VOTING UNIT

PEAK EXTRACTION UNIT

UNIT FOR CUTTING AND BRINGING DOWN IMAGE ON LOCAL AREA TAKING $iP_R$ AS CENTER

412

425

$_r^in_{s\pm}$

$n_{s0}$

RIGHT CAMERA

IMAGE ON LOCAL AREA

BINOCULAR PARALLAX DETECTION UNIT

$_nd_s$

$_nd_{s0}$

VOTING

LEFT CAMERA

IMAGE ON LOCAL AREA

413

$_k\sigma$    $P_{axis}$

INTENSITY

115

$_k\sigma$

424~ TRANSFORMATION UNIT FOR BINOCULAR PARALLAX $_k\sigma$

$P_{axis}$ SET UNIT ($P_{axis}=a_{xis}$)

k

423~ SCAN UNIT FOR BINOCULAR PARALLAX No. k

189

EP 1 178 434 A2

# Fig.108

START

| | |
|---|---|
| SET UP $P_{axis}$ | (D-11-1) |
| $i_{min}-1$ | (D-11-2) |
| INCREMENT i | (D-11-3) |
| CUT AND BRING DOWN IMAGE ON LOCAL AREA | (D-11-4) |
| $k_{min}-1$ | (D-11-5) |
| INCREMENT k | (D-11-6) |
| OUTPUT $_k\sigma$ | (D-11-7) |

NO —— COINCIDENCE? —— NO (D-11-8)

YES

| COMPUTE RESPONSE INTENSITY | (D-11-9) |
|---|---|
| $_nd_{s,min}-1$ | (D-11-10) |
| INCREMENT $_nd_s$ | (D-11-11) |
| $r\leftarrow0$ | (D-11-12) |
| INCREMENT r | (D-11-13) |
| OUTPUT $_r^in_{s\pm}$ | (D-11-14) |
| VOTING | (D-11-15) |

NO —— $r=\pi/2$? —— (D-11-16)

YES

NO —— $_nd_{s,max}$? —— (D-11-17)

YES

NO —— $k_{max}$? —— (D-11-18)

YES

NO —— $i_{max}$? —— (D-11-19)

YES

| EXTRACT PEAK | (D-11-20) |
|---|---|

END

# Fig.109

EP 1 178 434 A2

SCAN UNIT FOR PIXEL No.i ~421

SCAN UNIT FOR $_n$d$_s$ PARAMETER ~122

SCAN UNIT FOR RADIUS r ~222

426

$_nd_s$   223

r

224

225

i

iP$_R$ TRANSFORMATION UNIT   iP$_R$

axis

CYLINDRICAL ARRANGEMENT VOTING UNIT

422

UNIT FOR CUTTING AND BRINGING DOWN IMAGE ON LOCAL AREA TAKING iP$_R$ AS CENTER

425

COMPUTING UNIT FOR SMALL CIRCLE STRUCTURAL ELEMENT $^i_rn_s\pm$

$^i_rn_s\pm$

PEAK EXTRACTION UNIT   axis0

412

RIGHT CAMERA

IMAGE ON LOCAL AREA

BINOCULAR PARALLAX DETECTION UNIT

$_nd_s$

n$_{s0}$

LEFT CAMERA

IMAGE ON LOCAL AREA

VOTING

$_nd_{s0}$

413

$_k\sigma$   P$_{axis}$

INTENSITY

$_k\sigma$

424~ TRANSFORMATION UNIT FOR BINOCULAR PARALLAX $_k\sigma$

115

121

k

P$_{axis}$ SET UNIT (P$_{axis}$=axis)   axis

SCAN UNIT FOR axis PARAMETER

423~ SCAN UNIT FOR BINOCULAR PARALLAX No. k

Fig.110

START

| | |
|---|---|
| $a_{xis,min}-1$ | (D-12-1) |
| INCREMENT $a_{xis}$ | (D-12-2) |
| SET UP $P_{axis}$ | (D-12-3) |
| $i_{min}-1$ | (D-12-4) |
| INCREMENT i | (D-12-5) |
| CUT AND BRING DOWN IMAGE ON LOCAL AREA | (D-12-6) |
| $k_{min}-1$ | (D-12-7) |
| INCREMENT k | (D-12-8) |
| OUTPUT $_k\sigma$ | (D-12-9) |

NO          NO
COINCIDENCE?    (D-12-10)

YES

| | |
|---|---|
| COMPUTE RESPONSE INTENSITY | (D-12-11) |
| $_nd_{s,,min}-1$ | (D-12-12) |
| INCREMENT $_nd_s$ | (D-12-13) |
| $r \leftarrow 0$ | (D-12-14) |
| INCREMENT r | (D-12-15) |
| OUTPUT $_in_{s\pm}$ | (D-12-16) |
| VOTING | (D-12-17) |

NO    $r = \pi/2$?    (D-12-18)

YES

NO    $_nd_{s,max}$?    (D-12-19)

YES

NO    $k_{max}$?    (D-12-20)

YES

NO    $i_{max}$?    (D-12-21)

YES

NO    $a_{xis,max}$?    (D-12-22)

YES

| | |
|---|---|
| EXTRACT PEAK | (D-12-23) |

END

# Fig.167

IMAGE ON LOCAL AREA
AT RIGHT CAMERA

$ia_R(x,y)$

$x$ $y$

$_iP_R$

$\{ia_R(x,y)\}$

BINOCULAR PARALLAX $_{ik\sigma}$

BINOCULAR PARALLAX DETECTION UNIT

$$\text{RESPONSE}=\sum_x \sum_y ia_R(x,y)\, ia_L(x-k\sigma_x, y-k\sigma_y)$$

RESPONSE

IMAGE ON LOCAL AREA
AT LEFT CAMERA

$ia_L(x,y)$

$x$ $y$

$_iP_R$

$\{ia_L(x,y)\}$

# Fig. 168